(19) Europäisches Patentamt
European Patent Office
Office européen des brevets

(11) **EP 4 460 138 A1**

(12) **EUROPEAN PATENT APPLICATION**
published in accordance with Art. 153(4) EPC

(43) Date of publication:
06.11.2024 Bulletin 2024/45

(21) Application number: 23753071.2

(22) Date of filing: 03.02.2023

(51) International Patent Classification (IPC):
*H04W 72/23* (2023.01)       *H04W 72/21* (2023.01)
*H04W 72/04* (2023.01)       *H04B 7/06* (2006.01)
*H04B 7/0408* (2017.01)

(52) Cooperative Patent Classification (CPC):
H04B 7/0408; H04B 7/06; H04W 72/04;
H04W 72/21; H04W 72/23

(86) International application number:
PCT/KR2023/001557

(87) International publication number:
WO 2023/153720 (17.08.2023 Gazette 2023/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 11.02.2022 KR 20220018154

(71) Applicant: SAMSUNG ELECTRONICS CO., LTD.
Yeongtong-gu
Suwon-si, Gyeonggi-do 16677 (KR)

(72) Inventors:
• LIM, Seongmok
  Suwon-si, Gyeonggi-do 16677 (KR)
• PARK, Kyoungmin
  Suwon-si, Gyeonggi-do 16677 (KR)
• JANG, Youngrok
  Suwon-si, Gyeonggi-do 16677 (KR)
• ABEBE, Ameha Tsegaye
  Suwon-si, Gyeonggi-do 16677 (KR)
• JI, Hyoungju
  Suwon-si, Gyeonggi-do 16677 (KR)

(74) Representative: Gulde & Partner
Patent- und Rechtsanwaltskanzlei mbB
Wallstraße 58/59
10179 Berlin (DE)

(54) **METHOD AND DEVICE FOR TRANSMITTING UPLINK IN WIRELESS COMMUNICATION SYSTEM**

(57)    The present disclosure relates to a 5G or 6G communication system for supporting a higher data transmission rate. The present disclosure relates to a method of a terminal in a wireless communication system and, particularly, to a method and a device, the method comprising the steps of: receiving, from a base station, an RRC message including information for determination of a TCI state; receiving, from the base station, DCI including information indicating an integrated TCI state; when multiple TCI states are indicated based on the DCI, determining a TCI state for a PUCCH based on the information for determination of the TCI state; and transmitting uplink control information to the base station on the PUCCH based on the determined TCI state.

EP 4 460 138 A1

# FIG. 1

One subframe (110)

$N_{symb}^{subframe,\mu}$ OFDM symbols

1 OFDM symbols (102)

1 subcarrier (103)

$K = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

Frequency

Time

$\bar{l} = 0$

$\bar{l} = 14 \cdot 2^{\mu} - 1$

$K = 0$

## Description

[Technical Field]

The disclosure relates to the operation of a terminal and a base station in a wireless communication system. Specifically, the disclosure relates to a method for activating and indicating a plurality of transmission and reception beams in a wireless communication system and a device performing the same.

[Background Art]

Fifth generation (5G) mobile communication technologies define broad frequency bands such that high transmission rates and new services are possible, and can be implemented not only in "Sub 6 gigahertz (GHz)" bands, such as 3.5 GHz, but also in "Above 6 GHz" bands referred to as millimeter wave (mmWave) including 28 GHz and 39 GHz. In addition, it has been considered to implement sixth generation (6G) mobile communication technologies (referred to as Beyond 5G systems) in terahertz bands (for example, 95 GHz to 3 terahertz (THz) bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra reliable low latency communications (URLLC), and massive machine-type communications (mMTC), there has been ongoing standardization regarding beamforming and massive multiple input-multiple output (MIMO) for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of band-width part (BWP), new channel coding methods, such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies, such as vehicle-to-everything (V2X) for aiding driving determination by autonomous vehicles based on information regarding positions and states of vehicles transmitted by the vehicles and for enhancing user convenience, new radio unlicensed (NR-U) aimed at system operations conforming to various regulation-related requirements in unlicensed bands, NR user equipment (UE) power saving, non terrestrial network (NTN) which is UE-satellite direct communication for providing coverage in an area in which communication with terrestrial networks is unavailable, and positioning.

Moreover, there has been ongoing standardization in air interface architecture/protocol regarding technologies, such as industrial Internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR). There also has been ongoing standardization in system architecture/service regarding a 5G baseline architecture (for example, service based architecture or service based interface) for combining network functions virtualization (NFV) and software-defined networking (SDN) technologies, and mobile edge computing (MEC) for receiving services based on UE positions.

When the 5G mobile communication system is commercialized, connected devices being on a rapidly increasing trend are being predicted to be connected to communication networks, and therefore, it is predicted that enhancement of functions and performance of the 5G mobile communication system and integrated operations of the connected devices are required. To this end, new researches are scheduled for extended Reality (XR = AR + VR + MR) for efficiently supporting Augmented Reality (AR), Virtual Reality (VR), and the like, 5G performance improvement and complexity reduction by utilizing artificial intelligence (AI) and machine learning (ML), AI service support, metaverse service support, drone communication, and the like.

Also, such development of the 5G mobile communication system will serve as a basis for developing not only new waveforms for providing coverage in terahertz bands of 6G mobile communication technologies, multi-antenna transmission technologies such as full dimensional MIMO (FD-MIMO), array antennas and large-scale antennas, metamaterial-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of the 6G mobile communication technologies and improving system networks, AI-based communication technology for implementing system optimization by utilizing satellites and AI from a design stage and internalizing end-to-end AI support functions, and next-generation distributed computing technology for implementing services at levels of complexity exceeding the limit of UE operation capability by utilizing ultra-high-performance communication and computing resources.

[Disclosure]

[Technical Problem]

Various embodiments of the disclosure are to provide devices and methods that can effectively provide services in a mobile communication system. Various embodiments of the disclosure are to provide a method for activating and indicating a plurality of transmission and reception beams in a wireless communication system and a device for performing the same.

[Technical Solution]

In order to solve the above problems, an embodiment of the disclosure provides a method of a terminal in a wireless communication system, comprising receiving, from a base station, a radio resource control (RRC) message including information for determination of a transmission configuration indicator (TCI) state, receiving, from the base station, downlink control information (DCI) including information indicating a unified TCI state, in case that multiple TCI states are indicated based on the DCI, determining a TCI state for a physical uplink control channel (PUCCH) based on the information for determination of the TCI state, and transmitting uplink control information to the base station on the PUCCH based on the determined TCI state.

Further, an embodiment of the disclosure provides a method of a base station in a wireless communication system, comprising transmitting, to a terminal, a radio resource control (RRC) message including information for determination of a transmission configuration indicator (TCI) state, transmitting, to the terminal, downlink control information (DCI) including information indicating a unified TCI state, and receiving, from the terminal, uplink control information on a physical uplink control channel (PUCCH) based on the TCI state determined based on multiple TCI states, in case that the multiple TCI states are indicated based on the DCI, the TCI state for the PUCCH is determined based on the information for determination of the TCI state.

Further, an embodiment of the disclosure provides a terminal in a wireless communication system, comprising a transceiver and a controller, wherein the controller controls to receive, from a base station, a radio resource control (RRC) message including information for determination of a transmission configuration indicator (TCI) state, receive, from the base station, downlink control information (DCI) including information indicating a unified TCI state, in case that multiple TCI states are indicated based on the DCI, determine a TCI state for a physical uplink control channel (PUCCH) based on the information for determination of the TCI state, and transmit uplink control information to the base station on the PUCCH based on the determined TCI state.

Further, an embodiment of the disclosure provides a base station in a wireless communication system, comprising a transceiver; and a controller, wherein the controller controls to transmit, to a terminal, a radio resource control (RRC) message including information for determination of a transmission configuration indicator (TCI) state, transmit, to the terminal, downlink control information (DCI) including information indicating a unified TCI state, and receive, from the terminal, uplink control information on a physical uplink control channel (PUCCH) based on the TCI state determined based on multiple TCI states, wherein in case that the multiple TCI states are indicated based on the DCI, the TCI state for the PUCCH is determined based on the information for determination of the TCI state.

[Advantageous Effects]

According to various embodiments of the disclosure, devices and methods that can effectively provide services in a mobile communication system can be provided.

According to various embodiments of the disclosure, a method for activating and indicating a plurality of transmission and reception beams in a wireless communication system and a device for performing the same can be provided.

[Description of Drawings]

FIG. 1 is a diagram illustrating a diagram of a basic structure of a time-frequency domain in a wireless communication system according to an embodiment of the disclosure.
FIG. 2 is a diagram illustrating a diagram of a frame, subframe, and slot structure in a wireless communication system according to an embodiment of the disclosure.

FIG. 3 is a diagram illustrating an example of a configuration of a bandwidth part in a wireless communication system according to an embodiment of the disclosure.

FIG. 4 is a diagram illustrating an example of a configuration of a control resource set of a downlink control channel in a wireless communication system according to an embodiment of the disclosure.

FIG. 5A is a diagram illustrating a structure of a downlink control channel in a wireless communication system according to an embodiment of the disclosure.

FIG. 5B is a diagram illustrating, through a span, a case where a terminal may have a plurality of physical downlink control channel (PDCCH) monitoring locations in a slot, in a wireless communication system according to an embodiment of the disclosure.

FIG. 6 is a diagram illustrating an example of a discontinuous reception (DRX) operation in a wireless communication system according to an embodiment of the disclosure.

FIG. 7 is a diagram illustrating an example of base station beam allocation according to a transmission configuration indication (TCI) state configuration in a wireless communication system according to an embodiment of the disclosure.

FIG. 8 is a diagram illustrating an example of a TCI state allocation method regarding a PDCCH in a wireless communication system according to an embodiment of the disclosure.

FIG. 9 is a diagram illustrating a TCI indication medium access control (MAC) control element (CE) signaling structure for a PDCCH demodulation reference signal (DMRS) in a wireless communication system according to an embodiment of the disclosure.

FIG. 10 is a diagram illustrating an example of a beam configuration for a control resource set and a search space in a wireless communication system according to an embodiment of the disclosure.

FIG. 11 is a diagram explaining a method in which a base station and a terminal transmit or receive data in consideration of a downlink data channel and a rate matching resource in a wireless communication system according to an embodiment of the disclosure.

FIG. 12 is a diagram explaining a method in which a terminal selects a receivable control resource set in consideration of a priority when receiving a downlink control channel in a wireless communication system according to an embodiment of the disclosure.

FIG. 13 is a diagram illustrating an example of a frequency axis resource allocation of a physical downlink shared channel (PDSCH) in a wireless communication system according to an embodiment of the disclosure.

FIG. 14 is a diagram illustrating an example of a time axis resource allocation of a PDSCH in a wireless communication system according to an embodiment of the disclosure.

FIG. 15 is a diagram illustrating a procedure for beam configuration and activation of a PDSCH.

FIG. 16 is a diagram illustrating an example of MAC CE for activating physical uplink control channel (PUCCH) resource group-based spatial relationships in a wireless communication system according to an embodiment of the disclosure.

FIG. 17 is a diagram illustrating an example of physical uplink shared channel (PUSCH) repetitive transmission type B in a wireless communication system according to an embodiment of the disclosure.

FIG. 18 is a diagram illustrating a radio protocol structure of a base station and a terminal in a single cell, carrier aggregation, and dual connectivity situation in a wireless communication system according to an embodiment of the disclosure.

FIG. 19 is a diagram illustrating an example of an antenna port configuration and resource allocation for cooperative communication in a wireless communication system according to an embodiment of the disclosure.

FIG. 20 is a diagram illustrating an example of constitution of downlink control information (DCI) for cooperative communication in a wireless communication system according to an embodiment of the disclosure.

FIG. 21 is a diagram illustrating an enhanced PDSCH TCI state activation/deactivation MAC-CE structure according to an embodiment of the disclosure.

FIG. 22 is a diagram illustrating a radio link monitoring (RLM) reference signal (RS) selection procedure according to an embodiment of the disclosure.

FIG. 23 is a diagram illustrating a MAC-CE structure for activation and indication of a joint TCI state in a wireless communication system according to an embodiment of the disclosure.

FIG. 24 is a diagram illustrating another MAC-CE structure for activation and indication of a joint TCI state in a wireless communication system according to an embodiment of the disclosure.

FIG. 25 is a diagram illustrating another MAC-CE structure for activation and indication of a joint TCI state in a wireless communication system according to an embodiment of the disclosure.

FIG. 26 is a diagram illustrating a MAC-CE structure for activation and indication of a separate TCI state in a wireless communication system according to an embodiment of the disclosure.

FIG. 27 is a diagram illustrating another MAC-CE structure for activation and indication of a separate TCI state in a wireless communication system according to an embodiment of the disclosure.

FIG. 28 is a diagram illustrating another MAC-CE structure for activation and indication of a separate TCI state in a wireless communication system according to an embodiment of the disclosure.

FIG. 29 is a diagram illustrating another MAC-CE structure for activation and indication of a separate TCI state in a wireless communication system according to an embodiment of the disclosure.

FIG. 30 is a diagram illustrating a MAC-CE structure for activation and indication of a joint and separate TCI state in a wireless communication system according to an embodiment of the disclosure.

FIG. 31 is a diagram illustrating another MAC-CE structure for activation and indication of a joint and separate TCI state in a wireless communication system according to an embodiment of the disclosure.

FIG. 32 is a diagram illustrating a beam application time to consider in using a unified TCI scheme in a wireless communication system according to an embodiment of the disclosure.

FIG. 33 is a diagram illustrating a MAC-CE structure for activation and indication of a plurality of joint TCI states in a wireless communication system according to an embodiment of the disclosure.

FIG. 34 is a diagram illustrating a MAC-CE structure for activation and indication of a plurality of separate TCI states in a wireless communication system according to an embodiment of the disclosure.

FIG. 35 is a diagram illustrating another MAC-CE structure for activation and indication of a plurality of separate TCI states in a wireless communication system according to an embodiment of the disclosure.

FIG. 36 is a diagram illustrating a process in which a terminal receives PDSCH and transmits PUCCH upon reception of PDCCH indicating TCI state according to an embodiment of the disclosure.

FIG. 37 illustrates an operation of a base station and a terminal in case of determining an uplink transmission beam of PUCCH based on higher layer parameters.

FIG. 38 illustrates an example of new MAC CE that can indicate whether to use all beams or one or some beams for PUCCH transmission according to an embodiment of the disclosure.

FIG. 39 illustrates a time flowchart of physical channel transmission and reception between a base station and a terminal when determining a beam used for PUCCH transmission using new MAC CE signaling according to an embodiment of the disclosure.

FIG. 40 is a diagram illustrating a structure of a terminal in a wireless communication system according to an embodiment of the disclosure.

FIG. 41 is a diagram illustrating a structure of a base station in a wireless communication system according to an embodiment of the disclosure.

[Mode for Disclosure]

Hereinafter, embodiments of the disclosure will be described in detail with reference to the accompanying drawings.

In the following description of embodiments, descriptions of techniques that are well known in the art and not directly related to the disclosure are omitted. This is to clearly convey the gist of the disclosure without obscuring it by omitting any unnecessary explanation.

For the same reason, some elements in the drawings are exaggerated, omitted, or schematically illustrated. Also, actual sizes of respective elements are not necessarily represented in the drawings. In the drawings, the same or corresponding elements are denoted by the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements. In the description of the disclosure, in case that it is determined that a detailed description of related functions or configurations may unnecessarily obscure the subject matter of the disclosure, the detailed description will be omitted. Further, the terms, as will be mentioned later, are defined by taking functionalities in the disclosure into account, but may vary depending on practices or intentions of users or operators. Accordingly, the terms should be defined based on descriptions throughout this specification.

Hereinafter, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing communication functions. In the disclosure, downlink (DL) refers to a radio transmission path for a signal transmitted from a BS to a UE, and uplink (UL) refers to a radio transmission path for a signal transmitted from a UE to a BS. Also, hereinafter, the LTE or LTE-A system may be described as an example, but an embodiment of the disclosure may be applied to other communication systems with similar technical backgrounds or channel types. For example, the 5th generation (5G) mobile communication technologies (new radio, NR) developed since the LTE-A may be included in the systems, and the 5G as herein used may be a concept including the existing LTE, LTE-A, or other similar services. Furthermore, the disclosure will also be applied to different communication systems with some modifications to such an extent that does not significantly deviate from the scope of the disclosure when determined by skilled people in the art.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus, such that the instructions, which execute via the processor of the computer or other programmable data processing apparatus, create means for implementing the functions specified in the flowchart block(s). These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block(s). The computer program instructions may also be loaded onto a computer or other programmable data processing apparatus to cause a series of operational steps to be performed on the computer or other programmable data processing apparatus to produce a computer implemented process such that the instructions that execute on the computer or other programmable data processing apparatus provide steps for implementing the functions specified in the flowchart block(s).

Further, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, elements such as software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements and a "unit", or divided into a larger number of elements and a "unit". Moreover, the elements and "units" or may be implemented to reproduce one or more central processing units (CPUs) within a device or a security multimedia card. Further, the "unit" in the embodiments may include one or more processors.

Wireless communication systems are evolving from early systems that provide voiceoriented services to broadband wireless communication systems that provide high data rate and high quality packet data services such as 3GPP high speed packet access (HSPA), long term evolution (LTE) or evolved universal terrestrial radio access (E-UTRA), LTE-advanced (LTE-A), LTE-Pro, 3GPP2 high rate packet data (HRPD), ultra mobile broadband (UMB), and IEEE 802.16e communication standards.

As a representative example of such a broadband wireless communication system, an LTE system adopts Orthogonal Frequency Division Multiplexing (OFDM) scheme for downlink (DL) and Single Carrier Frequency Division Multiple Access (SC-FDMA) scheme for uplink (UL). The UL refers to a radio link for a terminal (user equipment (UE)) or mobile station (MS) to transmit data or a control signal to a base station (eNode B or base station (BS)), and the DL refers to a radio link for a BS to transmit data or a control signal to a UE. Such a multiple access scheme allocates and operates time-frequency resources for carrying data or control information for respective users not to overlap each other, i.e., to maintain orthogonality, thereby differentiating each user's data or control information.

As a communication system since the LTE, i.e., the 5G communication system needs to freely reflect various demands from users and service providers and thus support services that simultaneously meet the various demands. The services considered for the 5G communication system may include enhanced Mobile Broadband (eMBB), massive Machine Type Communication (mMTC), Ultra Reliability Low Latency Communication (URLLC), etc.

The eMBB is aimed at providing more enhanced data rates than the LTE, LTE-A or LTE-Pro may support. For example, in the 5G communication system, the eMBB is required to provide 20 Gbps peak data rate in DL and 10 Gbps peak data rate in UL in terms of a single BS. Furthermore, the 5G communication system needs to provide increasing user perceived data rate while providing the peak data rate. To satisfy these requirements, enhancement of various technologies for transmission or reception including multiple-input multiple-output (MIMO) transmission technologies may be required. Also, while the LTE uses a maximum of 20 MHz transmission bandwidth in the 2 GHz band for signal transmission, the 5G communication system may use frequency bandwidth wider than 20 MHz in the 3 to 6 GHz band or in the 6 GHz or higher band, thereby satisfying the data rate required by the 5G communication system.

At the same time, in the 5G communication system, mMTC is considered to support an application service such as an Internet of Things (IoT) application service. In order for the mMTC to provide the IoT efficiently, support for access from massive number of UEs in a cell, enhanced coverage of the UE, extended battery time, reduction in terminal price, etc., are required. Because the IoT is equipped in various sensors and devices to provide communication functions, it may need to support a large number of UEs in a cell (e.g., 1,000,000 terminals/km²). Furthermore, a UE supporting the mMTC is more likely to be located in a shadow area, such as underground of a building, which might not be covered by a cell by the nature of the service, so the mMTC requires an even larger coverage than expected for other services provided by the 5G communication system. The UE supporting the mMTC needs to be a low-cost UE, and requires quite long battery life time such as 10 to 15 years because the battery in the UE is hard to be changed frequently.

Finally, URLLC is a mission-critical cellular-based wireless communication service. For example, the URLLC may provide services used for remote control over robots or machinery, industrial automation, unmanned aerial vehicle, remote health care, emergency alert, etc. Accordingly, communication offered by the URLLC requires very low latency and very high reliability. For example, URLLC services may need to satisfy air interface latency to be less than 0.5 millisecond and simultaneously require a packet error rate equal to or lower than $10^{-5}$. Hence, for the services supporting the URLLC, the 5G system needs to provide a smaller transmit time interval (TTI) than for other services, and at the same time, design requirements may require allocating a wide range of resources for a frequency band to secure reliability of the communication link.

Those three services in 5G, that is, eMBB, URLLC, and mMTC may be multiplexed in a single system for transmission. In this case, to meet different requirements for the respective services, different transmission or reception schemes and parameters may be used between the services. It is apparent that the 5G is not limited to the above-described three services.

[NR time-frequency resource]

Hereinafter, a frame structure of a 5G system will be described in detail with reference to accompanying drawings.

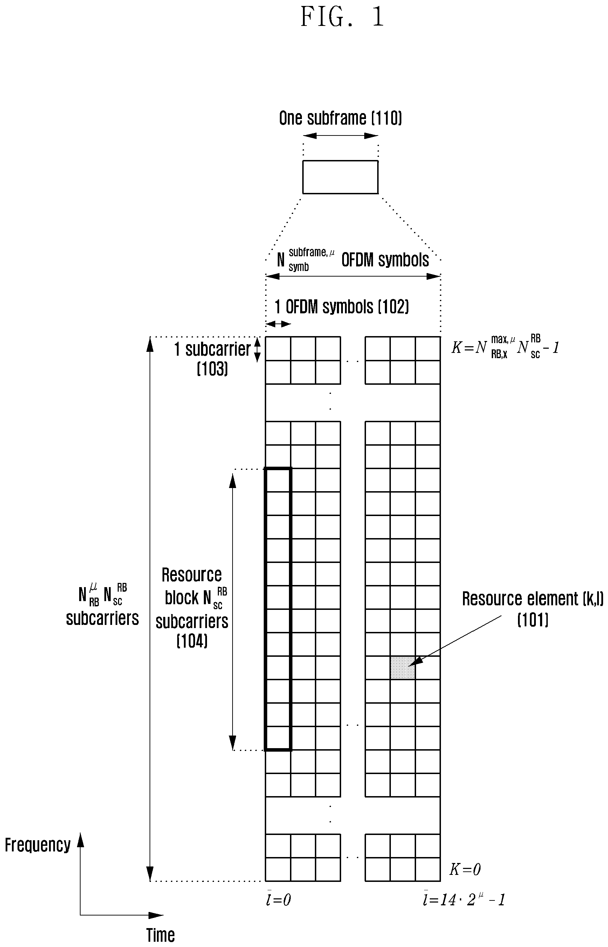

FIG. 1 is a diagram illustrating a basic structure of a time-frequency domain that is a radio resource area through which data or control signal is transmitted in a 5G system.

In FIG. 1 , a horizontal axis represents a time domain, and a vertical axis represents a frequency domain. In the time and frequency domains, the basic unit of a resource is resource element (RE) 101, and may be defined as one orthogonal frequency division multiplexing (OFDM) symbol 102 on the time axis, and one subcarrier 103 on the frequency axis. In the frequency domain, $N_{sc}^{RB}$ (e.g., 12) successive REs may constitute one resource block (RB) 104. On the time axis, one subframe 110 may include a plurality of OFDM symbols 102. For example, the length of one subframe may be 1ms.

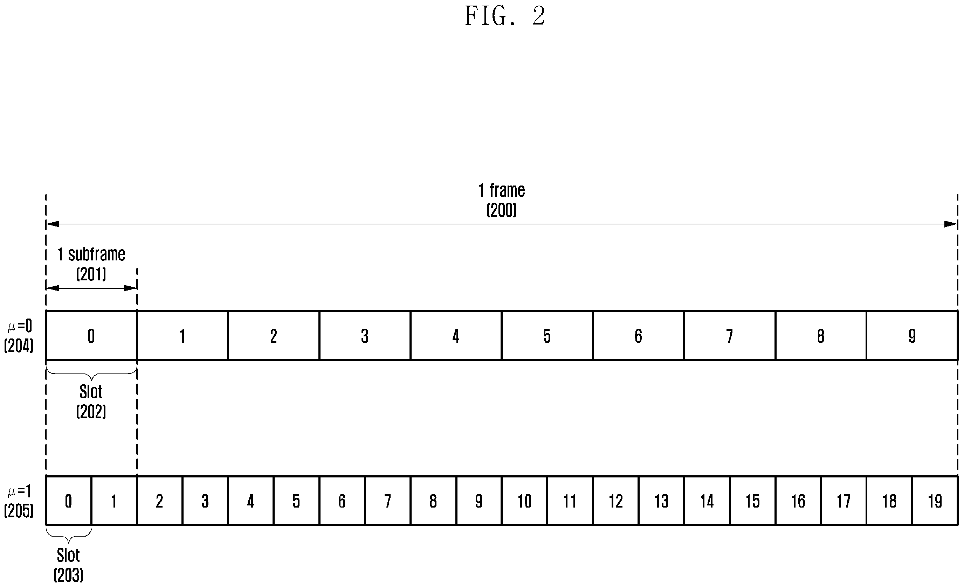

FIG. 2 is a diagram illustrating a frame, subframe, and slot structures in a wireless communication system according to an embodiment of the disclosure.

In FIG. 2, an example of structures of a frame 200, a subframe 201, and a slot 202 is illustrated. One frame 200 may be defined as 10 ms. One subframe 201 may be defined as 1 ms, and thus one frame 200 may be composed of total 10 subframes 201. One slot 202 or 203 may be defined as 14 OFDM symbols (i.e., the number of symbols per one slot is 14 ($N_{symb}^{slot} = 14$)). One subframe 201 may be composed of one or a plurality of slots 202 and 203, and the number of slots 202 and 203 per one subframe 201 may differ depending on 204 and 205 being configured values for subcarrier spacing. In an example of FIG. 2 , slot structures are illustrated in case of $\mu$=0 (204) and in case of $\mu$=1 (205) as the configured values of subcarrier spacing. In case of $\mu$=0 (204), one subframe 201 may be composed of one slot 202, and in case of $\mu$=1 (205), one subframe 201 may be composed of two slots 203. That is, depending on the configured value for the subcarrier spacing, the number ($N_{slot}^{subframe,\mu}$) of slots per one subframe may differ, and accordingly, the number ($N_{slot}^{frame,\mu}$) of slots per one frame may differ. The $N_{slot}^{subframe,\mu}$ and $N_{slot}^{frame,\mu}$ depending on the subcarrier spacing configurations $\mu$ may be defined as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, bandwidth part (BWP) configuration in the 5G communication system will be described in detail with reference to the drawing.

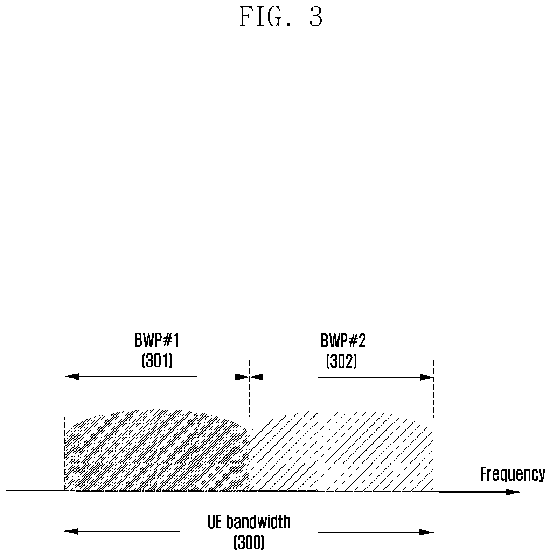

FIG. 3 is a diagram illustrating an example of configuration for a bandwidth part in a wireless communication system according to an embodiment of the disclosure.

FIG. 3 illustrates an example in which a UE bandwidth 300 is configured as two bandwidth parts, that is, bandwidth part #1 (BWP #1) 301 and bandwidth part #2 (BWP #2) 302. The base station may configure one or a plurality of bandwidth parts for the UE, and may configure the following information for the respective bandwidth parts.

[Table 2]

```
BWP ::=                          SEQUENCE {
    bwp-Id                           BWP-Id,
    (bandwidth part identifier)
    locationAndBandwidth             INTEGER (1..65536),
    (bandwidth part location)
    subcarrierSpacing                ENUMERATED {n0, n1, n2, n3, n4, n5},
    (subcarrier spacing)
    cyclicPrefix                     ENUMERATED { extended }
    (cycplic prefix)
}
```

It is apparent that the configuration information is not limited to the above example, and various parameters related to the bandwidth parts may be configured for the UE in addition to the configuration information. The information may be delivered from the base station to the UE through higher layer signaling, for example, radio resource control (RRC) signaling. At least one bandwidth part among one and a plurality of configured bandwidth parts may be activated. Whether to activate the configured bandwidth part may be semi-statically delivered from the base station to the UE through the RRC signaling, or may be dynamically delivered through downlink control information (DCI).

According to some embodiments, the UE before being RRC-connected may be configured with an initial BWP for the initial access from the base station through the master information block (MIB). More specifically, at an initial access operation, the UE may receive configuration information on a search space and a control resource set (CORESET) in which the PDCCH for receiving remaining system information (RMSI) (or system information block 1 which may correspond to SIB1) that is necessary for the initial access through the MIB. The control resource set and search space being configured through the MIB may be considered as identity (ID) 0, respectively. The base station may notify the UE of configuration information, such as frequency allocation information for control resource set # 0, time allocation information, and numerology, through the MIB. Further, the base station may notify the UE of configuration information on monitoring period and monitoring occasion for control resource set # 0, that is, configuration information on search space # 0, through the MIB. The UE may consider the frequency domain configured as control resource set # 0 obtained from the MIB as an initial bandwidth part for the initial access. In this case, the identity (ID) of the initial bandwidth part may be considered as 0.

The configuration for the bandwidth part being supported in the 5G system may be used for various purposes.

According to some embodiments, in case that the bandwidth supported by the UE is smaller than the system bandwidth, this may be supported through the bandwidth part configuration. For example, the base station may configure the frequency location (configuration information 2) of the bandwidth part for the UE, and thus the UE may transmit or receive data in a specific frequency location in the system bandwidth.

Further, according to some embodiments, the base station may configure a plurality of bandwidth parts for the UE for the purpose of supporting different numerologies. For example, in order for a certain UE to support all of data transmission/reception using 15 kHz subcarrier spacing and 30 kHz subcarrier spacing, two bandwidth parts may be configured as 15 kHz and 30 kHz subcarrier spacings. The different bandwidth parts may be frequency-division-multiplexed, and in case of transmitting or receiving data at specific subcarrier spacing, the bandwidth part being configured at the corresponding subcarrier spacing may be activated.

Further, according to some embodiments, the base station may configure the bandwidth part having bandwidths of different sizes for the UE for the purpose of reduction of power consumption of the UE. For example, in case that the UE supports a very large bandwidth, for example, bandwidth of 100 MHz, and always transmit or receive data in the corresponding bandwidth, very large power consumption may occur. In particular, performing of monitoring for unnecessary downlink control channel with a large bandwidth of 100 MHz in a situation of no traffic may be very inefficient from the viewpoint of power consumption. For the purpose of reducing the power consumption of the UE, the base station may configure a bandwidth part of a relatively small bandwidth, for example, the bandwidth part of 20 MHz, to the UE. In a situation of no traffic, the UE may perform a monitoring operation in the 20 MHz bandwidth part, and in case of data occurrence, the UE may transmit or receive data with the 100 MHz bandwidth part in accordance with the instructions of the base station.

As for the method for configuring the bandwidth part, the UEs before the RRC connection may receive configuration information on the initial bandwidth part through the master information block (MIB) at the initial access operation. More specifically, the UE may be configured with the control resource set (CORESET) for the downlink control channel on which the downlink control information (DCI) for scheduling the system information block (SIB) can be transmitted from the MIB on the physical broadcast channel (PBCH). The bandwidth of the control resource set configured as the MIB may be considered as the initial BWP, and the UE may receive the physical downlink shared channel (PDSCH) on which the SIB is transmitted through the configured initial BWP. In addition to the purpose of receiving the SIB, the initial BWP may be utilized for other system information (OSI), paging, and random access.

[Bandwidth part (BWP) change]

In case that one or more bandwidth parts are configured for the UE, the base station may instruct the UE to change(or switch, transit) the bandwidth part by using a bandwidth part indicator field in the DCI. As an example, in FIG. 3 , in case that the currently activated bandwidth part of the UE is BWP # 1 301, the base station may instruct the UE BWP # 2 302 through the bandwidth part indicator in the DCI, and the UE may perform the bandwidth part change to BWP # 2 302 indicated by the bandwidth part indicator in the received DCI.

As described above, the DCI based bandwidth part change may be indicated by the DCI scheduling the PDSCH or PUSCH, and in case that the UE receives a bandwidth part change request, it is required to perform reception or transmission of the PDSCH or PUSCH being scheduled by the corresponding DCI without difficulty in the changed bandwidth part. For this, requirements for a delay time $T_{BWP}$ required when changing the bandwidth part have been regulated in the standard, and may be defined, for example, as follows.

[Table 3]

| $\mu$ | NR Slot length (ms) | BWP switch delay $T_{BWP}$ (slots) | |
| --- | --- | --- | --- |
| | | Type 1[Note1] | Type 2[Note1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2 in accordance with UE capability. The UE may report a supportable bandwidth part delay time type to the base station.

According to the requirements for the bandwidth part change delay time described above, in case that the UE receives the DCI including the bandwidth part change indicator at slot n, the UE may complete the change to a new bandwidth part indicated by the bandwidth part change indicator at a time that is not later than the slot $n+T_{BWP}$, and may perform transmission/reception for the data channel being scheduled by the corresponding DCI in the new changed bandwidth part. In case of scheduling the data channel in the new bandwidth part, the base station may determine the time domain resource allocation for the data channel in consideration of the bandwidth part change delay time ($T_{BWP}$) of the UE. That is, when scheduling the data channel with the new bandwidth part, in the method for determining the time domain resource allocation for the data channel, the base station may schedule the corresponding data channel after the bandwidth part change delay time. Accordingly, the UE may not expect that the DCI indicating the bandwidth part change indicates a slot offset (K0 or K2) value that is smaller than the bandwidth part change delay time ($T_{BWP}$).

If the UE receives the DCI (e.g., DCI format 1_1 or 0_1) indicating the bandwidth part change, the UE may not perform any transmission or reception during a corresponding time period from the third symbol of the slot having received the PDCCH including the corresponding DCI to a start time point of the slot indicated by the slot offset (K0 or K2) value indicated by the time domain resource allocation indicator field in the corresponding DCI. For example, in case that the UE has received the DCI indicating the bandwidth part change at slot n, and the slot offset value indicated by the corresponding DCI is K, the UE may not perform any transmission or reception from the third symbol of slot n to the symbol (e.g., last symbol of slot n+K-1) before slot n+K.

[SS/PBCH block]

Next, a synchronization signal (SS)/PBCH block in the 5G will be described.

The SS/PBCH block may mean a physical layer channel block composed of a Primary SS (PSS), a Secondary SS (SSS), and a PBCH. Specifically, it is as follows.

- PSS: It is a signal that serves as a reference for downlink time/frequency synchronization and provides part of information on a cell ID.
- SSS: It serves as a reference for downlink time/frequency synchronization, and provides the rest of the information on the cell ID, which a PSS does not provide. Additionally, it may serve as a Reference Signal for demodulation of a PBCH.
- PBCH: It provides essential system information necessary for the UE to transmit and receive a data channel and control channel. The essential system information may include search space-related control information indicating radio resource mapping information on a control channel, scheduling control information about a separate data channel for transmitting system information, or the like.
- SS/PBCH block: The SS/PBCH block is composed of a combination of a PSS, an SSS, and a PBCH. One or more SS/PBCH blocks may be transmitted within 5 ms, and each transmitted SS/PBCH block may be distinguished with an index.

The UE may detect a PSS and an SSS in an initial access phase and may decode a PBCH. The UE may obtain an MIB from the PBCH and be therefrom configured with a control resource set #0 (which may correspond to a control resource set whose control resource set index is 0). The UE may perform monitoring on the control resource set #0, assuming that a selected SS/PBCH block and a Demodulation Reference signal (DMRS) transmitted in the control resource set #0 are quasi-co-located (QCLed). The UE may receive system information via downlink control information transmitted in the control resource set #0. The UE may obtain configuration information related to a Random Access Channel (RACH) required for an initial access from the received system information. The UE may transmit a Physical RACH (PRACH) to the base station considering the selected SS/PBCH block index, and the base station receiving the PRACH may obtain the SS/PBCH block index selected by the UE. The base station may know which block the UE has selected from the SS/PBCH blocks and monitors the control resource set #0 related thereto.

[PDCCH: Relating to DCI]

Next, downlink control information (DCI) in a 5G system will be described in detail.

Scheduling information of uplink data (or a Physical Uplink Shared Channel (PUSCH)) or downlink data (or a Physical Downlink Shared Channel (PDSCH)) in the 5G system is delivered from a base station to a UE via the DCI. The UE may monitor a DCI format for fallback and a DCI format for non-fallback for the PUSCH or PDSCH. The DCI format for fallback may be composed of fixed fields predefined between the base station and the UE, and the DCI format for non-fallback may include configurable fields.

DCI may be transmitted via a Physical Downlink Control Channel (PDCCH) which is a physical downlink control channel, after passing a channel coding and modulation process. A Cyclic Redundancy Check (CRC) may be added to a payload of the DCI message, and the CRC may be scrambled with a Radio Network Temporary Identifier (RNTI) which corresponds to identity of the UE. Different RNTIs may be used for the purposes of the DCI message, e.g., UE-specific data transmission, power control command, or random access response. That is, the RNTI is not explicitly transmitted, but the RNTI is included in a CRC calculation process and transmitted. Upon receiving the DCI message transmitted on the PDCCH, the UE may identify the CRC using the allocated RNTI, and if the CRC identification result is correct, the UE may be aware that the corresponding message has been transmitted to the UE.

For example, DCI scheduling a PDSCH for System Information (SI) may be scrambled with an SI-RNTI. DCI scheduling a PDSCH for a Random Access Response (RAR) message may be scrambled with an RA-RNTI. DCI scheduling a PDSCH for a paging message may be scrambled with a P-RNTI. DCI notifying a Slot Format Indicator (SFI) may be scrambled with an SFI-RNTI. DCI notifying Transmit Power Control (TPC) may be scrambled with a TPC-RNTI. DCI scheduling UE-specific PDSCH or PUSCH may be scrambled with a Cell RNTI (C-RNTI).

A DCI format 0_0 may be used as fallback DCI for PUSCH scheduling, wherein a CRC is scrambled by a C-RNTI. DCI format 0_0 in which a CRC is scrambled by a C-RNTI may include the information as shown below.

[Table 4]

| |
|---|
| - Identifier for DCI formats - [1] bit |
| - Frequency domain resource assignment - $[\lceil \log_2 (N_{RB}^{UL,BWP}(N_{RB}^{UL,BWP}+1)/2) \rceil ]$ bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - TPC command for scheduled PUSCH - [2] bits |
| - UL/SUL indicator - 0 or 1 bit |

DCI format 0_1 may be used for non-fallback DCI for scheduling a PUSCH, in which case the CRC may be scrambled with a C-RNTI. DCI format 0_1, in which the CRC is scrambled with the C-RNTI, may include, for example, the following information

[Table 5]

- Carrier indicator – 0 or 3 bits
- UL/SUL indicator – 0 or 1 bit
- Identifier for DCI formats – [1] bits
- Bandwidth part indicator – 0, 1 or 2 bits
- Frequency domain resource assignment
  - For resource allocation type 0, $\left\lceil N_{RB}^{UL,BWP} / P \right\rceil$ bits
  - For resource allocation type 1, $\left\lceil \log_2 (N_{RB}^{UL,BWP}(N_{RB}^{UL,BWP}+1)/2) \right\rceil$ bits
- Time domain resource assignment –1, 2, 3, or 4 bits
- VRB-to-PRB mapping – 0 or 1 bit, only for resource allocation type 1.
  - 0 bit if only resource allocation type 0 is configured;
  - 1 bit otherwise.
- Frequency hopping flag – 0 or 1 bit, only for resource allocation type 1.
  - 0 bit if only resource allocation type 0 is configured;
  - 1 bit otherwise.
- Modulation and coding scheme – 5 bits
- New data indicator – 1 bit
- Redundancy version – 2 bits
- HARQ process number – 4 bits
- 1st downlink assignment index – 1 or 2 bits
  - 1 bit for semi-static HARQ-ACK codebook;
  - 2 bits for dynamic HARQ-ACK codebook with single HARQ-ACK codebook.
- 2nd downlink assignment index – 0 or 2 bits
  - 2 bits for dynamic HARQ-ACK codebook with two HARQ-ACK sub-codebooks;
  - 0 bit otherwise.
- TPC command for scheduled PUSCH – 2 bits
- SRS resource indicator – $\left\lceil \log_2 \left( \sum_{k=1}^{L_{max}} \binom{N_{SRS}}{k} \right) \right\rceil$ or $\left\lceil \log_2(N_{SRS}) \right\rceil$ bits
  - $\left\lceil \log_2 \left( \sum_{k=1}^{L_{max}} \binom{N_{SRS}}{k} \right) \right\rceil$ bits for non-codebook based PUSCH transmission;
  - $\left\lceil \log_2(N_{SRS}) \right\rceil$ bits for codebook based PUSCH transmission.
- Precoding information and number of layers –up to 6 bits
- Antenna ports – up to 5 bits
- SRS request – 2 bits
- CSI request – 0, 1, 2, 3, 4, 5, or 6 bits
- CBG transmission information – 0, 2, 4, 6, or 8 bits
- PTRS-DMRS association – 0 or 2 bits.
- beta_offset indicator – 0 or 2 bits
- DMRS sequence initialization – 0 or 1 bit

DCI format 1_0 may be used for fallback DCI for scheduling a PDSCH in which case the CRC may be scrambled with a C-RNTI. DCI format 1_0 in which the CRC is scrambled with the C-RNTI may include, for example, the following information.

[Table 6]

- Identifier for DCI formats – [1] bit

- Frequency domain resource assignment – $[\lceil \log_2(N_{RB}^{DL,BWP}(N_{RB}^{DL,BWP}+1)/2)\rceil]$ bits

- Time domain resource assignment – X bits

- VRB-to-PRB mapping – 1 bit.

- Modulation and coding scheme – 5 bits

- New data indicator – 1 bit

- Redundancy version – 2 bits

- HARQ process number – 4 bits

- Downlink assignment index – 2 bits

- TPC command for scheduled PUCCH – [2] bits

- PUCCH resource indicator – 3 bits

- PDSCH-to-HARQ feedback timing indicator – [3] bits

DCI format 1_1 may be used for non-fallback DCI for scheduling a PDSCH, in which case the CRC may be scrambled with a C-RNTI. DCI format 1_1, in which the CRC is scrambled with the C-RNTI, may include, for example, the following information.

[Table 7]

- Carrier indicator – 0 or 3 bits
- Identifier for DCI formats – [1] bits
- Bandwidth part indicator – 0, 1 or 2 bits
- Frequency domain resource assignment
  - For resource allocation type 0, $\left\lceil N_{RB}^{DL,BWP} / P \right\rceil$ bits
  - For resource allocation type 1, $\left\lceil \log_2 (N_{RB}^{DL,BWP}(N_{RB}^{DL,BWP}+1)/2) \right\rceil$ bits
- Time domain resource assignment –1, 2, 3, or 4 bits
- VRB-to-PRB mapping – 0 or 1 bit, only for resource allocation type 1.
  - 0 bit if only resource allocation type 0 is configured;
  - 1 bit otherwise.
- PRB bundling size indicator – 0 or 1 bit
- Rate matching indicator – 0, 1, or 2 bits
- ZP CSI-RS trigger – 0, 1, or 2 bits

For transport block 1:
- Modulation and coding scheme – 5 bits
- New data indicator – 1 bit
- Redundancy version – 2 bits

For transport block 2:
- Modulation and coding scheme – 5 bits
- New data indicator – 1 bit
- Redundancy version – 2 bits
- HARQ process number – 4 bits
- Downlink assignment index – 0 or 2 or 4 bits
- TPC command for scheduled PUCCH – 2 bits
- PUCCH resource indicator – 3 bits
- PDSCH-to-HARQ_feedback timing indicator – 3 bits
- Antenna ports – 4, 5 or 6 bits
- Transmission configuration indication – 0 or 3 bits
- SRS request – 2 bits
- CBG transmission information – 0, 2, 4, 6, or 8 bits
- CBG flushing out information – 0 or 1 bit
- DMRS sequence initialization – 1 bit

[PDCCH: CORESET, REG, CCE, Search Space]

Hereinafter, the downlink control channel in the 5G communication system will be described in more detail with reference to the drawings.

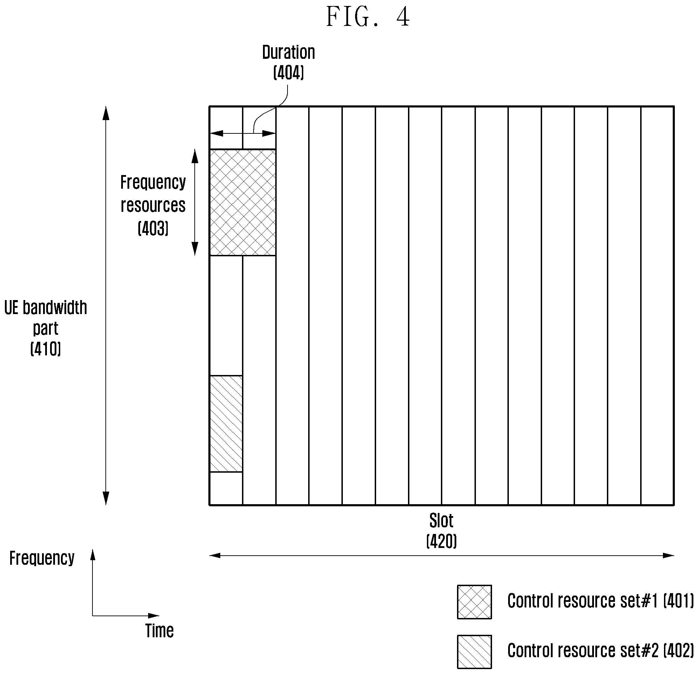

FIG. 4 is a diagram illustrating an example of a control resource set (CORESET) in which a downlink control channel is transmitted in the 5G wireless communication system.

FIG. 4 illustrates an example in which a bandwidth part 410 of the UE is configured on the frequency axis and two control resource sets (control resource set #1 401 and control resource set #2 402) are configured within one slot 420 on the time axis. The control resource sets 401 and 402 may be configured in specific frequency resources 403 within a total UE bandwidth part 410 on the frequency axis. The control resource sets 401 and 402 may be configured as one or a plurality of OFDM symbols on the time axis, which may be defined as a control resource set duration 404. In the example of FIG. 4 , control resource set #1 401 is configured as the control resource set duration of two symbols, and control resource set #2 402 is configured as the control resource set duration of one symbol.

The above described control resource sets in 5G may be configured through higher layer signaling (for example, system information, a master information block (MIB), or radio resource control (RRC) signaling) in the UE by the base station. Configuring the control resource set in the UE may mean providing information such as the identity of the control resource set, the frequency location of the control resource set, and the symbol length of the control resource set. For example, the following information may be included.

[Table 8]

```
ControlResourceSet ::=                    SEQUENCE {
    -- Corresponds to L1 parameter 'CORESET-ID'

    controlResourceSetId                  ControlResourceSetId,
    (identity of control resource set)
    frequencyDomainResources              BIT STRING (SIZE (45)),
    (resource allocation information on frequency axis)
    duration                              INTEGER (1..maxCoReSetDuration),
    (resource allocation information on time axis)
    cce-REG-MappingType                       CHOICE {
    (CCE-to-REG mapping scheme)
        interleaved                       SEQUENCE {

            reg-BundleSize                    ENUMERATED {n2, n3, n6},
            (size of REG bundle)

            precoderGranularity               ENUMERATED {sameAsREG-bundle, allContiguousRBs},

            interleaverSize                   ENUMERATED {n2, n3, n6}
            (size of interleaver)

            shiftIndex                        INTEGER(0..maxNrofPhysicalResourceBlocks-1)
            (interleaver Shift)
        },
        nonInterleaved                    NULL
    },
    tci-StatesPDCCH                       SEQUENCE(SIZE (1..maxNrofTCI-StatesPDCCH)) OF
        TCI-StateId               OPTIONAL,
    (QCL configuration information)
    tci-PresentInDCI                      ENUMERATED {enabled}
}
```

In Table 8, tci-StatesPDCCH (simply, referred to as a transmission configuration indication (TCI) state) configuration information may include information on one or a plurality of synchronization signal (SS)/physical broadcast channel (PBCH) block indexes or channel state information reference signal (CSI-RS) indexes having the quasi co-location (QCL) relationship with DMRS transmitted in the corresponding control resource set.

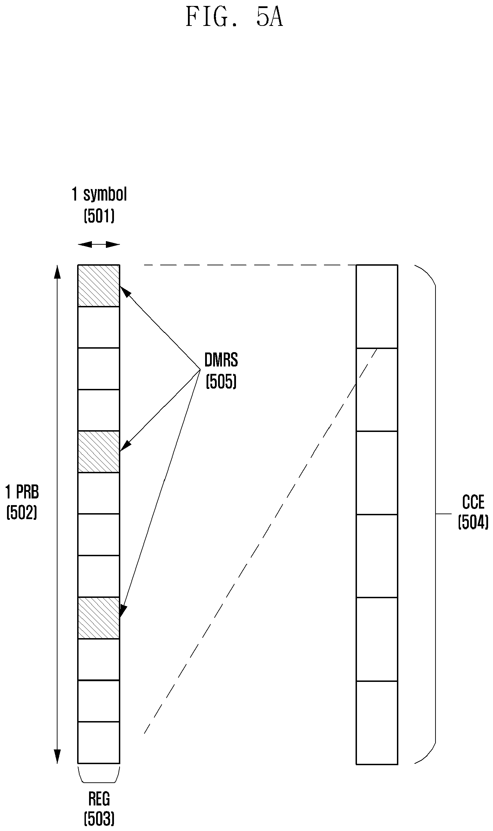

FIG. 5A is a diagram illustrating an example of a basic unit of time and frequency resources included in a downlink control channel which can be used by 5G.

According to FIG. 5A, the basic unit of time and frequency resources constituting the control channel may be named a resource element group (REG) 503, and the REG 503 may be defined as one OFDM symbol 501 on the time axis and one physical resource block (PRB) 502 on the frequency axis, that is, as 12 subcarriers. It is possible to configure a downlink control channel allocation unit by concatenating the REG 503.

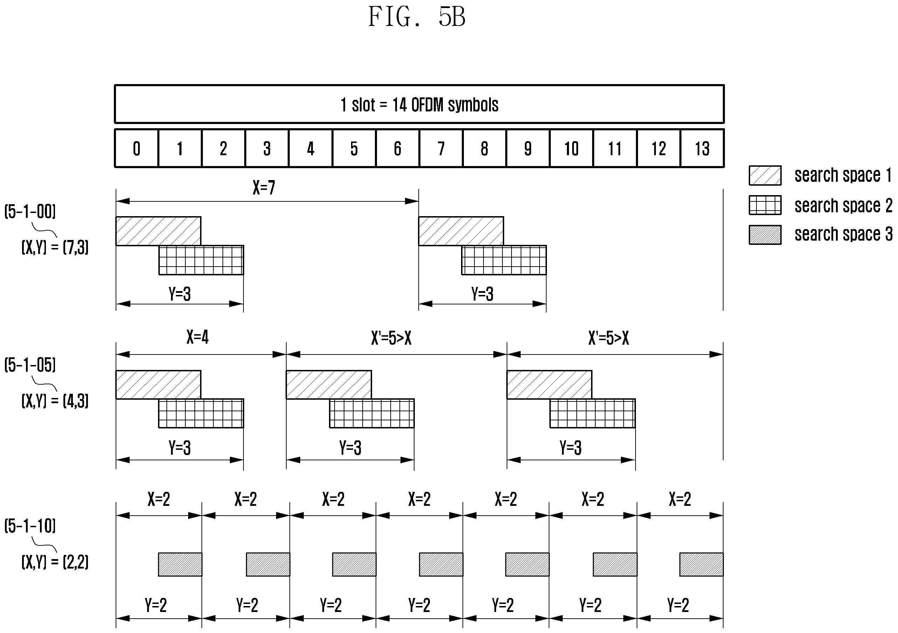

As illustrated in FIG. 5, in case that the basic unit in which the downlink control channel is allocated in the 5G is a control channel element (CCE) 504, one CCE 504 may include a plurality of REGs 503. For example, the REG 503 illustrated in FIG. 5A may include 12 REs, and if one CCE 504 includes six REGs 503, one CCE 504 may include 72 REs. If a downlink control resource set is configured, the corresponding resource set may include a plurality of CCEs 504, and a specific downlink control channel may be mapped to one or a plurality of CCEs 504 according to an aggregation level (AL) within the control resource set and may then be transmitted. The CCEs 504 within the control resource set may be distinguished by numbers, and the CCEs 504 numbers may be allocated according to a logical mapping scheme.

The basic unit of the downlink control channel illustrated in FIG. 5A, that is, the REG 503, may include all REs to which the DCI is mapped and the region to which a DMRS 505, which is a reference signal for decoding the REs, is mapped. As illustrated in FIG. 5A, three DMRSs 505 may be transmitted within one REG 503. The number of CCEs required to transmit the PDCCH may be 1, 2, 4, 8, or 16 according to the Aggregation Level (AL), and the different number of CCEs may be used to implement link adaptation of the downlink control channel. For example, in case of AL=L, one downlink control channel may be transmitted through L CCEs. The UE is required to detect a signal in the state in which the UE is not aware of information on the downlink control channel, and a search space indicating a set of CCEs may be used to assist in the blind decoding. The search space is a set of DL candidate control channels including CCEs for which the UE should attempt decoding at the given aggregation level, and there are several aggregation levels at which a set of CCEs is configured by 1, 2, 4, 8, and 16 CCEs, so that the UE may have a plurality of search spaces. The search space set may be defined as a set of search spaces at all configured aggregation levels.

The search spaces may be classified into a common search space and a terminal (UE)-specific search space. The UEs in a predetermined group or all UEs may search for a common search space of the PDCCH in order to receive cell-common control information such as dynamic scheduling of system information or paging messages. For example, PDSCH scheduling allocation information for transmission of an SIB including information on the service provider of a cell, etc. may be received by searching a common search space of the PDCCH. In the case of the common search space, the UEs in a predetermined group or all UEs should receive the PDCCH, so that the common search space may be defined as a set of prearranged CCEs. Scheduling allocation information of the UE-specific PDSCH or PUSCH may be received by searching a UE-specific search space of the PDCCH. The UE-specific search space may be defined in a UE-specific manner as a UE identity and a function of various system parameters.

In the 5G, parameters for the PDCCH search space may be configured in the UE by the base station through higher layer signaling (for example, SIB, MIB, or RRC signaling). For example, the base station may configure, in the UE, the number of PDCCH candidates at each aggregation level L, a monitoring period of the search space, a monitoring occasion in units of symbols within the slot for the search space, a search space type (a common search space or a UE-specific search space), a combination of a DCI format and an RNTI to be monitored in the corresponding search space, a control resource set index for monitoring the search space, and the like. For example, the following information may be included.

[Table 9]

```
SearchSpace ::=                              SEQUENCE {
    -- Identity of the search space. SearchSpaceId = 0 identifies the SearchSpace configured via PBCH (MIB) or
      ServingCellConfigCommon.
    searchSpaceId                            SearchSpaceId,
    (ID of search space)
    controlResourceSetId                     ControlResourceSetId,
    (ID of control resource set)
    monitoringSlotPeriodicityAndOffset       CHOICE {
    (period of level of slot to be monitored)
        sl1                                      NULL,
        sl2                                      INTEGER (0..1),
        sl4                                      INTEGER (0..3),
        sl5                                  INTEGER (0..4),
        sl8                                      INTEGER (0..7),
        sl10                                 INTEGER (0..9),
        sl16                                 INTEGER (0..15),
        sl20                                 INTEGER (0..19)
    }
    duration(monitoring duration)               INTEGER (2..2559)
    monitoringSymbolsWithinSlot                 BIT STRING (SIZE (14))
    (symbol within slot to be monitored)
    nrofCandidates                           SEQUENCE {
    (number of PDCCH candidates for each aggregation level)
        aggregationLevel1                    ENUMERATED {n0, n1, n2, n3, n4, n5, n6, n8},
        aggregationLevel2                    ENUMERATED {n0, n1, n2, n3, n4, n5, n6, n8},
        aggregationLevel4                    ENUMERATED {n0, n1, n2, n3, n4, n5, n6, n8},
        aggregationLevel8                    ENUMERATED {n0, n1, n2, n3, n4, n5, n6, n8},
        aggregationLevel16                   ENUMERATED {n0, n1, n2, n3, n4, n5, n6, n8}
    },

    searchSpaceType                          CHOICE {
    (type of search space)
        -- Configures this search space as common search space (CSS) and DCI formats to monitor.
        common                                   SEQUENCE {
        (common search space)
        }
        ue-Specific                          SEQUENCE {
        (UE-specific search space)
            -- Indicates whether the UE monitors in this USS for DCI formats 0-0 and 1-0 or for formats 0-1 and 1-1.
            formats                              ENUMERATED {formats0-0-And-1-0,
            formats0-1-And-1-1},
        ...
    }
```

The base station may configure one or a plurality of search space sets in the UE according to the configuration information. For example, the base station may configure search space set 1 and search space 2 in the UE, and the configuration may be performed such that DCI format A, scrambled by an X-RNTI in search space set 1, is monitored in the common search space and DCI format B scrambled by a Y-RNTI in search space set 2 is monitored in the UE-specific search space.

According to the configuration information, there may be one or a plurality of search space sets in the common search space or the UE-specific search space. For example, search space set #1 and search space set #2 may be configured as common search spaces, and search space set #3 and search space set #4 may be configured as UE-specific search spaces.

In the common search space, the following combinations of DCI formats and RNTIs may be monitored, but it is not apparently limited thereto.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI

- DCI format 2_3 with CRC scrambled by TPC-SRS-RNTI

In the UE-specific search space, the following combinations of DCI formats and RNTIs may be monitored, but is not apparently limited thereto.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The above specified RNTIs may comply with the following definition and purpose.

- C-RNTI (Cell RNTI): It is used for UE-specific PDSCH scheduling
- TC-RNTI (Temporary Cell RNTI): It is used for UE-specific PDSCH scheduling
- CS-RNTI(Configured Scheduling RNTI): It is used for semi-statically configured UE-specific PDSCH scheduling
- RA-RNTI (Random Access RNTI): It is used for scheduling PDSCH at random access stage
- P-RNTI (Paging RNTI): It is used for scheduling PDSCH through which paging is transmitted
- SI-RNTI (System Information RNTI): It is used for scheduling PDSCH through which system information is transmitted
- INT-RNTI (Interruption RNTI): It is used for indicating whether puncturing is performed for PDSCH
- TPC-PUSCH-RNTI (Transmit Power Control for PUSCH RNTI): It is used for indicating PUSCH power control command
- TPC-PUCCH-RNTI (Transmit Power Control for PUCCH RNTI): It is used for indicating PUCCH power control command
- TPC-SRS-RNTI (Transmit Power Control for SRS RNTI): It is used for indicating SRS power control command

The above DCI formats may comply with the following definition.

[Table 10]

| DCI format | Usage |
| --- | --- |
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In the 5G, with control resource set p and search space set s, a search space at the aggregation level L may be expressed as in Equation 1.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- L: aggregation level

- $n_{CI}$: carrier index

- $N_{CCE,p}$: total number of CCEs in control resource set p

- $$n_{s,f}^{\mu}$$

: slot index

- $$M_{s,\mathrm{max}}^{(L)}$$ : number of PDCCH candidates at aggregation level L

- $$m_{s,n_{CI}} = 0, ..., \; M_{s,\mathrm{max}}^{(L)} -1$$ : index of PDCCH candidates at aggregation level L

- i = 0, ..., L-1

- $$Y_{p,n_{s,f}^{\mu}} = (A_p \cdot Y_{p,n_{s,f}^{\mu}-1}) \bmod D$$ , $Y_{p,-1} = n_{RNTI} \neq 0$, $A_p$=39827 *for pmod3 = 0*, $A_p$=39829 *for pmod3 = 1*, $A_p$=39839 *for pmod3 = 2*, *D* = 65537

- $n_{RNTI}$ : UE identifier

$$Y_{p,n_{s,f}^{\mu}}$$

value may correspond to 0 for common search space.

$$Y_{p,n_{s,f}^{\mu}}$$

value may correspond to a value that changes according to UE Identity (C-RNTI or ID configured by the base station for the UE) and time index for the UE-specific search space.

In the 5G, a plurality of search space sets may be configured with different parameters (e.g., parameters as in table 9). Accordingly, the set of search spaces to be monitored by the UE may vary at each point in time. For example, when the search space set #1 is configured with X-slot periodicity and the search space set #2 is configured with Y-slot periodicity, where X and Y are different, the UE may monitor both the search space set #1 and the search space set #2 in a particular slot, and monitor one of the search space set #1 and the search space set #2 in another particular slot.

[PDCCH: span]

The UE may perform a UE capability report regarding a case where the UE has a plurality of PDCCH monitoring locations in a slot, for each subcarrier spacing, and at this time, may use a concept of span. The span denotes consecutive symbols for the UE to monitor the PDCCH in the slot, and each PDCCH monitoring location is within one span. The span may be represented as (X, Y), and here, X denotes the minimum number of symbols between first symbols of two consecutive spans, and Y denotes the number of consecutive symbols for monitoring the PDCCH in one span. Here, the UE may monitor the PDCCH in a section of the span from the first symbol to a Y symbol, in the span.

FIG. 5B is a diagram illustrating, through the span, a case where the UE may have the plurality of PDCCH monitoring locations in the slot, in a wireless communication system.

Regarding the span, (X, Y)=(7, 4), (4, 3), and (2, 2), and these three cases are respectively indicated by 5-1-00, 5-1-05, and 5-1-10 in FIG. 5B. For example, the case 5-1-00 shows a case where two spans representable by (7, 4) are present in a slot. An interval between first symbols of the two spans is represented by X=7, a PDCCH monitoring location may be presented within total Y=3 symbols from the first symbol of each span, and search spaces 1 and 2 are each present within Y=3 symbols. As another example, the case 5-1-05 shows a case where total three spans representable by (4, 3) are present in a slot, wherein an interval between second and third spans is X'=5 symbols that is greater than X=4 symbols.

[PDCCH: UE capability report]

The slot location in which the above-described common search space and UE-specific search space are located is indicated by the parameter, monitoringSymbolsWithinSlot in Table 11-1, and the symbol location in the slot is indicated by a bitmap through the parameter, monitoringSymbolsWithinSlot in Table 9. Meanwhile, the symbol location within a slot in which the UE is able to monitor the search space may be reported to the base station through the following UE capabilities.

- UE capability 1 (hereinafter referred to as FG 3-1). This UE capability indicates, in the case where one monitoring occasion (MO) for common search spaces or UE-specific search spaces in type 1 and type 3 exists in the slot as shown in Table 11-1 below, the capability of monitoring the corresponding MO when the corresponding MO is located in the first three symbols in the slot. This UE capability is a mandatory capability that all UEs supporting NR must support, and whether or not to support this capability is not explicitly reported to the base station.

[Table 11-1]

| Index | Feature group | Components | Field name in TS 38.331 [2] |
|---|---|---|---|
| 3-1 | Basic DL control channel | 1) One configured CORESET per BWP per cell in addition to CORESET0<br>- CORESET resource allocation of 6RB bit-map and duration of 1 - 3 OFDM symbols for FR1<br>- For type 1 CSS without dedicated RRC configuration and for type 0, 0A, and 2 CSSs, CORESET resource allocation of 6RB bit-map and duration 1-3 OFDM symbols for FR2<br>- For type 1 CSS with dedicated RRC configuration and for type 3 CSS, UE specific SS, CORESET resource allocation of 6RB bit-map and duration 1-2 OFDM symbols for FR2<br>- REO-bundle sizes of 2/3 RBs or 6 RBs<br>- Interleaved and non-interleaved CCE-to-REG mapping<br>- Precoder-granularity of REG-bundle size<br>- PDCCH DMRS scrambling determination<br>- TCI state(s) for a CORESET configuration<br>2) CSS and UE-SS configurations for unicast PDCCH transmission per BWP per cell<br>- PDCCH aggregation levels 1, 2, 4, 8, 16<br>- UP to 3 search space sets in a slot for a scheduled SCell per BWP<br>This search space limit is before applying all dropping rules.<br>- For type 1 CSS with dedicated RRC configuration, type 3 CSS, and UE-SS, the monitoring occasion is within the first 3 OFDM symbols of a slot<br>- For type 1 CSS without dedicated RRC configuration and for type 0, 0A, and 2 CSS, the monitoring occasion can be any OFDM symbol(s) of a slot, with the monitoring occasions for any of Type 1- CSS without dedicated RRC configuration, or Types 0, 0A, or 2 CSS configurations within a single span of three consecutive OFDM symbols within a slot<br>3) MonitoringDCI formats 0_0, 1_0, 0_1, 1_1<br>4) Number of PDCCH blind decodes per slot with a given SCS follows Case 1-1 table<br>5) Processing one unicast DCI scheduling DL and one unicast DCI scheduling UL per slot per scheduled CC for FDD<br>6) Processing one unicast DCI scheduling DL and2 unicast DCI scheduling UL per slot per scheduled CC for TDD | n/a |

- UE capability 2 (hereinafter referred to as FG 3-2). This UE capability indicates, in the case where one monitoring occasion (MO) for a common search space or a UE-specific search space exists in the slot as shown in Table 11-2 below, the capability of monitoring the MO, regardless of the location of the start symbol of the corresponding MO. This UE capability is selectively supported by the UE (optional), and whether or not to support this capability is explicitly reported to the base station.

[Table 11-2]

| Index | Feature group | Components | Field name in TS 38.331 [2] |
|---|---|---|---|
| 3-2 | PDCCH monitoring on any span of up to 3 consecutive OFDM symbols of a slot | For a given UE, all search space configurations are within the same span of 3 consecutive OFDM symbols in the slot | *pdcchMonitoringSingleOccasion* |

- UE capability 3 (hereinafter referred to as FG 3-5, 3-5a, or 3-5b). This UE capability indicates, in the case where a plurality of monitoring occasions (MOs) for a common search space or a UE-specific search space exists in the slot as shown in Table 11-3 below, a pattern of the MO capable of being monitored by the UE. The above-described pattern includes spacing X between start symbols of different MOs and a maximum symbol length Y for one MO. A combination of (X, Y) supported by the UE may be one or more of {(2, 2), (4, 3), (7, 3)}. This UE capability is selectively supported by the UE (optional), and whether or not to support this capability and the above-mentioned combination (X, Y) is explicitly reported to the base station.

[Table 11-3]

| Index | Feature group | Components | Field name in TS 38.331 [2] |
|---|---|---|---|
| 3-5 | For type 1 CSS with dedicated RRC configuration, type 3 CSS, and UE-SS, monitoring occasion can be any OFDM symbol(s) of a slot for Case 2 | For type 1 CSS with dedicated RRC configuration, type 3 CSS, and UE-SS, monitoring occasion can be any OFDM symbol(s) of a slot for Case 2 | pdcch-MonitoringAnyOccasions { 3-5. withoutDCI-Gap 3-5a. withDCI-Gap } |
| 3-5a | For type 1 CSS with dedicated RRC configuration, type 3 CSS, and UE-SS, monitoring occasion can be any OFDM symbol(s) of a slot for Case 2 with a DCI gap | For type 1 CSS with dedicated RRC configuration, type 3 CSS and UE-SS, monitoring occasion can be any OFDM symbol(s) of a slot for Case 2, with minimum time separation (including the cross-slot boundary case) between two DL unicast DCIs, between two UL unicast DCIs, or between a DL and an UL unicast DCI in different monitoring occasions where at least one of them is not the monitoring occasions of FG-3-1, for a same UE as<br>- 2 OFDM symbols for 15kHz<br>- 4 OFDM symbols for 30kHz<br>- 7 OFDM symbols for 60kHz with NCP<br>- 11 OFDM symbols for 120kHz<br>Up to one unicast DL DCI and up to one unicast UL DCI in a monitoring occasion except for the monitoring occasions of FG 3-1.<br>In addition for TDD the minimum separation between the first two UL unicast DCIs within the first 3 OFDM symbols of a slot can be zero OFDM symbols. | |
| 3-5b | All PDCCH monitoring occasion can be any OFDM symbol(s) of a slot for Case 2 with a span gap | PDCCH monitoring occasions of FG-3-1, plus additional PDCCH monitoring occasion(s) can be any OFDM symbol(s) of a slot for Case 2, and for any two PDCCH monitoring occasions belonging to different spans, where at least one of them is not the monitoring occasions of FG-3-1, in same or different search spaces, there is a minimum time separation of X OFDM symbols (including the cross-slot boundary case) between the start of two spans, where each span is of length up to Y consecutive OFDM symbols of a slot. Spans do not overlap. Every span is contained in a single slot. The same span pattern repeats in every slot. The separation between consecutive spans within and across slots may be unequal but the same (X, Y) limit must be satisfied by all spans. Every monitoring occasion is fully contained in one span. In order to determine a suitable span pattern, first a bitmap b(l), 0<=l<=13 is generated, where b(l)=1 if symbol l of any slot is part of a monitoring occasion, b(l)=0 otherwise. The first span in the span pattern begins at the smallest l for which b(l)=1. The next span in the span pattern begins at the smallest l not included in the previous span(s) for which b(l)=1. The span duration is max{maximum value of all CORESET durations, minimum value of Y in the UE reported candidate value} except possibly the last span in a slot which can be of shorter duration. A particular PDCCH monitoring configuration meets the UE capability limitation if the span arrangement satisfies the gap separation for at least one (X, Y) in the UE reported candidate value set in every slot, including cross slot boundary.<br>For the set of monitoring occasions which are within the same span:<br>• Processing one unicast DCI scheduling DL and one unicast DCI scheduling UL per scheduled CC across this set of monitoring occasions for FDD<br>• Processing one unicast DCI scheduling DL and two unicast DCI scheduling UL per scheduled CC across this set of monitoring occasions for TDD<br>• Processing two unicast DCI scheduling DL and one unicast DCI scheduling UL per scheduled CC across this set of monitoring occasions for TDD<br>The number of different start symbol indices of spans for all PDCCH monitoring occasions per slot, including PDCCH monitoring occasions of FG-3-1, is no more than floor(14/X) (X is minimum among values reported by UE).<br>The number of different start symbol indices of PDCCH monitoring occasions per slot including PDCCH monitoring occasions of FG-3-1, is no more than 7.<br>The number of different start symbol indices of PDCCH monitoring occasions per half-slot including PDCCH monitoring occasions of FG-3-1 is no more than 4 in SCell. | |

The UE may report whether or not to support the above-described UE capability 2 and/or UE capability 3 and related parameters to the base station. The base station may perform resource allocation in the time axis for a common search space and UE-specific search space, based on the reported UE capability. During the resource allocation, the base station may not allocate the MO at the location where the UE is unable to monitor the same.

[PDCCH: BD/CCE limit]

In the case where a plurality of search space sets is configured for the UE, the following conditions may be considered in a method for determining a search space set to be monitored by the UE.

If a value monitoringCapabilityConfig-r16, which is higher layer signaling, is configured as r15monitoringcapability, the UE defines the maximum values of the number of PDCCH candidates capable of being monitored and the number of CCEs constituting the entire search space (here, the entire search space indicates an entire CCE set corresponding to the union area of a plurality of search space sets) for each slot, and if the value monitoringCapabilityConfig-r16 is configured as r16monitoringcapability, the UE defines the maximum values of the number of PDCCH candidates capable of being monitored and the number of CCEs constituting the entire search space (here, the entire search space indicates an entire CCE set corresponding to the union area of a plurality of search space sets) for each span.

[Condition 1: Limit of maximum number of PDCCH candidates]

According to the configuration value of higher layer signaling described above, $M^\mu$, the maximum number of PDCCH candidates capable of being monitored by the UE, may be configured according to Table 12-1 below in case that it is defined based on a slot, and may be configured according to Table 12-2 below in case that it is defined based on a span, in a cell having a subcarrier spacing of $15 \cdot 2^\mu$ kHz.

[Table 12-1]

| $\mu$ | Maximum number of PDCCH candidates per slot and per serving cell ($M^\mu$) |
|---|---|
| 0 | 44 |
| 1 | 36 |
| 2 | 22 |
| 3 | 20 |

[Table 12-2]

| | Maximum number $M^\mu$ of monitored PDCCH candidates per span for combination (X,Y) and per serving cell | | |
|---|---|---|---|
| $\mu$ | (2,2) | (4,3) | (7,3) |
| 0 | 14 | 28 | 44 |
| 1 | 12 | 24 | 36 |

[Condition 2: Limit of maximum number of CCEs]

According to the configuration value of higher layer signaling described above, $C^\mu$, the maximum number of CCEs constituting the entire search space (here, the entire search space indicates the entire CCE set corresponding to the union area of a plurality of search space sets), may be configured according to Table 12-3 below in case that it is defined based on a slot, and may be configured according to Table 12-4 below in case that it is defined based on a span, in a cell having a subcarrier spacing of $15 \cdot 2^\mu$ kHz.

[Table 12-3]

| $\mu$ | Maximum number of non-overlapped CCEs per slot and per serving cell ($C^\mu$) |
|---|---|
| 0 | 56 |
| 1 | 56 |
| 2 | 48 |
| 3 | 32 |

[Table 12-4]

| | Maximum number $C^\mu$ of non-overlapped CCEs per span for combination (X,Y) and per serving cell | | |
|---|---|---|---|
| $\mu$ | (2,2) | (4,3) | (7,3) |
| 0 | 18 | 36 | 56 |
| 1 | 18 | 36 | 56 |

For convenience of explanation, a situation that satisfies both conditions 1 and 2 at a specific time is defined as "condition A". Therefore, a situation that does not satisfy condition A may indicate that the situation does not satisfy at least one of conditions 1 and 2 above.

[PDCCH: Overbooking]

Condition A may not be satisfied at a specific time depending on the configuration of search space sets by the base station. In case that condition A is not satisfied at a specific time, the UE may select and monitor only some of the search space sets configured to satisfy condition A at the corresponding time, and the base station may transmit a PDCCH to the selected search space sets.

Selection of some search spaces from among the entire configured search space sets may be performed according to the following methods.

In case that condition A for a PDCCH is not satisfied at a specific time (slot), the UE (or the base station) may preferentially select the search space set in which the search space type is configured as a common search space from among the search space sets existing at the corresponding time, instead of the search space set in which the search space type is configured as a UE-specific search space.

In case that all search space sets configured as a common search space are selected (i.e., in case that condition A is satisfied even after selecting all search spaces configured as a common search space), the UE (or the base station) may select the search space sets configured as a UE-specific search space. In this case, in case that there are a plurality of search space sets configured as a UE-specific search space, the search space set having a lower search space set index may have a higher priority. The UE or base station may select UE-specific search space sets within a range in which condition A is satisfied in consideration of priority.

[DRX]

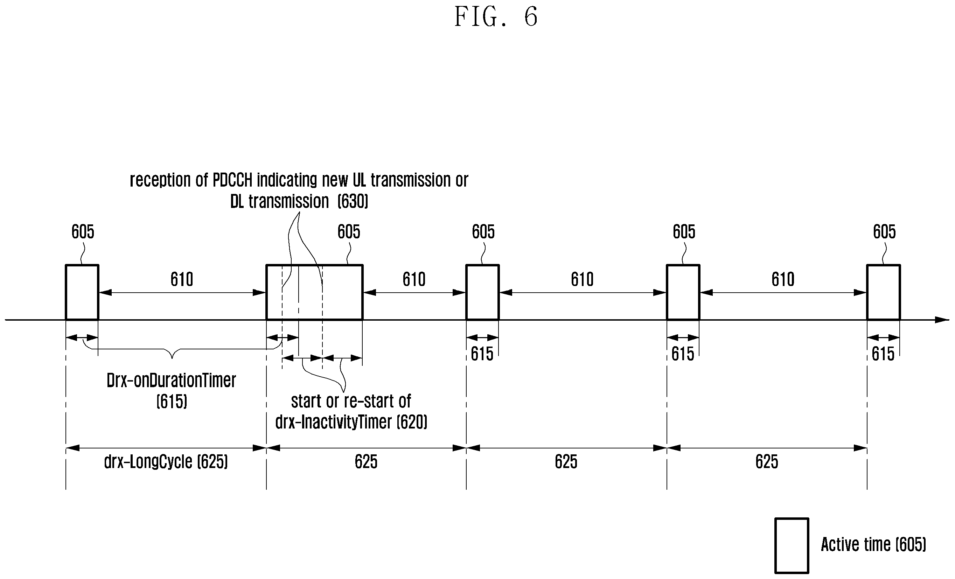

FIG. 6 is a diagram explaining discontinuous reception (DRX).

Discontinuous reception (DRX) is an operation in which a UE using a service discontinuously receives data in an RRC-connected state in which a radio link is configured between a base station and the UE. When the DRX is applied, the UE may turn on a receiver at a specific time point to monitor a control channel, and when there is no data received for a certain period, the UE may turn off the receiver to reduce power consumption of the UE. The DRX operation may be controlled by an MAC layer device, based on various parameters and timers.

With reference to FIG. 6, an active time 605 is a time during the UE wakes up at DRX periods and monitors a PDCCH. The active time 605 may be defined as below:

- drx-onDurationTimer or drx-InactivityTimer or drx-RetransmissionTimerDL or drx-RetransmissionTimerUL or ra-ContentionResolutionTimer is running; or
- a Scheduling Request is sent on PUCCH and is pending; or
- a PDCCH indicating a new transmission addressed to the C-RNTI of the MAC entity has not been received after successful reception of a Random Access Response for the Random Access Preamble not selected by the MAC entity among the contention-based Random Access Preamble

Here, drx-onDurationTimer, drx-InactivityTimer, drx-RetransmissionTimerDL, drx-RetransmissionTimerUL, and ra-ContentionResolutionTimer are timers having values configured by the base station, and have a function to configure the UE to monitor the PDCCH in a situation satisfying a certain condition.

A drx-onDurationTimer 615 is a parameter for configuring a minimum time during which the UE is awake in a DRX cycle. A drx-InactivityTimer 620 is a parameter for configuring a time during which the UE is additionally awake in a case 630 where the PDCCH indicating new uplink transmission or downlink transmission is received. A drx-RetransmissionTimerDL is a parameter for configuring a maximum time during which the UE is awake to receive downlink retransmission in a downlink HARQ procedure. A drx-RetransmissionTimerUL is a parameter for configuring a maximum time during which the UE is awake to receive a grant for uplink retransmission in an uplink HARQ procedure. The drx-onDurationTimer, the drx-Inactivity Timer, the drx-RetransmissionTimerDL, and the drx-RetransmissionTimerUL may be configured by, for example, a time, the number of subframes, or the number of slots. A ra-ContentionResolutionTimer is a parameter for monitoring a PDCCH in a random access procedure.

An inactive time 610 is a time configured not to monitor and/or receive a PDCCH in the DRX operation, and may be remaining time excluding the active time 605 from the entire time during which the DRX operation is performed. When the UE does not monitor the PDCCH during the active time 605, the UE may enter a sleep or inactive state to reduce power consumption.

The DRX cycle denotes a period at which the UE wakes up and monitors the PDCCH. In other words, the DRX cycle denotes a time interval between monitoring of the PDCCH by the UE and monitoring of a next PDCCH, or an on-duration occurrence period. There are two types of DRX cycles, which are a short DRX cycle and a long DRX cycle. The short DRX cycle may be optionally applied.

A long DRX cycle 625 is a long cycle among the two types of DRX cycles configured to the UE. While the UE operates in long DRX, the UE restarts the drx-onDurationTimer 615 at a time point after the long DRX cycle 625 has passed from a start point (e.g., a starting symbol) of the drx-onDurationTimer 615. In case that the UE operates in the long DRX cycle 625, the UE may start the drx-onDurationTimer 615 in a slot after a drx-SlotOffset in a subframe satisfying Equation 2 below. Here, the drx-SlotOffset implies a delay before the drx-onDurationTimer 615 is started. The drx-SlotOffset may be configured by, for example, a time or the number of slots.

[Equation 2]

$$[(SFN \times 10) + \text{subframe number}] \text{ modulo (drx-LongCycle)} = \text{drx-StartOffset}$$

Here, a drx-LongCycleStartOffset may be used to define a subframe in which a long DRX cycle 625 starts, and a drx-StartOffset may be used to define a subframe in which the long DRX cycle 625 starts. For example, the drx-LongCycleStartOffset may be configured by, for example, a time, the number of subframes, or the number of slots.

[QCL, TCI state]

In a wireless communication system, one or more different antenna ports (may be replaced by one or more channels, signals, or combinations thereof, but for convenience of description, may be collectively referred to as different antenna ports) may be associated with each other through a quasi co-location (QCL) configuration as Table 10 below. A TCI state is for notifying about a QCL relationship between a PDCCH (or PDCCH DMRS) and another RS or channel. When a reference antenna port A (reference RS #A) and another target antenna port B (target RS #B) are QCLed to each other, it may mean that the UE is allowed to apply all or some of large-scale channel parameters estimated in the antenna port A to perform a channel measurement in the antenna port B. The QCL may require different parameters to be associated according to situations including 1) time tracking affected by average delay and delay spread, 2) frequency tracking affected by a Doppler shift and Doppler spread, 3) radio resource management (RRM) affected by an average gain, and 4) beam management (BM) affected by a spatial parameter. Accordingly, NR supports four types of QCL relationships shown in Table 13 below.

[Table 13]

| QCL type | Large scale characteristics |
|----------|------------------------------|
| A | Doppler shift, Doppler spread, average delay, delay spread |
| B | Doppler shift, Doppler spread |
| C | Doppler shift, average delay |
| D | Spatial Rx parameter |

The spatial RX parameter may collectively refer to some or all of various parameters such as an angle of arrival (AoA), a power Angular Spectrum (PAS) of AoA, an angle of departure (AoD), a PAS of AoD, a transmit/receive channel correlation, transmit/receive beamforming, and a spatial channel correlation.

The QCL relationship may be configured to the UE through an RRC parameter TCI-State and QCL-Info as shown in Table 14 below. With reference to Table 14, the base station may configure the UE with at least one TCI state to notify the UE about a maximum of two QCL relationships (qcl-Type1 and qcl-Type2) regarding an RS referring to ID of the TCI state, that is, a target RS. Here, each of pieces of QCL information (QCL-Info) included in the TCI state may include a serving cell index and BWP index of a reference RS indicated by a corresponding piece of QCL information, a type and ID of the reference RS, and a QCL type as shown in Table 13 above.

[Table 14]

```
TCI-State ::=                       SEQUENCE {
    tci-StateId                     TCI-StateId,
    (ID of corresponding TCI state)
    qcl-Type1                       QCL-Info,
    (QCL information of first reference RS of RS (target RS) referring to corresponding TCI state ID)
    qcl-Type2                       QCL-Info              OPTIONAL,     -- Need R
    (QCL information of second reference RS of RS (target RS) referring to corresponding TCI State ID)
    ...
}

QCL-Info ::=                        SEQUENCE {
    cell                            ServCellIndex         OPTIONAL,     -- Need R
    (serving cell index of reference RS indicated by corresponding QCL information)
    bwp-Id                          BWP-Id                            OPTIONAL, -- Cond CSI-RS-Indicated
    (BWP index of reference RS indicated by corresponding QCL information)
    referenceSignal                 CHOICE {
        csi-rs                          NZP-CSI-RS-ResourceId,
        ssb                             SSB-Index
        (one of CSI-RS ID and SSB-ID, indicated by corresponding QCL information)
    },
    qcl-Type                        ENUMERATED {typeA, typeB, typeC, typeD},
    ...
}
```

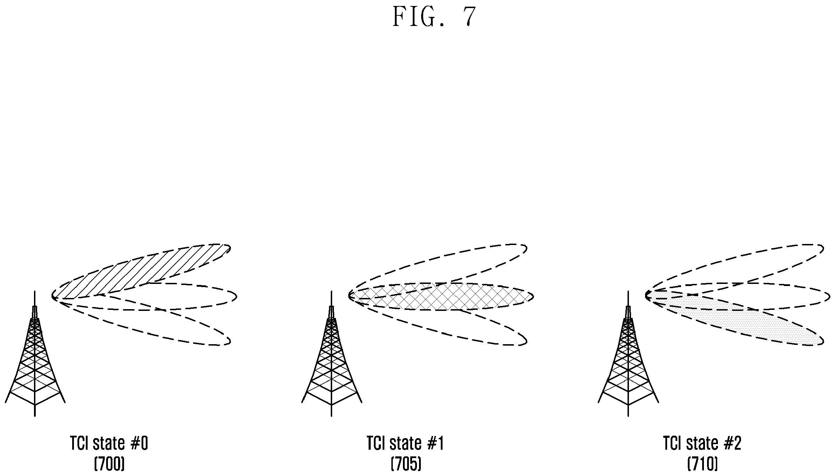

FIG. 7 is a diagram illustrating an example of base station beam allocation according to a TCI state configuration.

With reference to FIG. 7, a base station may transmit, to a UE, pieces of information regarding N different beams through N different TCI states. For example, as illustrated in FIG. 7, in case that N is 3, the base station may allow a qcl-Type 2 parameter included in each of three TCI states 700, 705, and 710 to be associated with a CSI-RS or SSB corresponding to different beams and to be configured to be of QCL type D, so as to notify that antenna ports referring to the different TCI states 700, 705, and 710 are associated with different spatial Rx parameters, that is, different beams.

Tables 15-1 to 15-5 below indicate valid TCI state configurations according to the types of target antenna ports.

Table 15-1 indicates valid TCI state configurations in case that a target antenna port is CSI-RS for tracking (TRS). The TRS denotes, from among CSI-RSs, an NZP CSI-RS in which a repetition parameter is not configured and trs-Info is configured to be true. A configuration 3 in Table 15-1 may be used for aperiodic TRS.

[Table 15-1] Valid TCI state configuration in case that target antenna port is CSI-RS for tracking (TRS)

| Valid TCI state Configuration | DL RS 1 | qcl-Type1 | DL RS 2 (if configured) | qcl-Type2 (if configured) |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 15-2 indicates valid TCI state configurations in case that a target antenna port is CSI-RS for CSI. The CSI-RS for CSI denotes, from among CSI-RSs, an NZP CSI-RS in which a parameter indicating repetition (for example, a repetition parameter) is not configured and trs-Info is also not configured to be true.

[Table 15-2] Valid TCI state configuration in case that target antenna port is CSI-RS for CSI

| Valid TCI state Configuration | DL RS 1 | qcl-Type1 | DL RS 2 (if configured) | qcl-Type2 (if configured) |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

Table 15-3 indicates valid TCI state configurations in case that a target antenna port is CSI-RS for beam management (BM) (identical to CSI-RS for L1 RSRP reporting). The CSI-RS for BM denotes, from among CSI-RSs, an NZP CSI-RS in which a repetition parameter is configured to have a value of on or off, and trs-Info is not configured to be true.

[Table 15-3] Valid TCI state configuration in case that a target antenna port is CSI-RS for BM (for L1 RSRP reporting)

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

Table 15-4 indicates valid TCI state configurations in case that a target antenna port is PDCCH DMRS.

[Table 15-4] Valid TCI state configuration in case that a target antenna port is PDCCH DMRS

| Valid TCI state Configuration | DL RS 1 | qcl-Type1 | DLRS 2 (if configured) | qcl-Type2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 15-5 indicates valid TCI state configurations in case that a target antenna port is PDSCH DMRS.

[Table 15-5] Valid TCI state configuration in case that a target antenna port is PDSCH DMRS

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

A representative QCL configuration method by Tables 15-1 to 15-5 above includes managing a target antenna port and reference antenna port for each stage by configuring "SSB"->"TRS"->"CSI-RS for CSI, CSI-RS for BM, PDCCH DMRS, or PDSCH DMRS." Accordingly, it is possible to aid a reception operation of a UE by associating statistical characteristics measurable from an SSB and TRS with each antenna port.

[PDCCH: Regarding TCI state]

In detail, a combination of TCI states applicable to a PDCCH DMRS antenna port is as Table 16 below. A fourth row in Table 16 is a combination assumed by a UE before an RRC configuration, and a configuration after RRC is impossible.

[Table 16]

| Valid TCI state Configuration | DL RS 1 | qcl-Type1 | DLRS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

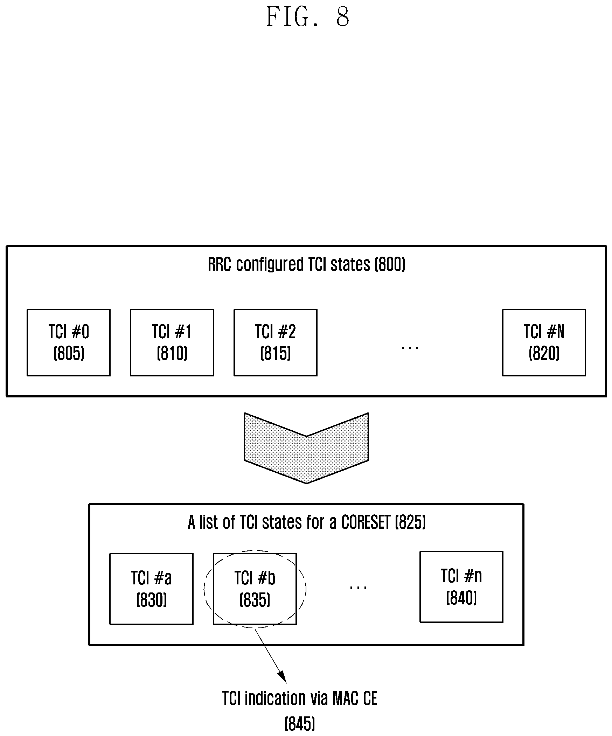

FIG. 8 is a diagram illustrating an example of a TCI state allocation method regarding a PDCCH in a wireless communication system according to an embodiment of the disclosure.

In the NR, the hierarchical signaling method is supported as illustrated in FIG. 8 for dynamic allocation of PDCCH beams. With reference to FIG. 8, a base station may configure, to a UE, N TCI states 805, 810, 815,..., 820 through RRC signaling 800, and may configure some TCI states as TCI states for a CORESET (825). Then, the base station may indicate one of TCI states 830, 835, ..., 840 for the CORESET to the UE through MAC CE signaling (845). Then, the UE receives a PDCCH, based on beam information included in a TCI state indicated by the MAC CE signaling.

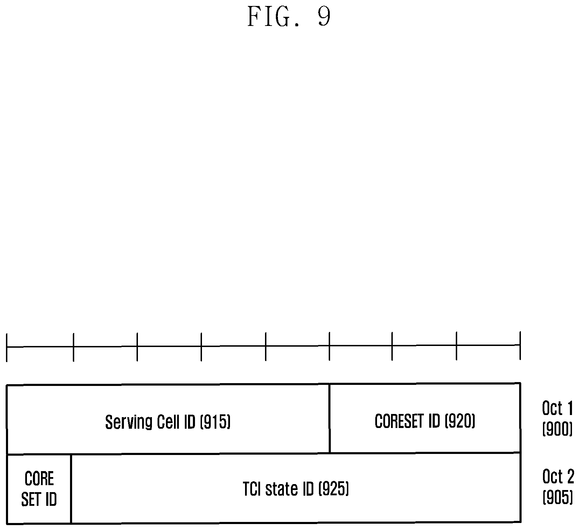

FIG. 9 is a diagram illustrating a TCI indication MAC CE signaling structure for the above PDCCH DMRS.

With reference to FIG. 9, TCI indication MAC CE signaling for the PDCCH DMRS is configured by 2 bytes (16 bits), and includes a serving cell ID 915 of five bits, a CORESET ID 920 of four bits, and a TCI state ID 925 of seven bits.

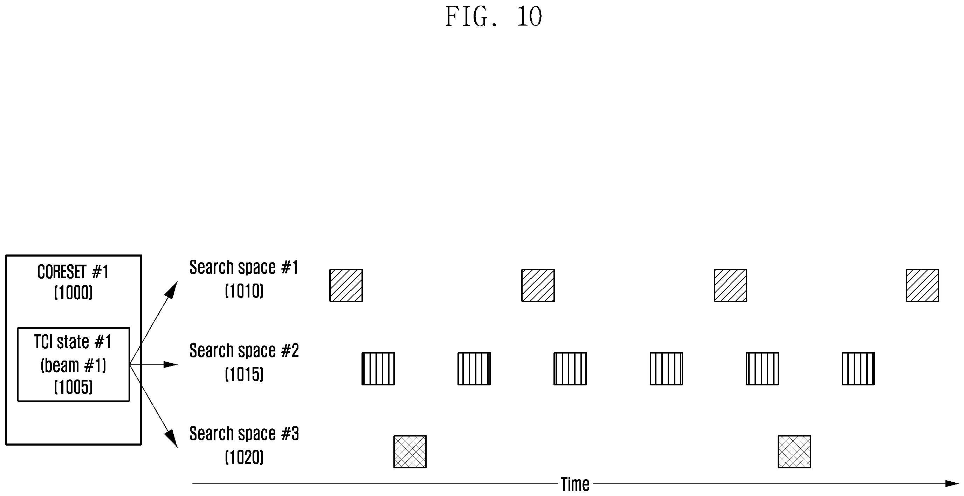

FIG. 10 is a diagram illustrating an example of a beam configuration for a control resource set (CORESET) and a search space according to the above description.

With reference to FIG. 10, a base station may indicate one TCI state 1005 in a TCI state list included in a configuration of a CORESET 1000 via MAC CE signaling. Then, until another TCI state is indicated to the corresponding CORESET via another MAC CE signaling, a UE assumes that same QCL information (beam #1, 1005) is applied to one or more search spaces 1010, 1015, and 1020 connected to the above CORESET 1000. Regarding the PDCCH beam allocation method described above, it is difficult to indicate a beam change earlier than an MAC CE signaling delay. Also, there is a demerit that a same beam is collectively applied for each CORESET regardless of characteristics of search spaces, and thus flexible PDCCH beam management is difficult. Hereinafter, embodiments of the disclosure provide a more flexible PDCCH beam configuration and management method. In describing embodiments of the disclosure below, some distinguishable examples are provided for convenience of description, but the examples are not mutually exclusive, and may be appropriately combined with each other according to a situation for application.

The base station may configure, to the UE, one or a plurality of TCI states with respect to a specific CORESET, and may activate one of the configured TCI states through an MAC CE activation command. For example, {TCI state #0, TCI state #1, TCI state #2} is configured to CORESET # 1 as TCI states, and the base station may transmit, to the UE, a command for activating the TCI state #0 as a TCI state for the CORESET # 1 via an MAC CE. Based on the activation command regarding the TCI state, received via the MAC CE, the UE may correctly receive a DMRS in the corresponding CORESET, based on QCL information in the activated TCI state.

With respect to a CORESET (CORESET #0) configured to have an index of 0, when the UE has failed to receive an MAC CE activation command regarding a TCI state of the CORESET # 0, it may be assumed that the UE is QCLed with an SS/PBCH block identified during an initial access process or a non-contention-based random access process that is not triggered by a PDCCH command, with respect to a DMRS transmitted in the CORESET # 0.

With respect to a CORESET (CORESET #X) configured to have an index of a value other than zero, when a TCI state regarding the CORESET #X is failed to be configured to the UE, or when one or more TCI states are configured to the UE, but the UE has failed to receive an MAC CE activation command for activating one of the TCI states, it may be assumed that the UE is QCLed with an SS/PBCH block identified in an initial access process, with respect to a DMRS transmitted in the CORESET #X.

[Regarding Rate matching/Puncturing]

Hereinafter, a rate matching operation and a puncturing operation will be described in detail.

In case that a time for transmitting a certain symbol sequence A and frequency resource A overlap a certain time and frequency resource B, the rate matching or puncturing operation may be considered as a transmission/reception operation in consideration of resource C in an area in which resource A and resource B overlap each other. The detailed operation may follow the following contents.

**Rate Matching Operation**

- The base station may map channel A on only the remaining resource area excluding resource C corresponding to an area overlapping resource B among the whole resource A, being intended to transmit symbol sequence A to the UE, and transmit the mapped symbol sequence A. For example, in case that symbol sequence A is composed of {symbol # 1, symbol # 2, symbol # 3, symbol #4}, resource A is composed of {resource # 1, resource # 2, resource # 3, resource #4}, and resource B is composed of {resource # 3, resource #5}, the base station may sequentially map the symbol sequence A on { resource # 1, resource #2, resource #4} being the remaining resources excluding { resource #3 } corresponding to resource C among the resource A, and may transmit the mapped symbol sequence A. As a result, the base station may map the symbol sequence {symbol # 1, symbol #2, symbol #3} on the {resource # 1, resource # 2, resource #4}, respectively, and may transmit the mapped symbol sequence.

The UE may determine resource A and resource B from scheduling information for symbol sequence A from the base station, and through this, may determine resource C that is the area in which resource A and resource B overlap each other. The UE may receive symbol sequence A on the assumption that symbol sequence A is mapped on the remaining area excluding resource C among the whole resource A, and the mapped symbol sequence A is transmitted. For example, in case that symbol sequence A is composed of { symbol # 1, symbol # 2, symbol # 3, symbol #4}, resource A is composed of {resource # 1, resource # 2, resource # 3, resource #4}, and resource B is composed of {resource # 3, resource #5}, the UE may receive the symbol sequence A on the assumption that the symbol sequence A is mapped on {resource # 1, resource # 2, resource #4} being the remaining resources excluding {resource #3} corresponding to resource C among the resource A. As a result, the UE may perform the subsequent series of reception operations on the assumption that the symbol sequence {symbol # 1, symbol #2, symbol #3} is respectively mapped on the {resource # 1, resource #2, resource #4}, and is transmitted.

**Puncturing Operation**

In case that resource C corresponding to an area overlapping resource B among the whole resource A, being intended to transmit symbol sequence A to the UE, is present, the base station may map the symbol sequence A on the whole of resource A, but may not perform transmission in the resource area corresponding to resource C, and may perform transmission only with respect to the remaining resource area excluding resource C among the resource A. For example, in case that symbol sequence A is composed of {symbol #1, symbol #2, symbol #3, symbol #4}, resource A is composed of {resource #1, resource #2, resource #3, resource #4}, and resource B is composed of {resource #3, resource #5}, the base station may map the symbol sequence A {symbol #1, symbol #2, symbol #3, symbol #4} on the resource A {resource #1, resource #2, resource #3, resource #4}, respectively, and may transmit only the symbol sequence {symbol #1, symbol #2, symbol #4} corresponding to the remaining resource {resource #1, resource #2, resource #4} excluding {resource #3} corresponding to resource C among the resource A, but may not transmit {symbol #3} mapped on {resource #3} corresponding to resource C. As a result, the base station may map the symbol sequence {symbol #1, symbol #2, symbol #4} on the {resource #1, resource #2, resource #4}, respectively, and may transmit the mapped symbol sequence.

The UE may determine resource A and resource B from scheduling information for symbol sequence A from the base station, and through this, may determine resource C that is the area in which resource A and resource B overlap each other. The UE may receive symbol sequence A on the assumption that symbol sequence A is mapped on the whole resource A, but is transmitted only in the remaining area excluding resource C among the resource area A. For example, in case that symbol sequence A is composed of {symbol #1, symbol #2, symbol #3, symbol #4}, resource A is composed of {resource #1, resource #2, resource #3, resource #4}, and resource B is composed of {resource #3, resource #5}, the UE may assume that the symbol sequence A {symbol #1, symbol #2, symbol #3, symbol #4} is respectively mapped on the resource A {resource #1, resource #2, resource #3, resource #4}, but {symbol #3} mapped on {resource #3} corresponding to resource C is not transmitted, and may receive the symbol sequence A on the assumption that the symbol sequence A is mapped on symbol sequence {symbol #1, symbol #2, symbol #4} corresponding to the remaining resources {resource #1, resource #2, resource #4} excluding {resource #3} corresponding to resource C among the resource A, and the mapped symbol sequence A is transmitted. As a result, the UE may perform the subsequent series of reception operations on the assumption that the symbol sequence {symbol # 1, symbol # 2, symbol #4} is mapped on the {resource # 1, resource # 2, resource #4}, and the mapped symbol sequence is transmitted.

A method for configuring a rate matching resource for the rate matching of a 5G communication system is described below. Rate-matching means that the size of a signal is controlled by taking into consideration the amount of resources capable of transmitting the signal. For example, the rate matching of a data channel means that the amount of data is adjusted without mapping and transmitting the data channel with respect to a given time and frequency resource area.

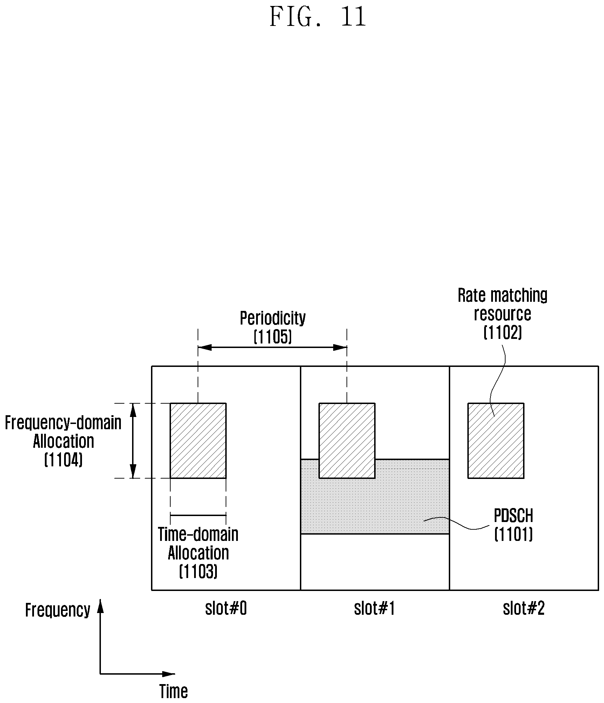

FIG. 11 is a diagram explaining a method in which a base station and a UE transmit or receive data in consideration of a downlink data channel and a rate matching resource.

In FIG. 11, a downlink data channel (PDSCH) 1101 and rate matching resource 1102 are illustrated. The base station may configure one or a plurality of rate matching resources 1102 to the UE through higher layer signaling (e.g., RRC signaling). In configuration information of the rate matching resource 1102, time axis resource allocation information 1103, frequency axis resource allocation information 1104, and cycle information 1105 may be included. Hereinafter, a bitmap corresponding to the frequency axis resource allocation information 1104 is called "first bitmap", a bitmap corresponding to the time axis resource allocation information 1103 is called "second bitmap", and a bitmap corresponding to the cycle information 1105 is called "third bitmap". In case that all or some of time and frequency resources of the scheduled data channel 1101 overlap the configured rate matching resource 602, the base station may transmit the data channel 1101 by rate-matching the data channel 1101 in a part of the rate matching resource 1102, and the UE may perform reception and decoding after assuming that the data channel 1101 has been rate-matched in the part of the rate matching resource 1102.

The base station may dynamically notify the UE whether to perform the rate matching of the data channel through DCI in the configured rate matching resource part through additional configuration (corresponding to "a rate matching indicator" in the above-described DCI format). Specifically, the base station may select and group some of the configured rate matching resources into a rate matching resource group, and may instruct the UE whether to perform rate matching of a data channel for each rate matching resource group through the DCI by using the bitmap method. For example, in case that 4 rate matching resources RMR # 1, RMR # 2, RMR # 3, and RMR # 4 are configured, the base station may configure RMG # 1={RMR # 1, RMR #2} and RMG # 2={RMR # 3, RMR #4} as the rate matching groups, and may instruct the UE whether to perform rate matching in RMG # 1 and RMG # 2, respectively, as the bitmap, by using 2 bits in a DCI field. For example, the base station may configure the bits to "1" in case that the rate matching should be performed, and may configure the bits to "0" in case that the rate matching should not be performed.

In the 5G, granularity of "RB symbol level" and "RE level" is supported as a method for configuring the above-described rate matching resource to the UE. More specifically, the following configuration method may follow.

**RB Symbol Level**

The UE may be configured with maximally 4 RateMatchPattern by bandwidth parts through higher layer signaling, and one RateMatchPattern may include the following contents.

- As a reserved resource in a bandwidth part, it may include a resource on which time and frequency resource areas of the corresponding reserved resource are configured through a combination of a bitmap of an RB level and a bitmap of a symbol level on frequency axis. The reserved resource may be spanned through one or two slots. A time domain pattern (periodicityAndPattern) in which the time and frequency areas composed of a bitmap pair of the RB level and symbol level are repeated may be additionally configured.
- A resource area corresponding to time and frequency domain resource areas configured by a control resource set in the bandwidth part and a time domain pattern configured by search space configuration in which the corresponding resource area is repeated may be included.

**RE Level**

The UE may be configured with the following contents through higher layer signaling.

- As configuration information (lte-CRS-ToMatchAround) for RE corresponding to an LTE CRS (cell-specific reference signal or common reference signal) pattern, it may include the number of LTE CRS ports (nrofCRS-Ports) and an LTE-CRS-vshift(s) value (v-shift), center subcarrier location information (carrierFreqDL) of an LTE carrier from a reference frequency point (e.g., reference point A), LTE carrier bandwidth size (carrierBandwidthDL) information, subframe configuration information (mbsfn-SubframConfigList) corresponding to a multicast-broadcast single-frequency network (MBSFN), and the like. The UE may determine the CRS location in an NR slot corresponding to an LTE subframe based on the above-described information.

- Configuration information for a resource set corresponding to one or a plurality of zero power (ZP) CSI-RSs in the bandwidth part may be included.

[Regarding LTE CRS rate match]

Next, the rate match process for the above-described LTE CRS will be described in detail. For the coexistence of long term evolution (LTE) and new RAT (NR) (LTE-NR coexistence), NR provides a function of configuring a cell specific reference signal (CRS) pattern of LTE to an NR UE. More specifically, the CRS pattern may be provided by RRC signaling including at least one parameter in ServingCellConfig information element (IE) or ServingCellConfigCommon IE. The parameter may include lte-CRS-ToMatchAround, lte-CRS-PatternList1-r16, lte-CRS-PatternList2-r16, crs-RateMatch-PerCORESETPoolIndex-r16, and the like, for example.

Rel-15 NR provides a function in which one CRS pattern can be configured per serving cell through the lte-CRS-ToMatchAround parameter. In Rel-16 NR, the above function has been extended to enable configuration of a plurality of CRS patterns per serving cell. More specifically, one CRS pattern per one LTE carrier may be configured in a single transmission and reception point (TRP) configuration UE, and two CRS patterns per one LTE carrier may be configured in a multi-TRP configuration UE. For example, in the single-TRP configuration UE, up to three CRS patterns per serving cell may be configured through the lte-CRS-PattemList1-r16 parameter. For another example, a CRS may be configured for each TRP in the multi-TRP configuration UE. That is, a CRS pattern for TRP1 may be configured through the lte-CRS-PatternList1-r16 parameter, and a CRS pattern for TRP2 may be configured through the lte-CRS-PatternList2-r16 parameter. On the other hand, in case that two TRPs are configured as described above, whether to apply both the CRS patterns of TRP1 and TRP2 to a specific physical downlink shared channel (PDSCH) or whether to apply only the CRS pattern for one TRP is determined through crs-RateMatch-PerCORESETPoolIndex-r16 parameter. When the crs-RateMatch-PerCORESETPoolIndex-r16 parameter is configured to be enabled, only one TRP CRS pattern is applied, and in other cases, both TRP CRS patterns are applied.

Table 17 shows the ServingCellConfig IE including the CRS pattern, and Table 18 shows the RateMatchPatternLTE-CRS IE including at least one parameter for the CRS pattern.

[Table 17]

```
ServingCellConfig ::=                     SEQUENCE {
    tdd-UL-DL-ConfigurationDedicated      TDD-UL-DL-ConfigDedicated
OPTIONAL,      -- Cond TDD
    initialDownlinkBWP                        BWP-DownlinkDedicated
OPTIONAL,      -- Need M
    downlinkBWP-ToReleaseList                 SEQUENCE (SIZE (1..maxNrofBWPs)) OF BWP-Id
OPTIONAL,      -- Need N
    downlinkBWP-ToAddModList                  SEQUENCE (SIZE (1..maxNrofBWPs)) OF BWP-Downlink
OPTIONAL,      -- Need N
    firstActiveDownlinkBWP-Id             BWP-Id
OPTIONAL,      -- Cond SyncAndCellAdd
    bwp-InactivityTimer                   ENUMERATED {ms2, ms3, ms4, ms5, ms6, ms8, ms10, ms20, ms30,
                                                      ms40,ms50, ms60, ms80,ms100, ms200,ms300, ms500,
                                                      ms750, ms1280, ms1920, ms2560, spare10, spare9, spare8,
                                                      spare7, spare6, spare5, spare4, spare3, spare2, spare1 }
OPTIONAL,      --Need R
    defaultDownlinkBWP-Id                 BWP-Id
OPTIONAL,      -- Need S
    uplinkConfig                              UplinkConfig
OPTIONAL,      -- Need M
    supplementaryUplink                       UplinkConfig
OPTIONAL,      -- Need M
    pdcch-ServingCellConfig               SetupRelease { PDCCH-ServingCellConfig }
OPTIONAL,      -- Need M
    pdsch-ServingCellConfig               SetupRelease { PDSCH-ServingCellConfig }
OPTIONAL,      -- Need M
    csi-MeasConfig                            SetupRelease { CSI-MeasConfig }
OPTIONAL,      -- Need M
    sCellDeactivationTimer                ENUMERATED {ms20, ms40, ms80, ms160, ms200, ms240,
                                                      ms320, ms400, ms480, ms520, ms640, ms720,
                                                      ms840, ms1280, spare2,spare1}          OPTIONAL,    --

Cond ServingCellWithoutPUCCH
    crossCarrierSchedulingConfig          CrossCarrierSchedulingConfig
OPTIONAL,      -- Need M
    tag-Id                                    TAG-Id,
    dummy                                     ENUMERATED {enabled}
OPTIONAL,        Need R
    pathlossReferenceLinking              ENUMERATED {spCell, sCell}
OPTIONAL,      -- Cond SCellOnly
    servingCellMO                             MeasObjectId
OPTIONAL,      -- Cond MeasObject
    ...;
```

```
    [[
    lte-CRS-ToMatchAround                  SetupRelease { RateMatchPatternLTE-CRS }
OPTIONAL,      -- Need M
    rateMatchPatternToAddModList           SEQUENCE (SIZE (1..maxNrofRateMatchPatterns)) OF RateMatchPattern
OPTIONAL,      -- Need N
    rateMatchPatternToReleaseList          SEQUENCE (SIZE (1..maxNrofRateMatchPatterns)) OF RateMatchPatternId
OPTIONAL,      -- Need N
    downlinkChannelBW-PerSCS-List          SEQUENCE (SIZE (1..maxSCSs)) OF SCS-SpecificCarrier
OPTIONAL       -- Need S
    ]],
    [[
    supplementaryUplinkRelease             ENUMERATED {true}
OPTIONAL,      -- Need N
    tdd-UL-DL-ConfigurationDedicated-IAB-MT-r16      TDD-UL-DL-ConfigDedicated-IAB-MT-r16
OPTIONAL,      -- Cond TDD_IAB
    dormantBWP-Config-r16                  SetupRelease { DormantBWP-Config-r16 }
OPTIONAL,      -- Need M
    ca-SlotOffset-r16                      CHOICE {
        refSCS15kHz                            INTEGER (-2..2),
        refSCS30KHz                            INTEGER (-5..5),
        refSCS60KHz                            INTEGER (-10..10),
        refSCS120KHz                           INTEGER (-20..20)
    }
OPTIONAL,      -- Cond AsyncCA
    channelAccessConfig-r16                SetupRelease { ChannelAccessConfig-r16 }
OPTIONAL,      -- Need M
    intraCellGuardBandsDL-List-r16         SEQUENCE (SIZE (1..maxSCSs)) OF IntraCellGuardBandsPerSCS-r16
OPTIONAL,      -- Need S
    intraCellGuardBandsUL-List-r16         SEQUENCE (SIZE (1..maxSCSs)) OF IntraCellGuardBandsPerSCS-r16
OPTIONAL,      -- Need S
    csi-RS-ValidationWith-DCI-r16          ENUMERATED {enabled}
OPTIONAL,      -- Need R
    lte-CRS-PatternList1-r16               SetupRelease { LTE-CRS-PatternList-r16 }
OPTIONAL,      -- Need M
    lte-CRS-PatternList2-r16               SetupRelease { LTE-CRS-PatternList-r16 }
OPTIONAL,      -- Need M
    crs-RateMatch-PerCORESETPoolIndex-r16   ENUMERATED {enabled}
OPTIONAL,      -- Need R
    enableTwoDefaultTCI-States-r16         ENUMERATED {enabled}
OPTIONAL,      -- Need R
    enableDefaultTCI-StatePerCoresetPoolIndex-r16 ENUMERATED {enabled}
OPTIONAL,      -- Need R
    enableBeamSwitchTiming-r16             ENUMERATED {true}
OPTIONAL,      -- Need R
    cbg-TxDiffTBsProcessingType1-r16       ENUMERATED {enabled}
OPTIONAL,      -- Need R
    cbg-TxDiffTBsProcessingType2-r16       ENUMERATED {enabled}
OPTIONAL       -- Need R
    ]]
}
```

[Table 18]

```
–    RateMatchPatternLTE-CRS
```

The IE *RateMatchPatternLTE-CRS* is used to configure a pattern to rate match around LTE CRS. See TS 38.214 [19], clause 5.1.4.2.

**RateMatchPatternLTE-CRS information element**

```
-- ASN1START
-- TAG-RATEMATCHPATTERNLTE-CRS-START

RateMatchPatternLTE-CRS ::=          SEQUENCE {
    carrierFreqDL                        INTEGER (0..16383),
    carrierBandwidthDL                   ENUMERATED {n6,n15,n25,n50,n75,n100, spare2, spare1},
    mbsfn-SubframeConfigList             EUTRA-MBSFN-SubframeConfigList                              OPTIONAL,  --
Need M
    nrofCRS-Ports                        ENUMERATED {n1,n2,n4},
    v-Shift                              ENUMERATED {n0,n1,n2,n3,n4,n5}
}

LTE-CRS-PatternList-r16 ::=          SEQUENCE (SIZE (1..maxLTE-CRS-Patterns-r16)) OF RateMatchPatternLTE-CRS

-- TAG-RATEMATCHPATTERNLTE-CRS-STOP
-- ASN1STOP
```

| *RateMatchPatternLTE-CRS* field descriptions |
| --- |
| *carrierBandwidthDL* |
| BW of the LTE carrier in number of PRBs (see TS 38.214 [19], clause 5.1.4.2). |
| *carrierFreqDL* |
| Center of the LTE carrier (see TS 38.214 [19], clause 5.1.4.2). |
| *mbsfn-SubframeConfigList* |
| LTE MBSFN subframe configuration (see TS 38.214 [19], clause 5.1.4.2). |
| *nrofCRS-Ports* |
| Number of LTE CRS antenna port to rate-match around (see TS 38.214 [19], clause 5.1.4.2). |
| *v-Shift* |
| Shifting value v-shift in LTE to rate match around LTE CRS (see TS 38.214 [19], clause 5.1.4.2). |

[Regarding PDCCH: QCL prioritization rule]

In the following, a QCL priority determination operation for the PDCCH will be described in detail.

The UE may select a specific control resource set according to the QCL priority determination operation and monitor control resource sets having the same QCL-TypeD characteristics as the corresponding control resource set, in case that the UE operates with carrier aggregation within a single cell or band and a plurality of control resource sets existing within an activated bandwidth part within a single or multiple cells have the same or different QCL-TypeD characteristics in a specific PDCCH monitoring interval and overlap each other in time. That is, when a plurality of control resource sets overlap in time, only one QCL-TypeD characteristic can be received. In this case, the criteria for determining the QCL priority may be as follows.

- Criteria 1. A control resource set connected to the common search space with the lowest index, within a cell corresponding to the lowest index among cells including the common search space.
- Criteria 2. A control resource set connected to the UE-specific search space with the lowest index, within a cell corresponding to the lowest index among cells including the UE-specific search space.

As described above, the next criterion is applied in case that each of the above criteria is not satisfied. For example, in case that control resource sets overlap in time in a specific PDCCH monitoring duration, if all control resource sets are not connected to a common search space but connected to a UE-specific search period, that is, if criteria 1 is not satisfied, the UE may omit the application of criteria 1 and apply criteria 2.

In case of selecting a control resource set based on the above criteria, the UE may additionally consider the following two items for QCL information configured to the control resource set. First, if control resource set 1 has CSI-RS 1 as a reference signal having a QCL-TypeD relationship, and a reference signal that this CSI-RS 1 has a QCL-TypeD relationship is SSB 1, and in case that a reference signal that another control resource set 2 has a QCL-TypeD relationship is SSB 1, the UE may consider these two control resource sets 1 and 2 to have different QCL-TypeD characteristics. Second, if control resource set 1 has CSI-RS 1 configured in cell 1 as a reference signal having a QCL-TypeD relationship, and a reference signal that this CSI-RS 1 has a QCL-TypeD relationship is SSB 1, in case that control resource set 2 has CSI-RS 2 configured in cell 2 as a reference signal having a QCL-TypeD relationship and a reference signal that this CSI-RS 2 has a QCL-TypeD relationship is SSB 1, the UE may consider the two control resource sets to have the same QCL-TypeD characteristics.

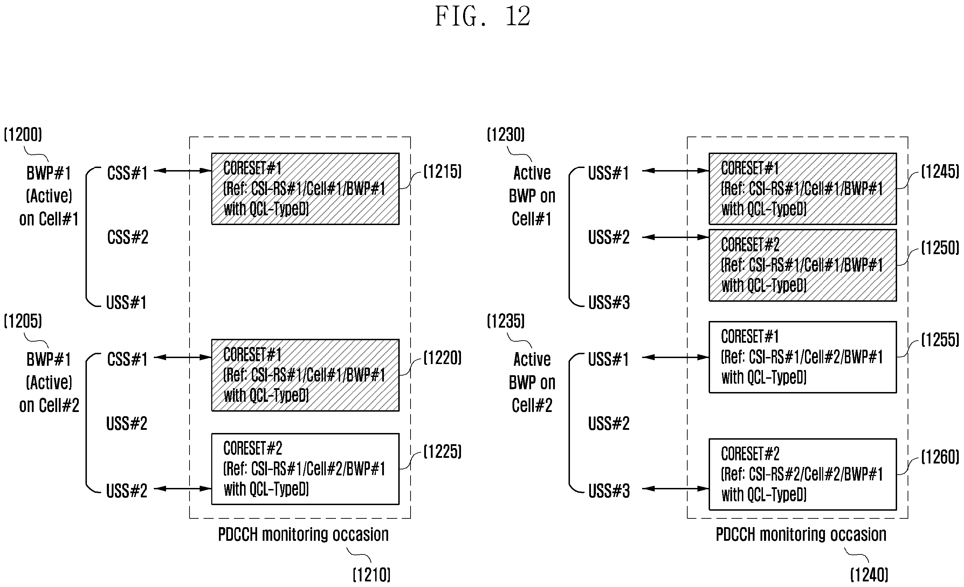

FIG. 12 is a diagram explaining a method in which a UE selects a receivable control resource set in consideration of a priority when receiving a downlink control channel in a wireless communication system according to an embodiment of the disclosure. As an example in FIG. 12, the UE may be configured to receive a plurality of control resource sets overlapping in time in a specific PDCCH monitoring occasion 1210, and these plurality of control resource sets may be connected to a common search space or a UE-specific search space for a plurality of cells. In the corresponding PDCCH monitoring section, within bandwidth part #1 (BWP #1) 1200 of cell #1, control resource set #1 1215 connected to common search section #1 may exist, and within BWP #1 1205 of cell #2, control resource set #1 1220 connected to common search section #1 and control resource set #2 1225 connected to UE-specific search section #2 may exist. The control resource sets 1215 and 1220 have a QCL-TypeD relationship with CSI-RS resource #1 configured in BWP #1 of the cell #1, and the control resource set 1225 may have a QCL-TypeD relationship with CSI-RS resource #1 configured in BWP #1 of the cell #2. Therefore, if criterion 1 is applied to the corresponding PDCCH monitoring section 1210, the UE may receive all other control resource sets having the same QCL-TypeD reference signal as that of the control resource set #1 1215. Accordingly, the UE may receive the control resource sets 1215 and 1220 in the corresponding PDCCH monitoring section 1210. As another example, the UE may be configured to receive a plurality of control resource sets overlapping in time in a specific PDCCH monitoring section 1240, and these plurality of control resource sets may be connected to a common search space or UE-specific search space for a plurality of cells. In the corresponding PDCCH monitoring section, within BWP #1 1230 of the cell #1, control resource set #1 1245 connected to the UE-specific search section #1 and the control resource set #2 connected to the UE-specific search section #2 1250 may exist, and within BWP #1 1235 of the cell #2, control resource set #1 1255 connected to the UE-specific search section #1 and control resource set #2 1260 connected to the UE-specific search section #3 may exist. The control resource sets 1245 and 1250 may have a QCL-TypeD relationship with the CSI-RS resource #1 configured in BWP #1 of the cell #1, and the control resource set 1255 may have a QCL-TypeD relationship with the CSI-RS resource #1 configured in BWP #1 of the cell #2, and the control resource set 1260 may have a QCL-TypeD relationship with the CSI-RS resource #2 configured in BWP #1 of the cell #2. However, if criterion 1 is applied to the corresponding PDCCH monitoring occasion 1240, there is no common search section, and thus criterion 2 which is the next criterion may be applied. If criterion 2 is applied to the corresponding PDCCH monitoring occasion 1240, the UE may receive all other control resource sets having the same QCL-TypeD reference signal as that of the control resource set 1245. Accordingly, the UE may receive the control resource sets 1245 and 1250 in the corresponding PDCCH monitoring occasion 1240.

[PDSCH: Regarding Frequency Resource Allocation]

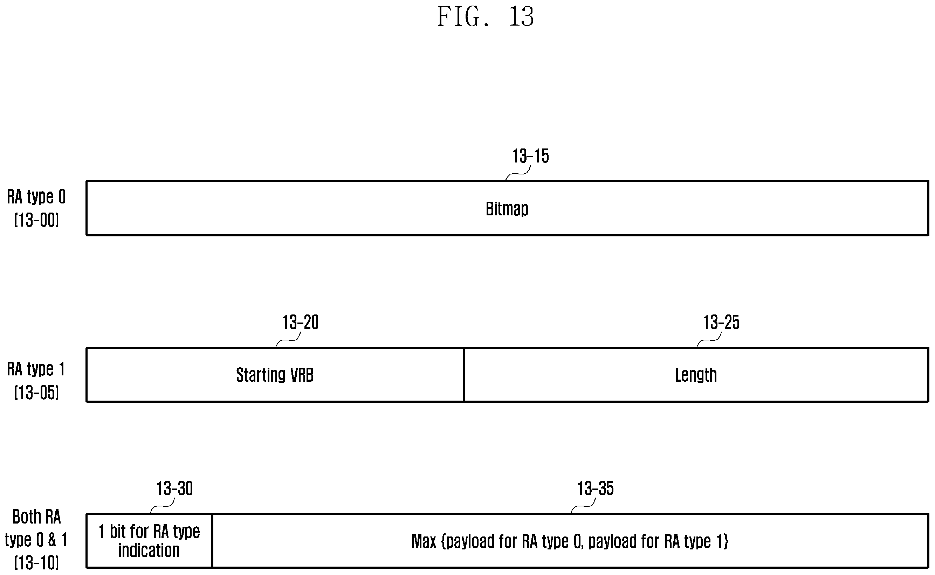

FIG. 13 is a diagram illustrating an example of a frequency axis allocation of a physical downlink shared channel (PDSCH) in a wireless communication system according to an embodiment of the disclosure.

FIG. 13 is a diagram illustrating three frequency axis resource allocation methods of a type 0 13-00, type 1 13-05, and a dynamic switch 13-10, which are configurable via a higher layer in an NR wireless communication system.

With reference to FIG. 13, in case that a UE is configured to use only a resource type 0 (13-00) via higher layer signaling, a part of downlink control information (DCI) allocating a PDSCH to the corresponding UE includes a bitmap consisting of $N_{RBG}$ bits. A condition therefor will be described below. Here, $N_{RBG}$ denotes the number of resource block groups (RBGs) determined as Table 19 below according to a BWP size allocated by a BWP indicator and a higher layer parameter rbg-Size, and data is transmitted to RBG indicated by 1 by the bitmap.

[Table 19]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

In case that the UE is configured to use only resource type 1 through higher layer signaling (13-05), some DCI for allocating a PDSCH to the UE includes frequency axis resource allocation information of $\lceil \log_2(N_{RB}^{DL,BWP}(N_{RB}^{DL,BWP}+1)/2) \rceil$ bits. The conditions for this will be described later. The base station may configure a starting VRB 13-20 according thereto and the length 13-25 of a frequency axis resource allocation subsequent thereto.

In case that the UE is configured to use both the resource type 0 and the resource type 1 (13-10) through higher layer signaling, the part of DCI allocating the PDSCH to the corresponding UE includes the frequency axis resource allocation information including bits of a greater value **13-35** among a payload **13-15** for configuring the resource type 0 and a payload 13-20 and 13-**25** for configuring the resource type 1. A condition therefor will be described below. In this case, one bit may be added to the most significant bit (MSB) of the frequency axis resource allocation information in the DCI, and in case that a value of the corresponding bit is '0', the use of the resource type 0 may be indicated, and in case that the value of the corresponding bit is '1', the use of the resource type 1 may be indicated.

[PDSCH/PUSCH: Regarding time resource allocation]

Hereinafter, a time domain resource allocation method regarding a data channel in a next-generation mobile communication system (5G or NR system) will be described.

A base station may configure, to a UE, a table regarding time domain resource allocation information for a Physical Downlink Shared Channel (PDSCH) and a Physical Uplink Shared Channel (PUSCH), via higher layer signaling (for example, RRC signaling). For the PDSCH, a table including up to maxNrofDL-Allocations=16 entries may be configured, and for the PUSCH, a table including up to maxNrofUL-Allocations=16 entries may be configured. According to an embodiment, the time domain resource allocation information may include a PDCCH-to-PDSCH slot timing (corresponds to a time interval in a slot unit between a time point when the PDCCH is received and a time point when the PDSCH scheduled by the received PDCCH is transmitted, indicated by K0), a PDCCH-to-PUSCH slot timing (corresponds to a time interval in a slot unit between a time point when the PDCCH is received and a time point when the PUSCH scheduled by the received PDCCH is transmitted, indicated by K2), information about a location and length of a start symbol where the PDSCH or PUSCH is scheduled within a slot, and a mapping type of the PDSCH or PUSCH. For example, information such as Table 20 or 21 below may be transmitted from the base station to the UE.

[Table 20]

```
PDSCH-TimeDomainResourceAllocationList information element

PDSCH-TimeDomainResourceAllocationList ::=   SEQUENCE (SIZE(1..maxNrofDL-Allocations)) OF
PDSCH-TimeDomainResourceAllocation

PDSCH-TimeDomainResourceAllocation ::=     SEQUENCE {
     k0                                    INTEGER(0..32)
OPTIONAL,     -- Need S
     mappingType                           ENUMERATED {typeA, typeB},
     startSymbolAndLength                  INTEGER (0..127)
}
```

[Table 21]

```
PUSCH-TimeDomainResourceAllocation information element

PUSCH-TimeDomainResourceAllocationList ::=   SEQUENCE (SIZE(1..maxNrofUL-Allocations)) OF
PUSCH-TimeDomainResourceAllocation

PUSCH-TimeDomainResourceAllocation ::=     SEQUENCE {
     k2                                    INTEGER(0..32)
OPTIONAL,     -- Need S
     mappingType                           ENUMERATED {typeA, typeB},
     startSymbolAndLength                  INTEGER (0..127)
}
```

The base station may notify the UE about one of entries in a table of the time domain resource allocation information, via L1 signaling (for example, DCI) (for example, indicated via a 'time domain resource allocation' field within DCI). The UE may obtain the time domain resource allocation information regarding the PDSCH or PUSCH, based on the DCI received from the base station.

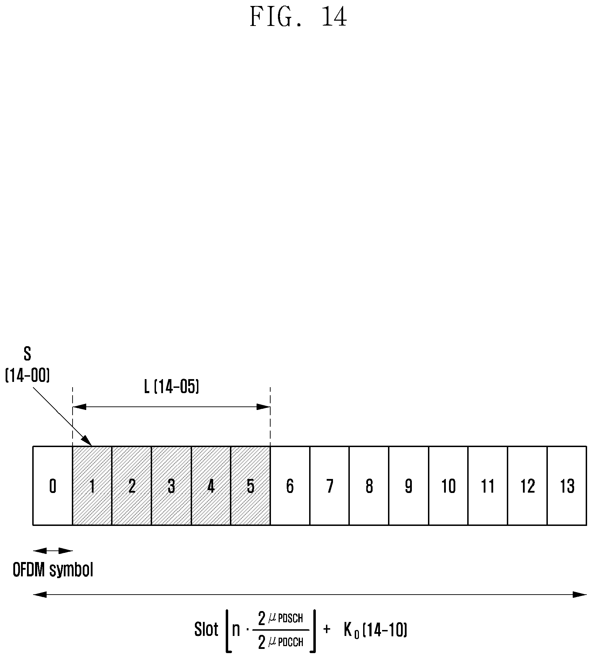

FIG. 14 is a diagram illustrating an example of a time axis resource allocation of a PDSCH in a wireless communication system according to an embodiment of the disclosure.

With reference to FIG. 14, the base station may indicate the time axis location of a PDSCH resource according to the subcarrier spacing (SCS) ($\mu_{PDSCH}$, $\mu_{PDCCH}$) of a data channel and control channel configured using a higher layer, a scheduling offset value (K0), a starting position **14-00** of OFDM symbols within one slot dynamically indicated through DCI, and the length **14-05** thereof.

[PDSCH: TCI state activation MAC-CE]

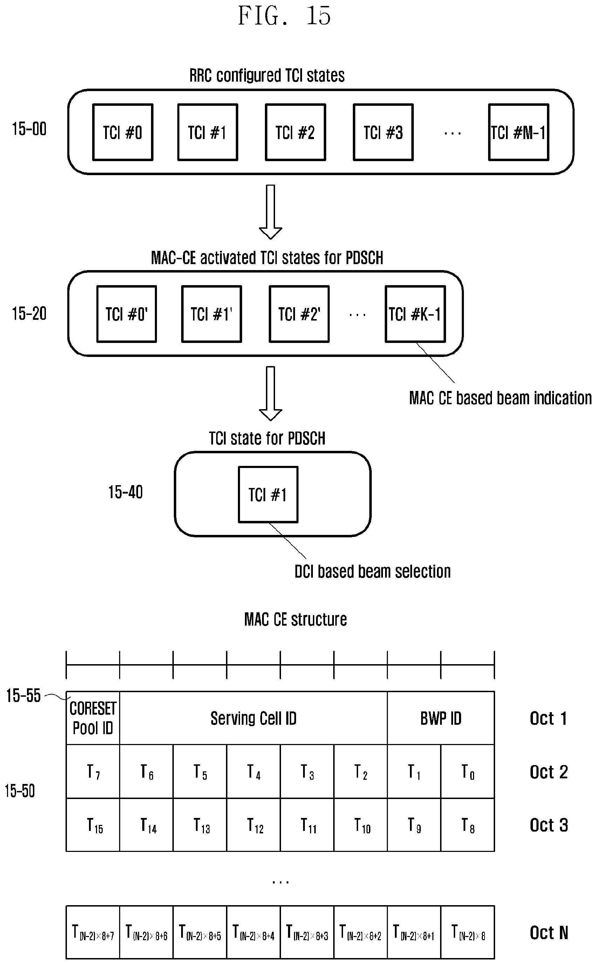

FIG. 15 illustrates a procedure for beam configuration and activation of a PDSCH. A list of TCI states for a PDSCH may be indicated through a higher layer list such as RRC or the like (**15-00**). The list of TCI states may be indicated by, for example, tci-StatesToAddModList and/or tci-StatesToReleaseList in a PDSCH-Config IE for each BWP. Next, some of the TCI states in the list may be activated through a MAC-CE (**15-20**). Among the TCI states activated via the MAC-CE, a TCI state for a PDSCH may be indicated via DCI (15-40). The maximum number of activated TCI states may be determined according to the capability reported by the UE. Reference numeral **15-50** shows an example of a MAC-CE structure for PDSCH TCI state activation/deactivation.

Definitions of respective fields in the MAC-CE and configurable values for respective fields are as follows.

- Serving Cell ID (Serving cell identity): This field indicates the identity of the Serving Cell for which the MAC CE applies. The length of the field is 5 bits. If the indicated Serving Cell is configured as part of a simultaneousTCI-UpdateList1 or simultaneousTCI-UpdateList2 as specified in TS 38.331 [5], this MAC CE applies to all the Serving Cells configured in the set simultaneousTCI-UpdateList1 or simultaneousTCI-UpdateList2, respectively;
- BWP ID (Bandwidth identity): This field indicates a DL BWP for which the MAC CE applies as the codepoint of the DCI bandwidth part indicator field as specified in TS 38.212 [9]. The length of the BWP ID field is 2 bits. This field is ignored if this MAC CE applies to a set of Serving Cells;
- $T_i$ (TCI state identity): If there is a TCI state with TCI-StateId i as specified in TS 38.331 [5], this field indicates the activation/deactivation status of the TCI state with TCI-StateId i, otherwise MAC entity shall ignore the Ti field. The Ti field is set to 1 to indicate that the TCI state with TCI-StateId i shall be activated and mapped to the codepoint of the DCI Transmission Configuration Indication field, as specified in TS 38.214 [7]. The Ti field is set to 0 to indicate that the TCI state with TCI-StateId i shall be deactivated and is not mapped to the codepoint of the DCI Transmission Configuration Indication field. The codepoint to which the TCI State is mapped is determined by its ordinal position among all the TCI States with Ti field set to 1, i.e. the first TCI State with $T_i$ field set to 1 shall be mapped to the codepoint value 0, second TCI State with Ti field set to 1 shall be mapped to the codepoint value 1 and so on. The maximum number of activated TCI states is 8;
- CORESET Pool ID (CORESET Pool ID identity): This field indicates that mapping between the activated TCI states and the codepoint of the DCI Transmission Configuration Indication set by field Ti is specific to the ControlResource-SetId configured with CORESET Pool ID as specified in TS 38.331 [5]. This field set to 1 indicates that this MAC CE shall be applied for the DL transmission scheduled by CORESET with the CORESET pool ID equal to 1, otherwise, this MAC CE shall be applied for the DL transmission scheduled by CORESET pool ID equal to 0. If the coreset-PoolIndex is not configured for any CORESET, MAC entity shall ignore the CORESET Pool ID field in this MAC CE when receiving the MAC CE. If the Serving Cell in the MAC CE is configured in a cell list that contains more than one Serving Cell, the CORESET Pool ID field shall be ignored when receiving the MAC CE.

[PUCCH: Regarding transmission]

In the NR system, the UE may transmit uplink control information (UCI) to the base station through a physical uplink control channel (PUCCH). The control information may include at least one of HARQ-ACK indicating a success or failure of demodulation/decoding with respect to a transport block (TB) received by the UE through a PDSCH, a scheduling request (SR) by which the UE requests allocation of a resource from a PUSCH base station for uplink data transmission, and channel state information (CSI) for reporting a channel state of the UE.

PUCCH resources may be largely divided into a long PUCCH and a short PUCCH according to a length of an allocated symbol. In the NR system, the long PUCCH has a length of 4 or more symbols in a slot, and the short PUCCH has a length of 2 or less symbols in a slot.

To describe the long PUCCH in more detail, the long PUCCH may be used for improving an uplink cell coverage, and accordingly, may be transmitted by using a DFT-S-OFDM scheme, which is single subcarrier transmission, rather than by using OFDM transmission. The long PUCCH supports transmission formats, such as PUCCH format 1, PUCCH format 3, and PUCCH format 4, according to the number of bits of the control information which may be supported and whether or not multiplexing of the UE is supported through a Pre-DFT OCC support at an IFFT's front end.

First, PUCCH format 1 is a DFT-S-OFDM-based long PUCCH format capable of supporting up to 2 bits of control information and uses a frequency resource of up to 1 RB. The control information may include each or a combination of HARQ-ACK and SR. In PUCCH format 1, an OFDM symbol including a DeModulation Reference Signal (DMRS), which is a demodulation reference signal (or a reference signal), and an OFDM symbol including the UCI are repetitively configured.

For example, in case that the number of transmission symbols of PUCCH format 1 is eight, the eight symbols may include a DMRS symbol, a UCI symbol, a DMRS symbol, a UCI symbol, a DMRS symbol, a UCI symbol, a DMRS symbol, and a UCI symbol in a sequence of this stated order. The DMRS symbol may be spread by using an orthogonal code (or an orthogonal sequence or spreading code, $w_i(m)$) on a time axis in a sequence corresponding to a duration of 1 RB on a frequency axis in one OFDM symbol and may be transmitted after IFFT is performed thereon.

The UCI symbol may be transmitted after the UE generates d (0) by performing BPSK modulation on the control information of 1 bit and QPSK modulation on the control information of 2 bits, scrambles the generated d (0) by multiplying the generated d (0) by a sequence corresponding to a duration of 1 RB on a frequency axis, spreads the scrambled sequence on a time axis by using an orthogonal code (or an orthogonal sequence or spreading code, $w_i(m)$), and performs IFFT on the spread sequence.

The UE generates a sequence based on a group hopping or sequence hopping configuration configured from the base station through higher layer signaling and a configured ID and cyclic-shifts the generated sequence by using an initial cyclic shift (CS) value configured through a higher signal to generate a sequence corresponding to a length of 1 RB.

$w_i(m)$ is determined to be $$w_i(m) = e^{\frac{j2\pi\phi(m)}{N_{SF}}}$$ when a length $N_{SF}$ of the spreading code is given, and specifically, is given as in [Table 22] below. i represents an index of the spreading code itself, and m represents indices of elements of the spreading code. Here, numbers in [ ] described in [Table 22] denote $\phi(m)$. For example, when a length of the spreading code is 2, and an index of the configured spreading code is i=0, the spreading code $w_i(m)$ becomes $w_i(0)=e^{j2\pi \cdot 0/N_{SF}}=1$, $w_i(1)=e^{j2\pi \cdot 0/N_{SF}}=1$, and accordingly, $w_i(m)=[11]$.

[Table 22]

| $N_{SF}$ | $\varphi(m)$ | | | | | | |
|---|---|---|---|---|---|---|---|
| | $i = 0$ | $i = 1$ | $i = 2$ | $i = 3$ | $i = 4$ | $i = 5$ | $i = 6$ |
| 1 | [0] | - | - | - | - | - | - |
| 2 | [0 0] | [0 1] | - | - | - | - | - |
| 3 | [0 0 0] | [0 1 2] | [0 2 1] | - | - | - | - |
| 4 | [0 0 0 0] | [0 2 0 2] | [0 0 2 2] | [0 2 2 0] | - | - | - |
| 5 | [0 0 0 0 0] | [0 1 2 3 4] | [0 2 4 1 3] | [0 3 1 4 2] | [0 4 3 2 1] | - | - |
| 6 | [0 0 0 0 0 0] | [0 1 2 3 4 5] | [0 2 4 0 2 4] | [0 3 0 3 0 3] | [0 4 2 0 4 2] | [0 5 4 3 2 1] | - |
| 7 | [0 0 0 0 0 0 0] | [0 1 2 3 4 5 6] | [0 2 4 6 1 3 5] | [0 3 6 2 5 1 4] | [0 4 1 5 2 6 3] | [0 5 3 1 6 4 2] | [0 6 5 4 3 2 1] |

Next, PUCCH format 3 is a DFT-S-OFDM-based long PUCCH format capable of supporting the control information of more than 2 bits, and the number of used RBs may be configurable through a higher layer. The control information may include a combination or each of HARQ-ACK, SR, and CSI. In PUCCH format 3, DMRS symbol locations are presented in Table 23 below according to whether frequency hopping is performed in a slot and whether supplementary DMRS symbol is configured.

[Table 23]

| PUCCH format 3/4 transmission duration | DMRS location in PUCCH format 3/4 transmission | | | |
|---|---|---|---|---|
| | Additional DMRS not configured | | Additional DMRS configured | |
| | Frequency hopping not configured | Frequency hopping configured | Frequency hopping not configured | Frequency hopping configured |
| 4 | 1 | 0, 2 | 1 | 0, 2 |
| 5 | 0, 3 | | 0, 3 | |

(continued)

| PUCCH format 3/4 transmission duration | DMRS location in PUCCH format 3/4 transmission | | | |
| --- | --- | --- | --- | --- |
| | Additional DMRS not configured | | Additional DMRS configured | |
| | Frequency hopping not configured | Frequency hopping configured | Frequency hopping not configured | Frequency hopping configured |
| 6 | 1, 4 | | 1, 4 | |
| 7 | 1, 4 | | 1, 4 | |
| 8 | 1, 5 | | 1, 5 | |
| 9 | 1, 6 | | 1, 6 | |
| 10 | 2, 7 | | 1, 3, 6, 8 | |
| 11 | 2, 7 | | 1, 3, 6, 9 | |
| 12 | 2, 8 | | 1, 4, 7, 10 | |
| 13 | 2, 9 | | 1, 4, 7, 11 | |
| 14 | 3, 10 | | 1, 5, 8, 12 | |

For example, in case that the number of transmission symbols of PUCCH format 3 is eight, a DMRS is transmitted at a first symbol and a fifth symbol, with 0 as the starting first symbol of the 8 symbols. Table 23 is applied to DMRS symbol locations of PUCCH format 4 in the same manner.

Next, PUCCH format 4 is a DFT-S-OFDM-based long PUCCH format capable of supporting the control information of more than 2 bits and uses a frequency resource of up to 1 RB. The control information may include a combination or each of HARQ-ACK, SR, and CSI. A difference of PUCCH format 4 from PUCCH format 3 is that in the case of PUCCH format 4, PUCCH format 4 of multiple UEs may be multiplexed in one RB. It is possible to multiplex PUCCH format 4 of a plurality of UEs by applying a Pre-DFT OCC to the control information at an IFFTs front end. However, the number of control information symbols which may be transmitted per UE may be reduced according to the number of multiplexed UEs. The number of UEs which may be multiplexed, that is, the number of different available OCCs may be 2 or 4, and the number of OCCs and an OCC index to be applied may be configured through a higher layer.

Next, a short PUCCH will be described. The short PUCCH may be transmitted from both of a downlink centric slot and an uplink centric slot and may generally be transmitted from a last symbol of a slot or an OFDM symbol at a back end (for example, the last OFDM symbol or the second to last OFDM symbol, or the last 2 OFDM symbols). Apparently, the short PUCCH may be transmitted from any location in the slot. Also, the short PUCCH may be transmitted by using one OFDM symbol or two OFDM symbols. The short PUCCH may be used to reduce a latency in comparison with the long PUCCH in a situation of a good uplink cell coverage and may be transmitted by using a CP-OFDM scheme.

The short PUCCH may support the transmission formats such as PUCCH format 0 and PUCCH format 2, according to the number of bits of the control information which may be supported. First, PUCCH format 0 is a short PUCCH format capable of supporting the control information of up to 2 bits and uses a frequency resource of up to 1 RB. The control information may include a combination or each of HARQ-ACK and SR. PUCCH format 0 has a structure in which a DMRS is not transmitted, and only a sequence mapped to 12 subcarriers on a frequency axis in one OFDM symbol is transmitted. The UE may generate a sequence based on a group hopping or sequence hopping configuration configured from the base station through a higher signal and configured IDs, may cyclic-shift the generated sequence by using a final CS value obtained by adding a different CS value to an indicated initial cyclic shift (CS) value according to ACK or NACK, may map the cyclic-shifted sequence to 12 subcarriers, and may transmit the mapped sequence.

For example, in case that HARQ-ACK is 1 bit, the UE may obtain the final CS value by adding 6 to the initial CS value in the case of ACK and may obtain the final CS value by adding 0 to the initial CS value in the case of NACK, as in Table 24. 0, which is the CS value for NACK, and 6, which is the CS value for ACK, are defined in the standards, and the UE may generate PUCCH format 0 according to the value defined in the standards and transmit 1-bit HARQ-ACK.

[Table 24]

| 1 bit HARQ-ACK | NACK | ACK |
| --- | --- | --- |
| Final CS | (initial CS + 6) mod 12 = initial CS | (initial CS + 6) mod 12 |

For example, in case that HARQ-ACK is two bits, the UE may add 0 to the initial CS value in the case of (NACK, NACK), may add 3 to the initial CS value in the case of (NACK, ACK), may add 6 to the initial CS value in the case of (ACK, ACK), and may add 9 to the initial CS value in the case of (ACK, NACK) as in Table 25. 0, which is the CS value for (NACK, NACK), 3, which is the CS value for (NACK, ACK), 6, which is the CS value for (ACK, ACK), and 9, which is the CS value for (ACK, NACK) may be defined in the standards, and the UE may generates PUCCH format 0 according to the value defined in the standards and transmit 2-bit HARQ-ACK. In case that the final CS value exceeds 12 by the CS value added to the initial CS value according to ACK or NACK, a length of the sequence is 12, and thus, modulo 12 may be applied to the final CS value.

[Table 25]

| 2 bits HARQ-ACK | NACK, NACK | NACK, ACK | ACK, ACK | ACK, NACK |
|---|---|---|---|---|
| Final CS | (initial CS +0) mod 12 = initial CS | (initial CS + 3) mod 12 | (initial CS + 6) mod 12 | (initial CS + 9) mod 12 |

Next, PUCCH format 2 is a short PUCCH format supporting the control information of more than 2 bits, and the number of used RBs may be configured through a higher layer. The control information may include a combination or each of HARQ-ACK, SR, and CSI. When an index of the first subcarrier is #0, in PUCCH format 2, locations of subcarriers transmitting a DMRS in one OFDM symbol may be fixed to subcarriers having indexes of #1, #4, #7, and #10. The control information may be mapped to remaining subcarriers except for the subcarrier in which the DMRS is located after a modulation process after channel encoding.

In summary, with respect to each PUCCH format described above, configurable values and their ranges may be summarized as in Table 26 below. In case that it is not needed to configure a value, N.A. is described, in Table 26 below.

[Table 26]

| | | PUCCH Format 0 | PUCCH Format 1 | PUCCH Format 2 | PUCCH Format 3 | PUCCH Format 4 |
|---|---|---|---|---|---|---|
| *Starting symbol* | Configurability | √ | √ | √ | √ | √ |
| | Value range | *0-13* | *0 – 10* | *0-13* | *0 – 10* | *0 – 10* |
| *Number of symbols in a slot* | Configurability | √ | √ | √ | √ | √ |
| | Value range | *1, 2* | *4 – 14* | *1, 2* | *4 – 14* | *4 – 14* |
| *Index for identifying starting PRB* | Configurability | √ | √ | √ | √ | √ |
| | Value range | *0 - 274* | *0 - 274* | *0 - 274* | *0 - 274* | *0 - 274* |
| *Number of PRBs* | Configurability | *N.A.* | *N.A.* | √ | √ | *N.A.* |
| | Value range | *N.A. (Default is 1)* | *N.A. (Default is 1)* | *1 – 16* | *1 - 6, 8 - 10, 12, 15, 16* | *N.A. (Default is 1)* |
| *Enabling frequency hopping (intra-slot)* | Configurability | √ | √ | √ | √ | √ |
| | Value range | *On/Off (only for 2 symbol)* | *On/Off* | *On/Off (only for 2 symbol)* | *On/Off* | *On/Off* |
| *Freq.cy resource of 2ⁿᵈ hop if intra-slot frequency hopping is enabled* | Configurability | √ | √ | √ | √ | √ |
| | Value range | *0 – 274* | *0 - 274* | *0 - 274* | *0 - 274* | *0 - 274* |
| *Index of initial cyclic shift* | Configurability | √ | √ | *N.A.* | *N.A.* | *N.A.* |
| | Value range | *0 – 11* | *0 – 11* | *N.A.* | *N.A.* | *N.A.* |
| *Index of time-domain OCC* | Configurability | *N.A.* | √ | *N.A.* | *N.A.* | *N.A.* |
| | Value range | *N.A.* | *0 - 6* | *N.A.* | *N.A.* | *N.A.* |
| *Length of Pre-DFT OCC* | Configurability | *N.A.* | *N.A.* | *N.A.* | *N.A.* | √ |
| | Value range | *N.A.* | *N.A.* | *N.A.* | *N.A.* | *2, 4* |
| *Index of Pre-DFT OCC* | Configurability | *N.A.* | *N.A.* | *N.A.* | *N.A.* | √ |
| | Value range | *N.A.* | *N.A.* | *N.A.* | *N.A.* | *0, 1, 2, 3* |

Meanwhile, for the uplink coverage improvement, multi-slot repetition may be supported for PUCCH formats 1, 3, and 4, and PUCCH repetition may be configured for each PUCCH format. The UE may perform repetitive transmission with respect to a PUCCH including UCI corresponding to the number of slots configured through nrofSlots, which is higher layer signaling. With respect to the PUCCH repetitive transmission, PUCCH transmission of each slot may be performed by using the same number of consecutive symbols, and the corresponding number of consecutive symbols may be configured through nrofSymbols in PUCCH format 1, PUCCH format 3, or PUCCH format 4, which is higher layer signaling. With respect to the PUCCH repetitive transmission, the PUCCH transmission of each slot may be performed by using the same start symbol, and the corresponding start symbol may be configured through starting Symbol Index in PUCCH format 1, PUCCH format 3, or PUCCH format 4, which is higher layer signaling. With respect to the PUCCH repetitive transmission, a single piece of PUCCH-spatialRelationIInfo may be configured with respect to a single PUCCH resource. With respect to the PUCCH repetitive transmission, when the UE is configured to perform frequency hopping in PUCCH transmission in different slots, the UE may perform frequency hopping in a slot unit. Also, when the UE is configured to perform frequency hopping in PUCCH transmission in different slots, the UE may start PUCCH transmission from a first PRB index configured through starting PRB which is higher layer signaling in an even number$^{th}$ slot and may start PUCCH transmission from a second PRB index configured through secondHopPRB which is higher layer signaling in an odd number$^{th}$ slot. Additionally, when the UE is configured to perform frequency hopping in PUCCH transmission in different slots, an index of a slot in which the UE is indicated to perform first PUCCH transmission is 0, and during the total number of times of configured PUCCH repetitive transmission, a value of the number of times of PUCCH repetitive transmission value may increase regardless of the PUCCH transmission in each slot. When the UE is configured to perform frequency hopping in PUCCH transmission in different slots, the UE may expect that frequency hopping is configured in a slot during PUCCH transmission. When the UE is not configured to perform frequency hopping in PUCCH transmission in different slots and is configured to perform frequency hopping in a slot, the first and second PRB indexes may be applied in the slot in the same manner. When the number of uplink symbols capable of PUCCH transmission is less than nrofSymbols configured through higher layer signaling, the UE may not transmit a PUCCH. Even when the UE has failed to transmit a PUCCH for a certain reason in a predetermined slot during the PUCCH repetitive transmission, the UE may increase the number of times of PUCCH repetitive transmission.

[PUCCH: PUCCH resource configuration]

Next, PUCCH resource configuration of the base station or UE is described. The base station may be capable of configuring, for a predetermined UE, a PUCCH resource for each BWP via a higher layer. The PUCCH resource configuration may be the same as in Table 27 below.

[Table 27]

```
PUCCH-Config ::=                          SEQUENCE {
        resourceSetToAddModList                   SEQUENCE (SIZE (1..maxNrofPUCCH-ResourceSets)) OF
PUCCH-ResourceSet      OPTIONAL, -- Need N
        resourceSetToReleaseList                  SEQUENCE (SIZE (1..maxNrofPUCCH-ResourceSets)) OF
PUCCH-ResourceSetId OPTIONAL, -- Need N
        resourceToAddModList                      SEQUENCE (SIZE (1..maxNrofPUCCH-Resources)) OF
PUCCH-Resource            OPTIONAL, -- Need N
        resourceToReleaseList                     SEQUENCE (SIZE (1..maxNrofPUCCH-Resources)) OF PUCCH-ResourceId
OPTIONAL, -- Need N
        format1                                   SetupRelease { PUCCH-FormatConfig }
OPTIONAL, -- Need M
        format2                                   SetupRelease { PUCCH-FormatConfig }
OPTIONAL, -- Need M
        format3                                   SetupRelease { PUCCH-FormatConfig }
OPTIONAL, -- Need M
        format4                                   SetupRelease { PUCCH-FormatConfig }
OPTIONAL, -- Need M
        schedulingRequestResourceToAddModList     SEQUENCE (SIZE (1..maxNrofSR-Resources)) OF
SchedulingRequestResourceConfig

OPTIONAL, -- Need N
        schedulingRequestResourceToReleaseList  SEQUENCE (SIZE (1..maxNrofSR-Resources)) OF
SchedulingRequestResourceId

OPTIONAL, -- Need N
        multi-CSI-PUCCH-ResourceList              SEQUENCE (SIZE (1..2)) OF PUCCH-ResourceId
OPTIONAL, -- Need M
        dl-DataToUL-ACK                           SEQUENCE (SIZE (1..8)) OF INTEGER (0..15)
OPTIONAL, -- Need M
        spatialRelationInfoToAddModList           SEQUENCE (SIZE (1..maxNrofSpatialRelationInfos)) OF
PUCCH-SpatialRelationInfo

OPTIONAL, -- Need N
        spatialRelationInfoToReleaseList          SEQUENCE (SIZE (1..maxNrofSpatialRelationInfos)) OF
PUCCH-SpatialRelationInfoId

OPTIONAL, -- Need N
        pucch-PowerControl                        PUCCH-PowerControl
OPTIONAL, -- Need M
        ...,
```

```
[[
resourceToAddModListExt-r16              SEQUENCE (SIZE (1..maxNrofPUCCH-Resources)) OF
PUCCH-ResourceExt-r16   OPTIONAL, -- Need N
    dl-DataToUL-ACK-r16                  SetupRelease { DL-DataToUL-ACK-r16 }
OPTIONAL, -- Need M
    ul-AccessConfigListDCI-1-1-r16       SetupRelease { UL-AccessConfigListDCI-1-1-r16 }
OPTIONAL, -- Need M
    subslotLengthForPUCCH-r16            CHOICE {
        normalCP-r16                         ENUMERATED {n2,n7},
        extendedCP-r16                       ENUMERATED {n2,n6}
    }
OPTIONAL, -- Need R
    dl-DataToUL-ACK-DCI-1-2-r16          SetupRelease { DL-DataToUL-ACK-DCI-1-2-r16}
OPTIONAL, -- Need M
    numberOfBitsForPUCCH-ResourceIndicatorDCI-1-2-r16   INTEGER (0..3)
OPTIONAL, -- Need R
    dmrs-UplinkTransformPrecodingPUCCH-r16   ENUMERATED {enabled}
OPTIONAL,   -- Cond PI2-BPSK
    spatialRelationInfoToAddModListSizeExt-v1610    SEQUENCE (SIZE (1..maxNrofSpatialRelationInfosDiff-r16)) OF
PUCCH-SpatialRelationInfo

OPTIONAL, -- Need N
    spatialRelationInfoToReleaseListSizeExt-v1610   SEQUENCE (SIZE (1..maxNrofSpatialRelationInfosDiff-r16)) OF
PUCCH-SpatialRelationInfoId

OPTIONAL, -- Need N
    spatialRelationInfoToAddModListExt-v1610   SEQUENCE (SIZE (1..maxNrofSpatialRelationInfos-r16)) OF
PUCCH-SpatialRelationInfoExt-r16

OPTIONAL, -- Need N
    spatialRelationInfoToReleaseListExt-v1610       SEQUENCE (SIZE (1..maxNrofSpatialRelationInfos-r16)) OF
                                                                PUCCH-SpatialRelationInfoId-r16
OPTIONAL, -- Need N
    resourceGroupToAddModList-r16        SEQUENCE (SIZE (1..maxNrofPUCCH-ResourceGroups-r16)) OF
PUCCH-ResourceGroup-r16

OPTIONAL, -- Need N
    resourceGroupToReleaseList-r16       SEQUENCE (SIZE (1..maxNrofPUCCH-ResourceGroups-r16)) OF
PUCCH-ResourceGroupId-r16

OPTIONAL, -- Need N
    sps-PUCCH-AN-List-r16                SetupRelease { SPS-PUCCH-AN-List-r16 }
OPTIONAL,   -- Need M
    schedulingRequestResourceToAddModListExt-v1610    SEQUENCE (SIZE (1..maxNrofSR-Resources)) OF
SchedulingRequestResourceConfigExt-v1610

OPTIONAL -- Need N
    ]]
}
```

According to Table 27, one or multiple PUCCH resource sets may be configured in a PUCCH resource configuration for a predetermined BWP, and a maximum payload value for UCI transmission may be configured in some of PUCCH resource sets. One or multiple PUCCH resources may be included in each PUCCH resource set, and each PUCCH resource may be included in one of the PUCCH formats described above.

With respect to the PUCCH resource sets, the first PUCCH resource set may have a maximum payload value that is fixed to 2 bits. Accordingly, the corresponding value may not be additionally configured through a higher layer, etc. In case that the remaining PUCCH resource sets are configured, an index of the corresponding PUCCH resource sets may be configured in an ascending order according to maximum payload values, and the maximum payload value may not be configured in the last PUCCH resource set. A higher layer configuration with respect to the PUCCH resource sets may be the same as Table 28 below.

[Table 28]

```
PUCCH-ResourceSet ::=                       SEQUENCE {
     pucch-ResourceSetId                    PUCCH-ResourceSetId,
     resourceList                           SEQUENCE (SIZE (1..maxNrofPUCCH-ResourcesPerSet)) OF
PUCCH-ResourceId,
     maxPayloadSize                         INTEGER (4..256)
OPTIONAL   -- Need R
}
```

In a resourceList parameter of Table 28, ID of the PUCCH resources included in the PUCCH resource sets may be included.

During an initial connection or in case that a PUCCH resource set is not configured, a PUCCH resource set composed of a plurality of cell-specific PUCCH resources in an initial BWP as shown in Table 29 below may be used. A PUCCH resource in the PUCCH resource set, the PUCCH resource being to be used for the initial connection, may be indicated through SIB1.

[Table 29]

| Index | PUCCH format | First symbol | Number of symbols | PRB offset $RB_{BWP}^{offset}$ | Set of initial CS indexes |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\lfloor N_{BWP}^{size}/4 \rfloor$ | {0, 3, 6, 9} |

The maximum payload of each PUCCH resource included in the PUCCH resource sets may be 2 bits in the case of PUCCH format 0 or 1, and may be determined according to a symbol length, the number of PRBs, and a maximum code rate, in the case of the remaining formats. The symbol length and number of PRBs may be configured for each PUCCH resource, and the maximum code rate may be configured for each PUCCH format.

Next, PUCCH resource selection for UCI transmission is described. In the case of SR transmission, a PUCCH resource with respect to the SR corresponding to schedulingRequestID may be configured through a higher layer as in Table 30 below. The PUCCH resource may be a resource included in PUCCH format 0 or PUCCH format 1.

[Table 30]

```
SchedulingRequestResourceConfig ::=    SEQUENCE {
    schedulingRequestResourceId            SchedulingRequestResourceId,
    schedulingRequestID                    SchedulingRequestId,
    periodicityAndOffset                   CHOICE {
        sym2                                   NULL,
        sym6or7                                NULL,
        sl1                                    NULL,             -- Recurs in every slot
        sl2                                    INTEGER (0..1),
        sl4                                    INTEGER (0..3),
        sl5                                    INTEGER (0..4),
        sl8                                    INTEGER (0..7),
        sl10                                   INTEGER (0..9),
        sl16                                   INTEGER (0..15),
        sl20                                   INTEGER (0..19),
        sl40                                   INTEGER (0..39),
        sl80                                   INTEGER (0..79),
        sl160                                  INTEGER (0..159),
        sl320                                  INTEGER (0..319),
        sl640                                  INTEGER (0..639)
    }
OPTIONAL,      -- Need M
    resource                               PUCCH-ResourceId
OPTIONAL       -- Need M
}
```

A transmission period and an offset of the configured PUCCH resource may be configured through a perodicityAndOffset of Table 30. In case that there is uplink data to be transmitted by the UE at a time point corresponding to the configured period and offset, the corresponding PUCCH resource may be transmitted, and in case that there is not uplink data to be transmitted by the UE at the time point corresponding to the configured period and offset, the corresponding PUCCH resource may not be transmitted.

In the case of CSI transmission, a PUCCH resource to transmit a periodic CSI report or a semi-persistent CSI report through PUCCH may be configured in a pucch-CSI-ResourceList parameter as in Table 31 below. The pucch-CSI-ResourceList parameter may include a list of PUCCH resources for each BWP with respect to a cell or a CC to transmit the corresponding CSI report. The PUCCH resource may be a resource included in PUCCH format 2, PUCCH format 3, or PUCCH format 4. A transmission period and offset of the PUCCH resource may be configured through reportSlotConfig of Table 31.

[Table 31]

```
CSI-ReportConfig ::=              SEQUENCE {
    reportConfigId                    CSI-ReportConfigId,
    carrier                           ServCellIndex               OPTIONAL,    -- Need S
    ...
    reportConfigType                  CHOICE {
        periodic                          SEQUENCE {
            reportSlotConfig                  CSI-ReportPeriodicityAndOffset,
            pucch-CSI-ResourceList            SEQUENCE (SIZE (1..maxNrofBWPs)) OF PUCCH-CSI-Resource
        },
        semiPersistentOnPUCCH             SEQUENCE {
            reportSlotConfig                  CSI-ReportPeriodicityAndOffset,
            pucch-CSI-ResourceList            SEQUENCE (SIZE (1..maxNrofBWPs)) OF PUCCH-CSI-Resource
        },
        semiPersistentOnPUSCH             SEQUENCE {
            reportSlotConfig                  ENUMERATED {sl5, sl10, sl20, sl40, sl80, sl160, sl320},
            reportSlotOffsetList              SEQUENCE (SIZE (1.. maxNrofUL-Allocations)) OF INTEGER(0..32),
            p0alpha                           P0-PUSCH-AlphaSetId
        },
        aperiodic                         SEQUENCE {
            reportSlotOffsetList              SEQUENCE (SIZE (1..maxNrofUL-Allocations)) OF INTEGER(0..32)
        }
    },
    ...
}
```

In the case of HARQ-ACK transmission, a resource set of PUCCH resources to be transmitted may be selected first according to a payload of UCI including the corresponding HARQ-ACK. That is, a PUCCH resource set having a minimum payload that is not less than a UCI payload may be selected. Next, a PUCCH resource in the PUCCH resource set may be selected through a PUCCH resource indicator (PRI) in DCI scheduling a TB corresponding to the corresponding HARQ-ACK, and the PRI may be a PUCCH resource indicator explicitly shown in Table 6 or Table 7. A relationship between the PRI and the PUCCH resource selected from the PUCCH resource set may be the same as in Table 32 below.

[Table 32]

| PUCCH resource indicator | PUCCH resource |
|---|---|
| '000' | 1st PUCCH resource provided by *pucch-ResourceId* obtained from the 1st value of *resourceList* |
| '001' | 2nd PUCCH resource provided by *pucch-ResourceId* obtained from the 2nd value of *resourceList* |
| '010' | 3rd PUCCH resource provided by *pucch-ResourceId* obtained from the 3rd value of *resourceList* |
| '011' | 4th PUCCH resource provided by *pucch-ResourceId* obtained from the 4th value of *resourceList* |
| '100' | 5th PUCCH resource provided by *pucch-ResourceId* obtained from the 5th value of *resourceList* |
| '101' | 6th PUCCH resource provided by *pucch-ResourceId* obtained from the 6th value of *resourceList* |
| '110' | 7th PUCCH resource provided by *pucch-ResourceId* obtained from the 7th value of *resourceList* |
| '111' | 8th PUCCH resource provided by *pucch-ResourceId* obtained from the 8th value of *resourceList* |

When the number of PUCCH resources selected in the PUCCH resource set is greater than 8, the PUCCH resource may be selected by the following equation.

[Equation 3]

$$
r_{\text{PUCCH}} = \begin{cases} \left\lfloor \dfrac{n_{\text{CCE},p} \cdot \left\lceil R_{\text{PUCCH}}/8 \right\rceil}{N_{\text{CCE},p}} \right\rfloor + \Delta_{\text{PRI}} \cdot \left\lceil \dfrac{R_{\text{PUCCH}}}{8} \right\rceil & \text{if} \quad \Delta_{\text{PRI}} < R_{\text{PUCCH}} \bmod 8 \\[2em] \left\lfloor \dfrac{n_{\text{CCE},p} \cdot \left\lfloor R_{\text{PUCCH}}/8 \right\rfloor}{N_{\text{CCE},p}} \right\rfloor + \Delta_{\text{PRI}} \cdot \left\lfloor \dfrac{R_{\text{PUCCH}}}{8} \right\rfloor + R_{\text{PUCCH}} \bmod 8 & \text{if} \quad \Delta_{\text{PRI}} \geq R_{\text{PUCCH}} \bmod 8 \end{cases}
$$

In [Equation 3], $r_{PUCCH}$ indicates an index of the PUCCH resource selected in the PUCCH resource set, $R_{PUCCH}$ indicates the number of PUCCH resources included in the PUCCH resource set, $\triangle PRI$ indicates a PRI value, $N_{CCE,p}$ indicates the total number of CCEs of CORESET p in which received DCI is included, and $n_{CCE,p}$ indicates a first CCE index with respect to the received DCI.

A time point at which the corresponding PUCCH resource is transmitted is after a $K_1$ slot from TB transmission corresponding to the corresponding HARQ-ACK. A candidate of the $K_1$ value may be set through a higher layer, and in more detail, may be set in a dl-DataToUL-ACK parameter in PUCCH-Config explicitly shown in Table 27. One $K_1$ value from among these candidates may be selected by a PDSCH-to-HARQ feedback timing indicator in the DCI scheduling the TB, and this value may be a value explicitly shown in Table 5 or Table 6. A unit of the $K_1$ value may be a slot unit or a sub-slot unit. Here, the sub-slot is a unit having a less length than the slot, and a sub-slot may include one or more symbols.

Next, a case in which two or more PUCCH resources are located in one slot is described. When the UE is capable of transmitting the UCI through one or more PUCCH resources in one slot or sub-slot, and the UCI is transmitted through two PUCCH resources in one slot/sub-slot, i) each PUCCH resource may not overlap each other in a symbol unit, and ii) at least one PUCCH resource may be a short PUCCH. Meanwhile, the UE may not expect to transmit a plurality of PUCCH resources for HARQ-ACK transmission in one slot.

[PUCCH: Regarding transmission beam]

Next, an uplink transmission beam configuration to be used for PUCCH transmission is described. When the UE does not have a dedicated PUCCH resource configuration, a PUCCH resource set may be provided through pucch-ResourceCommon which is higher layer signaling, and in this case, the beam configuration for the PUCCH transmission may be in accordance with a beam configuration used by PUSCH transmission scheduled through random access response (RAR) UL grant. When the UE has a dedicated PUCCH resource configuration, the beam configuration with respect to the PUCCH transmission may be provided through pucch-spatialRelationInfoID which is higher signaling indicated in Table 27. When the UE is configured with one pucch-spatialRelationInfoID, the beam configuration for the PUCCH transmission of the UE may be provided through one pucch-spatialRelationInfoID. When the UE is configured with a plurality of pucch-spatialRelationInfoIDs, the UE may be indicated to activate one pucch-spatialRelationInfoID from among the plurality of pucch-spatialRelationInfoIDs through an MAC control element (CE). The UE may be configured with maximum 8 pucch-spatialRelationInfoIDs through higher signaling and may be indicated to activate only one pucch-spatialRelationInfoID from among the 8 pucch-spatialRelationInfoIDs. In case that the UE is indicated to activate a random pucch-spatialRelationInfoID through the MAC CE, the UE may apply activation of the pucch-spatialRelationInfoID through the MAC CE from a slot first occurring after a slot of $3N_{slot}^{subframe,\mu}$ from a slot transmitting HARQ-ACK with respect to a PDSCH transmitting the MAC CE containing activation information with respect to pucch-spatialRelationInfoID. $\mu$ denotes numerology applied to the PUCCH transmission, and $N_{slot}^{subframe,\mu}$ denotes the number of slots per subframe in the given numerology. A higher layer constitution with respect to pucch-spatialRelationInfo may be the same as Table 33 below.

[Table 33]

```
PUCCH-SpatialRelationInfo ::=          SEQUENCE {
        pucch-SpatialRelationInfoId    PUCCH-SpatialRelationInfoId,
        servingCellId                  ServCellIndex
OPTIONAL,      · Need S
        referenceSignal                CHOICE {
            ssb-Index                      SSB-Index,
            csi-RS-Index                   NZP-CSI-RS-ResourceId,
            srs                            PUCCH-SRS
        },
        pucch-PathlossReferenceRS-Id   PUCCH-PathlossReferenceRS-Id,
        p0-PUCCH-Id                    P0-PUCCH-Id,
        closedLoopIndex                ENUMERATED { i0, i1 }
}

PUCCH-SpatialRelationInfoId ::=        INTEGER (1..maxNrofSpatialRelationInfos)
```

According to the Table 33, one reference signal configuration may exist in a predetermined pucch-spatialRelationInfo configuration, and corresponding referenceSignal may be ssb-Index indicating a predetermined SS/PBCH, csi-RS-Index indicating a predetermined CSI-RS, or srs indicating a predetermined SRS. When referenceSignal is configured as ssb-Index, the UE may configure a beam used for receiving an SS/PBCH from among SSs/PBCHs in the same serving cell, the SS/PBCH corresponding to ssb_Index, as a beam for the PUCCH transmission, or when servingCellID is provided, the UE may configure a beam used for receiving an SS/PBCH from among SSs/PBCHs in a cell indicated by servingCellID, the SS/PBCH corresponding to ssb_Index, as a beam for the PUCCH transmission. When referenceSignal is configured as csi-RS-Index, the UE may configure a beam used for receiving a CSI-RS from among CSI-RSs in the same serving cell, the CSI-RS corresponding to csi-RS-Index, as a beam for the PUCCH transmission, or when servingCellID is provided, the UE may configure a beam used for receiving a CSI-RS from among CSI-RSs in a cell indicated by servingCellID, the CSI-RS corresponding to csi-RS-Index, as a beam for the PUCCH transmission. When referenceSignal is configured as srs, the UE may configure a transmission beam used for transmitting an SRS corresponding to a resource index provided through a higher signaling resource in the same serving cell and/or an activated uplink BWP, as a beam for the PUCCH transmission, or when servingCellID and/or uplinkBWP are/is provided, the UE may configure a transmission beam used for transmitting an SRS corresponding to a resource index provided through a higher signaling resource in a cell indicated by servingCellID and/or uplinkBWP and/or an uplink BWP, as a beam for the PUCCH transmission. There may be one pucch-PathlossReferenceRS-ID configuration in a predetermined pucch-spatialRelationInfo configuration. PUCCH-PathlossReferenceRS of Table 34 may be mapped with pucch-PathlossReferenceRS-ID of Table 33, and maximum 4 configurations are possible through pathlossReferenceRSs in higher signaling PUCCH-Powercontrol in Table 34. When PUCCH-PathlossReferenceRS is connected with the SS/PBCH through higher signaling reference Signal, ssb-Index may be configured, and when PUCCH-PathlossReferenceRS is connected with the CSI-RS, csi-RS-Index may be configured.

[Table 34]

```
PUCCH-PowerControl ::=              SEQUENCE {
    deltaF-PUCCH-f0                 INTEGER (-16..15)
OPTIONAL, -- Need R
    deltaF-PUCCH-f1                 INTEGER (-16..15)
OPTIONAL, -- Need R
    deltaF-PUCCH-f2                 INTEGER (-16..15)
OPTIONAL, -- Need R
    deltaF-PUCCH-f3                 INTEGER (-16..15)
OPTIONAL, -- Need R
    deltaF-PUCCH-f4                 INTEGER (-16..15)
OPTIONAL, -- Need R
    p0-Set                         SEQUENCE (SIZE (1..maxNrofPUCCH-P0-PerSet)) OF P0-PUCCH
OPTIONAL, -- Need M
    pathlossReferenceRSs           SEQUENCE (SIZE (1..maxNrofPUCCH-PathlossReferenceRSs)) OF
PUCCH-PathlossReferenceRS

OPTIONAL, -- Need M
    twoPUCCH-PC-AdjustmentStates   ENUMERATED {twoStates}
OPTIONAL, -- Need S

    ...,
    [[
    pathlossReferenceRSs-v1610     SetupRelease { PathlossReferenceRSs-v1610 }
OPTIONAL -- Need M
    ]]
}

P0-PUCCH ::=                        SEQUENCE {
    p0-PUCCH-Id                        P0-PUCCH-Id,
    p0-PUCCH-Value                     INTEGER (-16..15)
}

P0-PUCCH-Id ::=                     INTEGER (1..8)

PathlossReferenceRSs-v1610 ::=      SEQUENCE (SIZE (1..maxNrofPUCCH-PathlossReferenceRSsDiff-r16)) OF
PUCCH-PathlossReferenceRS-r16

PUCCH-PathlossReferenceRS ::=           SEQUENCE {
    pucch-PathlossReferenceRS-Id            PUCCH-PathlossReferenceRS-Id,
    referenceSignal                         CHOICE {
        ssb-Index                               SSB-Index,
        csi-RS-Index                            NZP-CSI-RS-ResourceId
    }
}

PUCCH-PathlossReferenceRS-r16 ::=       SEQUENCE {
    pucch-PathlossReferenceRS-Id-r16        PUCCH-PathlossReferenceRS-Id-v1610,
    referenceSignal-r16                     CHOICE {
        ssb-Index-r16                           SSB-Index,
        csi-RS-Index-r16                        NZP-CSI-RS-ResourceId
    }
}
```

[PUCCH: Group-Based Spatial Relation Activation]

In Rel-15, if the UE is configured with a plurality of pucch-spatialRelationInfoID, the UE may receive a MAC CE for activation of a spatial relation for each PUCCH resource, thereby determining a spatial relation of a PUCCH resource. However, such a method has a disadvantage of requiring excessive signaling overheads to activate the spatial relation of multiple PUCCH resources. Therefore, in Rel-16, a new MAC CE for adding a PUCCH resource group and activating a spatial relation in units of PUCCH resource groups has been introduced. For the PUCCH resource groups, up to 4 PUCCH resource groups may be configured via resourceGroupToAddModList of Table 27, and for each PUCCH resource group, multiple PUCCH resource IDs in one PUCCH resource group may be configured as a list as shown below in Table 35.

[Table 35]

```
PUCCH-ResourceGroup-r16 ::=               SEQUENCE {
       pucch-ResourceGroupId-r16             PUCCH-ResourceGroupId-r16,
       resourcePerGroupList-r16              SEQUENCE (SIZE (1..maxNrofPUCCH-ResourcesPerGroup-r16)) OF
PUCCH-ResourceId
}

PUCCH-ResourceGroupId-r16 ::=             INTEGER (0..maxNrofPUCCH-ResourceGroups-1-r16)
```

In Rel-16, the base station may configure each PUCCH resource group for the terminal via resourceGroup-ToAddModList in Table 27 and the higher layer configuration of Table 35, and may constitute a MAC CE for simultaneous activation of spatial relations of all PUCCH resources in one PUCCH resource group.

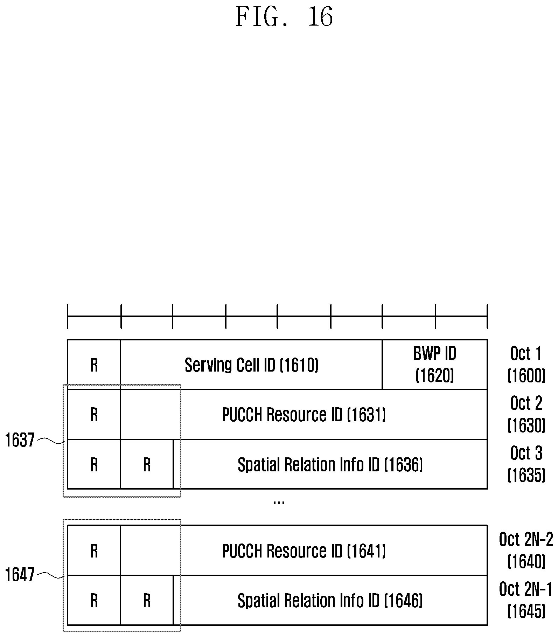

FIG. 16 is a diagram illustrating an example of a MAC CE for PUCCH resource group-based spatial relation activation in a wireless communication system according to an embodiment of the disclosure.

With reference to an example in FIG. 16, a supported cell ID 1610 and a BWP ID 1620 configured with PUCCH resources, to which a MAC CE is to be applied, are indicated by Oct 1 1600. PUCCH Resource IDs 1631 and 1641 indicate IDs of PUCCH resources, and if the indicated PUCCH resources are included in a PUCCH resource group according to resourceGroupToAddModList, different PUCCH resource IDs in the same PUCCH resource group are not indicated by the same MAC CE, and all PUCCH resources in the same PUCCH resource group are activated with the same spatial relation info IDs 1636 and 1646 . In this case, spatial relation info IDs 1636 and 1646 include a value corresponding to PUCCH-SpatialRelationInfoId-1 to be applied to the PUCCH resource group of Table 33.

[Regarding SRS]

Next, an uplink channel estimation method using the Sounding Reference Signal (SRS) transmission of the UE is described. A base station may configure at least one SRS configuration for each UL BWP to deliver configuration information for SRS transmission to the UE, and may also configure at least one SRS resource set for each SRS configuration. For example, the base station and UE may transmit and receive higher signaling information as follows to deliver information about the SRS resource set.

- srs-ResourceSetId: SRS resource set index
- srs-ResourceIdList: a set of SRS resource indexes referenced by an SRS resource set
- resourceType: a time axis transmission configuration of an SRS resource referenced by an SRS resource set, wherein resource Type may be configured to be one of periodic, semi-persistent, and aperiodic. In case that resource Type is configured to be 'periodic' or 'semi-persistent', associated CSI-RS information may be provided according to a usage of the SRS resource set. In case that resource Type is configured to be 'aperiodic', an aperiodic SRS resource trigger list and slot offset information may be provided, and associated CSI-RS information may be provided according to a usage of the SRS resource set.
- usage: A configuration regarding where an SRS resource referred to by an SRS resource set is used, and may be configured to be one of 'beamManagement', 'codebook', 'nonCodebook', and 'antennaSwitching'.
- alpha, p0, pathlossReferenceRS, srs-PowerControlAdjustmentStates: It provides parameter configurations for transmission power adjustment of an SRS resource referenced by an SRS resource set.

The UE may understand that an SRS resource included in an SRS resource index set referenced by an SRS resource set conforms to information configured in the SRS resource set.

The base station and UE may transmit and/or receive higher layer signaling information in order to deliver individual configuration information for the SRS resource. As an example, the individual configuration information for the SRS resource may include time-frequency axis mapping information within a slot of the SRS resource, which may include information about frequency hopping within a slot or between slots of the SRS resource. The individual configuration information for the SRS resource may also include a time axis transmission configuration of the SRS resource, and may be configured to be one of 'periodic', 'semi-persistent', and 'aperiodic'. This may be limited to having the time axis transmission configuration, such as the SRS resource set including the SRS resource. In case that the time axis transmission configuration of the SRS resource is configured to be 'periodic' or 'semi-persistent', an additional SRS resource transmission period and slot offset (e.g., periodicityAndOffset) may be included in the time axis transmission configuration.

The base station may activate, deactivate, or trigger SRS transmission to the UE via L1 signaling (e.g., DCI) or higher layer signaling including MAC CE signaling or RRC signaling. For example, the base station may activate or deactivate periodic SRS transmission for the UE via higher layer signaling. The base station may indicate to activate an SRS resource set in which resourceType is configured to be periodic via higher layer signaling, and the UE may transmit an SRS resource referenced by the activated SRS resource set. Time-frequency axis resource mapping within a slot of the transmitted SRS resource conforms to resource mapping information configured in the SRS resource, and slot mapping including a transmission period and slot offset conforms to periodicityAndOffset configured in the SRS resource. Also, a spatial domain transmission filter applied to the transmitted SRS resource may refer to spatial relation info configured in the SRS resource, or may refer to associated CSI-RS information configured in the SRS resource set including the SRS resource. The UE may transmit the SRS resource in a UL BWP activated for the periodic SRS resource activated via higher layer signaling.

For example, the base station may activate or deactivate semi-persistent SRS transmission for the UE via higher layer signaling. The base station may indicate to activate an SRS resource set via MAC CE signaling, and the UE may transmit an SRS resource referenced by the activated SRS resource set. The SRS resource set activated via MAC CE signaling may be limited to the SRS resource set in which resourceType is configured to be semi-persistent. Time-frequency axis resource mapping within a slot of the transmitted SRS resource conforms to resource mapping information configured in the SRS resource, and slot mapping including a transmission period and slot offset conforms to periodicityAndOffset configured in the SRS resource. Also, a spatial domain transmission filter applied to the transmitted SRS resource may refer to spatial relation info configured in the SRS resource, or may refer to associated CSI-RS information configured in the SRS resource set including the SRS resource. In case that a spatial relation info is configured in the SRS resource, instead of conforming to the same, the spatial domain transmission filter may be determined by referring to configuration information about spatial relation info delivered via MAC CE signaling for activation of semi-persistent SRS transmission. The UE may transmit the SRS resource in a UL BWP activated for the semi-persistent SRS resource activated via higher layer signaling.

For example, the base station may trigger aperiodic SRS transmission to the UE via DCI. The base station may indicate one of aperiodic SRS resource triggers (aperiodicSRS-ResourceTrigger) via an SRS request field of the DCI. The UE may understand that an SRS resource set has been triggered, the SRS resource set including an aperiodic SRS resource trigger indicated via the DCI in an aperiodic SRS resource trigger list in configuration information of the SRS resource set. The UE may transmit an SRS resource referenced by the triggered SRS resource set. Time-frequency axis resource mapping within a slot of the transmitted SRS resource conforms to resource mapping information configured in the SRS resource. In addition, slot mapping of the transmitted SRS resource may be determined via a slot offset between a PDCCH including the DCI and the SRS resource, which may refer to value(s) included in a slot offset set configured in the SRS resource set. Specifically, for the slot offset between the PDCCH including the DCI and the SRS resource, a value indicated by a time domain resource assignment field of the DCI from among offset value(s) included in the slot offset set configured in the SRS resource set may be applied. Also, a spatial domain transmission filter applied to the transmitted SRS resource may refer to spatial relation info configured in the SRS resource, or may refer to associated CSI-RS information configured in the SRS resource set including the SRS resource. The UE may transmit the SRS resource in a UL BWP activated for the aperiodic SRS resource triggered via the DCI.

In case that the base station triggers aperiodic SRS transmission to the UE via the DCI, in order for the UE to transmit an SRS by applying configuration information for the SRS resource, a minimum time interval between a PDCCH including the DCI triggering aperiodic SRS transmission and the transmitted SRS may be required. A time interval for SRS transmission of the UE may be defined to be the number of symbols between the last symbol of the PDCCH including the DCI triggering aperiodic SRS transmission and the first symbol to which a first transmitted SRS resource among the transmitted SRS resource(s) is mapped. The minimum time interval may be determined by referring to a PUSCH preparation procedure time required for the UE to prepare for PUSCH transmission. The minimum time interval may have a different value depending on a usage of the SRS resource set including the transmitted SRS resource. For example, the minimum time interval may be determined to be N2 symbols defined in consideration of UE processing capability according to the UE capability referring to the PUSCH preparation procedure time of the UE. Also, in case that a usage of the SRS resource set is configured to be 'codebook' or 'antennaSwitching' in consideration of the usage of the SRS resource set including the transmitted SRS resource, the minimum time interval may be determined to be N2 symbols. In case that the usage of the SRS resource set is configured to be 'nonCodebook' or 'beamManagement', the minimum time interval may be determined to be N2+14 symbols. In case that the time interval for aperiodic SRS transmission is greater than or equal to the minimum time interval, the UE may transmit an aperiodic SRS, and in case that the time interval for aperiodic SRS transmission is less than the minimum time interval, the UE may disregard the DCI triggering an aperiodic SRS.

[Table 36]

```
SRS-Resource ::=                          SEQUENCE {
        srs-ResourceId                        SRS-ResourceId,
        nrofSRS-Ports                         ENUMERATED {port1, ports2, ports4},
        ptrs-PortIndex                        ENUMERATED {n0, n1 }
OPTIONAL,       -- Need R
        transmissionComb                          CHOICE {
            n2                                        SEQUENCE {
                combOffset-n2                             INTEGER (0..1),
                cyclicShift-n2                            INTEGER (0..7)
            },
            n4                                        SEQUENCE {
                combOffset-n4                             INTEGER (0..3),
                cyclicShift-n4                            INTEGER (0..11)
            }
        },
        resourceMapping                       SEQUENCE {
            startPosition                         INTEGER (0..5),
            nrofSymbols                           ENUMERATED {n1, n2, n4},
            repetitionFactor                      ENUMERATED {n1, n2, n4}
        },
        freqDomainPosition                    INTEGER (0..67),
        freqDomainShift                       INTEGER (0..268),
        freqHopping                           SEQUENCE {
            c-SRS                                 INTEGER (0..63),
            b-SRS                                 INTEGER (0..3),
            b-hop                                 INTEGER (0..3)
        },
        groupOrSequenceHopping                ENUMERATED { neither, groupHopping,
sequenceHopping },
        resourceType                          CHOICE {
            aperiodic                             SEQUENCE {

            },
            semi-persistent                       SEQUENCE {
                periodicityAndOffset-sp               SRS-PeriodicityAndOffset,

            },
            periodic                              SEQUENCE {
                periodicityAndOffset-p                SRS-PeriodicityAndOffset,

            }
        },
        sequenceId                            INTEGER (0..1023),
        spatialRelationInfo                   SRS-SpatialRelationInfo
OPTIONAL,       -- Need R

}
```

The spatialRelationInfo configuration information in Table 36 above refers to one reference signal and applies beam information of the reference signal to a beam used for corresponding SRS transmission. For example, the configuration of spatialRelationInfo may include information as shown below in Table 37.

[Table 37]

```
SRS-SpatialRelationInfo ::=        SEQUENCE {
        servingCellId                   ServCellIndex            OPTIONAL,    -- Need S
        referenceSignal                 CHOICE {
            ssb-Index                       SSB-Index,
            csi-RS-Index                    NZP-CSI-RS-ResourceId,
            srs                             SEQUENCE {
                resourceId                      SRS-ResourceId,
                uplinkBWP                       BWP-Id
            }
        }
}
```

With reference to the configuration of spatialRelationInfo, an SS/PBCH block index, a CSI-RS index, and/or an SRS index may be configured as an index of a reference signal to be referenced in order to use beam information of a specific reference signal. Higher signaling referenceSignal may be referenced as configuration information indicating a reference signal's beam information of which is to be referenced for corresponding SRS transmission, ssb-Index may be referenced as an SS/PBCH block index, csi-RS-Index may be referenced as a CSI-RS index, and srs may be referenced as an SRS index, respectively. If a value of higher signaling referenceSignal is configured to be ssb-Index, the UE may apply, as a transmission beam of the corresponding SRS transmission, a reception beam used when receiving an SS/PBCH block corresponding to ssb-Index. If the value of higher signaling referenceSignal is configured to be 'csi-RS-Index', the UE may apply, as a transmission beam of the SRS transmission, a reception beam used when receiving a CSI-RS corresponding to csi-RS-Index. If the value of higher signaling referenceSignal is configured to be srs, the UE may apply, as a transmission beam of the SRS transmission, a transmission beam used when transmitting an SRS corresponding to srs.

[PUSCH: Relating to transmission scheme]

Next, the scheduling scheme of PUSCH transmission will be described. The PUSCH transmission may be dynamically scheduled by a UL grant in DCI or may be operated by configured grant Type 1 or Type 2. Dynamic scheduling indication for PUSCH transmission is possible by DCI format 0_0 or 0_1.

For configured grant Type 1 PUSCH transmission, the UL grant in DCI may not be received, and configuration may be performed semi-statically via reception of configuredGrantConfig including rrc-ConfiguredUplinkGrant shown below in Table 38 via higher signaling. Configured grant Type 2 PUSCH transmission may be semi-persistently scheduled by the UL grant in DCI after reception of configuredGrantConfig that does not include rrc-ConfiguredUplinkGrant of Table 38 via higher signaling. In case that PUSCH transmission is operated by the configured grant, parameters applied to PUSCH transmission are applied via configuredGrantConfig that is higher signaling shown below in Table 38, except for dataScramblingIdentityPUSCH, txConfig, codebookSubset, maxRank, and scaling of UCI-OnPUSCH provided via pusch-Config that is higher signaling shown below in Table 39. If the UE is provided with transformPrecoder in configuredGrantConfig which is higher signaling in Table 38, the UE applies tp-pi2BPSK in pusch-Config of Table 39 to PUSCH transmission operated by the configured grant.

[Table 38]

```
ConfiguredGrantConfig ::=          SEQUENCE {
    frequencyHopping                   ENUMERATED {intraSlot, interSlot}
OPTIONAL,    -- Need S,
    cg-DMRS-Configuration              DMRS-UplinkConfig,
    mcs-Table                          ENUMERATED {qam256, qam64LowSE}
OPTIONAL,    -- Need S
    mcs-TableTransformPrecoder         ENUMERATED {qam256, qam64LowSE}
OPTIONAL,    -- Need S
    uci-OnPUSCH                          SetupRelease { CG-UCI-OnPUSCH }
OPTIONAL,    -- Need M
    resourceAllocation                 ENUMERATED { resourceAllocationType0, resourceAllocationType1,
dynamicSwitch },
    rbg-Size                           ENUMERATED {config2}
OPTIONAL,    -- Need S
    powerControlLoopToUse              ENUMERATED {n0, n1},
    p0-PUSCH-Alpha                     P0-PUSCH-AlphaSetId,
    transformPrecoder                  ENUMERATED {enabled, disabled}
OPTIONAL,    -- Need S
    nrofHARQ-Processes                 INTEGER(1..16),
    repK                               ENUMERATED {n1, n2, n4, n8},
    repK-RV                            ENUMERATED {s1-0231, s2-0303, s3-0000}
OPTIONAL,    -- Need R
    periodicity                        ENUMERATED {
                                          sym2, sym7, sym1x14, sym2x14, sym4x14, sym5x14, sym8x14,
sym10x14, sym16x14, sym20x14,
                                          sym32x14, sym40x14, sym64x14, sym80x14, sym128x14,
sym160x14, sym256x14, sym320x14, sym512x14,
                                          sym640x14, sym1024x14, sym1280x14, sym2560x14,
sym5120x14,
                                          sym6, sym1x12, sym2x12, sym4x12, sym5x12, sym8x12,
sym10x12, sym16x12, sym20x12, sym32x12,
                                          sym40x12, sym64x12, sym80x12, sym128x12, sym160x12,
sym256x12, sym320x12, sym512x12, sym640x12,
                                          sym1280x12, sym2560x12
    },
    configuredGrantTimer               INTEGER (1..64)
OPTIONAL,    -- Need R
    rrc-ConfiguredUplinkGrant          SEQUENCE {
        timeDomainOffset                   INTEGER (0..5119),
        timeDomainAllocation               INTEGER   (0..15),
        frequencyDomainAllocation          BIT STRING (SIZE(18)),
        antennaPort                        INTEGER (0..31),
        dmrs-SeqInitialization             INTEGER (0..1)
OPTIONAL,    -- Need R
        precodingAndNumberOfLayers          INTEGER (0..63),
        srs-ResourceIndicator              INTEGER (0..15)
OPTIONAL,    -- Need R
        mcsAndTBS                            INTEGER (0..31),
        frequencyHoppingOffset             INTEGER (1.. maxNrofPhysicalResourceBlocks-1)
OPTIONAL,    -- Need R
        pathlossReferenceIndex             INTEGER (0..maxNrofPUSCH-PathlossReferenceRSs-1),
        ...
    }
OPTIONAL,    -- Need R
    ...
}
```

Next, the PUSCH transmission method will be described. The DMRS antenna port for PUSCH transmission is the same as an antenna port for SRS transmission. PUSCH transmission may conform to each of a codebook-based transmission method and a non-codebook-based transmission method, depending on whether a value of txConfig in pusch-Config of Table 39, which is higher signaling, corresponds to 'codebook' or 'nonCodebook'.

As described above, PUSCH transmission may be dynamically scheduled via DCI format 0_0 or 0_1, and may be semi-statically configured by a configured grant. In case the UE is indicated with scheduling for PUSCH transmission via DCI format 0_0, the UE performs beam configuration for PUSCH transmission by using pucch-spatialRelationInfoID corresponding to a UE-specific PUCCH resource which corresponds to a minimum ID within an activated UL BWP in a serving cell. In this case, the PUSCH transmission is based on a single antenna port. The UE does not expect scheduling for PUSCH transmission via DCI format 0_0, within a BWP in which a PUCCH resource including pucch-spatialRelationInfo is not configured. If the UE is not configured with txConfig in pusch-Config of Table 39, the UE does not expect to be scheduled via DCI format 0_1.

[Table 39]

```
PUSCH-Config ::=                               SEQUENCE {
       dataScramblingIdentityPUSCH                INTEGER (0..1023)
OPTIONAL,      -- Need S
       txConfig                                   ENUMERATED {codebook, nonCodebook}
OPTIONAL,      -- Need S
       dmrs-UplinkForPUSCH-MappingTypeA           SetupRelease { DMRS-UplinkConfig }
OPTIONAL,      -- Need M
       dmrs-UplinkForPUSCH-MappingTypeB           SetupRelease { DMRS-UplinkConfig }
OPTIONAL,      -- Need M

       pusch-PowerControl                         PUSCH-PowerControl
OPTIONAL,      -- Need M
       frequencyHopping                           ENUMERATED {intraSlot, interSlot}
OPTIONAL,      -- Need S
       frequencyHoppingOffsetLists                SEQUENCE (SIZE (1..4)) OF INTEGER (1..
maxNrofPhysicalResourceBlocks-1)

OPTIONAL,      -- Need M
       resourceAllocation                         ENUMERATED { resourceAllocationType0, resourceAllocationType1,
dynamicSwitch},
       pusch-TimeDomainAllocationList             SetupRelease { PUSCH-TimeDomainResourceAllocationList }
OPTIONAL,      -- Need M
       pusch-AggregationFactor                    ENUMERATED { n2, n4, n8 }
OPTIONAL,      -- Need S
       mcs-Table                                  ENUMERATED {qam256, qam64LowSE}
OPTIONAL,      -- Need S
       mcs-TableTransformPrecoder                 ENUMERATED {qam256, qam64LowSE}
OPTIONAL,      -- Need S
       transformPrecoder                          ENUMERATED {enabled, disabled}
OPTIONAL,      -- Need S
       codebookSubset                             ENUMERATED {fullyAndPartialAndNonCoherent,
partialAndNonCoherent,nonCoherent}

OPTIONAL, -- Cond codebookBased
       maxRank                                    INTEGER (1..4)
OPTIONAL, -- Cond codebookBased
       rbg-Size                                   ENUMERATED { config2}
OPTIONAL, -- Need S
       uci-OnPUSCH                                SetupRelease { UCI-OnPUSCH}
OPTIONAL, -- Need M
       tp-pi2BPSK                                 ENUMERATED {enabled}
OPTIONAL, -- Need S

       ...
}
```

Next, codebook-based PUSCH transmission will be described. The codebook-based PUSCH transmission may be dynamically scheduled via DCI format 0 0 or 0 1 and may operate semi-statically by a configured grant. If a codebook-based PUSCH is dynamically scheduled by DCI format 0_1 or is configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

In this case, the SRI may be given to the UE via an SRS resource indicator field, in DCI or may be configured via srs-ResourceIndicator that is higher signaling. The UE may be configured, during codebook-based PUSCH transmission, with at least one SRS resource and configured with up to two SRS resources. In case that the UE is provided with the SRI via DCI, for an SRS resource indicated by the corresponding SRI, an SRS resource corresponding to the SRI may be referenced from among SRS resources transmitted before a PDCCH including the corresponding SRI. Also, the TPMI and transmission rank may be given or configured via a field of precoding information and number of layers, in DCI or may be configured via precodingAndNumberOfLayers that is higher signaling. The TPMI is used to indicate a precoder applied to PUSCH transmission. If the UE is configured with one SRS resource, the TPMI is used to indicate a precoder to be applied in the configured one SRS resource. If the UE is configured with multiple SRS resources, the TPMI is used to indicate a precoder to be applied in the SRS resource indicated via the SRI.

A precoder to be used for PUSCH transmission is selected from a UL codebook having the same number of antenna ports as a value of nrofSRS-Ports in SRS-Config which is higher signaling. In codebook-based PUSCH transmission, the UE determines a codebook subset, based on codebookSubset in pusch-Config, which is higher signaling, and the TPMI. codebookSubset in pusch-Config which is higher signaling may be configured to be one of 'fullyAndPartialAndNonCoherent', 'partialAndNonCoherent', or 'noncoherent', based on UE capability reported to the base station by the UE. If the UE has reported 'partialAndNonCoherent' as UE capability, the UE does not expect that a value of codebookSubset which is higher signaling is configured to be 'fullyAndPartialAndNonCoherent'. Also, if the UE has reported 'noncoherent' as UE capability, the UE expects the value of codebookSubset, which is higher signaling, to be configured to neither 'fullyAndPartialAndNonCoherent' nor 'partialAndNonCoherent'. In case that nrofSRS-Ports in SRS-ResourceSet which is higher signaling indicates two SRS antenna ports, the UE does not expect that the value of codebookSubset which is higher signaling is configured to be 'partialAndNonCoherent'.

The UE may be configured with one SRS resource set, in which a value of usage in SRS-ResourceSet that is higher signaling is configured to be 'codebook', and one SRS resource in the corresponding SRS resource set may be indicated via the SRI. If multiple SRS resources are configured in the SRS resource set in which the usage value in SRS-ResourceSet that is higher signaling is configured to be 'codebook', the UE expects that the value of nrofSRS-Ports in SRS-Resource that is higher signaling is configured to be the same for all SRS resources.

The UE transmits one or multiple SRS resources included in the SRS resource set, in which the value of usage is configured to be 'codebook', to the base station according to higher signaling, and the base station selects one of the SRS resources transmitted by the UE and indicates the UE to perform PUSCH transmission using transmission beam information of the corresponding SRS resource. In this case, in codebook-based PUSCH transmission, the SRI is used as information for selecting of an index of one SRS resource and is included in the DCI. In addition, the base station includes, to the DCI, information indicating the rank and TPMI to be used for PUSCH transmission by the UE. The UE uses the SRS resource indicated by the SRI to perform PUSCH transmission by applying the precoder indicated by the TPMI and rank, which has been indicated based on a transmission beam of the SRS resource.

Next, non-codebook-based PUSCH transmission will be described. The non-codebook-based PUSCH transmission may be dynamically scheduled via DCI format 0_0 or 0_1 and may operate semi-statically by a configured grant. In case that at least one SRS resource is configured in an SRS resource set, in which the value of usage in SRS-ResourceSet that is higher signaling is configured to be 'nonCodebook', the UE may be scheduled for non-codebook-based PUSCH transmission via DCI format 0_1.

For the SRS resource set in which the value of usage in SRS-ResourceSet that is higher signaling is configured to be 'nonCodebook', the UE may be configured with one connected non-zero power (NZP) CSI-RS resource. The UE may perform calculation on a precoder for SRS transmission via measurement for the NZP CSI-RS resource connected to the SRS resource set. If a difference between a last reception symbol of an aperiodic NZP CSI-RS resource connected to the SRS resource set and a first symbol of aperiodic SRS transmission in the UE is less than 42 symbols, the UE does not expect information about the precoder for SRS transmission to be updated.

In case that a value of resourceType in SRS-ResourceSet that is higher signaling is configured to be 'aperiodic', the connected NZP CSI-RS may be indicated via a field, SRS request, in DCI format 0_1 or 1_1. In this case, if the connected NZP CSI-RS resource is an aperiodic NZP CSI-RS resource, the presence of the connected NZP CSI-RS in case that a value of the field, SRS request, in DCI format 0_1 or 1_1 is not '00' is indicated. In this case, the corresponding DCI should indicate neither a cross carrier nor cross BWP scheduling. Also, if the value of SRS request indicates the presence of the NZP CSI-RS, the corresponding NZP CSI-RS is located at a slot in which a PDCCH including the SRS request field has been transmitted. In this case, TCI states configured in scheduled subcarriers are not configured to be QCL-TypeD.

If a periodic or semi-persistent SRS resource set is configured, the connected NZP CSI-RS may be indicated via associatedCSI-RS in SRS-ResourceSet that is higher signaling. For non-codebook-based transmission, the UE does not expect that spatialRelationInfo, which is higher signaling for the SRS resource, and associatedCSI-RS in SRS-ResourceSet that is higher signaling are configured together.

In case that multiple SRS resources are configured, the UE may determine the precoder and transmission rank to be applied to PUSCH transmission, based on the SRI indicated by the base station. In this case, the SRI may be indicated via the field, SRS resource indicator, in DCI or may be configured via srs-ResourceIndicator that is higher signaling. As with the aforementioned codebook-based PUSCH transmission, in case that the UE is provided with the SRI via the DCI, the SRS resource indicated by the corresponding SRI refers to an SRS resource corresponding to the SRI from among SRS resources transmitted before the PDCCH including the SRI. The UE may use one or multiple SRS resources for SRS transmission, and the maximum number of SRS resources simultaneously transmittable in the same symbol within one SRS resource set may be determined by UE capability reported to the base station by the UE. In this case, the SRS resources that the UE simultaneously transmits occupy the same RB. The UE configures one SRS port for each SRS resource. Only one SRS resource set, in which the value of usage in SRS-ResourceSet that is higher signaling is configured to be 'nonCodebook', may be configured, and up to 4 SRS resources for the non-codebook-based PUSCH transmission may be configured.

The base station transmits one NZP CSI-RS connected to the SRS resource set to the UE, and the UE calculates, based on a result of measurement during reception of the NZP CSI-RS, the precoder to be used during transmission of one or multiple SRS resources in the corresponding SRS resource set. The UE applies the calculated precoder when transmitting, to the base station, one or multiple SRS resources in the SRS resource set in which usage is configured to be 'nonCodebook', and the base station may select one or multiple SRS resources from among the received one or multiple SRS resources. In this case, in non-codebook-based PUSCH transmission, the SRI indicates an index capable of expressing one SRS resource or a combination of multiple SRS resources, and the SRI may be included in the DCI. In this case, the number of SRS resources indicated by the SRI transmitted by the base station may be the number of PUSCH transmission layers, and the UE may transmit the PUSCH by applying, to each layer, the precoder applied to SRS resource transmission.

[PUSCH: Preparation procedure time]

Next, PUSCH preparation procedure time will be described. In case that the base station uses DCI format 0_0, 0_1, or 0_2 to schedule the UE to transmit a PUSCH, the UE may require a PUSCH preparation procedure time for transmitting the PUSCH by applying a transmission method indicated via DCI (a method for transmission precoding for an SRS resource, the number of transmission layers, and/or s spatial domain transmission filter). In NR, the PUSCH preparation procedure time is defined in consideration of the preparation time. The PUSCH preparation procedure time of the UE may conform to Equation 4 below.

[Equation 4]

$$T_{proc,2} = \max((N_2 + d_{2,1} + d_2)(2048 + 144)\kappa 2^{-\mu}T_c + T_{ext} + T_{switch}, d_{2,2})$$

Each variable in $T_{proc,2}$ described using Equation 4 may have the following meaning.

- $N_2$: The number of symbols determined according to numerology $\mu$ and UE processing capability 1 or 2 according to UE capability. In case that UE processing capability 1 is reported according to capability reporting of the UE, $N_2$ may have values shown below in Table 40, and in case that UE processing capability 2 is reported and it is configured, via higher layer signaling, that UE processing capability 2 is available, $N_2$ may have values shown below in Table 41.

[Table 40]

| $\mu$ | PUSCH preparation time $N_2$ [symbols] |
|---|---|
| 0 | 10 |
| 1 | 12 |
| 2 | 23 |
| 3 | 36 |

[Table 41]

| $\mu$ | PUSCH preparation time $N_2$ [symbols] |
|---|---|
| 0 | 5 |

(continued)

| $\mu$ | PUSCH preparation time $N_2$ [symbols] |
|---|---|
| 1 | 5.5 |
| 2 | 11 for frequency range 1 |

- $d_{2,1}$: The number of symbols determined to be 0 in case that all resource elements of a first OFDM symbol of PUSCH transmission are configured to include only DM-RSs, and otherwise determined to be 1.
- $\kappa$: 64
- $\mu$: $\mu$ follows one of $\mu_{DL}$ and $\mu_{UL}$, at which $T_{proc,2}$ has a greater value. $\mu_{DL}$ indicates a numerology of a DL in which a PDCCH including DCI for PUSCH scheduling is transmitted, and $\mu_{UL}$ indicates a numerology of a UL in which a PUSCH is transmitted.
- $T_c$: It has

$$1/( \triangle f_{max} \cdot N_f), \ \triangle f_{max}=480 \cdot 10^{3}Hz, N_f=4096 .$$

- $d_{2,2}$: $d_{2,2}$ follows a BWP switching time in case that DCI for PUSCH scheduling indicates BWP switching, and has 0 otherwise.
- $d_2$: In case that OFDM symbols of a PUCCH, a PUSCH with a high priority index, and a PUCCH with a low priority index overlap in time, a d2 value of the PUSCH with the high priority index is used. Otherwise, $d_2$ is 0.
- $T_{ext}$: In case that the UE uses a shared spectrum channel access scheme, the UE may calculate $T_{ext}$ and apply $T_{ext}$ to a PUSCH preparation procedure time. Otherwise, $T_{ext}$ is assumed to be 0.
- $T_{switch}$: In case that a UL switching interval is triggered, $T_{switch}$, is assumed to be a switching interval time. Otherwise, $T_{switch}$, is assumed to be 0.

The base station and UE determine that the PUSCH preparation procedure time is insufficient when a first symbol of the PUSCH starts before a first UL symbol in which a CP starts after $T_{proc,2}$ from a last symbol of the PDCCH including the DCI for scheduling of the PUSCH, in consideration of time axis resource mapping information of the PUSCH scheduled via the DCI and a timing advance effect between the UL and the DL. Otherwise, the base station and UE determine that the PUSCH preparation procedure time is sufficient. Only in the case that the PUSCH preparation procedure time is sufficient, the UE transmits the PUSCH, and in case that the PUSCH preparation procedure time is insufficient, the UE may disregard the DCI for scheduling of the PUSCH.

[PUSCH: Regarding repeated transmission]

Hereinafter, repeated transmission of uplink data channels in the 5G system will be described in detail. In the 5G system, repeated PUSCH transmission type A and repeated PUSCH transmission type B are supported as two types of the method for repeated transmission of a UL data channel. The UE may be configured with one of repeated PUSCH transmission type A or B via higher layer signaling.

**Repeated PUSCH Transmission Type A**

- As described above, a symbol length of a UL data channel and location of a start symbol are determined by a time domain resource allocation method within one slot, and the base station may notify the UE of the number of repeated transmissions via higher layer signaling (e.g., RRC signaling) or L1 signaling (e.g., DCI).
- The UE may repeatedly transmit a UL data channel, which has the same length and start symbol as the configured length and start symbol of the UL data channel, in consecutive slots, based on the number of repeated transmissions received from the base station. In this case, in case that at least one symbol in symbols of the UL data channel configured for the UE or a slot configured for DL for the UE by the base station is configured for DL, the UE omits UL data channel transmission, but may count the number of repeated transmissions of the UL data channel.

**Repeated PUSCH Transmission Type B**

- As described above, a start symbol and length of a UL data channel are determined by the time domain resource allocation method within one slot, and the base station may notify the UE of the number of repeated transmissions, numberofrepetitions, via higher layer signaling (e.g., RRC signaling) or L1 signaling (e.g., DCI)
- First, nominal repetition of the UL data channel may be determined as follows, based on the configured start symbol and length of the UL data channel. A slot in which n-th nominal repetition starts is given by

$$K_s + \left\lfloor \frac{S + n \cdot L}{N_{symb}^{slot}} \right\rfloor$$

, and a symbol starting in the slot is given by $\mathrm{mod}(S + n \cdot L, N_{symb}^{slot})$. A slot in which n-th nominal repetition ends is given by

$$K_s + \left\lfloor \frac{S + (n+1) \cdot L - 1}{N_{symb}^{slot}} \right\rfloor$$

, and a symbol ending in the slot is given by $\mathrm{mod}(S + (n+1) \cdot L - 1, N_{symb}^{slot})$. Here, n=0, ... , numberofrepetitions-1, S is the configured start symbol of the UL data channel, and L indicates the configured symbol length of the UL data channel. $K_s$ indicates a slot in which PUSCH transmission starts, and $N_{symb}^{slot}$ indicates the number of symbols per slot.

- The UE determines an invalid symbol for repeated PUSCH transmission type B. A symbol configured for DL by tdd-UL-DL-ConfigurationCommon or tdd-UL-DL-ConfigurationDedicated is determined as an invalid symbol for repeated PUSCH transmission type B. In addition, an invalid symbol may be configured by a higher layer parameter (e.g., InvalidSymbolPattern). A higher layer parameter (e.g., InvalidSymbolPattern) may provide a symbol-level bitmap over one slot or two slots so that an invalid symbol may be configured. 1 in the bitmap indicates an invalid symbol. In addition, a period and pattern of the bitmap may be configured via a higher layer parameter (e.g., periodicityAnd-Pattern). If the higher layer parameter (e.g., InvalidSymbolPattern) is configured, and parameter InvalidSymbolPatternIndicator-ForDCIFormat0_1 or InvalidSymbolPatternIndicator-ForDCIFormat0_2 indicates 1, the UE may apply an invalid symbol pattern. If the parameter indicates 0, the UE does not apply the invalid symbol pattern. If the higher layer parameter (e.g., InvalidSymbolPattern) is configured, and parameter InvalidSymbolPatternIndicator-ForDCIFormat0_1 or InvalidSymbolPatternIndicator-ForDCIFormat0_2 is not configured, the UE applies the invalid symbol pattern

After an invalid symbol is determined, for each nominal repetition, the UE may consider symbols other than the invalid symbol to be valid symbols. If one or more valid symbols are included in each nominal repetition, the nominal repetition may include one or more actual repetitions. Here, respective actual repetitions include consecutive sets of valid symbols available for repeated PUSCH transmission type B within one slot.

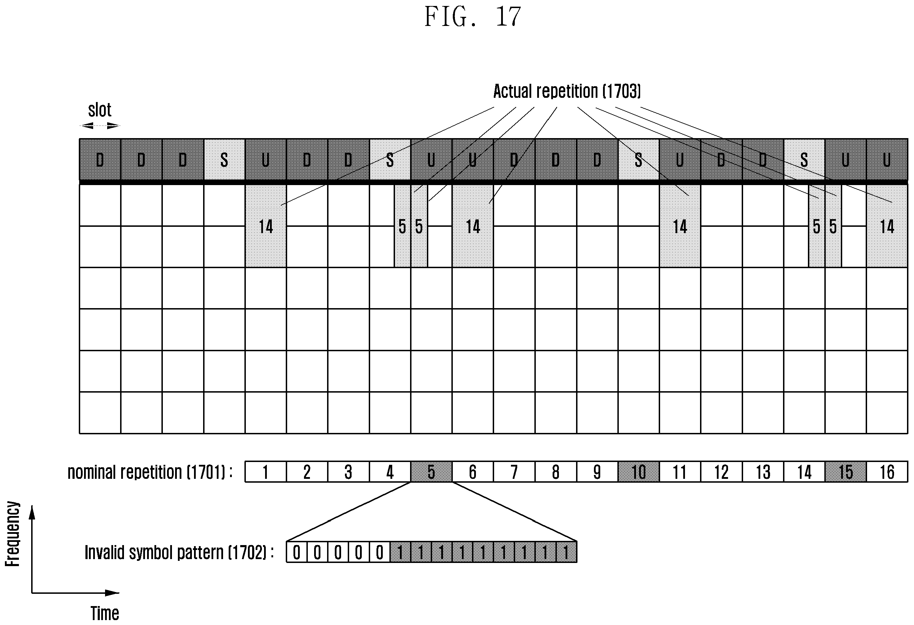

FIG. 17 is a diagram illustrating repeated PUSCH transmission type B in a wireless communication system according to an embodiment of the disclosure.

For the UE, a start symbol S of a UL data channel may be configured to be 0, a length L of the UL data channel may be configured to be 14, and the number of repeated transmissions may be configured to be 16. In this case, nominal repetition is shown in 16 consecutive slots (1701). Then, the UE may determine, as an invalid symbol, a symbol configured to be a DL symbol in each nominal repetition (1701). The UE also determines, as invalid symbols, symbols configured to be 1 in an invalid symbol pattern 1702. In each nominal repetition, in case that valid symbols that are not invalid symbols include one or more consecutive symbols in one slot, actual repetition is configured and transmitted (1703).

Also, with respect to repeated PUSCH transmission, in NR Release 16, the following additional methods may be defined for UL grant-based PUSCH transmission and configured grant-based PUSCH transmission over slot boundaries.

- Method 1 (mini-slot level repetition): Via one UL grant, two or more repeated PUSCH transmissions are scheduled within one slot or over boundaries of consecutive slots. In addition, with respect to method 1, time domain resource allocation information in DCI indicates a resource of a first repeated transmission. Also, time domain resource information of the remaining repeated transmissions may be determined according to time domain resource information of the first repeated transmission and a UL or DL direction determined for each symbol of each slot. Each repeated transmission occupies consecutive symbols

- Method 2 (multi-segment transmission): Via one UL grant, two or more repeated PUSCH transmissions are scheduled in consecutive slots. In this case, one transmission is designated for each slot, and start points or repetition lengths may be different for each transmission. Also, in method 2, time domain resource allocation information in the DCI indicates start points and repetition lengths of all repeated transmissions. Also, in case that repeated transmission is performed within a single slot via method 2, if there are multiple bundles of consecutive UL symbols in the slot, each repeated transmission is performed for each bundle of UL symbols. If a bundle of consecutive UL symbols exists uniquely in the slot, one repeated PUSCH transmission is performed according to the method of NR Release 15.

- Method 3: Via two or more UL grants, two or more repeated PUSCH transmissions are scheduled in consecutive slots. In this case, one transmission is designated for each slot, and an n-th UL grant may be received before PUSCH transmission scheduled via an (n-1)th UL grant ends

- Method 4: Via one UL grant or one configured grant, one or multiple repeated PUSCH transmissions within a single slot, or two or more repeated PUSCH transmissions over the boundaries of consecutive slots may be supported. The number of repetitions indicated to the UE by the base station is a nominal value, and the number of repeated PUSCH transmissions actually performed by the UE may be greater than the nominal number of repetitions. Time domain resource allocation information in DCI or in the configured grant refers to a resource of a first repeated transmission indicated by the base station. Time domain resource information of the remaining repeated transmissions may be determined by referring, at least in part, to resource information of the first repeated transmission and UL or DL directions of symbols. If the time domain resource information of repeated transmission indicated by the base station spans a slot boundary or includes a UL/DL switching point, the repeated transmission may be divided into multiple repeated transmissions. In this case, one repeated transmission may be included for each UL period in one slot

[PUSCH: Frequency hopping procedure]

Hereinafter, the frequency hopping of an uplink data channel (Physical Uplink Shared Channel (PUSCH)) in the 5G system will be described in detail.

In the 5G, as a frequency hopping method of a UL data channel, two methods may be supported for each repeated PUSCH transmission type. Repeated PUSCH transmission type A may support intra-slot frequency hopping and inter-slot frequency hopping, and repeated PUSCH transmission type B may support inter-repetition frequency hopping and inter-slot frequency hopping.

In the intra-slot frequency hopping method supported by repeated PUSCH transmission type A, the UE changes an allocated resource of the frequency domain by a configured frequency offset in two hops within one slot and performs transmission. In intra-slot frequency hopping, a starting RB of each hop may be expressed via Equation 5 below.

[Equation 5]

$$RB_{start} = \begin{cases} RB_{start} & i = 0 \\ (RB_{start} + RB_{offset}) \bmod N_{BWP}^{size} & i = 1 \end{cases}$$

In Equation 5, i=0 and i=1 indicate a first hop and a second hop, respectively, and $RB_{start}$ indicates a starting RB in a UL BWP and is calculated based on a frequency resource allocation method. $RB_{offset}$ indicates a frequency offset between two hops via a higher-layer parameter. The number of symbols of the first hop may be indicated by

$$\lfloor N_{symb}^{PUSCH,s}/2 \rfloor$$

, and the number of symbols of the second hop may be indicated by

$$N_{symb}^{PUSCH,s} - \lfloor N_{symb}^{PUSCH,s}/2 \rfloor. \quad N_{symb}^{PUSCH,s}$$ is a length of PUSCH transmission within one slot and is represented by the number of OFDM symbols.

Next, in the inter-slot frequency hopping method supported by repeated PUSCH transmission types A and B, the UE changes an allocated resource of the frequency domain by a configured frequency offset for each slot and performs transmission. In inter-slot frequency hopping, during $n_s^\mu$ slots, a starting RB may be expressed via Equation 6 below.

[Equation 6]

$$\mathrm{RB}_{start}\left(n_s^\mu\right) = \begin{cases} \mathrm{RB}_{start} & n_s^\mu \bmod 2 = 0 \\ \left(\mathrm{RB}_{start} + \mathrm{RB}_{offset}\right) \bmod N_{BWP}^{size} & n_s^\mu \bmod 2 = 1 \end{cases}$$

In Equation 6, $n_s^\mu$ indicates a current slot number in multi-slot PUSCH transmission, and $RB_{start}$ indicates a starting RB in a UL BWP and is calculated based on the frequency resource allocation method. $RB_{offset}$ indicates a frequency offset between two hops via a higher layer parameter.

The inter-repetition frequency hopping method supported by repeated PUSCH transmission type B includes performing transmission by moving resources allocated on the frequency domain as much as a configured frequency offset for one or multiple actual repetitions within each nominal repetition. $RB_{start}(n)$, which is an index of a starting RB in the frequency domain for one or multiple actual repetitions within an n-th nominal repetition, may conform to Equation 7 below.

[Equation 7]

$$\mathrm{RB}_{start}\left(n\right) = \begin{cases} \mathrm{RB}_{start} & n \bmod 2 = 0 \\ \left(\mathrm{RB}_{start} + \mathrm{RB}_{offset}\right) \bmod N_{BWP}^{size} & n \bmod 2 = 1 \end{cases}$$

In Equation 7, n indicates an index of nominal repetition, and $RB_{offset}$ indicates an RB offset between two hops via a higher layer parameter.

[Regarding UE Capability Report]

In LTE and NR, the UE may perform a procedure of reporting, to the base station, capability supported by the UE while being connected to a serving base station. Hereinafter, such a procedure will be referred to as a UE capability report.

The base station may transmit, to the UE in a connected state, a UE capability enquiry message requesting a capability report. The UE capability request message may include a UE capability request for each radio access technology (RAT) type of the base station. The UE capability request for each RAT type may include supported frequency band combination information or the like. Also, in the case of the UE capability enquiry message, a plurality of UE capabilities for each RAT type may be requested via one RRC message container transmitted by the base station, or the base station may transmit, to the UE, the UE capability enquiry message including the UE capability request for each RAT type a plurality of times. In other words, the UE capability enquiry may be repeated a plurality of times in one message, and the UE may constitute a corresponding UE capability information message and report the same a plurality of times. In a next-generation mobile communication system, the UE capability may be requested for multi-RAT dual connectivity (MR-DC) as well as NR, LTE, and E-UTRA-NR dual connectivity (EN-DC). Also, the UE capability enquiry message is generally transmitted at an initial stage after the UE is connected to the base station, but may be requested in any condition upon necessity by the base station.

Upon receiving a UE capability report request from the base station, the UE constitutes UE capability according to band information and RAT type requested by the base station. A method by which the UE constitutes the UE capability in an NR system will now be described.

1. When the UE receives, from the base station, a list of LTE and/or NR bands as the UE capability request, the UE constitutes a band combination (BC) regarding EN-DC and NR stand-alone (SA). In other words, the UE constitutes candidate list of BCs regarding the EN-DC and NR SA, based on bands requested from the base station by FreqBandList. Priorities of the bands are in an order stated in FreqBandList.

2. When the base station has requested the UE capability report by setting a "eutra-nr-only" flag or a "eutra" flag, the UE may completely remove candidates regarding NR SA BC from the configured candidate list of BCs. Such an operation may be performed only when an LTE base station (eNB) requests "eutra" capability.

3. Then, the UE removes fallback BCs from the configured candidate list of BCs. Here, the fallback BC denotes a BC obtainable by removing a band corresponding to at least one SCell from an arbitrary BC, and this is possible because a BC before removing the band corresponding to the at least one SCell already covers the fallback BC. This operation is also applied to MR-DC, i.e., to LTE bands. The remaining BCs after this operation are a final candidate list of BCs.

4. The UE selects BCs to be reported by selecting, from the "final candidate list of BCs", the BCs according to a requested RAT type. In this operation, the UE constitutes supportedBandCombinationList in a determined order. In other words, the UE constitutes UE capability and BCs to be reported according to an order of pre-configured rat-Type. (nr->eutra-nr->eutra). Also, featureSetCombination regarding the configured supportedBandCombinationList is constituted, and a list of "candidate feature set combinations" is constituted from the candidate list of BCs from which a list of fallback BCs (including capability of a same or lower level) is removed. The "candidate feature set combination" includes all feature set combinations regarding NR and EUTRA-NR BCs, and may be obtained from feature set combinations of UE-NR-Capabilities and UE-MRDC-Capabilities containers.

5. Further, when the requested rat Type is eutra-nr and affected, the featureSetCombinations are included both of the UE-MRDC-Capabilities and UE-NR-Capabilities containers. However, a feature set of NR only includes UE-NR-Capabilities.

After the UE capability is constituted, the UE delivers, to the base station, UE capability information message including the UE capability. Based on the UE capability received from the UE, the base station performs, on the UE, appropriate scheduling and transmission/reception management.

[Regarding CA/DC]

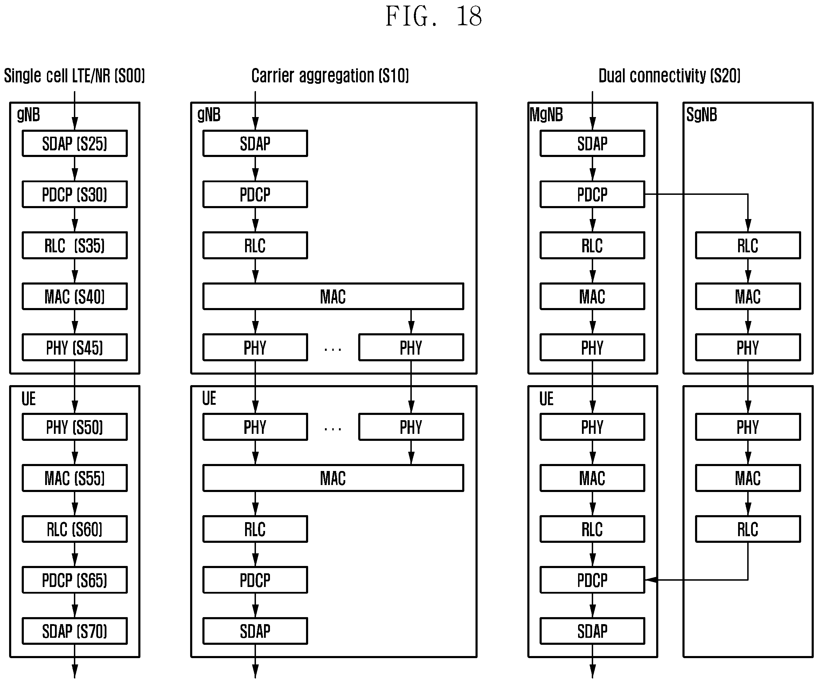

FIG. 18 is a diagram illustrating radio protocol architectures of the base station and UE in single cell, carrier aggregation (CA), dual connectivity (DC) situations according to an embodiment of the disclosure.

With reference to FIG. 18, the radio protocol architecture of a next-generation mobile communication system may include NR service data adaptation protocols (SDAPs) S25, S70, NR packet data convergence protocols (PDCPs) S30 and S65, NR radio link controls (RLCs) S35 and S60, and NR media access controls (MACs) S40 and S55, respectively for a UE and an NR base station.

Main functions of the NR SDAPs S25 and S70 may include some of the following functions:

- Transfer function of user data (transfer of user plane data)
- Mapping function between a QoS flow and a data radio bearer for both DL and UL (mapping between a QoS flow and a DRB for both DL and UL)
- Marking function of QoS flow ID in both DL and UL packets (marking QoS flow ID in both DL and UL packets);
- Mapping function of Reflective QoS flow to data radio bearer for the UL SDAP PDUs (reflective QoS flow to DRB mapping for the UL SDAP PDUs).

Regarding the SDAP layer device, the UE may be configured with, by an RRC message, whether to use a header of the SDAP layer device or whether to use a function of the SDAP layer device for each PDCP layer device, for each bearer, or for each logical channel. In case that an SDAP header is configured, an NAS reflective QoS configuration 1-bit indicator and AS reflective QoS configuration 1-bit indicator of the SDAP header may indicate the UE to update or reconfigure mapping information between a QoS flow and a data radio bearer for UL and DL. The SDAP header may include QoS flow ID information indicating QoS. The QoS information may be used as data processing priority information, scheduling information, or the like for supporting a smooth service.

Main functions of the NR PDCP S30 or S65 may include some of the following functions:

- Header compression and decompression function (Header compression and decompression: ROHC only)
- User data transfer function (Transfer of user data)
- In-sequence delivery function (In-sequence delivery of upper layer PDUs)
- Out-of-sequence delivery function (Out-of-sequence delivery of upper layer PDUs)
- Reordering function (PDCP PDU reordering for reception)
- Duplication detection function (Duplicate detection of lower layer SDUs)
- Retransmission function (Retransmission of PDCP SDUs)
- Ciphering and deciphering functions (Ciphering and deciphering)
- Timer-based SDU discard function (Timer-based SDU discard in uplink.)

In the above, a reordering function of the NR PDCP device may denote a function of reordering PDCP PDUs received from a lower layer, based on a PDCP sequence number (SN), and may include a function of delivering data to a higher layer in a reordered order. Alternatively, the reordering function of the NR PDCP device may include a function of immediately delivering the data without considering an order, a function of recording missing PDCP PDUs by reordering the order, a function of reporting a status regarding the missing PDCP PDUs to a transmitter, and a function of requesting to retransmit the missing PDCP PDUs.

The main function of the NR RLC S35 or S60 may include some of the following functions.

- Data transfer function (Transfer of upper layer PDUs)
- In-sequence delivery function (In-sequence delivery of upper layer PDUs)
- Out-of-sequence delivery function (Out-of-sequence delivery of upper layer PDUs)
- ARQ function (Error Correction through ARQ)
- Concatenation, segmentation and reassembly functions (Concatenation, segmentation and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU discard function (RLC SDU discard)
- RLC re-establishment function (RLC re-establishment)

In the above, the in-sequence delivery function of the NR RLC device may denote a function of delivering RLC SDUs received from a lower layer, to a higher layer in order. The in-sequence delivery function of the NR RLC device may include a function of reassembling RLC SDUs segmented from an RLC SDU and delivering the RLC SDUs in case that the segmented RLC SDUs are received, a function of reordering received RLC PDUs on an RLC sequence number (SN) or PDCP sequence number (SN) basis, a function of recording missing RLC PDUs by reordering the order, a function of reporting a status of the missing RLC PDUs to a transmitter, and a function of requesting to retransmit the missing RLC PDUs. The in-sequence delivery function of the NR RLC device may include a function of delivering only RLC SDUs previous to a missing RLC SDU, to a higher layer in order, in case that the missing RLC SDU exists, or a function of delivering all RLC SDUs received before a timer is started, to a higher layer in order, even when a missing RLC SDU exists, when a certain timer is expired. Alternatively, the in-sequence delivery function of the NR RLC device may include a function of delivering all RLC SDUs currently received to the higher layer in order, when a certain timer is expired despite of a missing RLC SDU. Further, the RLC PDUs may be processed in order of reception (in order of arrival regardless of the order of sequence numbers) and the RLC PDUs may be delivered to the PDCP device out of order (out-of sequence delivery), and in case of segments, segments to be received to be later or stored in a buffer may be reconstituted into a whole RLC PDU and processed, the RLC PDU may be delivered to the PDCP device. The NR RLC layer may not have a concatenation function, and the concatenation function may be performed by the NR MAC layer or be replaced with a multiplexing function of the NR MAC layer.

In the above, the out-of-sequence delivery function of the NR RLC device denotes a function of delivering RLC SDUs received from a lower layer immediately to a higher layer regardless of order, and may include a function of reassembling and delivering segmented and received RLC SDUs in case that one RLC SDU is originally segmented into several RLC SDUs and received, and a function of recording missing RLC PDUs by storing RLC SN or PDCP SN of the received RLC PDUs and reordering the same.

The NR MAC S40 or S55 may be connected to multiple NR RLC layer devices constituted for a single UE, and main functions of the NR MAC may include at least some of the following functions:

- Mapping function (Mapping between logical channels and transport channels)
- Multiplexing and demultiplexing functions (Multiplexing/demultiplexing of MAC SDUs)
- Scheduling information reporting function (Scheduling information reporting)
- HARQ function (Error correction through HARQ)
- Priority handling function between logical channels (Priority handling between logical channels of one UE)
- Priority handling function between UEs (Priority handling between UEs by means of dynamic scheduling)
- MBMS service identification function (MBMS service identification)
- Transport format selection function (Transport format selection)
- Padding function (Padding)

The NR PHY layer S45 or S50 may channel-code and modulate higher layer data into OFDM symbols and transmit the OFDM symbols through a radio channel, or demodulate OFDM symbols received through a radio channel and channel-decode and deliver the OFDM symbols to a higher layer.

The radio protocol architecture may have various detailed structures depending on a carrier (or cell) operating scheme. For example, in case that the base station transmits data to the UE, based on a single carrier (or cell), the base station and UE use a protocol architecture having a single structure per layer, as indicated by S00. On the other hand, in case that the base station transmits data to the UE, based on carrier aggregation (CA) using multiple carriers in a single TRP, the base station and UE use a protocol architecture of having a single structure up to an RLC but multiplexing a PHY layer via an MAC layer, as in S 10. As another example, in case that the base station transmits data to the UE, based on dual connectivity (DC) using multiple carriers in a multiple TRP, the base station and UE use a protocol architecture of having a single structure up to an RLC but multiplexing a PHY layer via an MAC layer, as in S20.

[Regarding NC-JT]

According to an embodiment of the disclosure, non-coherent joint transmission (NC-JT) may be used for the UE to receive a PDSCH from a plurality of TRPs.

Unlike an existing communication system, a 5G wireless communication system may support not only a service requiring a high data rate, but also both a service having a very short transmission latency and a service requiring high connection density. Cooperative communication (coordinated transmission) between respective cells, TRPs, and/or beams in a wireless communication network including a plurality of cells, transmission and reception points (TRPs), or beams may satisfy various service requirements by efficiently performing inter-cell, TRP, and/or beam interference control or by increasing strength of a signal received by the UE.

Joint transmission (JT) is one of representative transmission technologies for the cooperative communication, and is a technology for increasing the strength or throughput of signal received by the UE, by transmitting the signal to the UE via a plurality of different cells, TRPs, and/or beams. Here, characteristics of channels between the UE and each cell, TRP, and/or beam may largely vary, and in particular, non-coherent (NC-joint transmission (JT) supporting non-coherent precoding between respective cells, TRPs and/or beams may require individual precoding, MCS, resource allocation, or TCI indication, according to channel characteristics for each link between the UE and each cell, TRP, and or beam.

The above-described NC-JT transmission may be applied to at least one of a downlink data channel (physical downlink shared channel (PDSCH)), a downlink control channel (physical downlink control channel (PDCCH)), an uplink data channel (physical uplink shared channel (PUSCH)), or an uplink control channel (physical uplink control channel (PUCCH)).. During PDSCH transmission, transmission information, such as precoding, MCS, resource allocation, or TCI, is indicated by DL DCI, and for NC-JT transmission, the transmission information needs to be indicated independently for each cell, TRP, and/or beam. This is a main factor for increasing payload required for DL DCI transmission, and may adversely affect reception performance of a PDCCH transmitting DCI. Accordingly, it is necessary to carefully design tradeoff between DCI amount and control information reception performance for JT support of a PDSCH.

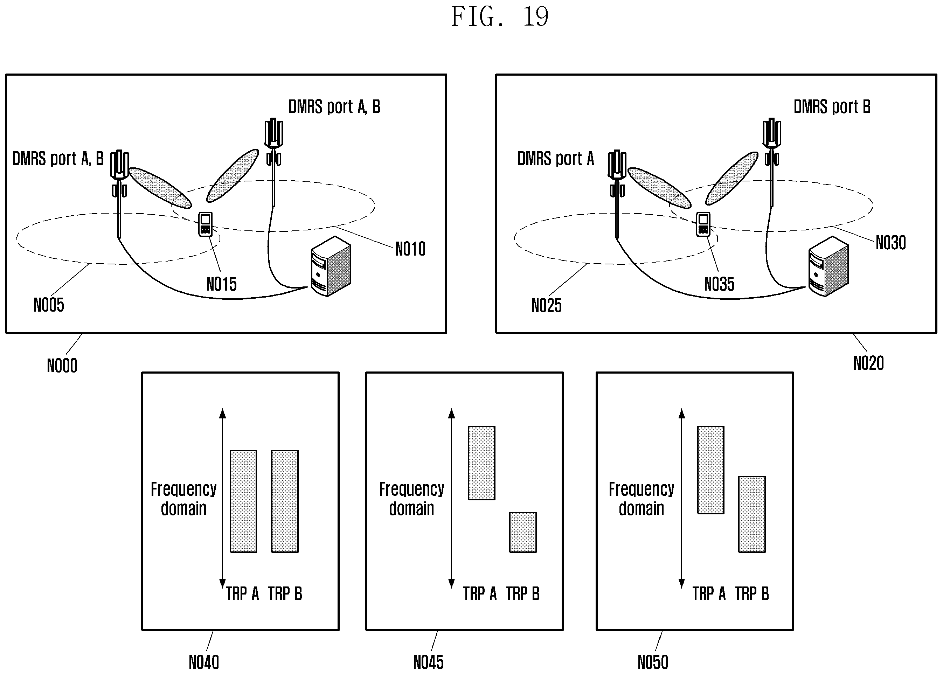

FIG. 19 is a diagram illustrating an example of an antenna port constitution and resource allocation for transmitting a PDSCH by using cooperative communication in a wireless communication system according to an embodiment of the disclosure.

With reference to FIG. 19, examples for PDSCH transmission are described for each technique of joint transmission (JT), and examples for allocating a radio resource for each TRP are illustrated.

With reference to FIG. 19, an example N000 of coherent-joint transmission (C-JT) supporting coherent precoding between respective cells, TRPs, and/or beams is illustrated.

In case of C-JT, single piece of data (PDSCH) is transmitted from a TRP A N005 and a TRP B N010 to a UE N015, and a plurality of TRPs perform joint precoding. This may indicate that a DMRS is transmitted through same DMRS ports for the TRP A N005 and TRP B N010 to transmit a same PDSCH. For example, the TRP A N005 and TRP B N010 may each transmit the DMRS to the UE through a DMRS port A and a DMRS port B. In this case, the UE may receive one piece of DCI for receiving one PDSCH demodulated based on the DMRS transmitted through the DMRS ports A and B.

In FIG. 19, an example N020 of non-coherent (NC)-joint transmission (JT) supporting non-coherent precoding between respective cells, TRPs, and/or beams for PDSCH transmission is illustrated.

In case of NC-JT, a PDSCH is transmitted to a UE N035 for each cell, TRP, and/or beam, and individual precoding may be applied to each PDSCH. Each cell, TRP, and/or beam may transmit, to the UE, different PDSCHs or different PDSCH layers to improve throughput relative to single cell, TRP, and/or beam transmission. Also, each cell, TRP, and/or beam may repeatedly transmit the same PDSCH to the UE to improve reliability relative to the single cell, TRP, and/or beam transmission. For convenience of description, a cell, TRP, and/or beam will be collectively referred to as a TRP below.

Here, various radio resource allocations may be considered for the PDSCH transmission, for example, a case N040 where frequency and time resources used by a plurality of TRPs are all same, a case N045 where frequency and time resources used by a plurality of TRPs do not overlap, and a case N050 where frequency and time resources used by a plurality of TRPs partially overlap.

To support NC-JT, pieces of DCIs of various forms, structures, and relationships may be considered to simultaneously allocate a plurality of PDSCHs to one UE.

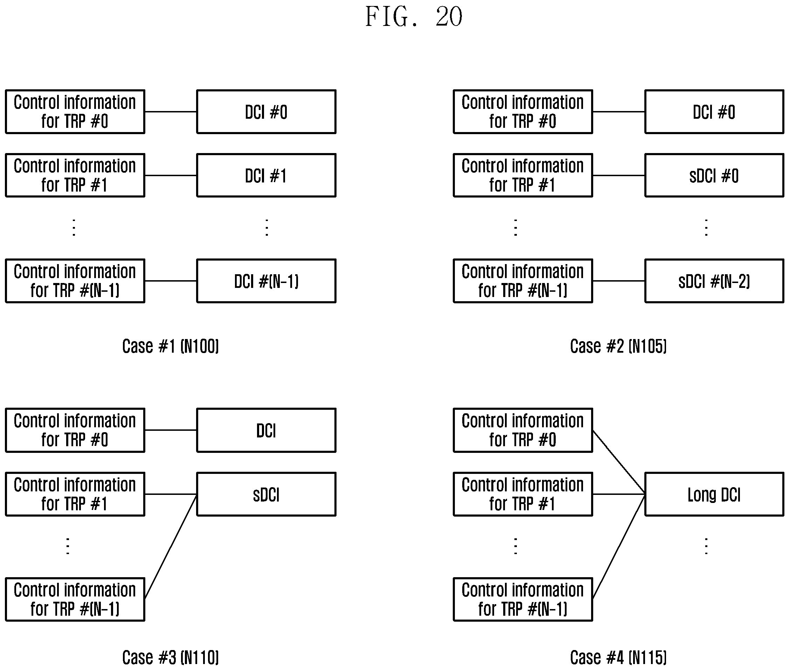

FIG. 20 is a diagram illustrating an example of a constitution of downlink control information (DCI) for NC-JT, in which each TRP transmits, to a UE, different PDSCHs or different PDSCH layers, in a wireless communication system according to an embodiment of the disclosure.

With reference to FIG. 20, a case # 1 N100 is an example in which, while different N-1 PDSCHs are transmitted from additional N-1 TRPs (TRP #1 to TRP #N-1) except a serving TRP (TRP #0) used during single PDSCH transmission, control information regarding the PDSCHs transmitted from the additional N-1 TRPs is transmitted independently from control information regarding the PDSCH transmitted from the serving TRP. In other words, the UE may obtain the control information regarding the PDSCHs transmitted from the different TRPs (TRP #0 to TRP #N-1), via independent pieces of DCI (DCI #0 to DCI #N-1). Formats of the independent pieces of DCI may be the same or different from each other, and payloads of the pieces of DCI may be the same or different from each other. In the above-described case # 1, each PDSCH control or a degree of freedom of allocation may be fully guaranteed, but reception performance may deteriorate due to an occurrence of coverage difference for each piece of DCI in case that the respective pieces of DCI are transmitted from different TRPs.

A case # 2 N105 is an example in which, while the different N-1 PDSCHs are transmitted from the additional N-1 TRPs (TRP #1 to TRP #N-1) except the serving TRP (TRP #0) used during the single PDSCH transmission, the pieces of control information (DCI) regarding the PDSCHs transmitted from the additional N-1 TRPs are each transmitted and each piece of DCI is dependent on the control information regarding the PDSCH transmitted from the serving TRP.

For example, the DCI #0 that is the control information regarding the PDSCH transmitted from the serving TRP (TRP #0) includes all information elements of a DCI format 1_0, a DCI format 1_1, and a DCI format 1_2, but shortened DCI (hereinafter, sDCI) (sDCI #0 to sDCI #N-2) that is control information regarding the PDSCHs transmitted from the cooperative TRPs (TRP #1 to TRP #N-1) may include some of the information elements of the DCI format 1_0, the DCI format 1_1, and the DCI format 1_2. Accordingly, because the sDCI transmitting the control information regarding the PDSCHs transmitted from the cooperative TRPs has a small payload compared to normal DCI (nDCI) transmitting the control information regarding the PDSCH transmitted from the serving TRP, it is possible for the sDCI to include reserved bits compared to the nDCI.

The above-described case # 2 may have limited PDSCH control or degree of freedom of allocation according to content of the information elements included in the sDCI, but may have a low probability of an occurrence of a coverage difference for each piece of DCI because reception performance of the sDCI is superior compared to the nDCI.

A case # 3 N110 is an example in which, while the different N-1 PDSCHs are transmitted from the additional N-1 TRPs (TRP #1 to TRP #N-1) except the serving TRP (TRP #0) used during the single PDSCH transmission, one piece of control information regarding the PDSCHs of the additional N-1 TRPs is transmitted and this DCI is dependent on the control information regarding the PDSCH transmitted from the serving TRP.

For example, the DCI #0 that is the control information regarding the PDSCH transmitted from the serving TRP (TRP #0) includes all information elements of the DCI format 1_0, the DCI format 1_1, and the DCI format 1-2, and for the control information regarding the PDSCHs transmitted from the cooperative TRPs (TRP #1 to TRP #N-1), it is possible to gather some of the information elements of the DCI format 1_0, the DCI format 1_1, and the DCI format 1_2 to one piece of 'secondary' DCI (sDCI) for transmission. For example, the sDCI may include at least one piece of information of the cooperative TRPs, from among frequency domain resource assignment, time domain resource assignment, and HARQ-related information, such as MSC. In addition, information not included in the sDCI, such as a bandwidth part (BWP) indicator or a carrier indicator, may follow the DCI (DCI #0, normal DCI, nDCI) of the serving TRP.

The case # 3 N110 may have limited PDSCH control or degree of freedom of allocation according to content of the information elements included in the sDCI, but reception performance of the sDCI may be controlled and complexity of DCI blind decoding of the UE may be low compared to the case # 1 N100 and case # 2 N105.

A case # 4 N115 is an example in which, while the different N-1 PDSCHs are transmitted from the additional N-1 TRPs (TRP #1 to TRP #N-1) except the serving TRP (TRP #0) used during the single PDSCH transmission, the control information regarding the PDSCHs transmitted from the additional N-1 TRPs is transmitted on a same DCI (long DCI) as the control information regarding the PDSCH transmitted from the serving TRP. In other words, the UE may obtain, via single DCI, the control information regarding the PDSCHs transmitted from the different TRPs (TRP #0 to TRP #N-1). In the case # 4 N115, complexity of DCI blind decoding of the UE may not be high, but PDSCH control or a degree of freedom of allocation may be low, for example, the number of cooperative TRPs may be limited, according to long DCI payload limitation.

In the description and embodiments of the disclosure below, the sDCI may denote various types of auxiliary DCI, such as shortened DCI, secondary DCI, and normal DCI (the DCI format 1_0 to 1_1 described above) including PDSCH control information transmitted from a cooperative TRP, and unless a limitation is specifically stated, the corresponding description may be similarly applied to the various types of auxiliary DCI.

In the description and embodiments of the disclosure below, the case # **1** N1**00**, the case # **2** N105, and the case # **3** N1**10** using one or more pieces of DCI (PDCCHs) to support NC-JT may be distinguished as multiple PDCCH-based NC-JT, and the case # **4** N115 using a single piece of DCI (PDCCH) to support NC-JT may be distinguished as single PDCCH-based NC-JT. In multiple PDCCH-based PDSCH transmission, a CORESET scheduling DCI of the serving TRP (TRP #0) and a CORESET scheduling DCI of the cooperative TRPs (TRP #1 to TRP #N-1) may be distinguished. To distinguish the CORESETs, a method for distinguishing the CORESETs via a higher layer indicator for each CORESET, a method for distinguishing the CORESETs via a beam configuration for each CORESET, or the like may be used. Also, in the single PDCCH-based NC-JT, instead of scheduling a plurality of PDSCHs by a single piece of DCI, a single PDSCH including a plurality of layers is scheduled, and the above-described plurality of layers may be transmitted from a plurality of TRPs. Here, a connection relationship between the layer and the TRP transmitting the corresponding layer may be indicated via a transmission configuration indicator (TCI) indication regarding the layer.

In embodiments of the disclosure, a "cooperative TRP" may be replaced by any one of various terms, such as "cooperative panel," a "cooperative beam," or the like, when actually applied.

In embodiments of the disclosure, the phrase "in case that NC-JT is applied" may be variously interpreted depending on a situation, for example, "in case that a UE simultaneously receives one or more PDSCHs from one BWP," "in case that a UE simultaneously receives PDSCHs based on two or more transmission configuration indicator (TCI) indications from one BWP," and "in case that a PDSCH received by a UE is associated with at least one DMRS port group," but one expression is used for convenience of description.

In the disclosure, a radio protocol structure for NC-JT may be used in various ways according to a TRP deployment scenario. As an example, in case that there is no or small backhaul delay between cooperative TRPs, it is possible to use a structure based on MAC layer multiplexing similar to S10 in FIG. 18 (CA-like method). However, in case that a backhaul delay between cooperative TRPs is so large that it cannot be ignored (e.g., in case that a time of 2 ms or more is required for information exchange such as CSI, scheduling, and HARQ-ACK between cooperative TRPs), similar to S**20** of FIG. 18, it is possible to secure a characteristic strong against delay using an independent structure for each TRP from an RLC layer (DC-like method).

The UE supporting C-JT/NC-JT may receive, from a higher layer configuration, C-JT/NC-JT-related parameters or setting values, and set an RRC parameter of the UE, based thereon. For the higher layer configuration, the UE may use a UE capability parameter, for example, tci-StatePDSCH. Here, the UE capability parameter, for example, tci-StatePDSCH, may define TCI states for a purpose of PDSCH transmission. The number of TCI states may be configured to be 4, 8, 16, 32, 64, or 128 in FR1, and may be configured to be 64 or 128 in FR2, and among the configured number, up to 8 states indicatable by 3 bits of a TCI field of DCI may be configured via an MAC CE message. The maximum number 128 denotes a value indicated by maxNumberConfiguredTCIstatesPerCC in the tci-StatePDSCH parameter included in capability signaling of the UE. As such, a series of configuration processes from a higher layer configuration to an MAC CE configuration may be applied to a beamforming indication or beamforming change command for at least one PDSCH in one TRP.

[Multi-DCI based Multi-TRP]

As an embodiment of the disclosure, multi-DCI-based multi-TRP transmission method will be described. The multi-DCI-based multi-TRP transmission method may configure a downlink control channel for NC-JT transmission based on the multi-PDCCH.

In NC-JT based on multiple PDCCHs, when performing transmission of DCI for PDSCH scheduling of each TRP, there may be a CORESET or search space distinguished for each TRP. A CORSET or search space for each TRP may be configured as at least one of the following cases.

* Higher layer index configuration for each CORESET: The CORESET configuration information configured via a higher layer may include an index value, and a TRP for transmission of a PDCCH in the corresponding CORESET may be distinguished by the index value for each configured CORESET. That is, in the set of CORESETs having the same higher layer index value, it may be considered that the same TRP transmits a PDCCH or that a PDCCH for scheduling a PDSCH of the same TRP is transmitted. The above-described index for each CORESET may be referred to as CORESETPoolIndex, and it may be considered that the PDCCH is transmitted from the same TRP with regard to CORESETs in which the same CORESETPoolIndex value is configured. In a case of CORESET in which the CORESETPoolIndex value is not configured, it may be considered that the default value of CORESETPoolIndex has been configured, and the above-described default value may be 0.

- In the disclosure, in case that the type of CORESETPoolIndex for each of a plurality of CORESETs included in PDCCH-Config, which is higher layer signaling, exceeds one, that is, in case that each CORESET has a different CORESETPoolIndex, a UE may consider that a base station may use a multi-DCI-based multi-TRP transmission method.
- Unlike this, in the disclosure, in case that the type of CORESETPoolIndex for each of a plurality of CORESETs included in PDCCH-Config, which is higher layer signaling, is one, that is, in case that all CORESETs have the same CORESETPoolIndex of 0 or 1, the UE may consider that the base station perform transmission using single-TRP instead of using a multi-DCI-based multi-TRP transmission method.

* Multiple PDCCH-Config configurations: Multiple PDCCH-Configs are configured in one BWP, and each PDCCH-Config may include PDCCH configuration for each TRP. That is, one PDCCH-Config may include a list of CORESETs for each TRP and/or a list of search spaces for each TRP, one or more CORESETs and one or more search spaces included in one PDCCH-Config may be considered to correspond to a specific TRP.
* CORESET beam/beam group configuration: TRP corresponding to the corresponding CORESET may be distinguished through a beam or beam group configured for each CORESET. For example, in case that the same TCI state is configured in multiple CORESETs, the corresponding CORESETs may be considered to be transmitted through the same TRP or it may be considered that a PDCCH for scheduling a PDSCH of the same TRP is transmitted in the corresponding CORESET.
* Search space beam/beam group configuration: A beam or beam group is configured for each search space, and through this, TRP for each search space may be distinguished. For example, in case that the same beam/beam group or TCI state is configured in multiple search spaces, it may be considered that the same TRP transmits the PDCCH in the search space, or that a PDCCH for scheduling a PDSCH of the same TRP is transmitted in the corresponding search space.

By distinguishing the CORESET or search space by TRP as described above, PDSCH and HARQ-ACK information may be classified for each TRP, and thus, an independent HARQ-ACK codebook for each TRP may be generated and independent PUCCH resources may be used.

The above configuration may be independent for each cell or for each BWP. For example, two different CORESETPoolIndex values are configured in PCell, whereas the CORESETPoolIndex value may not be configured in a specific SCell. Here, it may be considered that NC-JT transmission is configured in the PCell, whereas NC-JT transmission is not configured in SCell in which the CORESETPoolIndex value is not configured.

The PDSCH TCI state activation/deactivation MAC-CE applicable to the multi-DCI-based multi-TRP transmission method may follow FIG. 15. In case that the UE is not configured with CORESETPoolIndex for each of all CORESETs in the higher layer signaling PDCCH-Config, the UE may ignore the CORESET Pool ID field 15-55 in the corresponding MAC-CE 15-50. In case that the UE can support the multi-DCI-based multi-TRP transmission method, that is, in case that the UE has a different CORESETPoolIndex for each CORESET in the higher layer signaling PDCCH-Config, the UE may activate a TCI state in DCI included in a PDCCH transmitted from CORESETs, which have the same CORESETPoolIndex value as the CORESET Pool ID field 15-55 in the corresponding MAC-CE 15-50. For example, if the CORESET Pool ID field 15-55 in the corresponding MAC-CE 15-50 has the value of 0, the TCI state in the DCI included in the PDCCH transmitted from CORESETs having the CORESETPoolIndex of 0 may follow the activation information of the corresponding MAC-CE.

In case that the UE is configured to use the multi-DCI-based multi-TRP transmission method from the base station, that is, in case that the type of CORESETPoolIndex for each of a plurality of CORESETs included in PDCCH-Config, which is higher layer signaling, exceeds one, or in case that respective CORESETs have different CORESETPoolIndexes, the UE may know that the following restrictions exist for PDSCHs scheduled from PDCCHs in each of CORESETs having two different CORESETPoolIndexes.

1) In case that PDSCHs, which are indicated by the PDCCH in each CORESET having two different CORESETPoolIndexes, fully or partially overlap, the UE may apply the TCI states indicated by each PDCCH to different CDM groups, respectively. That is, two or more TCI states may not be applied to one CDM group.

2) In case that PDSCHs, which are indicated by the PDCCH in each CORESET having two different CORESETPoolIndexes, fully or partially overlap, the UE may expect that the number of actual front-loaded DMRS symbols, the number of actual additional DMRS symbols, the position of the actual DMRS symbols, and DMRS types of respective PDSCHs not to be different from one another.

3) The UE may expect that the same bandwidth part and the same subcarrier spacing are indicated from the PDCCH in each CORESET having two different CORESETPoolIndexes.

4) The UE may expect that information about a PDSCH scheduled from the PDCCH in each CORESET having two different CORESETPoolIndexes is completely included in each PDCCH.

[Single-DCI based Multi-TRP]

According to another embodiment of the disclosure, a single DCI-based multi-TRP transmission method will be described. The single DCI-based multi-TRP transmission method may configure a downlink control channel for NC-JT transmission based on single PDCCH.

In single DCI-based multi-TRP transmission method, a PDSCH transmitted by multiple TRPs may be scheduled by one DCI. Here, the number of TCI states may be used as a method for indicating the number of TRPs for transmission of the corresponding PDSCH. That is, if the number of TCI states indicated in the DCI for scheduling the PDSCH is two, it may be considered as single PDCCH-based NC-JT transmission, and if the number of TCI states is one, it may be considered as single-TRP transmission. The TCI states indicated through the DCI may correspond to one or two TCI states among TCI states activated by MAC-CE. In case that the TCI states of DCI correspond to the two TCI states activated by MAC-CE, a correspondence relationship between a TCI codepoint indicated through DCI and TCI states activated by MAC-CE is established, and two TCI states may be activated by MAC-CE corresponding to the TCI codepoint.

As another example, in case that at least one codepoint among all codepoints of the TCI state field in DCI indicates two TCI states, the UE may consider that the base station may perform transmission based on the single-DCI-based multi-TRP method. Here, at least one codepoint indicating two TCI states in the TCI state field may be activated through enhanced PDSCH TCI state activation/deactivation MAC-CE.

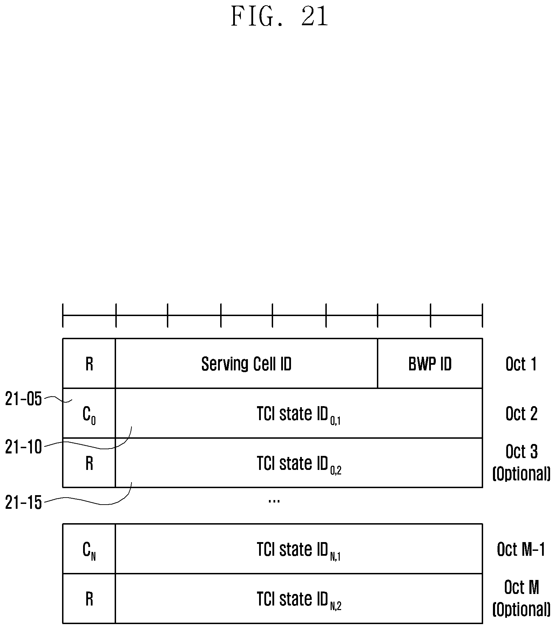

FIG. **21** is a diagram illustrating an enhanced PDSCH TCI state activation/deactivation MAC-CE structure. The meaning of each field in the corresponding MAC CE and values configurable for each field..

- Serving Cell ID: This field indicates the identity of the Serving Cell for which the MAC CE applies. The length of the field is 5 bits. If the indicated Serving Cell is configured as part of a *simultaneousTCI-UpdateList1* or *simultaneousTCI-UpdateList2* as specified in TS 38.331 [5], this MAC CE applies to all the Serving Cells configured in the set *simultaneousTCI-UpdateList1* or *simultaneousTCI-UpdateList2*, respectively;

- BWP ID: This field indicates a DL BWP for which the MAC CE applies as the codepoint of the DCI bandwidth part indicator field as specified in TS 38.212 [9]. The length of the BWP ID field is 2 bits;

- $C_i$: This field indicates whether the octet containing TCI state $ID_{i,2}$ is present. If this field is set to "1", the octet containing TCI state $ID_{i,2}$ is present. If this field is set to "0", the octet containing TCI state $ID_{i,2}$ is not present;

- TCI state $ID_{i,j}$: This field indicates the TCI state identified by TCI-StateId as specified in TS 38.331 [5], where i is the index of the codepoint of the DCI Transmission configuration indication field as specified in TS 38.212 [9] and TCI state $ID_{i,j}$ denotes the j-th TCI state indicated for the i-th codepoint in the DCI Transmission Configuration Indication field. The TCI codepoint to which the TCI States are mapped is determined by its ordinal position among all the TCI codepoints with sets of TCI state $ID_{i,j}$ fields, i.e. the first TCI codepoint with TCI state $ID_{0,1}$ and TCI state $ID_{0,2}$ shall be mapped to the codepoint value 0, the second TCI codepoint with TCI state $ID_{1,j}$ and TCI state $ID_{1,2}$ shall be mapped to the codepoint value 1 and so on. The TCI state $ID_{i,2}$ is optional based on the indication of the Ci field. The maximum number of activated TCI codepoint is 8 and the maximum number of TCI states mapped to a TCI codepoint is 2.

- **R**: Reserved bit, set to "0".

In FIG. **21**, if the $C_0$ field **21-05** has the value of 1, the corresponding MAC-CE may include the TCI state $ID_{0,2}$ field **21-15** in addition to the TCI state $ID_{0,1}$ field **21-10**. This may refer that TCI state $ID_{0,1}$ and TCI state $ID_{0,2}$ are activated for the 0th codepoint of the TCI state field included in DCI. If the base station indicates the corresponding codepoint to the UE, the UE may receive an indication of two TCI states. If the $C_0$ field **21-05** has the value of 0, the corresponding MAC-CE may not include the TCI state $ID_{0,2}$ field **21-15**, and this may be understood as that one TCI state corresponding to TCI state $ID_{0,1}$ is activated for the 0th codepoint of the TCI state field included in DCI.

The above configuration may be independent for each cell or for each BWP. For example, a PCell may include up to two activated TCI states corresponding to one TCI codepoint, whereas a specific SCell may include up to one activated TCI state corresponding to one TCI codepoint. Here, it may be considered that NC-JT transmission is configured in the PCell, whereas NC-JT transmission is not configured in the above-described SCell.

[Single-DCI-Based Multi-TRP PDSCH Repetitive Transmission Scheme (TDM/FDM/SDM) Distinguishing Method]

Next, a method for distinguishing between single-DCI-based multi-TRP PDSCH repetitive transmission schemes will be described. The UE may be indicated with different single-DCI-based multi-TRP PDSCH repetitive transmission schemes (e.g., TDM, FDM, SDM) according to the value indicated by a DCI field and a higher layer signaling configuration from the base station. Table 42, below, shows a method for distinguishing between single- or multi-TRP-based schemes indicated to the UE according to the value of a specific DCI field and the higher layer signaling configuration.

[Table 42]

| Combi nation | Number of TCI states | Number of CDM group | Repetition Number configuration and indication condition | Repetition scheme configuration related | Transmission scheme indicated to the UE |
|---|---|---|---|---|---|
| 1 | 1 | ≥ 1 | Condition 2 | Not configured | Single-TRP |
| 2 | 1 | ≥ 1 | Condition 2 | Configured | Single-TRP |
| 3 | 1 | ≥ 1 | Condition 3 | Configured | Single-TRP |
| 4 | 1 | 1 | Condition 1 | Configured or not configured | Single-TRP TDM scheme B |
| 5 | 2 | 2 | Condition 2 | Not configured | Multi-TRP SDM |
| 6 | 2 | 2 | Condition 3 | Not configured | Multi-TRP SDM |
| 7 | 2 | 2 | Condition 3 | Configured | Multi-TRP SDM |
| 8 | 2 | 2 | Condition 3 | Configured | Multi-TRP FDM scheme A/FDM scheme B / TDM scheme A |
| 9 | 2 | 2 | Condition 1 | Not configured | Multi-TRP TDM scheme B |

In Table 42, above, each column may be described as follows.

- Number of TCI states (column 2): it refers to the number of TCI states indicated by the TC state field in DCI, and may be one or two.

- Number of CDM groups (column 3): it refers to the number of different CDM groups of DMRS ports indicated by the antenna port field in DCI. The number of CDM groups may be 1, 2, or 3.

- repetitionNumber configuration and indication condition (column 4): three conditions may exist according to whether repetitionNumber is configured for all TDRA entries that can be indicated by a time-domain resource allocation field in DCI and whether the actually indicated TDRA entry has repetitionNumber configuration.

    ■ Condition 1: Case where at least one of all TDRA entries that can be indicated by the time-domain resource allocation field includes the configuration for repetitionNumber, and the TDRA entry indicated by the time-domain resource allocation field in DCI includes configuration for repetition Number greater than 1
    ■ Condition 2: Case where at least one of all TDRA entries that can be indicated by the time-domain resource allocation field includes the configuration for repetitionNumber, and the TDRA entry indicated by the time-domain resource allocation field in DCI does not include the configuration for repetitionNumber
    ■ Condition 3: Case where all TDRA entries that can be indicated by the time domain resource allocation field do not include configuration for repetitionNumber

- Relating to repetitionScheme configuration (column 5): It refers to whether repetitionScheme, which is a higher layer signaling, is configured. The repetitionScheme, which is higher layer signaling, may be configured with one of 'tdmSchemeA', 'fdmSchemeA', and 'fdmSchemeB'.

- Transmission scheme indicated to the UE (column 6): It refers to single or multiple TRP schemes indicated according to each combination (column 1) shown in Table 42, above.

  - Single-TRP: It refers to single TRP-based PDSCH transmission. If the UE is configured with the pdsch-AggregationFactor in the higher layer signaling PDSCH-config, the UE may receive scheduling for single TRP-based PDSCH repetitive transmission by the configured number of times. Otherwise, the UE may receive scheduling for single TRP-based PDSCH single transmission

  - Single-TRP TDM scheme B: It refers to single TRP-based inter-slot time resource division-based PDSCH repetitive transmission. According to the above-described repetitionNumber-related Condition 1, the UE repeatedly transmits the PDSCH in the time dimension as many times as the number of slots, having the repetitionNumber having the value greater than 1, configured in the TDRA entry indicated by the time domain resource allocation field. Here, the same start symbol and symbol length of the PDSCH indicated by the TDRA entry are applied to each slot equal to the number of repetitionNumber, and the same TCI state is applied to each PDSCH repetitive transmission. The corresponding scheme is similar to a slot aggregation method in that an inter-slot PDSCH repetitive transmission is performed on time resources, but is different from slot aggregation in that it is possible to dynamically determine whether to indicate repetitive transmission based on the time domain resource allocation field in DCI

  - Multi-TRP SDM: It refers to a multi-TRP-based spatial resource division PDSCH transmission method. This is a method for performing reception from each TRP by dividing layers. Although the multi-RP SDM is not a repetitive transmission method, it is possible to increase the number of layers and lower the coding rate to transmit, so as to increase the reliability of the PDSCH transmission. The UE may receive the PDSCH by applying the two TCI states indicated through the TCI state field in DCI to two CDM groups indicated by the base station, respectively

  - Multi-TRP FDM scheme A: It refers to a multi-TRP-based frequency resource division PDSCH transmission scheme, and has one PDSCH transmission occasion, so that it is not possible to perform repetitive transmission like multi-TRP SDM, but to perform transmission with high reliability by increasing the frequency resource amount and lowering the coding rate. The multi-TRP FDM scheme A may apply two TCI states, indicated through the TCI state field in DCI, to frequency resources that do not overlap each other. If the PRB bundling size is determined to be wideband, the UE performs reception by applying the first TCI state to the first ceil (N/2) RBs and applying the second TCI state to the remaining floor (N/2) RBs, in case that the number of RBs indicated by the frequency domain resource allocation field is N. Here, the ceil(.) and floor(.) are operators for rounding up and rounding down the first digit after decimal point. In case that the PRB bundling size is determined to be 2 or 4, the UE performs reception by applying the first TCI state to even-numbered PRGs and applying the second TCI state to odd-numbered PRGs

  - Multi-TRP FDM scheme B: It refers to a multi-TRP-based frequency resource division PDSCH repetitive transmission scheme, and has two PDSCH transmission occasions, so that the PDSCH can be repeatedly transmitted to each occasion. Multi-TRP FDM scheme B may also apply two TCI states, indicated through the TCI state field in DCI, to frequency resources that do not overlap each other, in the same manner as the multi-TRP FDM scheme A. If the PRB bundling size is determined to be wideband, the UE performs reception by applying the first TCI state to the first ceil (N/2) RBs and applying the second TCI state to the remaining floor (N/2) RBs, in case that the number of RBs indicated by the frequency domain resource allocation field is N. Here, ceil(.) and floor(.) are operators for rounding up and rounding down the first digit after decimal point. In case that the PRB bundling size is determined to be 2 or 4, the UE performs reception by applying the first TCI state to even-numbered PRGs and applying the second TCI state to odd-numbered PRGs

  - Multi-TRP TDM scheme A: It refers to a multi-TRP-based time resource division intra-slot PDSCH repetitive transmission scheme. The UE includes two PDSCH transmission occasions in one slot, and the first reception location may be determined based on the start symbol and symbol length of a PDSCH indicated through the time-domain resource allocation field in DCI. The start symbol of the second reception occasion of the PDSCH may be an occasion to which as many symbol offsets as *StartingSymbolOffsetK*, which is higher layer signaling, are applied from the last symbol of the first transmission occasion, and the transmission occasion may be determined by the indicated symbol length therefrom. If *StartingSymbolOffsetK*, which is higher layer signaling, is not configured, the symbol offset may be regarded as 0

  - Multi-TRP TDM scheme B: It refers to a multi-TRP-based time resource division inter-slot PDSCH repetitive transmission scheme. The UE includes one PDSCH transmission occasion in one slot, and may receive repetitive transmission based on the start symbol and symbol length of the same PDSCH during a slot equal to the number of repetitionNumber indicated through the time domain resource allocation field in DCI. If repetitionNumber is 2, the UE may receive PDSCH repetitive transmissions in the first and second slots by applying the first and second TCI states, respectively. In case that repetitionNumber is greater than 2, the UE may use different TCI state application methods according to which higher layer signaling tciMapping is configured. In case that tciMapping is configured as cyclicMapping, the first and second TCI states are applied to the first and second PDSCH transmission occasions, respectively, and this TCI state application method is equally applied to the remaining PDSCH transmission occasions. In case that tciMapping is configured as sequentialMapping, the first TCI state is applied to the first and second PDSCH transmission occasions, the second TCI state is applied to the third and fourth PDSCH transmission occasions, and this TCI state application method is equally applied to the remaining PDSCH transmission occasions

[Regarding RLM RS]

Next, a method for selecting or determining a radio link monitoring reference signal (RLM RS) in configuring or non-configuring the RLM RS will be described. The UE may be configured with a set of RLM RSs from the base station via RadioLinkMonitoringRS in RadioLinkMonitoringConfig, which is higher layer signaling, for each DL BWP of SPCell, and a specific higher layer signaling structure shown below in Table 43.

[Table 43]

```
RadioLinkMonitoringConfig ::= SEQUENCE {
    failureDetectionResourcesToAddModList   SEQUENCE (SIZE(1..maxNrofFailureDetectionResources)) OF
RadioLinkMonitoringRS     OPTIONAL, -- Need N
    failureDetectionResourcesToReleaseList SEQUENCE (SIZE(1..maxNrofFailureDetectionResources)) OF
RadioLinkMonitoringRS-Id OPTIONAL, -- Need N
    beamFailureInstanceMaxCount ENUMERATED {n1, n2, n3, n4, n5, n6, n8, n10}
OPTIONAL, -- Need R
    beamFailureDetectionTimer ENUMERATED {pbfd1, pbfd2, pbfd3, pbfd4, pbfd5, pbfd6, pbfd8, pbfd10}
OPTIONAL, -- Need R
...
}


RadioLinkMonitoringRS ::= SEQUENCE {
    radioLinkMonitoringRS-Id   RadioLinkMonitoringRS-Id,
    purpose              ENUMERATED {beamFailure, rlf, both},
    detectionResource  CHOICE {
        ssb-Index        SSB-Index,
        csi-RS-Index     NZP-CSI-RS-ResourceId
    },
...
}
```

Table 44 below may indicate the configurable or selectable number of RLM RSs for each specific use according to the maximum number ($L_{max}$) of SSBs per half frame. As shown below in Table 44, according to the $L_{max}$ value, $N_{LR-RLM}$ RSs may be used for link recovery or radio link monitoring, and $N_{RLM}$ RSs among $N_{LR-RLM}$ RSs may be used for radio link monitoring.

[Table 44]

Table 5-1: $N_{LR-RLM}$ and $N_{RLM}$ as a function of maximum number $L_{max}$ of SS/PBCH blocks per half frame

| $L_{max}$ | $N_{LR-RLM}$ | $N_{RLM}$ |
|---|---|---|
| 4 | 2 | 2 |
| 8 | 6 | 4 |
| 64 | 8 | 8 |

When the UE is not configured with RadioLinkMonitoringRS that is higher layer signaling, and the UE is configured with a TCI state for receiving a PDCCH in a CORESET, and in case that at least one CSI-RS is included in the corresponding TCI state, the RLM RS may be selected according to the following RLM RS selection methods.

- RLM RS selection method 1) In case that an activated TCI state to be used for PDCCH reception has one reference RS (e.g., one activated TCI state has only one of QCL-TypeA, B, and C), the UE may select, as the RLM RS, a reference RS of the activated TCI state to be used for PDCCH reception.
- RLM RS selection method 2) In case that an activated TCI state to be used for PDCCH reception has two reference RSs (e.g., one activated TCI state has one of QCL-TypeA, B, and C, and additionally has QCL-TypeD), the UE may select a reference RS of QCL-TypeD as the RLM-RS. The UE does not expect that two QCL-TypeDs are configured in one activated TCI state.
- RLM RS selection method 3) The UE does not expect that an aperiodic or semi-persistent RS is selected as the RLM RS.
- RLM RS selection method 4) In case of $L_{max}$=4, the UE may select $N_{RLM}$ RSs (since $L_{max}$ is 4, two may be selected). The RLM RS is selected from among the reference RSs of the TCI state configured in the CORESET for PDCCH reception, based on RLM RS selection methods 1 to 3, wherein a search space, to which the CORESET is linked, having a short period is determined to have a high priority, and the RLM RS is selected from the reference RS of the TCI state configured in the CORESET linked to a search space of a shortest period. If there are multiple CORESETs linked to multiple search spaces having the same period, the RLM RS is selected from the reference RS of the TCI state configured in a high CORESET index.

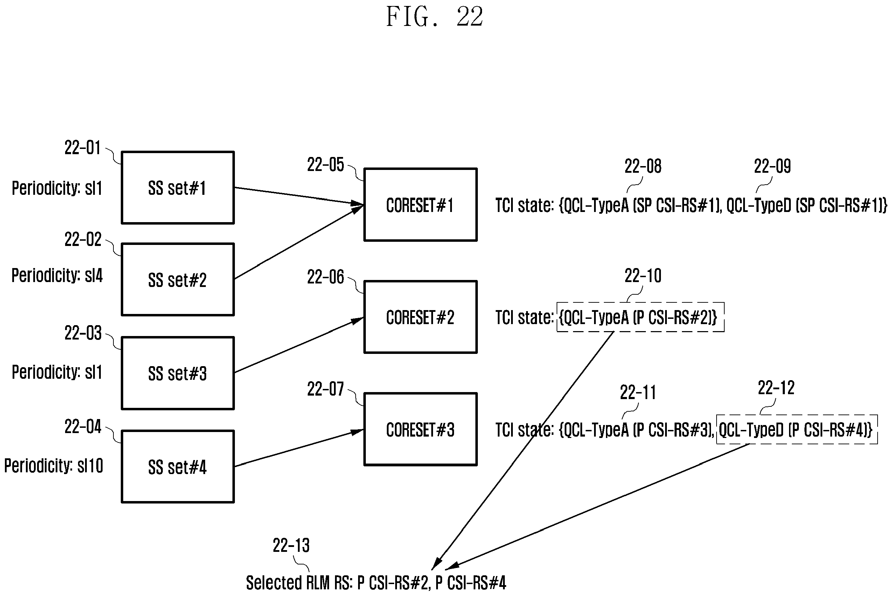

FIG. 22 is a diagram illustrating an RLM RS selection procedure embodiment. This figure illustrates CORESET #1 to CORESET #3 22-05 to 22-07 linked to search space set #1 to search space set #4 22-01 to 22-04 having different periods within an activated DL BWP, and a reference RS of a TCI state configured in each CORESET. Based on RLM RS selection method 4, RLM RS selection uses a TCI state configured in a CORESET linked to a search space with a shortest period, but since search space set #1 22-01 and search space set #3 22-03 have the same period, a reference RS of a TCI state configured in CORESET #2 having a higher index among CORESET #1 22-05 and CORESET #2 22-06 linked to respective search spaces may be used as a reference RS having a highest priority in the RLM RS selection. In addition, since the TCI state configured in CORESET #2 has only QCL-TypeA, and the corresponding reference RS is a periodic RS, P CSI-RS #2 22-10 may be first selected as the RLM RS according to RLM RS selection methods 1 and 3. The reference RS of QCL-TypeD may be a selection candidate according to RLM RS selection method 2 from among reference RSs of the TCI state configured in CORESET #1 having a subsequent priority, but the corresponding RS is a semi-persistent RS 22-09 and therefore is not selected as the RLM RS according to RLM RS selection method 3. Therefore, reference RSs of the TCI state configured in CORESET #3 may be considered as having the subsequent priority, and the reference RS of QCL-TypeD may be a selection candidate according to RLM RS selection method 2, and since the corresponding reference RS is a periodic RS, P CSI-RS #4 22-12 may be selected as a second RLM RS according to RLM RS selection method 3. Therefore, finally selected RLM RSs may be P CSI-RS #2 and P CSI-RS #4 (22-13).

Hereinafter, for convenience of description, higher layer/L1 parameters, such as a TCI state and spatial relation information, or cells, transmission points, panels, beams, and/or transmission directions distinguishable by indicators, such as cell ID, TRP ID, and panel ID, may be collectively described as transmission reception point (TRP), beam, or TCI state. Accordingly, for actual application, the TRP, beam, or TCI state may be suitably replaced by one of the above terms.

Hereinafter, in the disclosure, a UE may determine whether to apply cooperative communication based on whether PDCCH(s) for allocating a PDSCH to which cooperative communication is applied have a specific format, whether the PDCCH(s) for allocating the PDSCH to which cooperative communication is applied include a specific indicator indicating whether to apply cooperative communication, or whether the PDCCH(s) for allocating the PDSCH to which cooperative communication are scrambled with a specific RNTI, or by using various methods, such as assuming cooperative communication application in a specific occasion indicated through higher layer signaling. Hereinafter, for convenience of description, a case where a UE receives a PDSCH to which cooperative communication is applied based on similar conditions as above will be referred to as an NC-JT case.

Hereinafter, embodiments of the disclosure will be described in detail with reference to accompanying drawings. Hereinafter, the base station is an entity that allocates resources of a terminal, and may be at least one of a gNode B, a gNB, an eNode B, a Node B, a base station (BS), a wireless access unit, a BS controller, or a node on a network. Examples of a terminal may include user equipment (UE), a mobile station (MS), a cellular phone, a smartphone, a computer, or a multimedia system capable of performing a communication function. Hereinafter, embodiments of the disclosure will be described with an example of a 5G system, but the embodiments of the disclosure may also be applied to other communication systems having a similar technical background or channel form. For example, LTE or LTE-A mobile communication and a mobile communication technology developed after 5G may be included thereto. Accordingly, it will be understood by one of ordinary skill in the art that the disclosure may be applied to other communication systems through some modifications without departing from the scope of the disclosure. The content of the disclosure may be applied to FDD or TDD systems. Hereinafter, in the disclosure, higher signaling (or higher layer signaling) is a method for transmitting a signal from a base station to a UE using a downlink data channel of a physical layer or from a UE to a base station using an uplink data channel of a physical layer, and may be referred to as RRC signaling, PDCP signaling, or a medium access control (MAC) control element (MAC CE).

In the description of the disclosure, in case that it is determined that a detailed description of related functions or configurations may unnecessarily obscure the subject matter of the disclosure, the detailed description will be omitted. Further, the terms, as will be mentioned later, are defined by taking functionalities in the disclosure into account, but may vary depending on practices or intentions of users or operators. Accordingly, the terms should be defined based on descriptions throughout this specification.

Hereinafter, while describing embodiments of the disclosure, higher layer signaling may be signaling corresponding to at least one of or a combination of signaling methods below:

- Master Information Block (MIB)
- System Information Block (SIB) or SIB X (X=1, 2, ...)
- Radio Resource Control (RRC)
- Medium Access Control (MAC) Control Element (CE)

Also, L1 signaling may be signaling corresponding to at least one of or a combination of signaling methods using following physical layer channels or signaling:

- Physical Downlink Control Channel (PDCCH)
- Downlink Control Information (DCI)
- UE-specific DCI
- Group common DCI
- Common DCI
- Scheduling DCI (for example, DCI used to schedule downlink or uplink data);
- Non-scheduling DCI (for example, DCI not for scheduling downlink or uplink data);
- Physical Uplink Control Channel (PUCCH)
- Uplink Control Information (UCI)

Hereinafter, determining a priority between A and B in the disclosure may be variously described as selecting a higher priority according to a pre-determined priority rule and performing an operation corresponding to the higher priority, or omitting or dropping an operation having a lower priority.

Hereinafter, the term slot used in the disclosure is a general term that may refer to a specific time unit corresponding to a transmit time interval (TTI), and specifically, a slot may refer to a slot used in a 5G NR system and may also refer to a slot or subframe used in a 4G LTE system.

Hereinafter, in the disclosure, descriptions of the examples will be provided via multiple embodiments, but these are not mutually exclusive, and it is possible that one or more embodiments are applied simultaneously or in combination.

<Single TCI State Activation and Indication Method Based on Unified TCI Scheme>

As an embodiment of the disclosure, single TCI state indication and activation method based on unified TCI scheme will be described. The unified TCI scheme may refer to a scheme of integrating and managing a transmission/reception beam management scheme which is distinguished by a spatial relation info scheme used in UL transmission and a TCI state scheme used in DL reception by the UE in existing Rel-15 and Rel-16. Therefore, in case that the UE is indicated with a TCI state from the base station, based on the unified TCI scheme, beam management may be performed using the TCI state even for UL transmission. If the UE is configured with TCI-State that is higher layer signaling having tci-stateId-r17 that is higher layer signaling from the base station, the UE may perform an operation based on the unified TCI scheme by using the corresponding TCI-State. TCI-State may exist in two types of a joint TCI state and a separate TCI state.

The first type is a joint TCI state, and the UE may be indicated, by the base station via one TCI-State, with TCI-State to be applied to both UL transmission and DL reception. If the UE is indicated with joint TCI state-based TCI-State, the UE may be indicated with a parameter to be used for DL channel estimation by using an RS corresponding to qcl-Type1 in the joint TCI state-based TCI-State and a parameter to be used as a DL reception beam or reception filter by using an RS corresponding to qcl-Type2. If the UE is indicated with joint TCI state-based TCI-State, the UE may be indicated with a parameter to be used as a UL transmission beam or transmission filter by using an RS corresponding to qcl-Type2 in corresponding joint DL/UL TCI state-based TCI-State. In this case, in case that the UE is indicated with joint TCI state, the UE may apply the same beam to both UL transmission and DL reception.

The second type is a separate TCI state, and the UE may be indicated by the base station, with UL TCI-State to be applied to UL transmission and DL TCI-State to be applied to DL reception. If the UE is indicated with a UL TCI state, the UE may be indicated with a parameter to be used as a UL transmission beam or transmission filter by using a reference RS or source RS configured within the UL TCI state. If the UE is indicated with a DL TCI state, the UE may be indicated with a parameter to be used for DL channel estimation by using an RS corresponding to qcl-Type1 and a parameter to be used as a DL reception beam or reception filter by using an RS corresponding to qcl-Type2, the parameters being configured in the DL TCI state.

If the UE is indicated with both DL TCI state and UL TCI state, the UE may be indicated with a parameter to be used as a UL transmission beam or transmission filter by using a reference RS or source RS configured within the UL TCI state, and may be indicated with a parameter to be used for DL channel estimation by using an RS corresponding to qcl-Type1 and a parameter to be used as a DL reception beam or reception filter by using an RS corresponding to qcl-Type2, the parameters being configured in the DL TCI state. In this case, in case that the DL TCI state indicated to the UE and the reference RS or source RS configured within the UL TCI state are different, the UE may individually apply a UL transmission beam and DL reception beam based on the indicated UL TCI state and DL TCI state.

The UE may be configured with up to 128 joint TCI states for each specific BWP in a specific cell via higher layer signaling by the base station, and may be configured, based on a UE capability report, with up to 64 or 128 DL TCI states among separate TCI states, for each specific BWP in a specific cell via higher layer signaling. The joint TCI states and DL TCI states among the separate TCI states may use the same higher layer signaling structure. For example, if 128 joint TCI states are configured, and 64 DL TCI states among the separate TCI states are configured, the 64 DL TCI states may be included in the 128 joint TCI states.

Up to 32 or 64 UL TCI states among the separate TCI states may be configured based on the UE capability report, for each specific BWP in a specific cell via higher layer signaling. Similar to the relationship between the joint TCI states and the DL TCI states among the separate TCI states, the same higher layer signaling structure may also be used for the joint TCI states and the UL TCI states among separate TCIs. The UL TCI states among the separate TCIs may use a higher layer signaling structure different from that for the joint TCI states and for the DL TCI states among the separate TCI states. As in the above, using the same higher layer signaling structure or using different higher layer signaling structures may be defined in the Standards. Using different higher layer signaling structures or using the same higher layer signaling structure may be distinguished via another higher layer signaling configured by the base station, based on the UE capability report including information on whether there is a use scheme supportable by the UE from among the two types.

The UE may receive a transmission/reception beam-related indication in a unified TCI scheme by using one scheme among the joint TCI state and separate TCI state configured by the base station. The UE may be configured with whether to use one of the joint TCI state and the separate TCI state, by the base station via higher layer signaling.

The UE may receive a transmission/reception beam-related indication by using one scheme selected from among the joint TCI state and the separate TCI state via higher layer signaling, wherein a method of transmission/reception beam indication from the base station may include two methods of a MAC-CE-based indication method and a MAC-CE-based activation and DCI-based indication method.

In case that the UE is configured, via higher layer signaling, to receive a transmission/reception beam-related indication by using the joint TCI state scheme, the UE may receive a MAC-CE indicating the joint TCI state from the base station and perform a transmission/reception beam applying operation, and the base station may schedule, for the UE, reception of a PDSCH including the MAC-CE via a PDCCH. If there is one joint TCI state included in the MAC-CE, the UE may transmit, to the base station, a PUCCH including HARQ-ACK information indicating whether reception of the PDSCH including the corresponding MAC-CE is successful, and may determine a UL transmission beam or transmission filter and a DL reception beam or reception filter by using the indicated joint TCI state from 3 ms after transmission of the PUCCH. If there are two or more joint TCI states included in the MAC-CE, the UE may transmit, to the base station, the PUCCH including HARQ-ACK information indicating whether reception of the PDSCH including the corresponding MAC-CE is successful, identify, from 3 ms after transmission of the PUCCH, that multiple joint TCI states indicated by the MAC-CE correspond to respective codepoints of the TCI state field of DCI format 1_1 or 1_2, and activate the joint TCI states indicated by the MAC-CE. Thereafter, the UE may receive DCI format 1_1 or 1_2, and apply one joint TCI state indicated by a TCI state field in the corresponding DCI to UL transmission and DL reception beams. In this case, DCI format 1_1 or 1_2 may include DL data channel scheduling information with or without DL assignment.

In case that the UE is configured, via higher layer signaling, to receive a transmission/reception beam-related indication by using the separate TCI state scheme, the UE may receive a MAC-CE indicating the separate TCI state from the base station and perform a transmission/reception beam applying operation, and the base station may schedule, for the UE, a PDSCH including the corresponding MAC-CE via a PDCCH. If there is one separate TCI state set included in the MAC-CE, the UE may transmit, to the base station, the PUCCH including HARQ-ACK information indicating whether reception of the corresponding PDSCH is successful. From 3 ms after transmission of the PUCCH, the UE may determine a UL transmission beam or transmission filter and a DL reception beam or reception filter by using separate TCI states included in the indicated separate TCI state set. In this case, the separate TCI state set may refer to a single separate TCI state or multiple separate TCI states that one codepoint of the TCI state field in DCI format 1_1 or 1_2 may have, and one separate TCI state set may include one DL TCI state, include one UL TCI state, or include one DL TCI state and one UL TCI state. If there are two or more separate TCI state sets included in the MAC-CE, the UE may transmit, to the base station, the PUCCH including HARQ-ACK information indicating whether reception of the corresponding PDSCH is successful, identify, from 3 ms after transmission of the PUCCH, that multiple separate TCI state sets indicated by the MAC-CE correspond to respective codepoints of the TCI state field of DCI format 1_1 or 1_2, and activate the indicated separate TCI state sets. In this case, the respective codepoints of the TCI state field of DCI format 1_1 or 1_2 may indicate one DL TCI state, indicate one UL TCI state, or indicate each of one DL TCI state and one UL TCI state. The UE may receive DCI format 1_1 or 1_2 and apply a separate TCI state set indicated by the TCI state field in the DCI to UL transmission and DL reception beams. In this case, DCI format 1_1 or 1_2 may include DL data channel scheduling information with or without DL assignment.

The MAC-CE used to activate or indicate the single joint TCI state and the separate TCI state described above may exist for each of the joint and separate TCI state schemes, and a TCI state may be activated or indicated based on one of the joint TCI state scheme and the separate TCI state scheme by using one MAC-CE. Through the figures described later, various MAC-CE structures for joint or separate TCI state activation and indication may be considered.

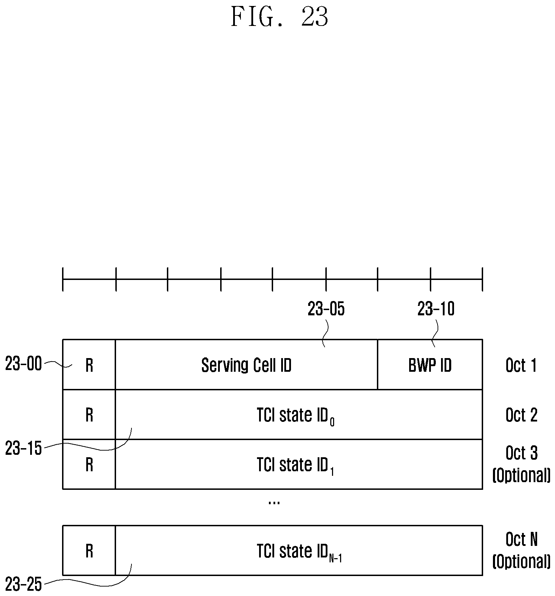

FIG. 23 is a diagram illustrating a MAC-CE structure for activation and indication of a joint TCI state in a wireless communication system according to an embodiment of the disclosure.

With reference to FIG. 23 , an S field 23-00 may indicate the number of pieces of joint TCI state information included in a MAC-CE. If a value of the S field 23-00 is 1, the corresponding MAC-CE may indicate one joint TCI state and may have a length of only up to a second octet. If the value of the S field 23-00 is 0, the corresponding MAC-CE may include two or more pieces of joint TCI state information, respective joint TCI states may be activated at respective codepoints of the TCI state field of DCI format 1_1 or 1_2, and up to 8 joint TCI states may be activated. Configuring the values of 0 and 1 of the S field 23-00 is not limited to the above configuration method, wherein value 0 may indicate to include one joint TCI state, and value 1 may indicate to include two or more pieces of joint TCI state information. This interpretation of the S field may also be applied to other embodiments of the disclosure. TCI states indicated via a TCI state $ID_0$ field 23-15 to a TCI state $ID_{N-1}$ field 23-25 may correspond to a zeroth codepoint to an (N-1)th codepoint of the TCI state field of DCI format 1_1 or 1_2, respectively. A serving cell ID field 23-05 may indicate a serving cell identifier (ID), and a BWP ID field 23-10 may indicate a BWP ID. An R field may be a 1-bit reserve field that does not include indication information.

FIG. 23 is a diagram illustrating another MAC-CE structure for activation and indication of a joint TCI state in a wireless communication system according to an embodiment of the disclosure.

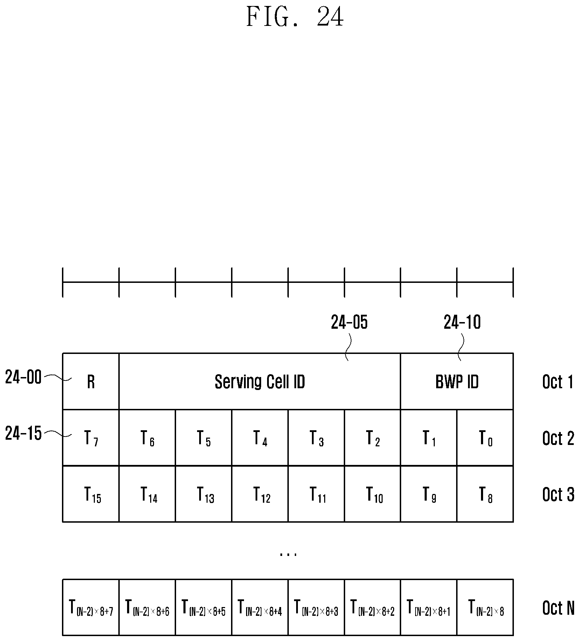

In FIG. 24, a serving cell ID field 24-05 may indicate a serving cell ID, and a BWP ID field 24-10 may indicate a BWP ID. An R field 24-00 may be a 1-bit reserve field that does not include indication information. Each field present in a second octet to an N-th octet is a bitmap indicating each joint TCI state configured via higher layer signaling. As an example, $T_7$ 24-15 may be a field that indicates whether an eighth joint TCI state configured via higher layer signaling is indicated. If there is one joint TCI state transferred via the MAC-CE structure of FIG. 24, the UE may apply the joint TCI state indicated via the MAC-CE to UL transmission and DL reception beams. If there are two or more joint TCI states transferred via the MAC-CE structure, the UE may identify that the joint TCI states indicated via the MAC-CE correspond to respective codepoints of the TCI state field of DCI format 1_1 or 1_2, and may activate the respective joint TCI states, and starting from a joint TCI state having a lowest index from among the indicated joint TCI states, the joint TCI states sequentially corresponding to codepoints with low indexes of the TCI state field of DCI format 1_1 or 1_2 may be activated in order.

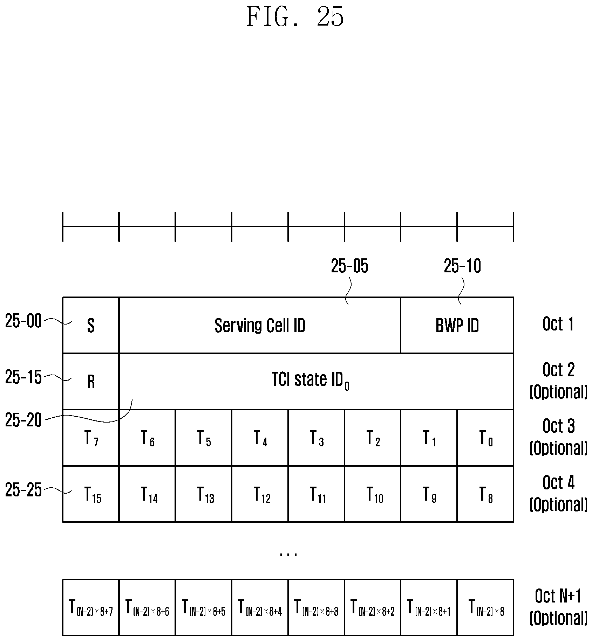

FIG. 25 is a diagram illustrating a MAC-CE structure for activation and indication of a joint TCI state in a wireless communication system according to an embodiment of the disclosure.

In FIG. 25, a serving cell ID field 25-05 may indicate a serving cell ID, and a BWP ID field 25-10 may indicate a BWP ID.

An S field 25-00 may indicate the number of pieces of joint TCI state information included in a MAC-CE. As an example, if a value of the S field 25-00 is 1, the corresponding MAC-CE may indicate one joint TCI state and may include only up to a second octet, and the joint TCI state may be indicated to the UE via a TCI state $ID_0$ field 25-00. For example, if the value of the S field 25-00 is 0, the corresponding MAC-CE may include two or more pieces of joint TCI state information, respective codepoints of the TCI state field of DCI format 1_1 or 1_2 may activate the respective joint TCI states, up to 8 joint TCI states may be activated, no second octet may exist, and there may be a first octet and a third octet to an (N+1)th octet on the MAC-CE structure in FIG. 25. Respective fields present in the third octet to the (N+1)th octet are bitmaps indicating respective joint TCI states configured via higher layer signaling. For example, $T_{15}$ 25-25 may be a field that indicates whether a 16th joint TCI state configured via higher layer signaling is indicated.

If there is one joint TCI state transferred via the MAC-CE structure in FIG. 25, the UE may apply the joint TCI state indicated via the MAC-CE to UL transmission and DL reception beams. If there are two or more joint TCI states transferred via the MAC-CE structure in FIG. 25, the UE may identify that respective joint TCI states indicated via the MAC-CE correspond to respective codepoints of the TCI state field of DCI format 1_1 or 1_2, and may activate the respective joint TCI states. Starting from a joint TCI state having a lowest index from among the indicated joint TCI states, the joint TCI states sequentially corresponding to codepoints with low indexes of the TCI state field of DCI format 1_1 or 1_2 may be activated in order.

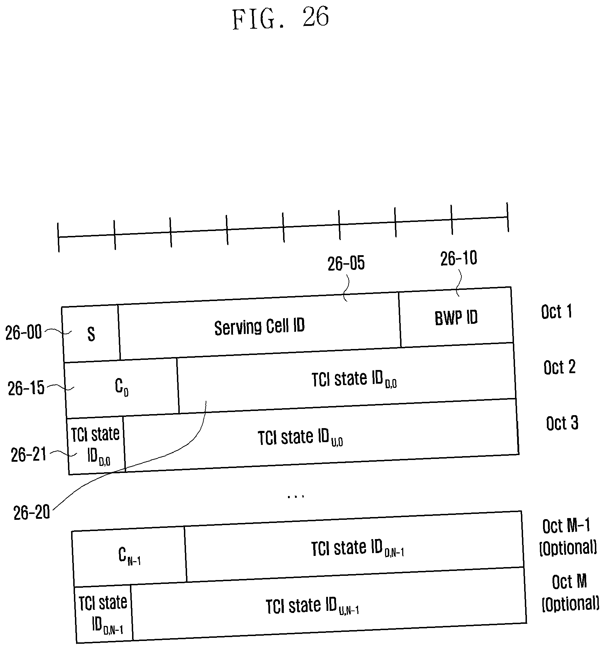

FIG. 26 is a diagram illustrating a MAC-CE structure for activation and indication of a separate TCI state in a wireless communication system according to an embodiment of the disclosure.

In FIG. 26, a serving cell ID field 26-05 may indicate a serving cell ID, and a BWP ID field 26-10 may indicate a BWP ID.

An S field 26-00 may indicate the number of pieces of separate TCI state set information included in a MAC-CE. If a value of the S field 26-00 is 1, the corresponding MAC-CE may indicate one separate TCI state set and may include only up to a third octet. If the value of the S field 26-00 is 0, the corresponding MAC-CE may include two or more pieces of separate TCI state set information, respective codepoints of the TCI state field of DCI format 1_1 or 1_2 may activate respective separate TCI state sets, and up to 8 separate TCI state sets may be activated. A $C_0$ field 26-15 may indicate which separate TCI states are included in an indicated separate TCI state set. For example, for a value of the $C_0$ field, a value of "00" may indicate reserve, a value of "01" may indicate one DL TCI state, a value of "10" may indicate one UL TCI state, and a value of " 11" may indicate one DL TCI state and one UL TCI state, but the field is not limited to these specific values. A TCI state $ID_{D,0}$ field 26-20 and TCI state $ID_{U,0}$ field 26-25 may refer to a DL TCI state and UL TCI state which may be included in a zeroth separate TCI state set so as to be indicated, respectively. If the value of the $C_0$ field is "01", the TCI state $ID_{D,0}$ field 26-20 may indicate a DL TCI state, and the TCI state $ID_{U,0}$ field 26-25 may be disregarded. If the $C_0$ field value is "10", the TCI state $ID_{D,0}$ field 26-20 may be disregarded, and the TCI state $ID_{U,0}$ field 26-25 may indicate a UL TCI state. If the $C_0$ field value is "11", the TCI state $ID_{D,0}$ field 26-20 may indicate a DL TCI state, and the TCI state $ID_{U,0}$ field 26-25 may indicate a UL TCI state.

FIG. 26 may illustrate an example of MAC-CE in case that the UL TCI state among the separate TCI states uses higher layer signaling structures such as the DL TCI state and the joint TCI state among the separate TCI states, as described above. Accordingly, the lengths of the TCI state $ID_{D,0}$ field 26-20 and TCI state $ID_{U,0}$ field 26-25 may be 7 bits to express up to 128 TCI states. Therefore, in order to use 7 bits for the TCI state $ID_{D,0}$ field 26-20, 6 bits 26-20 may be allocated to a second octet and 1 bit 26-21 may be allocated to a third octet. Also, FIG. 26 may mean the case where the UL TCI state among separate TCI states uses a higher layer signaling structure different from that for a joint TCI state and for a DL TCI state among the separate TCI states, as described above. Accordingly, since the UL TCI state needs 6 bits to enable expression of up to 64 UL TCI states, a first bit of the TCI state $ID_{U,0}$ field 26-25 may be fixed to be 0 or 1, and bits expressing an actual UL TCI state may correspond to only a total of 6 bits from a second bit to a seventh bit.

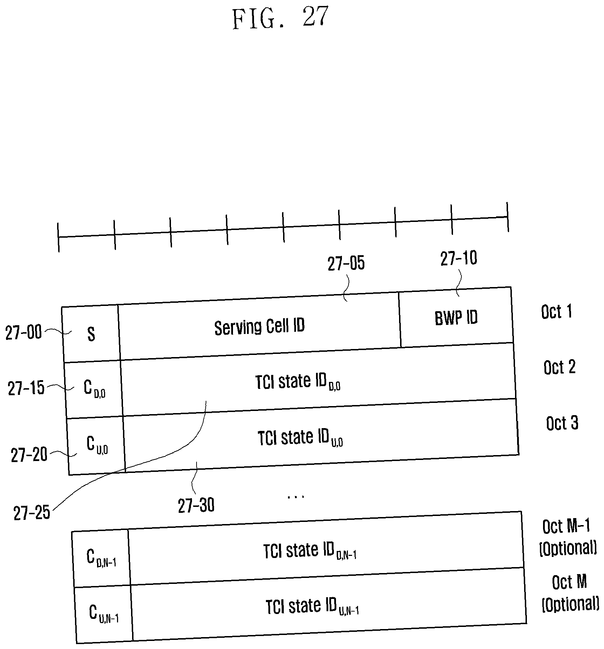

FIG. 27 is a diagram illustrating still other MAC-CE structure for activation and indication of a separate TCI state in a wireless communication system according to an embodiment of the disclosure.

In FIG. 27, a serving cell ID field 27-05 may indicate a serving cell ID, and a BWP ID field 27-10 may indicate a BWP ID. An S field 27-00 may indicate the number of pieces of separate TCI state set information included in a MAC-CE. If a value of the S field 27-00 is 1, the corresponding MAC-CE may indicate one separate TCI state set and may include only up to a third octet. If the value of the S field 27-00 is 0, the corresponding MAC-CE may include two or more pieces of separate TCI state set information, respective codepoints of the TCI state field of DCI format 1_1 or 1_2 may correspond to respective separate TCI state sets, causing activation of the respective separate TCI state sets, and up to 8 separate TCI state sets may be activated. $AC_{D,0}$ field 27-15 may indicate whether an indicated separate TCI state set includes a DL TCI state, wherein if the value is 1, a DL TCI state may be included and the DL TCI state may be indicated via a TCI state $ID_{D,0}$ field 27-25, and if the value is 0, no DL TCI state is included and the TCI state $ID_{D,0}$ field 27-25 may be disregarded. Similarly, a $C_{U,0}$ field 27-20 may indicate whether an indicated separate TCI state set includes a UL TCI state, wherein if the value is 1, a UL TCI state may be included and the UL TCI state may be indicated via a TCI state $ID_{U,0}$ field 27-30, and if the value is 0, no UL TCI state is included and the TCI state $ID_{U,0}$ field 27-30 may be disregarded.

FIG. 27 is a diagram illustrating an example of a MAC-CE in case that a UL TCI state among separate TCI states uses the same higher layer signaling structure as that for a joint TCI state and for a DL TCI state among the separate TCI states, as described above. Accordingly, the lengths of the TCI state $ID_{D,0}$ field 27-25 and TCI state $ID_{U,0}$ field 27-30 may be 7 bits to express up to 128 TCI states. Described is an example of MAC-CE in case that a UL TCI state among separate TCI states uses a higher layer signaling structure different from that for a joint TCI state and for a DL TCI state among the separate TCI states, as described above. Accordingly, since the UL TCI state needs 6 bits to enable expression of up to 64 UL TCI states, a first bit of the TCI state $ID_{D,0}$ field 27-25 may be fixed to be 0 or 1, and bits expressing an actual UL TCI state may correspond to only a total of 6 bits from a second bit to a seventh bit.

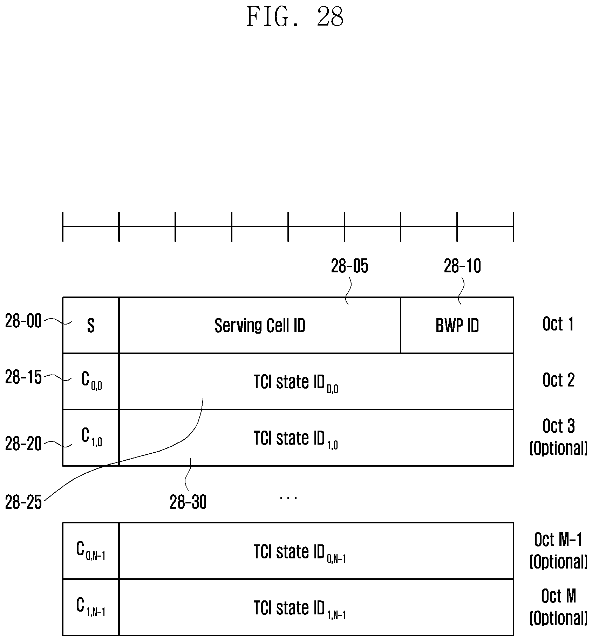

FIG. 28 is a diagram illustrating still other MAC-CE structure for activation and indication of a separate TCI state in a wireless communication system according to an embodiment of the disclosure.

In FIG. 28, a serving cell ID field 28-05 may indicate a serving cell ID, and a BWP ID field 28-10 may indicate a BWP ID. An S field 28-00 may indicate the number of pieces of separate TCI state set information included in a MAC-CE. As an example, if a value of the S field 28-00 is 1, the corresponding MAC-CE may indicate one separate TCI state set and may include only up to a third octet. The MAC-CE structure in FIG. 28 may indicate one separate TCI state set by using two octets, if the corresponding separate TCI state set includes a DL TCI state, the first octet of the two octets may indicate the DL TCI state, and the second octet may indicate a UL TCI state. This order may be changed.

For example, if the value of the S field 28-00 is 0, the corresponding MAC-CE may include two or more pieces of separate TCI state set information, respective codepoints of the TCI state field of DCI format 1_1 or 1_2 may activate respective separate TCI state sets, and up to 8 separate TCI state sets may be activated. A $C_{0,0}$ field 28-25 may have a meaning for distinguishing whether a TCI state indicated by a TCI state $ID_{0,0}$ field 28-25 is a DL TCI state or a UL TCI state, and the value of 1 may indicate a DL TCI state, the DL TCI state may be indicated via the TCI state $ID_{0,0}$ field 28-25, and a third octet may exist. In this case, if a value of a $C_{1,0}$ field 28-20 is 1, a UL TCI state may be indicated via a TCI state $ID_{0,0}$ field 28-20, and if the value of the $C_{1,0}$ field 28-20 is 0, the TCI state $ID_{1,0}$ field 28-30 may be disregarded. If the value of the $C_{0,0}$ field 28-15 is 0, a UL TCI state may be indicated via the TCI state $ID_{0,0}$ field 28-25, and a third octet may not exist. This illustration is just examples.

FIG. 28 may illustrate an example of a MAC-CE in case that a UL TCI state among separate TCI states uses the same higher layer signaling structure as that for a joint TCI state and for a DL TCI state among the separate TCI states. Accordingly, the lengths of the TCI state $ID_{0,0}$ field 28-25 and the TCI state $ID_{1,0}$ field 28-30 may be 7 bits to express up to 128 TCI states. Alternatively, FIG. 28 may illustrate an example of a MAC-CE in case that a UL TCI state among separate TCI states uses a higher layer signaling structure different from that for a joint TCI state and for a DL TCI state among the separate TCI states, as described above. Accordingly, the TCI state $ID_{0,0}$ field 28-25 may be 7 bits enabling expression of both 6 bits to express up to 64 possible UL TCI states and 7 bits to express up to 128 possible DL TCI states. If the value of the $C_{1,0}$ field 28-15 is 1 and thus the TCI state $ID_{0,0}$ field 28-25 indicates a UL TCI state, a first bit of the TCI state $ID_{0,0}$ field 28-25 may be fixed to be 0 or 1, and bits expressing an actual UL TCI state may correspond to only a total of 6 bits from a second bit to a seventh bit.

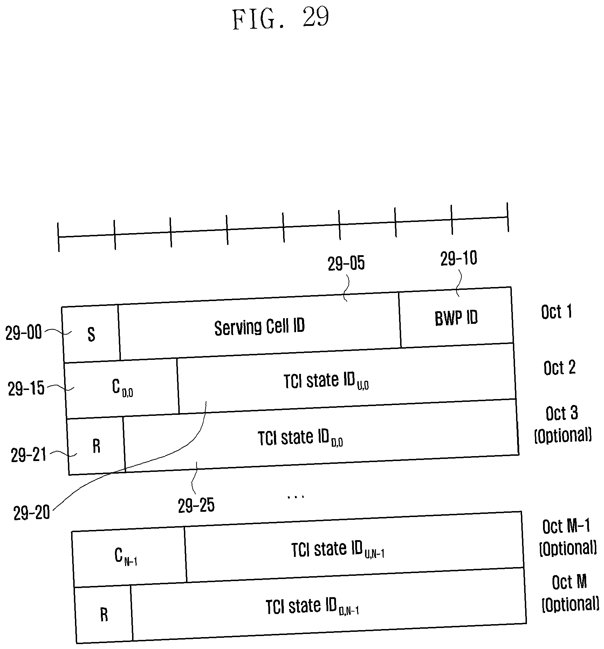

FIG. 29 is a diagram illustrating still other MAC-CE structure for activation and indication of a separate TCI state in a wireless communication system according to an embodiment of the disclosure.

In FIG. 29, a serving cell ID field 29-05 may indicate a serving cell ID, and a BWP ID field 29-10 may indicate each of a serving cell ID and BWP ID. An S field 28-00 may indicate the number of pieces of separate TCI state set information included in a MAC-CE. If a value of the S field 29-00 is 1, the corresponding MAC-CE may indicate one separate TCI state set and may include only up to a third octet.

For example, if the value of the S field 29-00 is 0, the corresponding MAC-CE may include two or more pieces of separate TCI state set information, respective codepoints of the TCI state field of DCI format 1_1 or 1_2 may activate respective separate TCI state sets, and up to 8 separate TCI state sets may be activated. A $C_0$ field 29-15 may indicate which separate TCI states are included in an indicated separate TCI state set, and for a value of the $C_0$ field, a value of "00" may indicate reserve, a value of "01" may indicate one DL TCI state, a value of "10" may indicate one UL TCI state, and a value of "11" may indicate one DL TCI state and one UL TCI state. However, the field is not limited to the above particular values. A TCI state $ID_{U,0}$ field 29-20 and TCI state $ID_{D,0}$ field 29-25 may refer to a UL TCI state and DL TCI state which may be included in a zeroth separate TCI state set so as to be indicated, respectively. If the value of the $C_0$

field 29-15 is "01", the TCI state $ID_{D,0}$ field 29-25 may indicate a DL TCI state, and the TCI state $ID_{U,0}$ field 29-20 may be disregarded. If the value of the $C_0$ field 29-15 is "10", a third octet may be disregarded, and the TCI state $ID_{U,0}$ field 29-20 may indicate a UL TCI state. If the value of the $C_0$ field 29-15 is "11", the TCI state $ID_{D,0}$ field 29-25 may indicate a DL TCI state, and the TCI state $ID_{U,0}$ field 29-20 may indicate a UL TCI state.

FIG. 29 may illustrate an example of a MAC-CE used in case that a UL TCI state among separate TCI states uses a higher layer signaling structure different from that for a joint TCI state and for a DL TCI state among the separate TCI states, as described above. Accordingly, 7 bits may be used for a length of the TCI state $ID_{D,0}$ field 29-25 in order to express up to 128 TCI states, and 6 bits may be used for a length of the TCI state $ID_{U,0}$ field 29-20 in order to express up to 64 TCI states.

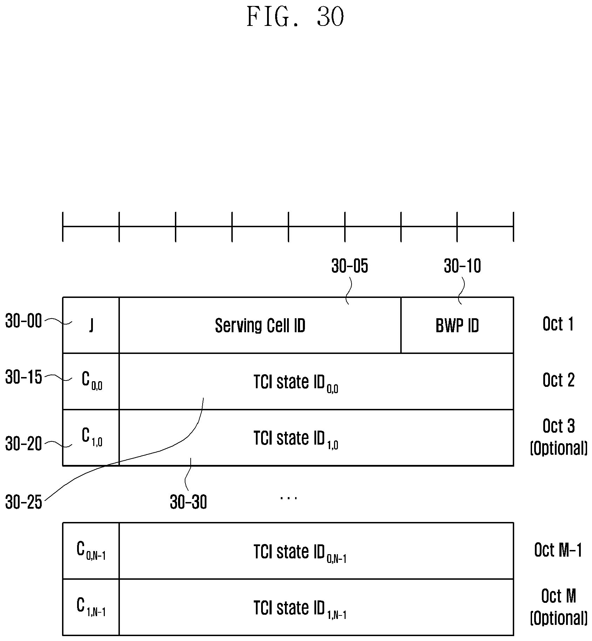

FIG. 30 is a diagram illustrating a MAC-CE structure for activation and indication of a joint TCI state and separate TCI state in a wireless communication system according to an embodiment of the disclosure.

In FIG. 30, a serving cell ID field 30-05 may indicate a serving cell identifier (ID), and a BWP ID field 30-10 may indicate a BWP ID. For example, if a value of the J field 30-00 is 1, the corresponding MAC-CE may indicate a joint TCI state, and if the value is 0, the corresponding MAC-CE may indicate a separate TCI state set.

- If the corresponding MAC-CE indicates a joint TCI state, all odd-numbered octets (a third octet, a fifth octet, ...) other than a first octet may be disregarded. A $C_{0,0}$ field 30-15 may indicate whether the corresponding MAC-CE indicates one joint TCI state or includes two or more pieces of TCI state information, and whether respective codepoints of the TCI state field of DCI format 1_1 or 1_2 activate respective TCI states. If a value of the $C_{0,0}$ field 30-15 is 1, the corresponding MAC-CE may indicate one joint TCI state, and a third octet and more may not exist. If the value of the $C_{0,0}$ field 30-15 is 0, two or more joint TCI states indicated by the corresponding MAC-CE may correspond to respective codepoints of the TCI state field of DCI format 1_1 or 1_2, and may be activated. The TCI state $ID_{0,0}$ may refer to a first indicated joint TCI state.

- If the corresponding MAC-CE indicates a separate TCI state set, the $C_{0,0}$ field 30-15 may have a meaning of distinguishing whether a TCI state indicated by a TCI state $ID_{0,0}$ field 30-25 is a DL TCI state or a UL TCI state, a value of 1 may indicate a DL TCI state, the DL TCI state may be indicated via the TCI state $ID_{0,0}$ field 30-25, and a third octet may exist. In this case, if a value of a $C_{1,0}$ field 30-20 is 1, a UL TCI state may be indicated via a TCI state $ID_{1,0}$ field 30-30, and if the value of the $C_{1,0}$ field 30-20 is 0, the TCI state $ID_{1,0}$ field 30-30 may be disregarded. If the value of the $C_{0,0}$ field 30-15 is 0, a UL TCI state may be indicated via the TCI state $ID_{0,0}$ field 30-25, and a third octet may not exist. FIG. 30 may illustrate an example of a MAC-CE used in case that a UL TCI state among separate TCI states uses the same higher layer signaling structure as that for a joint TCI state and for a DL TCI state among the separate TCI states, as described above. Accordingly, lengths of the TCI state $ID_{0,0}$ field 30-25 and TCI state $ID_{1,0}$ field 30-30 may be 7 bits to express up to 128 TCI states. In addition, FIG. 30 may illustrate an example of a MAC-CE used in case that a UL TCI state among separate TCI states uses a higher layer signaling structure different from that for a joint TCI state and for a DL TCI state among the separate TCI states, as described above. Accordingly, the TCI state $ID_{0,0}$ field 30-25 may use 7 bits enabling expression of both 6 bits to express up to 64 possible UL TCI states and 7 bits to express up to 128 possible DL TCI states. If the value of the $C_{0,0}$ field 30-15 is 1 and thus the TCI state $ID_{0,0}$ field 30-25 indicates a UL TCI state, a first bit of the TCI state $ID_{0,0}$ field 30-25 may be fixed to be 0 or 1, and bits expressing an actual UL TCI state may correspond to a total of 6 bits from a second bit to a seventh bit.

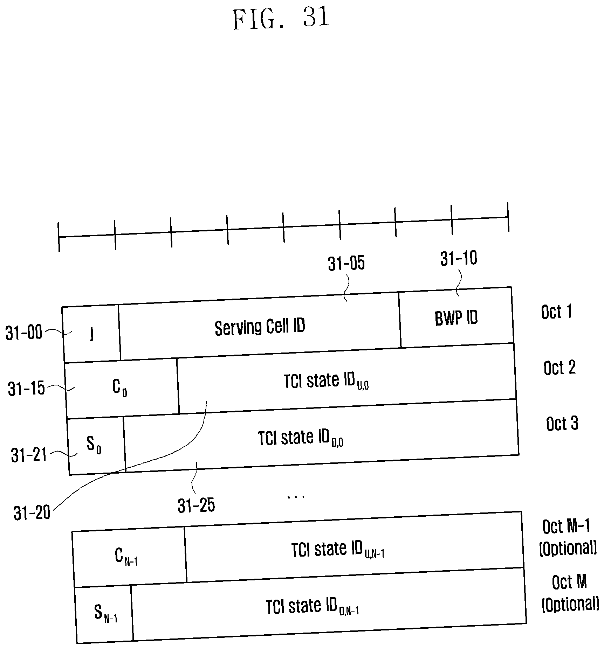

FIG. 31 is a diagram illustrating still other MAC-CE structure for activation and indication of a joint TCI state and a separate TCI state in a wireless communication system according to an embodiment of the disclosure.

In FIG. 31, a serving cell ID field 31-05 and BWP ID field 31-10 may indicate a serving cell ID and BWP ID, respectively. For example, if a value of the J field 31-00 is 1, the corresponding MAC-CE may indicate a joint TCI state, and if the value is 0, the corresponding MAC-CE may indicate a separate TCI state set.

- In case that the corresponding MAC-CE indicates the joint TCI state, all even-numbered octets (a second octet, a fourth octet, ...) other than a first octet may be disregarded. An $S_0$ field 31-21 may indicate whether the corresponding MAC-CE indicates one joint TCI state or whether two or more TCI states correspond to respective codepoints of the TCI state field of DCI format 1_1 or 1_2 and are activated. If a value of the $S_0$ field 31-21 is 1, the corresponding MAC-CE may indicate one joint TCI state, and a third octet and more may not exist. If the value of the $S_0$ field 31-21 is 0, the corresponding MAC-CE may include two or more pieces of joint TCI state information, and respective codepoints of the TCI state field of DCI format 1_1 or 1_2 may activate respective joint TCI states. The TCI state $ID_{D,0}$ may refer to a first indicated joint TCI state.

- In case that the corresponding MAC-CE indicates a separate TCI state set, a $C_0$ field 31-15 may be a field indicating which separate TCI states are included in an indicated separate TCI state set. For a value of the $C_0$ field 31-15, a value of "00" may indicate reserve, a value of "01" may indicate one DL TCI state, a value of "10" may indicate one UL TCI state, and a value of "11" may indicate one DL TCI state and one UL TCI state. These values are merely examples and the disclosure is not limited by these examples. A TCI state $ID_{U,0}$ field 31-20 and TCI state $ID_{D,0}$ field 31-25 may refer to a UL TCI state and DL TCI state which may be included in a zeroth separate TCI state set so as to be indicated, respectively. If the value of the $C_0$ field 31-15 is "01", the TCI state $ID_{D,0}$ field 31-25 may indicate a DL TCI state, and the TCI state $ID_{U,0}$ field 31-20 may be disregarded. If the value of the $C_0$ field 31-15 is "10", the TCI state $ID_{U,0}$ field 31-20 may indicate a UL TCI state, and if the value of the $C_0$ field 31-15 is "11", the TCI state $ID_{D,0}$ field 31-25 may indicate a DL TCI state. The TCI state $ID_{U,0}$ field 31-20 may refer to a UL TCI state. If the value of the $S_0$ field 31-21 is 1, the corresponding MAC-CE may indicate one separate TCI state set, and a fourth octet and more may not exist. If the value of the $S_0$ field 31-21 is 0, the corresponding MAC-CE may include two or more pieces of separate TCI state set information, respective codepoints of the TCI state field of DCI format 1_1 or 1_2 may activate respective separate TCI state sets, and up to 8 separate TCI state sets may be activated. For example, in case that the value of the $S_0$ field 31-21 is 0, if values of $C_1$, ... , $C_{N-1}$ fields are "10", this indicates that only UL TCI states are indicated, so that a fifth octet, a seventh octet, ... , an M-th octet may be disregarded. Alternatively, an Sn field may indicate whether an octet for a subsequent separate TCI state set exists. For example, if a value of the Sn field is 1, a subsequent octet may not exist, and if the value of the Sn field is 0, subsequent octets including $C_{n+1}$ and TCI state $ID_{U,n+1}$ may exist. These Sn field values are merely examples, and the disclosure is not limited thereto.

- FIG. 31 may illustrate an example of a MAC-CE used in case that a UL TCI state among separate TCI states uses a higher layer signaling structure different from that for a joint TCI state and for a DL TCI state among the separate TCI states, as described above. Accordingly, a length of the TCI state $ID_{D,0}$ field 31-25 may be 7 bits to express up to 128 TCI states, and a length of the TCI state $ID_{U,0}$ field 31-20 may be 6 bits to express up to 64 TCI states.

In case that the UE receives a transmission/reception beam-related indication by using a joint TCI state scheme or separate TCI state scheme via higher layer signaling, the UE may receive a PDSCH including a MAC-CE indicating the joint TCI state or separate TCI state from the base station so as to perform application to a transmission/reception beam. In case that there are two or more joint TCI states or separate TCI state sets included in the MAC-CE, from 3 ms after transmission of a PUCCH including HARQ-ACK information indicating the success or failure in reception of a corresponding PDSCH, the UE may identify that multiple joint TCI states or separate TCI state sets indicated by the MAC-CE correspond to respective codepoints of the TCI state field of DCI format 1_1 or 1_2, and may activate the indicated joint TCI states or separate TCI state sets. Thereafter, the UE may receive DCI format 1_1 or 1_2 and apply, to UL transmission and DL reception beams, one joint TCI state or separate TCI state set indicated by a TCI state field in corresponding DCI. In this case, DCI format 1_1 or 1_2 may include or not include DL data channel scheduling information (with or without DL assignment).

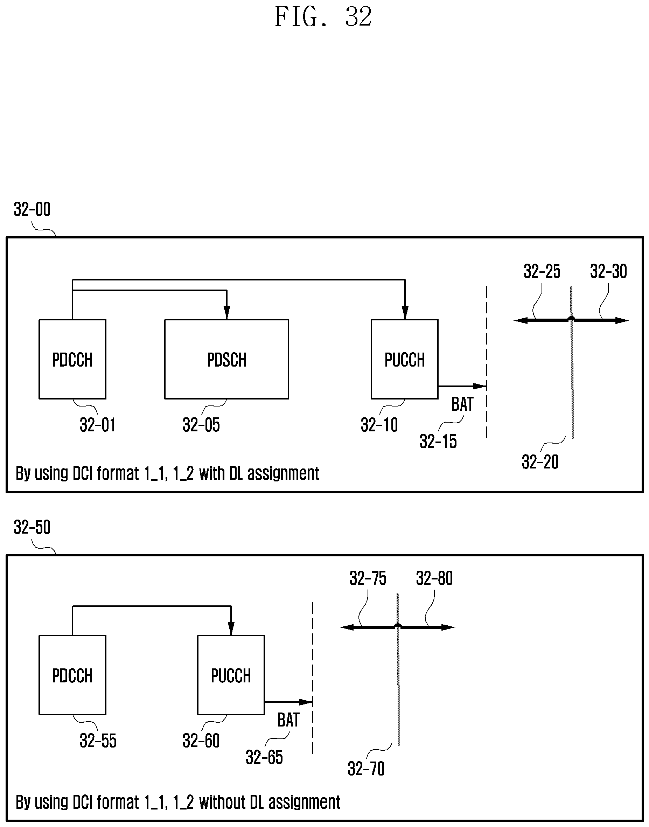

FIG. 32 is a diagram illustrating a beam application time (BAT) that may be considered in case that a unified TCI scheme is used in a wireless communication system according to an embodiment of the disclosure.

As described above, the UE may receive DCI format 1_1 or 1_2 which includes DL data channel scheduling information (with DL assignment) or does not include DL data channel scheduling information (without DL assignment) from a base station, and apply one joint TCI state or separate TCI state set indicated by the TCI state field in the corresponding DCI to UL transmission and DL reception beams.

- DCI format 1_1 or 1_2 with DL assignment (32-00): In case that the UE receives DCI format 1_1 or 1_2 including DL data channel scheduling information from the base station (32-01) and indicates one joint TCI state or separate TCI state set based on a unified TCI scheme, the UE may receive a PDSCH scheduled based on the received DCI (32-05), and transmit, to the base station, a PUCCH including HARQ-ACK indicating the success or failure in reception of the PDSCH and the DCI (32-10). In this case, the HARQ-ACK may include the success or failure in reception of both the DCI and the PDSCH, the UE may transmit NACK in case that at least one of the DCI and the PDSCH cannot be received, and the UE may transmit ACK in case that both have been successfully received.
- DCI format 1_1 or 1_2 without DL assignment (32-50): In case that the UE receives DCI format 1_1 or 1_2 including no DL data channel scheduling information from the base station (32-55) and indicates one joint TCI state or separate TCI state set based on the unified TCI scheme, the UE may assume the following for the corresponding DCI.

  - CRC scrambled using CS-RNTI is included.
  - Values of all bits allocated to all fields used as a redundancy version (RV) field are 1.
  - Values of all bits allocated to all fields used as a Modulation and Coding Scheme (MCS) field are 1.
  - Values of all bits allocated to all fields used as a New Data Indication (NDI) field are 0.
  - Values of all bits allocated to a Frequency Domain Resource Allocation (FDRA) field are 0 for FDRA type 0, values of all bits allocated to the FDRA field are 1 for FDRA type 1, and in case that an FDRA scheme is dynamicSwitch, values of all bits allocated to the FDRA field are 0.

The UE may transmit, to the base station, a PUCCH including HARQ-ACK indicating the success or failure in reception of DCI format 1_1 or 1_2 (32-60).

- With respect to both DCI format 1_1 or 1_2 with DL assignment (32-00) and without DL assignment (32-50), if a new TCI state indicated via the DCI 32-01 or 32-55 is the same as a TCI state which has already been indicated and applied to UL transmission and DL reception beams, the UE may maintain the previously applied TCI state. If the new TCI state is different from the previously indicated TCI state, the UE may determine that a time point of applying the joint TCI state or separate TCI state set, which may be indicated from the TCI state field included in the DCI, is applied (interval of 32-30 or 32-80) from a start point 32-20 or 32-70 of a first slot after a beam application time (BAT) 32-15 or 32-65 subsequent to PUCCH transmission, and may use the previously indicated TCI-state until an interval 32-25 or 32-75 before the start point 32-20 or 32-70 of the corresponding slot.

- With respect to both DCI format 1_1 or 1_2 with DL assignment (32-00) and without DL assignment (32-50), the BAT is a specific number of OFDM symbols and may be configured via higher layer signaling based on UE capability report information. The BAT and a numerology for the first slot after the BAT may be determined based on a smallest numerology among all cells to which the joint TCI state or separate TCI state set indicated via the DCI is applied.

The UE may apply one joint TCI state indicated via the MAC-CE or DCI to reception of CORESETs linked to all UE-specific search spaces, reception of a PDSCH scheduled via a PDCCH transmitted from the corresponding CORESET, transmission of a PUSCH, and transmission of all PUCCH resources.

In case that one separate TCI state set indicated via the MAC-CE or DCI includes one DL TCI state, the UE may apply the one separate TCI state set to reception of CORESETs linked to all UE-specific search spaces and reception of a PDSCH scheduled via a PDCCH transmitted from the corresponding CORESET, and may apply the same to all PUSCH and PUCCH resources, based on a previously indicated UL TCI state.

In case that one separate TCI state set indicated via the MAC-CE or DCI includes one UL TCI state, the UE may apply the separate TCI state set to all PUSCH and PUCCH resources, and based on the previously indicated DL TCI state, the UE may apply the separate TCI state set to reception of CORESETs linked to all UE-specific search spaces and reception of a PDSCH scheduled via a PDCCH transmitted from the corresponding CORESET.

In case that one separate TCI state set indicated via the MAC-CE or DCI includes one DL TCI state and one UL TCI state, the UE may apply the DL TCI state to reception of CORESETs linked to UE-specific search spaces and reception of a PDSCH scheduled via a PDCCH transmitted from the corresponding CORESET, and may apply the UL TCI state to all PUSCH and PUCCH resources.

In the above-described examples of the MAC CE in FIG. 23 to 31, it is possible that one or more elements are coupled to each other.

<Multi-TCI State Indication and Activation Method Based on Unified TCI Scheme>

As an embodiment of the disclosure, multi-TCI state indication and activation method based on unified TCI scheme will be described. The multi-TCI state indication and activation method may refer to a case in which the number of indicated joint TCI states is extended to two or more and a case in which each of a DL TCI state and a UL TCI state included in one separate TCI state set is expanded to two or more. If one separate TCI state set can include up to two DL TCI states and up to two UL TCI states, a total of 8 combinations of DL TCI states and UL TCI states that one separate TCI state set can have may be possible ({DL,UL}={ 0,1}, {0,2}, {1,0}, {1,1}, {1,2}, {2,0}, {2,1}, {2,2}, where numbers indicate the number of TCI states).

In case that the UE is indicated with multiple TCI states based on the MAC-CE by the base station, the UE may receive two or more joint TCI states or one separate TCI state set from the base station via the corresponding MAC-CE. The base station may schedule reception of a PDSCH including the corresponding MAC-CE for the UE via a PDCCH, and from 3 ms after transmission of a PUCCH including HARQ-ACK information indicating the success or failure of reception of the PDSCH including the corresponding MAC-CE, the UE may determine a UL transmission beam or transmission filter and a DL reception beam or reception filter, based on the indicated two or more joint TCI states or one separate TCI state set.

In case that the UE is indicated with multiple TCI states based on DCI format 1_1 or 1_2 from the base station, respective codepoints of one TCI state field in the corresponding DCI format 1_1 or 1_2 may indicate two or more joint TCI states or two or more separate TCI state sets. In this case, the UE may receive the MAC-CE from the base station, and activate two or more joint TCI states or two or more separate TCI state sets corresponding to the respective codepoints of one TCI state field in the corresponding DCI format 1_1 or 1_2. The base station may schedule reception of a PDSCH including the corresponding MAC-CE for the UE via a PDCCH, and the UE may activate TCI state information included in the MAC-CE from 3 ms after transmission of a PUCCH including HARQ-ACK information indicating the success or failure of reception of the PDSCH including the corresponding MAC-CE.

In case that the UE is indicated with multiple TCI states based on DCI format 1_1 or 1_2 from the base station, two or more TCI state fields may exist in the corresponding DCI format 1_1 or 1_2, and one of two or more joint TCI states or two or more separate TCI state sets may be indicated based on the respective TCI state fields. In this case, the UE may receive the MAC-CE from the base station and activate the joint TCI states or separate TCI state sets corresponding to respective codepoints of the two or more TCI state fields in the corresponding DCI format 1_1 or 1_2. The base station may schedule reception of the PDSCH including the corresponding MAC-CE for the terminal via the PDCCH. The UE may activate TCI state information included in the MAC-CE from 3 ms after transmission of the PUCCH including HARQ-ACK information indicating the success or failure of reception of the PDSCH including the corresponding MAC-CE. The UE may be configured for the presence or absence of one or more additional TCI state fields via higher layer signaling, the bit length of the additional TCI state fields may be the same as that of an existing TCI state field, or the length may be adjusted based on higher layer signaling.

The UE may receive a transmission/reception beam-related indication in a unified TCI scheme by using one scheme among the joint TCI state and separate TCI state configured by the base station. The UE may be configured for using one of the joint TCI state and separate TCI state, by the base station via higher layer signaling. With respect to the separate TCI state indication, the UE may be configured via higher layer signaling so that a bit length of the TCI state field in DCI format 1_1 or 1_2 is up to 4.

The MAC-CE used to activate or indicate the multiple joint TCI states and separate TCI states described above may exist for each of the joint and separate TCI state schemes, and a TCI state may be activated or indicated based on one of the joint TCI state scheme and separate TCI state scheme by using one MAC-CE. For the MAC-CE used in the MAC-CE-based indication scheme and the MAC-CE-based activation scheme, one MAC-CE structure may be shared, and individual MAC-CE structures may be used. Through the figures described later, various MAC-CE structures for activating and indicating multiple joints or separate TCI states can be considered. In the figures to be described later, for convenience of explanation, a case where two TCI states are activated or indicated is considered, but can be similarly applied to a case where three or more TCI states are activated or indicated.

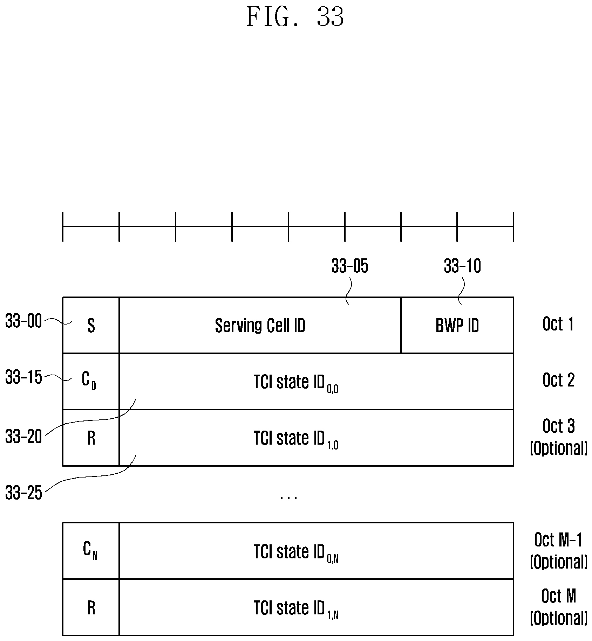

FIG. 33 is a diagram illustrating a MAC-CE structure for activation and indication of multiple joint TCI states in a wireless communication system according to an embodiment of the disclosure.

In FIG. 33, a serving cell ID field 33-05 may indicate a serving cell ID, and a BWP ID field 33-10 may indicate a BWP ID. An S field 28-00 may indicate the number of pieces of joint TCI state set information included in a MAC-CE. If a value of the S field 33-00 is 1, the corresponding MAC-CE may indicate one or two joint TCI states and may have a length of only up to a third octet. In this case, if a value of a $C_0$ field 33-15 is 0, there may be no third octet, and one joint TCI state may be indicated via a TCI state $ID_{0,0}$ field 33-20, and if the value of the $C_0$ field 33-15 is 1, a third octet may exist, and two joint TCI states may be indicated via the TCI state $ID_{0,0}$ field 33-20 and a TCI state $ID_{1,0}$ field 33-25, respectively.

If the value of the S field 33-00 is 0, the corresponding MAC-CE may activate one or two joint TCI states corresponding to respective codepoints of the TCI state field of DCI format 1_1 or 1_2, or may activate one joint TCI state corresponding to respective codepoints of two TCI state fields of DCI format 1_1 or 1_2, and joint TCI states for up to 8 codepoints may be activated. If one or two joint TCI states are activated for one codepoint of one TCI state field, a TCI state $ID_{0,Y}$ field and TCI state $ID_{1,Y}$ field may refer to a first joint TCI state and second joint TCI state among two joint TCI states activated at a Y-th codepoint of the TCI state field, respectively. In case that one joint TCI state is activated for one codepoint of two TCI state fields, the TCI state $ID_{0,Y}$ field and TCI state $ID_{1,Y}$ field may refer to respective joint TCI states activated at the Y-th codepoint of the first and second TCI state fields, respectively.

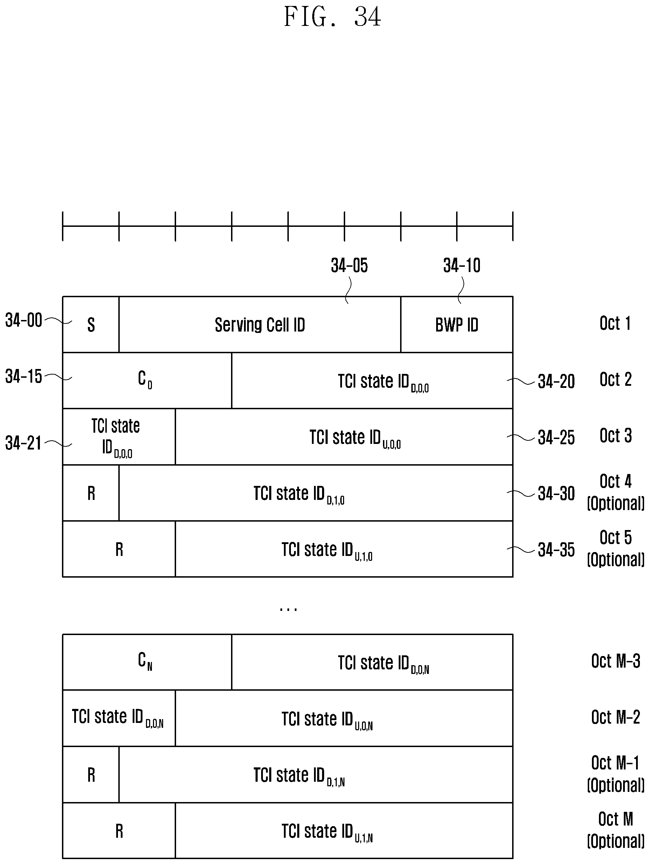

FIG. 34 is a diagram illustrating a MAC-CE structure for activation and indication of multiple separate TCI states in a wireless communication system according to an embodiment of the disclosure.

In FIG. 34, a serving cell ID field 34-05 may indicate a serving cell ID, and a BWP ID field 34-10 may indicate a BWP ID. An S field 28-00 may indicate the number of pieces of separate TCI state set information included in a MAC-CE. If a value of the S field 34-00 is 1, the corresponding MAC-CE may indicate one separate TCI state set and may include only up to a fifth octet. If the value of the S field 34-00 is 0, the corresponding MAC-CE may include information on multiple separate TCI state sets, may activate one separate TCI state set corresponding to respective codepoints of the TCI state field of DCI format 1_1 or 1_2 or may activate one separate TCI state set corresponding to respective codepoints of two TCI state fields of DCI format 1_1 or 1_2, and may activate separate TCI states for up to 8 or 16 codepoints via higher layer signaling, as described above.

In the MAC-CE structure in FIG. 34, from a second octet, every 4 octets may correspond to one separate TCI state set. For example, a $C_0$ field 34-15 may have a total of 8 values from "000" to "111", and as described above, the values may correspond to 8 number of cases that one separate TCI state set may have, respectively.

- The $C_0$ field having a value of "000" may indicate that one separate TCI state set includes one UL TCI state, TCI state $ID_{D,0,0}$ fields 34-20 and 34-21 may be disregarded, and a TCI state $ID_{U,0,0}$ field 34-25 may include one piece of UL TCI state information. In addition, fourth and fifth octets may be disregarded.

- The $C_0$ field having a value of "001" may indicate that one separate TCI state set includes two UL TCI states, the TCI state $ID_{D,0,0}$ fields 34-20 and 34-21 may be disregarded, and the TCI state $ID_{U,0,0}$ field 34-25 may include first UL TCI state information among the two UL TCI states. The fourth octet may be disregarded, and a TCI state $ID_{U,1,0}$ field 34-35 may include second UL TCI state information among the two UL TCI states.
- The $C_0$ field having a value of "010" may indicate that one separate TCI state set includes one DL TCI state, the TCI state $ID_{D,0,0}$ fields 34-20 and 34-21 may include one piece of DL TCI state information, and the TCI state $ID_{U,0,0}$ field 34-25 and the fourth and fifth octets may be disregarded.
- The $C_0$ field having a value of "01 1" may indicate that one separate TCI state set includes one DL TCI state and one UL TCI state, the TCI state $ID_{D,0,0}$ fields 34-20 and 34-21 may include one piece of DL TCI state information, and the TCI state $ID_{U,0,0}$ field 34-25 may include one piece of UL TCI state information. The fourth and fifth octets may be disregarded.
- The $C_0$ field having a value of "100" may indicate that one separate TCI state set includes one DL TCI state and two UL TCI states, the TCI state $ID_{D,0,0}$ fields 34-20 and 34-21 may include one piece of DL TCI state information, and the TCI state $ID_{U,0,0}$ field 34-25 may include first UL TCI state information among the two UL TCI states. The fourth octet may be disregarded, and a TCI state $ID_{U,1,0}$ field 34-35 may include second UL TCI state information among the two UL TCI states.
- The $C_0$ field having a value of "101" may indicate that one separate TCI state set includes two DL TCI states, the TCI state $ID_{D,0,0}$ fields 34-20 and 34-21 may include first DL TCI state information among the two DL TCI states, and the TCI state $ID_{U,0,0}$ field 34-25 and the fifth octet may be disregarded. The TCI state $ID_{D,1,0}$ field 34-30 may include second DL TCI state information among the two DL TCI states.
- The $C_0$ field having a value of "110" may indicate that one separate TCI state set includes two DL TCI states and one UL TCI state, the TCI state $ID_{D,0,0}$ fields 34-20 and 34-21 may include first DL TCI state information among the two DL TCI states, the TCI state $ID_{U,0,0}$ field 34-25 may include one piece of UL TCI state information, the TCI state $ID_{D,1,0}$ field 34-30 may include second DL TCI state information among the two DL TCI states, and the fifth octet may be disregarded
- The $C_0$ field having a value of "111" may indicate that one separate TCI state set includes two DL TCI states and two UL TCI states, the TCI state $ID_{D,0,0}$ fields 34-20 and 34-21 may include first DL TCI state information among the two DL TCI states, the TCI state $ID_{U,0,0}$ field 34-25 may include first UL TCI state information among the two UL TCI states, the TCI state $ID_{D,1,0}$ field 34-30 may include second DL TCI state information among the two DL TCI states, and the TCI state $ID_{U,1,0}$ field 34-35 may include second UL TCI state information among the two UL TCI states.

FIG. 34 is a diagram illustrating a MAC-CE used in case in which a UL TCI state among separate TCI states uses a higher layer signaling structure different from that for a joint TCI state and for a DL TCI state among the separate TCI states, as described above. Accordingly, since a UL TCI state needs 6 bits enabling expression of up to 64 UL TCI states, the TCI state $ID_{U,0,0}$ to TCI state $ID_{U,1,N}$ fields expressing UL TCI states may be expressed by 6 bits, whereas the TCI state $ID_{D,0,0}$ to TCI state $ID_{D,1,N}$ fields expressing DL TCI states may be expressed by 7 bits.

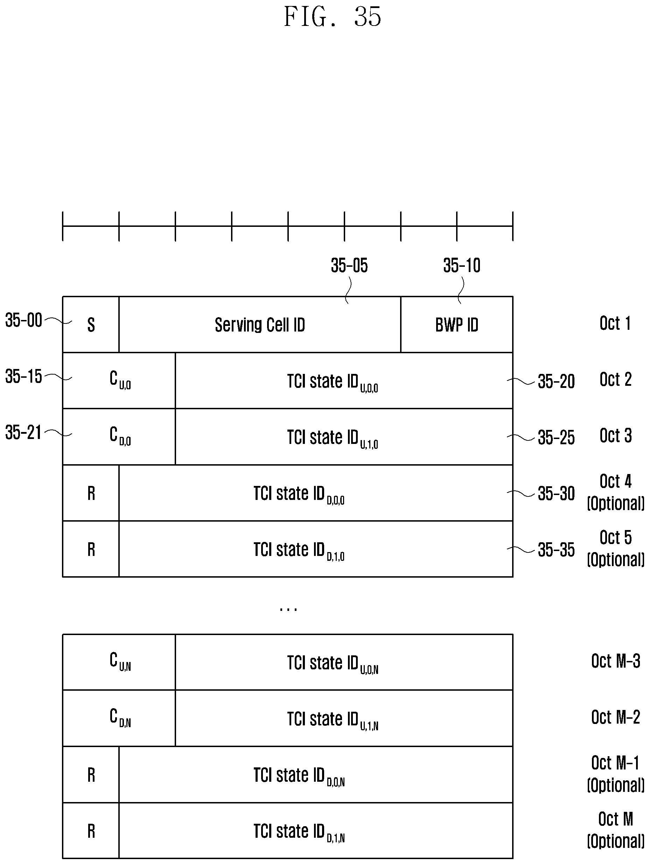

FIG. 35 is a diagram illustrating another MAC-CE structure for activation and indication of multiple separate TCI states in a wireless communication system according to an embodiment of the disclosure.

In FIG. 35, a serving cell ID field 35-05 may indicate a serving cell ID, and a BWP ID field 35-10 may indicate a BWP ID. An S field 28-00 may indicate the number of pieces of separate TCI state set information included in a MAC-CE. For example, if a value of the S field 35-00 is 1, the corresponding MAC-CE may indicate one separate TCI state set and may have a length of only up to a fifth octet.

For example, if the value of the S field 35-00 is 0, the corresponding MAC-CE may include information on multiple separate TCI state sets, the corresponding MAC-CE may activate one separate TCI state set corresponding to respective codepoints of the TCI state field of DCI format 1_1 or 1_2 or may activate one separate TCI state set corresponding to respective codepoints of two TCI state fields of DCI format 1_1 or 1_2, and may activate separate TCI state sets corresponding to up to 8 or 16 codepoints via higher layer signaling, as described above.

In the MAC-CE structure in FIG. 35, from a second octet, every 4 octets may correspond to one separate TCI state set. A $C_{U,0}$ field 35-15 and $C_{D,0}$ field 35-21 may refer to the number of UL TCI states and the number of DL TCI states, which are included in one separate TCI state set, respectively, and may have meanings for respective codepoints as follows.

- The $C_{U,0}$ field having a value of "00" indicates including no UL TCI state, and thus a TCI state $ID_{U,0,0}$ 35-20 and TCI state $ID_{U,1,0}$ 35-25 may be disregarded.
- The $C_{U,0}$ field having a value of "01" indicates including one UL TCI state, and thus the TCI state $ID_{U,0,0}$ 35-20 may include one piece of UL TCI state information, and the TCI state $ID_{U,1,0}$ 35-25 may be disregarded.
- The $C_{U,0}$ field having a value of "10" indicates including two UL TCI states, and thus the TCI state $ID_{U,0,0}$ 35-20 may include first UL TCI state information among the two UL TCI states, and the TCI state $ID_{U,1,0}$ 35-25 may include second UL TCI state information among the two UL TCI states.

- The $C_{D,0}$ field having a value of "00" indicates including no DL TCI state, and thus fourth and fifth octets may be disregarded.
- The $C_{D,0}$ field having a value of "01" indicates including one DL TCI state, and thus a TCI state ID $_{D,0,0}$ 35-30 may include one piece of DL TCI state information, and the fifth octet may be disregarded.
- The $C_{D,0}$ field having a value of "10" indicates including two DL TCI states, and thus the TCI state ID $_{D,0,0}$ 35-30 may include first DL TCI state information among the two DL TCI states, and a TCI state ID$_{D,1,0}$ field 35-35 may include second DL TCI state information among the two DL TCI states.

FIG. 35 is a diagram illustrating an example of a MAC-CE used in a case where a UL TCI state among separate TCI states uses a higher layer signaling structure different from that for a joint TCI state and for a DL TCI state among the separate TCI states, as described above. Accordingly, since a UL TCI state needs 6 bits enabling expression of up to 64 UL TCI states, the TCI state IDu,o,o to TCI state ID$_{U,1,N}$ fields expressing UL TCI states may be expressed by 6 bits, whereas the TCI state ID$_{D,0,0}$ to TCI state ID$_{D,1,N}$ fields expressing DL TCI states may be expressed by 7 bits.

In the aforementioned examples of the MAC CE in FIG. 33 to 35, it is possible that at least one of the elements are coupled to each other.

< PUCCH beam determination method in case that unified TCI scheme-based multiple TCI state is indicated>

As an example of an embodiment of the disclosure, a method for determining the number of transmission beams and transmission beams of a scheduled PUCCH when multiple TCI states are activated and indicated based on the unified TCI scheme will be described.

As described above in <Multi-TCI State Indication and Activation Method Based on Unified TCI Scheme>, if multiple TCI states are activated and indicated based on one of the joint TCI state method or separate TCI state method, the UE may determine UL transmission beam or transmission filter (hereinafter referred to as an UL transmission beam) and DL reception beam or reception filter (hereinafter referred to as a DL reception beam), according to indicated multiple TCI states. If multiple joint TCI states are indicated based on the unified TCI scheme, the UE may not only determine multiple DL reception beams, but also determine multiple UL transmission beams to be the same as DL. Alternatively, if multiple UL TCI states are activated and indicated based on the unified TCI scheme, the UE may determine an UL transmission beam according to the indicated multiple UL TCI states. In other words, if multiple UL transmission beams are determined and the UL channel (PUCCH or PUSCH) is repeatedly transmitted, this may mean that the UE may repeatedly transmit the UL channel with multiple TRPs.

When supporting PUCCH repetitive transmission based on multiple TRPs in NR Release 17, the PUCCH transmission technique has been enhanced to enable the number of spatial relation info from one to two for one PUCCH resource through MAC CE. That is, among the PUCCH resources configured through a higher layer, some PUCCH resources can be activated with one spatial relation info and the other PUCCH resources can be activated with two spatial relation info. Based on these higher layer configuration and activation of spatial relation info through MAC CE, PUCCH can be transmitted with a single TRP or with multiple TRPs depending on the scheduled PUCCH resources. In this way, NR Release 17 can support a dynamic switching method that can selectively transmit PUCCH with a single TRP or multiple TRPs.

However, if multiple UL transmission beams are activated and indicated to the UE by the unified TCI scheme as described above and applied to the UL channel in batches, the UE transmits the UL channel but can support only the method using the indicated multiple UL transmission beams. This means that it is difficult to support dynamic switching supported in NR Release 17.

In this way, multiple UL transmission beams are activated/indicated by the unified TCI scheme, and when the UE transmits PUCCH to the base station, a PUCCH beam selection method for dynamic switching function that can be supported by selecting one of multiple TRPs and single TRP will be described in detail. In addition, a single UL transmission beam is activated/indicated by the unified TCI scheme, and the operation of the UE is described in detail with an example when the UE transmits PUCCH to the base station. In a first embodiment, a method for determining whether to transmit PUCCH scheduled based on higher layer (RRC) configuration using all of or one of multiple transmission beams activated/indicated in unified TCI scheme will be described. In second and third embodiments, a method for determining whether to transmit PUCCH using all of or some of multiple transmission beams activated/indicated in MAC CE or DCI-based TCI scheme, respectively, will be described. Various methods included in each embodiment, higher layer configuration method, TCI state activation method, applicable time, etc. can be applied in combination with each other, and this means that the invention of the disclosure is not limited to the examples specifically described in each embodiment.

<First embodiment: PUCCH transmission beam determination method using higher layer configuration for PUCCH transmission in case that multiple TCI states are indicated based on unified TCI scheme>

As an example of an embodiment of the disclosure, a method for determining the UL transmission beam for PUCCH transmission according to higher layer configuration in case that the UE is indicated with multiple TCI state based on the unified TCI scheme will be described.

As described above in <Multi-TCI State Indication and Activation Method Based on Unified TCI Scheme>, the UE may receive two or more joint TCI states or one separate TCI state set from the base station via a corresponding MAC-CE. Alternatively, the UE may receive MAC-CE and activate two or more joint TCI states or two or more separate TCI state sets corresponding to respective codepoints of one TCI state field in the corresponding DCI format 1_1 or 1_2, and respective codepoints of one TCI state field in the DCI format 1_1 or 1_2 received by the UE may indicate two or more joint TCI states or separate TCI state set including two or more DL TCI states or two or more UL TCI states. Thereafter, the UE may receive the DL channel and transmit the UP channel by applying the DL reception beam and/or the UL transmission beam from the start point of the first slot after a period of time equal to beam application time (BAT). When defining this operation as a default operation and transmitting PUCCH, it may determine whether to transmit PUCCH using all or some of the multiple UL transmission beams indicated using the following additional higher layer configuration (for example, only the first transmission beam or only the second transmission beam among the two transmission beams).

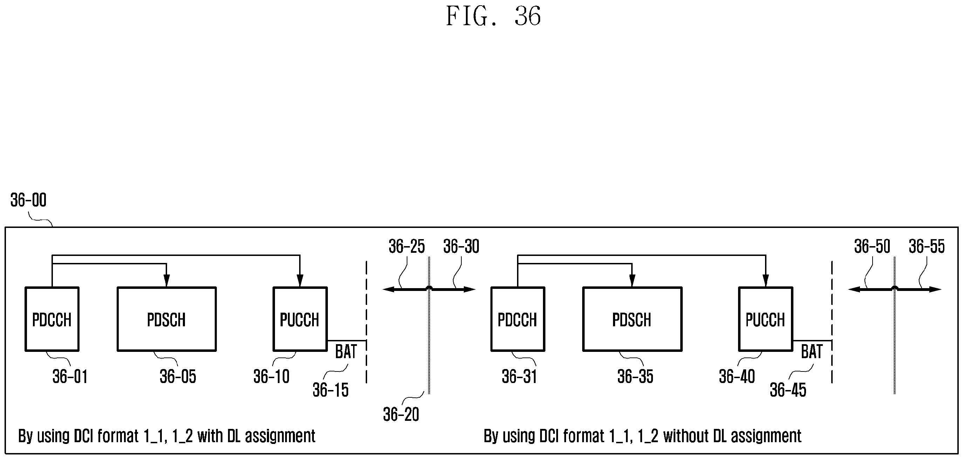

An additional higher layer configuration method may be considered divided in [Method 1] to be described later such as a method for indicating whether multiple UL transmission beams can be applied by higher layer configuration when transmitting PUCCH, and [Method 2] such as a method for indicating information on which beam to use among the indicated multiple UL transmission beams. For convenience of description of [Method 1] and [Method 2], as illustrated in FIG. 36, it is assumed that two joint TCI states or separate TCI state set including two or more UL TCI states are already indicated through MAC CE or DCI format 1_1 or 1_2 (36-01), and PUCCH may be transmitted (31-40) with UL transmission beam indicated by scheduling PUCCH through DCI (36-31) in the section 36-30 after the start point 36-20 of the first slot after a period of time equal to beam application time (BAT) 36-15. In this case, the DCI 36-31 scheduling the PUCCH may not update or may update the TCI state indicated by the previously received DCI 36-01. However, since the PUCCH 36-40 transmitted after receiving the DCI 36-31 scheduling the PDSCH 36-35 and PUCCH 36-40 is a point in time when the beam updated with the PUCCH transmitting HARQ ACK for the corresponding DCI (or the PDSCH scheduled with the corresponding DCI) is not applied (36-50), even if the DCI scheduling PUCCH updates the TCI state, it is transmitted through the UL transmission beam indicated by the previous DCI 36-01. In this way, the case of scheduling PDSCH (i.e., PDCCH including the grant schedules the PUCCH) has been described, but even in the case where PDSCH is not scheduled (i.e., PDCCH not including the grant scheduling PUCCH), a specific method to be described in detail may be applied equally.

[Method 1: Indication of whether to apply all UL transmission beams indicated in unified TCI scheme to PUCCH transmission through new higher layer parameter configuration]

The base station may configure a new higher layer parameter to indicate whether to apply all UL transmission beams indicated by the unified TCI scheme to the UE to PUCCH transmission. As an example of a new higher layer parameter, it may be configured as 'enableAllULTCIstates'. The base station may configure one of {support} and {non support} to the UE as the value of the new higher layer parameter 'enableAllUL TCIstates'. Alternatively, the base station may configure or may not configure {support} to the UE as the value of the new higher layer parameter 'enableAllULT-CIstates'. If the base station configures or does not configure 'enableAllULTCIstates' with {non support}, the UE may use the first (or second or nth (n= 3 or 4 or number of all UL transmit beams indicated by the unified TCI scheme) UL transmission beam among all UL transmission beams (e.g., two UL transmission beams) indicated by the unified TCI scheme to transmit PUCCH. Here, among the UL transmission beams indicated by the unified TCI scheme, the first UL transmission beam may refer to the transmission beam indicated by the first activated TCI state among the multiple activated TCI states included in the corresponding codepoint, and the second or later UL transmission beam can be similarly expanded and considered. If the base station configures {support} as the value of 'enableAllULTCIstates', the UE can transmit PUCCH using all UL transmission beams (e.g., two UL transmission beams) indicated by the unified TCI scheme. The new higher layer parameter 'enableAllULTCIstates' may be included in the higher layer configurations for each PUCCH resource, each PUCCH format, or for the entire PUCCH, as detailed below. The method is only an example, and the base station may configure a higher layer parameter with a different name than 'enableAllULTCIstates' that supports similar operations to the UE. Additionally, other types of information (e.g. {1} or {2}, etc.) may be configured as a candidate value for the new higher layer parameter.

[Method 2: Indication of UL beam to be applied to PUCCH transmission among UL transmission beam(s) indicated in unified TCI scheme through new higher layer parameter configuration]

The base station may configure a new higher layer parameter to indicate the UL transmission beam applied to PUCCH transmission among all UL transmission beams indicated by the unified TCI scheme to the UE. As an example of a new higher layer parameter, it may be configured as 'enableULTCIstate'. In case that two UL transmission beams are indicated to the UE by the unified TCI scheme, the base station may configure one of {enableFirstTCI} (similar to Method 1, no value may be configured), {enableSecondTCI}, and {enableAllTCI} as the value of new higher layer parameter 'enableULTCIstate' to the UE. Alternatively, the base station may configure or may not configure one of {enableSecondTCI} and {enableAllTCI} as the value of the new higher layer parameter 'enableULTCIstate' to the UE. In case that M UL transmission beams are indicated to the UE by the unified TCI scheme, the base station may configure the new higher layer parameter 'enableULTCIstate' to the UE by selecting one or two values from 1 to M, or a value corresponding to the maximum number of beams that the UE can support. Here, as a number of values that may be configured to 'enableULTCIstate', one or two or the maximum number of supportable beams as well as any number between two and the maximum number of supportable beams can be considered. In the specific example described later, it is assumed that up to two beams can be supported.

If 'enableULTCIstate' is configured to {enableFirstTCI} (or no value is configured), the UE may transmit PUCCH with the first UL transmission beam among all UL transmission beams (e.g., two UL transmission beams) indicated by the unified TCI scheme. Similarly, if 'enableULTCIstate' is configured to {enableSecondTCI}, the UE may transmit PUCCH using the second UL transmission beam among all UL transmission beams (e.g., two UL transmission beams) indicated by the unified TCI scheme. If 'enableULTCIstate' is configured to {enableAllTCI}, the UE may transmit PUCCH using all uplink transmission beams (for example, two UL transmission beams) indicated by the unified TCI scheme. The new higher layer parameter 'enableULTCIstate' may be included in the higher layer configuration for each PUCCH resource, each PUCCH format, or for the entire PUCCH, as detailed below. The above method is only an example, and the base station may configure a higher layer parameter with a different name from 'enableUTLCIstate' that supports similar operations to the UE.

[Higher layer configuration method 1: Configuration for each PUCCH resource] The base station may configure the above-described new higher layer parameter (e.g., 'enableAllULTCIstates' or 'enableULTCIstate') for each higher layer parameter PUCCH-resource. That is, a new higher layer parameters may be added for each higher layer configuration for each PUCCH resource. For example, PUCCH-Resource with a newly added higher layer parameter may be constituted as shown in Table 45 below. This is one example, and the exact name and candidate value of the newly added higher layer parameter may be different, but the function and operation of the newly added higher layer parameter may be the same or similar to Methods 1 and 2 described above. Tables 46 to 49, which will be described later, are only examples of each case, and the names and candidate values of the newly added higher layer parameters may be different, but the function and operation of the newly added higher layer parameters are the same or similar to Methods 1 and 2 described above. By configuring a new higher layer parameter value for each different PUCCH resource according to Table 45, the base station may select one from multiple PUCCH resource candidates and indicate the selected PUCCH resource to the UE through the PUCCH resource indicator area (PRI field) in the DCI. In this case, the number of PUCCH transmission beams transmitted by the UE may be determined according to the higher layer configuration of the scheduled PUCCH resource. Based on this operation, the base station may select whether to instruct the UE to transmit PUCCH using only one or both of the two UL beams indicated by the unified TCI method.

[Table 45]

```
PUCCH-Resource ::=                      SEQUENCE {
    pucch-ResourceId                    PUCCH-ResourceId,
    startingPRB                         PRB-Id,
    intraSlotFrequencyHopping           ENUMERATED { enabled }                      OPTIONAL, -- Need R
    secondHopPRB                        PRB-Id                                       OPTIONAL, -- Need R
    format                              CHOICE {
        format0                             PUCCH-format0,
        format1                             PUCCH-format1,
        format2                             PUCCH-format2,
        format3                             PUCCH-format3,
        format4                             PUCCH-format4
    }

    enableULTCIstate-r18                ENUMERATED {enableFirstTCI, enableSecondTCI, enableAllTCI}
    OPTIONAL, -- Need R
}
```

[Higher layer configuration method 2: Configuration for each PUCCH resource group]

The base station may configure the above-described new higher layer parameter (e.g., 'enableAllULTCIstates' or 'enableULTCIstate') for each higher layer parameter PUCCH-ResourceGroup. That is, a new higher layer parameters may be added for each PUCCH resource group. For example, PUCCH-ResourceGroup with a newly added higher layer parameter may be constituted as shown in Table 46 below. By configuring a new higher layer parameter value for each PUCCH resource group according to Table 46, the base station may configure information for the same PUCCH transmission beam selection for the PUCCH resource(s) included in the same PUCCH resource group (i.e., information on whether to transmit PUCCH using one or both of the two UL transmission beams indicated based on the unified TCI). Thereafter the base station may select one of multiple PUCCH resources and indicate the selected PUCCH resource to the UE through the PUCCH resource indicator area (PRI field) in the DCI. In this case, the number of PUCCH transmission beams transmitted by the UE may be determined according to the higher layer configuration of the PUCCH resource group including scheduled PUCCH resource. Based on this operation, the base station may select whether to instruct the UE to transmit PUCCH using only one or both of the two UL beams indicated by the unified TCI method.

[Table 46]

```
PUCCH-ResourceGroup-r16 ::=        SEQUENCE {
    pucch-ResourceGroupId-r16        PUCCH-ResourceGroupId-r16,
    resourcePerGroupList-r16         SEQUENCE (SIZE (1..maxNrofPUCCH-ResourcesPerGroup-r16)) OF PUCCH-ResourceId

    enableULTCIstate-r18             ENUMERATED {enableFirstTCI, enableSecondTCI, enableAllTCI}        OPTIONAL, -- Need R
}

PUCCH-ResourceGroupId-r16 ::=              INTEGER (0..maxNrofPUCCH-ResourceGroups-1-r16)
```

[Higher layer configuration method 3: Configuration for each PUCCH resource set]

The base station may configure the above-described new higher layer parameter (e.g., 'enableAllULTCIstates' or 'enableULTCIstate') for each higher layer parameter PUCCH-ResourceSet. That is, a new higher layer parameters may be added for each PUCCH resource set. For example, PUCCH-ResourceSet with a newly added higher layer parameter may be constituted as shown in Table 47 below. By configuring a new higher layer parameter value for each PUCCH resource set according to Table 47, the base station may configure information for the same PUCCH transmission beam selection for the PUCCH resource(s) included in the same PUCCH resource set (i.e., information on whether to transmit PUCCH using one or both of the two UL transmission beams indicated based on the unified TCI). Thereafter the base station may select one of multiple PUCCH resources and indicate the selected PUCCH resource to the UE through the PUCCH resource indicator area (PRI field) in the DCI. In this case, the number of PUCCH transmission beams transmitted by the UE may be determined according to the higher layer configuration of the PUCCH resource set including scheduled PUCCH resource. Based on this operation, the base station may select whether to instruct the UE to transmit PUCCH using only one or both of the two UL beams indicated by the unified TCI method.

[Table 47]

```
PUCCH-ResourceSet ::=        SEQUENCE {
    pucch-ResourceSetId         PUCCH-ResourceSetId,
    resourceList                SEQUENCE (SIZE (1..maxNrofPUCCH-ResourcesPerSet)) OF PUCCH-ResourceId,
    maxPayloadSize              INTEGER (4..256)                                         OPTIONAL   -- Need R

    enableULTCIstate-r18        ENUMERATED {enableFirstTCI, enableSecondTCI, enableAllTCI}        OPTIONAL, -- Need R
}
```

[Higher layer configuration method 4: Configuration for each PUCCH format]

The base station may configure the above-described new higher layer parameter (e.g., 'enableAllULTCIstates' or 'enableULTCIstate') to higher layer parameters PUCCH-format0 and PUCCH-format1 and PUCCH-format2 and PUCCH-format3 and PUCCH-format4. For example, PUCCH-format0 and PUCCH-format1 and PUCCH-format2 and PUCCH-format3 and PUCCH-format4 with a newly added higher layer parameter may be constituted as shown in Table 48 below. By configuring a new higher layer parameter value for each PUCCH format according to Table 48, the base station may configure information for the same PUCCH transmission beam selection for the PUCCH resource(s) configured with the same PUCCH format (i.e., information on whether to transmit PUCCH using one or both of the two UL transmission beams indicated based on the unified TCI). Thereafter the base station may select one of multiple PUCCH resources and indicate the selected PUCCH resource to the UE through the PUCCH resource indicator area (PRI field) in the DCI. In this case, the number of PUCCH transmission beams transmitted by the UE may be determined according to the higher layer configuration of the format of the scheduled PUCCH resource. Based on this operation, the base station may select whether to instruct the UE to transmit PUCCH using only one or both of the two UL beams indicated by the unified TCI method.

[Table 48]

```
PUCCH-format0 ::=                    SEQUENCE {
    initialCyclicShift                   INTEGER(0..11),
    nrofSymbols                          INTEGER (1..2),
    startingSymbolIndex                  INTEGER(0..13)

    enableULTCIstate-r18        ENUMERATED {enableFirstTCI, enableSecondTCI, enableAllTCI}        OPTIONAL, -- Need R
}

PUCCH-format1 ::=                    SEQUENCE {
    initialCyclicShift                   INTEGER(0..11),
    nrofSymbols                          INTEGER (4..14),
    startingSymbolIndex                  INTEGER(0..10),
    timeDomainOCC                        INTEGER(0..6)

    enableULTCIstate-r18        ENUMERATED {enableFirstTCI, enableSecondTCI, enableAllTCI}        OPTIONAL, -- Need R
}

PUCCH-format2 ::=                    SEQUENCE {
    nrofPRBs                             INTEGER (1..16),
    nrofSymbols                          INTEGER (1..2),
    startingSymbolIndex                  INTEGER(0..13)

    enableULTCIstate-r18        ENUMERATED {enableFirstTCI, enableSecondTCI, enableAllTCI}        OPTIONAL, -- Need R
}

PUCCH-format3 ::=                    SEQUENCE {
    nrofPRBs                             INTEGER (1..16),
    nrofSymbols                          INTEGER (4..14),
    startingSymbolIndex                  INTEGER(0..10)

    enableULTCIstate-r18        ENUMERATED {enableFirstTCI, enableSecondTCI, enableAllTCI}        OPTIONAL, -- Need R
}

PUCCH-format4 ::=                    SEQUENCE {
    nrofSymbols                          INTEGER (4..14),
    occ-Length                           ENUMERATED {n2,n4},
    occ-Index                            ENUMERATED {n0,n1,n2,n3},
    startingSymbolIndex                  INTEGER(0..10)

    enableULTCIstate-r18        ENUMERATED {enableFirstTCI, enableSecondTCI, enableAllTCI}        OPTIONAL, -- Need R
}
```

[Higher layer configuration method 5: Configuration for all PUCCHs]

The base station may configure the above-described new higher layer parameter (e.g., 'enableAllULTCIstates' or 'enableULTCIstate') to a higher layer parameter PUCCH-Config. That is, a new higher layer parameters may be added for PUCCH. For example, PUCCH-Config with a newly added higher layer parameter may be constituted as shown in Table 49 below. By configuring a new higher layer parameter value for PUCCH according to Table 49, the base station may configure information for the same PUCCH transmission beam selection for all PUCCH resource(s) in the corresponding supporting cell (i.e., information on whether to transmit PUCCH using one or both of the two UL transmission beams indicated based on the unified TCI). Thereafter the base station may select one of multiple PUCCH resources and indicate the selected PUCCH resource to the UE through the PUCCH resource indicator area (PRI field) in the DCI. In this case, the number of PUCCH transmission beams transmitted by the UE may be determined according to the higher layer configuration PUCCH-Config for scheduled PUCCH resource transmission. Based on this operation, the base station may select whether to instruct the UE to transmit PUCCH using only one or both of the two UL beams indicated by the unified TCI method.

[Table 49]

```
PUCCH-Config ::=                      SEQUENCE {
        resourceSetToAddModList               SEQUENCE (SIZE (1..maxNrofPUCCH-ResourceSets)) OF PUCCH-ResourceSet    OPTIONAL, --
Need N
        resourceSetToReleaseList              SEQUENCE (SIZE (1..maxNrofPUCCH-ResourceSets)) OF PUCCH-ResourceSetId OPTIONAL, -- Need
N
        resourceToAddModList                  SEQUENCE (SIZE (1..maxNrofPUCCH-Resources)) OF PUCCH-Resource          OPTIONAL, --
Need N
        resourceToReleaseList                 SEQUENCE (SIZE (1..maxNrofPUCCH-Resources)) OF PUCCH-ResourceId        OPTIONAL, --
Need N
        ...

        schedulingRequestResourceToAddModListExt-v1610    SEQUENCE (SIZE (1..maxNrofSR-Resources)) OF
Scheduling RequestResourceConfigExt-v1610
                                                                                                          OPTIONAL --

Need N
        ]]

        enableULTCIstate-r18          ENUMERATED {enableFirstTCI, enableSecondTCI, enableAllTCI}          OPTIONAL, -- Need R
}
```

[Operation 1: Case where multiple TCI states are activated/indicated]

As in the specific examples of the first embodiment described above, an operation of the UE in case that based on the unified TCI scheme, a codepoint including multiple (e.g., two) TCI states and codepoint including a single TCI state are activated and a codepoint including multiple TCI states is indicated via DCI will be described. Here, the TCI state is a TCI state for PUCCH transmission and may mean a joint TCI state or UL TCI state. If a codepoint including multiple TCI states is indicated to the UE via DCI, and the UE is ready to perform UL transmission with the indicated beam after the beam application time (BAT), the UE may transmit PUCCH using one or some or entire of multiple UL transmission beams indicated in consideration of one or combination of the above-described [Method 1] to [Method 2] and [Higher layer configuration method 1] to [Higher layer configuration method 5]. That is, in case that the UE is configured with parameters for multiple TCI states according to the higher layer configuration, and indicated with multiple TCI states according to the above-described process, the UE may transmit PUCCH using one or some or entire of the indicated multiple UL transmission beams, based on the parameters configured via a higher layer.

[Operation 2: Case where a single TCI states is activated/indicated]

An operation of the UE in case that based on the unified TCI scheme, a codepoint including multiple (e.g., two) TCI states and codepoint including a single TCI state are activated and a codepoint including a single TCI state is indicated via DCI will be described. Here, the TCI state is a TCI state for PUCCH transmission and may mean a joint TCI state or UL TCI state. If a codepoint including a single TCI states is indicated to the UE via DCI, and the UE is ready to perform UL transmission with the indicated beam after the BAT, the UE may transmit PUCCH using beam indicated regardless of [Method 1] to [Method 2] and [Higher layer configuration method 1] to [Higher layer configuration method 5].

[Operation 3: Case where smaller number of TCI states are activated/indicated than the number of PUCCH transmission beams indicated by a new higher layer parameter for scheduled PUCCH resource]

An operation of the UE in case that based on the unified TCI scheme, a codepoint including multiple (e.g., four) TCI states and codepoint including a single TCI state are activated and a codepoint including a single TCI state is indicated via DCI will be described. Here, the TCI state is a TCI state for PUCCH transmission and may mean a joint TCI state or UL TCI state. If a codepoint including two TCI states is indicated to the UE via DCI, and the UE is ready to perform UL transmission with the indicated beam after the BAT, and the UE is configured to transmit PUCCH with a larger number of beams than the number of beams indicated with a new higher layer parameter for the scheduled PUCCH resource (in this specific example, a new higher layer parameter is configured so as to transmit PUCCH with four beams), the UE may transmit PUCCH using beam indicated regardless of [Method 1] to [Method 2] and [Higher layer configuration method 1] to [Higher layer configuration method 5].

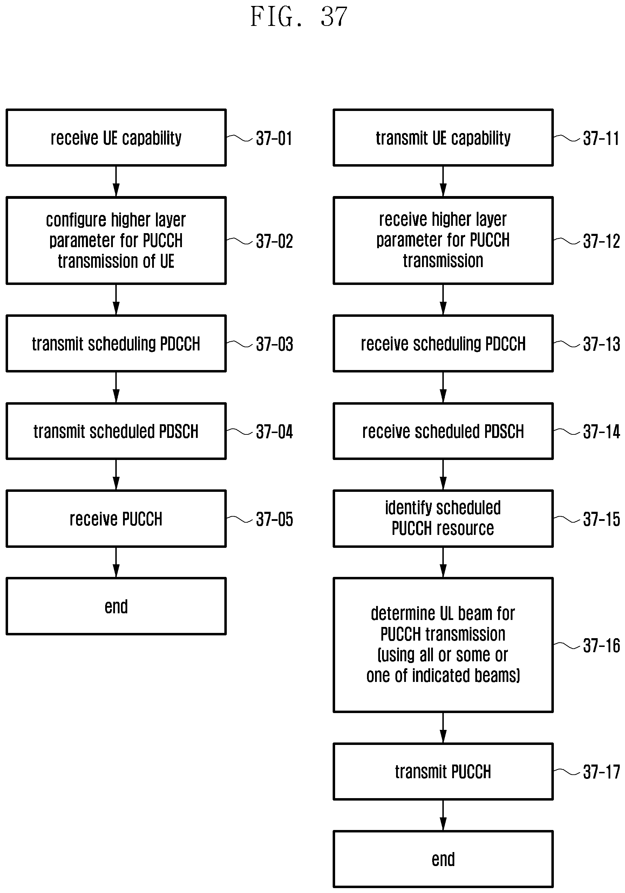

FIG. 37 illustrates an operation of a base station and UE in case of determining an UL transmission beam of PUCCH based on higher layer parameters.

The operation of the base station is as follows. The base station may receive UE capability from the UE (37-01). In this case, the UE capability reported by the UE may include information such as whether to support unified TCI, whether the PUCCH transmission beam can be determined based on the higher layer parameters configured as in the first embodiment described above, or UE capability related to PUCCH transmission. Thereafter, the base station may configure higher layer parameters to the UE based on the UE capability reported by the UE (37-02). Here, the base station may configure the UE by adding higher layer parameters to support the unified TCI-based operation and new higher layer parameters within the above-described PUCCH-related configuration. Thereafter, the base station may transmit a PDCCH for scheduling to the UE (37-03). In this case, the corresponding PDCCH may schedule PDSCH and PUCCH including a grant, or may schedule only PUCCH without including a grant. If the corresponding PDCCH includes a grant, the base station may transmit the scheduled PDSCH (37-04). If only PUCCH is scheduled without grant, operation 37-04 may be omitted. Thereafter, the base station may receive PUCCH including ACK for reception of PDCCH and PDSCH (if scheduled) from the UE (37-05). In this case, the receiving PUCCH may identify the transmission beam information for PUCCH that the UE has transmitted and receive PUCCH using a single TRP or multiple TRPs based the identified transmission beam information according to the higher layer parameter configuration for the scheduled PUCCH resource (or related higher layer parameter configuration for the corresponding PUCCH) and the currently activated/indicated TCI state.

The operation of the UE is as follows. The UE may transmit UE capability to the base station (37-11). In this case, as described above, the UE may perform UE reporting including whether to support the unified TCI, whether the PUCCH transmission beam may be determined based on the higher layer parameters configured as in the first embodiment described above, or information such as PUCCH transmission related UE capability. Thereafter, the UE may receive the higher layer parameter from the base station (37-12). Here, the UE may receive, from the base station, configuration information about higher layer parameters to support the unified TCI-based operation and new higher layer parameters within the above-described PUCCH-related configurations. The UE may receive a PDCCH (e.g., DCI format 1_1 or 1_2) for scheduling from the base station (37-13). In this case, the corresponding PDCCH may schedule PDSCH and PUCCH including a grant, or may schedule only PUCCH without including a grant. If the corresponding PDCCH includes a grant, the UE may receive the scheduled PDSCH (37-14). If only PUCCH is scheduled without grant, operation 37-14 may be omitted. Thereafter, the UE may identify the scheduled PUCCH resources to prepare for PUCCH transmission and perform PUCCH transmission preparation (37-15). This process may be performed after receiving the PDSCH (37-14) or after receiving the scheduling PDCCH (37-13), but for convenience of description, it is assumed that it operates as shown in FIG. 37. The UE may identify the scheduled PUCCH resources and identify resource configurations for PUCCH transmission, such as the resource amount and format of the PUCCH, as well as a new higher layer parameter for indicating whether to use all or one or some of multiple UL transmission beams indicated based on the unified TCI as described in the first embodiment (37-16). Based on this, the UE may determine a beam for PUCCH transmission and transmit the PUCCH with a single TRP or multiple TRPs using the determined UL transmission beam (37-17).

<Second embodiment: PUCCH transmission beam determination method according to scheduled PUCCH resource in case that multiple TCI states are indicated based on unified TCI scheme>

As an example of an embodiment of the disclosure, a method for determining a PUCCH transmission beam according to scheduled PUCCH resource configuration in case that multiple TCI states are indicated based on the unified TCI scheme will be described. In the second embodiment, a method for determining a PUCCH transmission beam according to the number of repeated transmissions of scheduled PUCCH resources and a method for implicitly determining a PUCCH transmission beam according to a PUCCH resource group including the scheduled PUCCH resource will be described.

[Method for determining a PUCCH transmission beam according to the number of repeated transmissions of scheduled PUCCH resources]

NR Release 15/16 supports repeated transmission between slots for PUCCH formats 1, 3, and 4 to transmit PUCCH with high reliability. In this case, the base station may configure the number of PUCCH repeated transmissions to the UE as 'nrofSlots' in a higher layer parameter 'PUCCH-FormatConfig'. That is, the NR Release 15/16 supports repeated transmission between slots for PUCCH formats 1, 3, and 4, and the number of repetitions may be configured for each PUCCH format. Based on this configuration, the UE may transmit PUCCH resources of the same format to the base station with the same number of repetitions.

As an NR Release 17 supports multiple TRPs, it supports repeated transmission of not only PUCCH formats 1, 3, and 4, but also PUCCH formats 0 and 2. In addition, the NR Release 17 has been enhanced to support not only inter-slot repetitive transmission, but also intra-slot repetitive transmission. In addition, the number of repetitions configured to a higher layer for each PUCCH format has also been enhanced so that the number of repetitions may be configured to a higher layer for each PUCCH resource. Therefore, the number of repetitions of the PUCCH transmitted by the UE may vary depending on the scheduled PUCCH resource configurations.

If the UE transmits the PUCCH according to one of NR Release 15 or 16 or 17, the number of repeated transmissions may be determined according to the PUCCH format of the scheduled PUCCH or according to PUCCH resources. Depending on the number of repetitions for PUCCH transmission determined in this way, the UE may transmit the PUCCH using one, some, or all of the indicated multiple UL transmission beams in case that multiple TCI states are indicated by the unified TCI scheme. The UE may use the number of repetitions of the scheduled PUCCH resource to determine the number of UL transmission beams and UL transmission beam for PUCCH transmission. For example, if the number of repetitions of the scheduled PUCCH resource is greater than or equal to 2, the UE may use all of the multiple UL transmission beams indicated by the unified TCI scheme for PUCCH transmission. If the scheduled PUCCH resource is not transmitted repeatedly (if the number of repetitions is 1), the UE may transmit PUCCH to the base station using the first (or second) UL transmission beam among multiple UL transmission beams indicated by the unified TCI scheme. Such operations may be defined by a prior rule without a higher layer configuration between the base station and the UE, MAC CE-based activation, or DCI-based indication, and the UE may select an UL beam according to a predefined operation. Alternatively, a reference for the number of PUCCH repetition transmissions for using all indicated UL beams may be defined as a value other than 2. Other values may be values predefined by the base station and UE, as described above, or may be configured by the base station to the UE as a higher layer parameter. If a reference repetition number for applying all beams among all UL transmission beams indicated based on the unified TCI is configured as a higher layer parameter, the UE may determine whether to apply all of indicated UL transmission beams or only some or one of indicated UL transmission beams by comparing whether the repetition number of the scheduled PUCCH resource is greater than or equal to the reference repetition number configured as a higher layer parameter.

[Method for implicitly determining a PUCCH transmission beam according to a PUCCH resource group]

Unlike the above-described [Higher layer configuration method 2], it may implicitly determine whether to apply all, or some or one of UL transmission beams indicated based on the unified TCI to PUCCH transmission according to a PUCCH resource group, without a higher layer configuration. That is, the number of indicated UL transmission beams applied to PUCCH transmission may be determined according to the PUCCH resource group to which the PUCCH resource belongs according to a higher layer configuration. As an example, the fourth (or may be configured as one group other than the fourth) PUCCH resource group among up to four PUCCH resource groups that may be configured may be predefined by the base station and UE to apply all indicated UL transmission beams to PUCCH transmission. Alternatively, the base station and UE may predefine all UL transmission beams indicated by multiple PUCCH resource groups, rather than one PUCCH resource group, so as to apply all UL transmission beams to PUCCH transmission. For the remaining PUCCH resource groups that are not defined to apply all indicated UL transmission beams to PUCCH transmission, the base station and UE may predefine the remaining PUCCH resource groups to apply some or one of the indicated UL transmission beams (for example, the first UL transmission beam or any UL transmission beam) for an UL transmission beam.

<Third embodiment: PUCCH transmission beam determination method using MAC CE signaling for PUCCH transmission in case that multiple TCI states are indicated based on unified TCI scheme>

As an example of an embodiment of the disclosure, a method for using MAC CE signaling to determine an UL transmission beam used for PUCCH transmission among multiple TCI states indicated by a unified TCI scheme will be described.

The above-described content in the first embodiment is a method for determining an UL transmission beam used for PUCCH transmission among multiple TCI states indicated by the TCI scheme based on a higher layer configuration. As another method for determining an UL transmission beam used for PUCCH transmission, the UE may determine whether to use all or one or some of the UL transmission beams indicated by the unified TCI scheme for PUCCH transmission by using MAC CE signaling. In other words, the base station may transmit, to the UE, new MAC CE signaling that can indicate whether to use all or one or some of beams for PUCCH transmission for each PUCCH resource, each PUCCH resource group, or all PUCCHs, etc., through PDSCH.

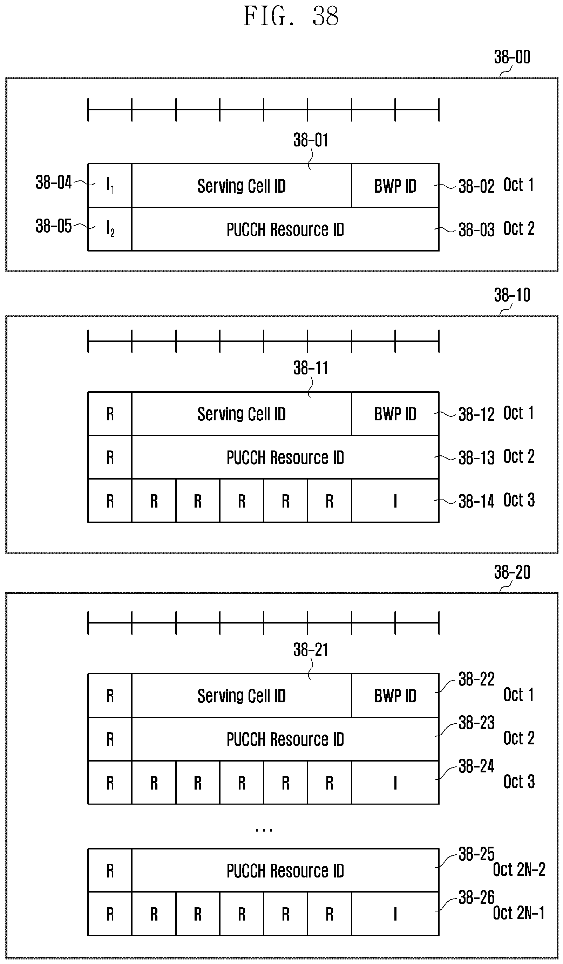

FIG. 38 illustrates an example of new MAC CE that can indicate whether to use all beams or one or some beams for PUCCH transmission.

In case that up to two unified TCI states (or two UL TCI states) may be indicated with one codepoint based on unified TCI, a PUCCH resource 38-03 indicated by the corresponding MAC CE, among the two TCI states indicated using a MAC CE structure as illustrated in FIG. 38-00, may indicate whether the corresponding PUCCH resource is transmitted with all beams of certain UL beams (UL beam indicated by two unified TCI states or UL TCI state) or only one of two UL beams, with fields $I_1$ 38-04 and $I_2$ 38-05 in the MAC CE. $I_1$ and $I_2$, each composed of 1 bit, may be interpreted in one of several methods. As an example, $I_1$ may indicate whether the UL beam indicated by the first TCI state of the two indicated TCI states is used to transmit the corresponding PUCCH resource, and $I_2$ may indicates whether the UL beam indicated by the second TCI state of the two indicated TCI states is used to transmit the corresponding PUCCH resource. For example, if the value of $I_1$ is 1 and the value of $I_2$ is 0, the UE transmits PUCCH using only one UL beam indicated by $I_1$ for the corresponding PUCCH resource. If both $I_1$ and $I_2$ are configured to 1, the UE may transmit the corresponding PUCCH resource using both UL beams. As another example, a total of 4 codepoints may be used by configuring $I_1$ and $I_2$ as one field. If one field is 00, only the UL beam indicated by the first TCI state is used. If one field is 01, only the UL beam indicated by the second TCI state is used. If one field is 10, the UL beam indicated by both TCI states is used, and the first and second beams are used in order. If one field is 11, the UL beam indicated by all two TCI states is used, and the second and first beams may be applied in order. This is just one example, and the codepoint may be interpreted in other ways. As another MAC CE signaling constitution method, a structure such as 38-10 may be used. In this example, the I area 38-14 for indicating whether to transmit the corresponding PUCCH resource using all beams or only one of the UL beams is composed of 2 bits, so a case of indicating with up to two unified TCI states or UL TCI state is assumed, but a case where more than two unified TCI states or UL TCI states are indicated by configuring the bit length of the corresponding area to be greater than 2 may be also supported. In this case, the interpretation method of the I area may be expanded similarly to the method of constituting and using $I_1$ and $I_2$ as one field described above. As another MAC CE signaling constitution method, a structure such as 38-20 may be used. This is a structure for updating information about whether to transmit the corresponding PUCCH resource with all beams at once for the PUCCH resource group or whether to transmit the corresponding PUCCH resource with only one of the UL beams, and each PUCCH resource group including each PUCCH resource distinguished by each PUCCH resource ID 38-23 or 38-25 may be updated with the information indicated by each I area 38-24 or 38-26. As an example, if the I area 38-24 is configured to 10, it is updated to transmit using all UL beam information among two TCI states (unified TCI state or UL TCI state) collectively indicated for all PUCCH resource(s) in the PUCCH resource group including the PUCCH resource indicated by a PUCCH resource ID 38-23 to which the corresponding I area is applied. As another example, if the I area 38-26 is configured to 00, it is updated to transmit using only the UL beam information indicated by the first TCIC state among two TCI states (unified TCI state or UL TCI state) collectively indicated for all PUCCH resource(s) in the PUCCH resource group including the PUCCH resource indicated by a PUCCH resource ID 38-25 to which the corresponding I area is applied.

This is just one example and may be indicated via another similar form of MAC CE, and as in an example, a method for applying the MAC CE to a PUCCH configuration level (for each PUCCH resource configuration, etc.) other than a PUCCH resource or PUCCH resource group may also be considered.

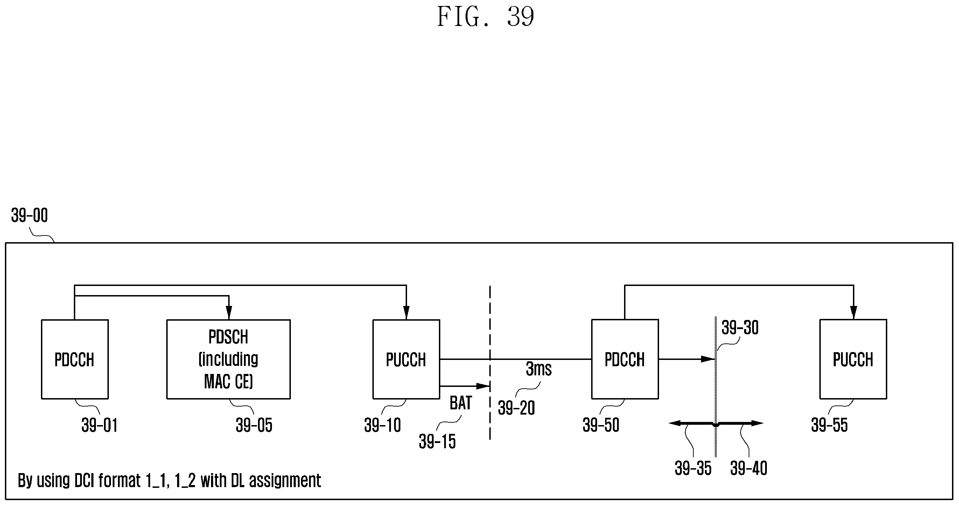

FIG. 39 illustrates a time flowchart of physical channel transmission and reception between a base station and the UE when determining a beam used for PUCCH transmission using new MAC CE signaling.

As illustrated in FIG. 39, after MAC CE reception (39-05) to determine the beam used for PUCCH transmission, PDCCH 39-50 scheduling PUCCH 39-55 may be received before the activation time (39-20, 3 ms after PUCCH transmission including ACK for PDSCH reception including the corresponding MAC CE) for applying the MAC CE. In this case, when the scheduled PUCCH 39-55 is transmitted after the activation time, it may be unclear whether the transmission beam of the corresponding PUCCH should be determined based on the updated MAC CE (39-40) or whether the transmission beam of the corresponding PUCCH should be determined based on the MAC CE before the update (39-35) because PDCCH should be received before the activation time. Considering this case, one of the following options may be predefined by the base station and UE, and the UE may transmit the PUCCH scheduled with the PDCCH to the base station.

[Option 1: Applicable after MAC CE application time (3ms)]

Even if the UE receives the PDCCH 39-50, which schedules a new PUCCH 39-55 (PDSCH may be also scheduled together with PUCCH) according to Option 1, before the activation time for the previously received MAC CE, the UE may determine whether to transmit PUCCH using all or one or some of the multiple UL transmission beams indicated by the newly updated MAC CE (39-40) according to the newly updated MAC CE. This is an operation to determine that the base station has scheduled the PUCCH, assuming that the UE has successfully received the PDSCH including the new MAC CE.

[Option 2: Applicable to a case of being scheduled with DCI received after MAC CE application time]

Since the PDCCH 39-50 scheduling a new PUCCH 39-55 has been received before the activation time (39-35) for the previously received MAC CE according to Option 2, the UE may transmit, to the base station, PUCCH according to the transmission beam selection method indicated by the existing MAC CE (39-35), instead of following the indication updated with the corresponding MAC CE. This is an operation that determines that the base station has scheduled the PUCCH, assuming that the UE has not yet reflected the MAC CE.

[Option 3: Introduction of scheduling limitation]

To avoid the ambiguity of the above-described UE operation, the base station does not transmit, to the UE, the PDCCH 39-50 that schedules a new PUCCH 39-55 during the MAC CE activation time (3920) after the PUCCH 39-10 including ACK. The UE may not expect to receive the PDCCH 39-50 scheduling PUCCH 39-55 during the MAC CE activation time (39-20) after the PUCCH including ACK. In addition, as will be described later, if similar (or identical) operations are supported for PUSCH as described for PUCCH, the base station does not transmit, to the UE, the PDDCH that schedules PUSCH during the MAC CE activation time after the PUCCH including ACK, and the UE may not expect to receive the corresponding PDCCH.

<Fourth embodiment: Method for determining a beam for PUCCH transmission using DCI in case that multiple TCI states are indicated based on a unified TCI scheme>

As an example of an embodiment of the disclosure, a method for using DCI to determine an UL transmission beam used for PUCCH transmission among multiple TCI states indicated by the unified TCI scheme will be described.
Based on the above-mentioned higher layer parameter, PUCCH resource information, or MAC CE, it may determine the UL transmission beam used for PUCCH transmission among the multiple TCI states (joint TCI state or UL TCI state) indicated based on the unified TCI scheme. In the fourth embodiment, a new field in DCI may be constituted as another example for determining an UL transmission beam used for PUCCH transmission among TCI states (joint TCI state or UL TCI state). For example, if up to two joint TCI states or two UL TCI states may be indicated via DCI, the base station may indicate the UL transmission beam used for PUCCH transmission by constituting a new area in the DCI that schedules PUCCH with 2 bits. For example, if 2 bits of the new area included in the DCI are indicated as 00, the UE may transmit PUCCH using only the first UL transmission beam among two UL transmission beams in which two joint TCI states or two UL TCI states are indicated via DCI. If 2 bits of the new area included in the DCI are indicated as 01, the UE may transmit PUCCH using only the second UL transmission beam among the two UL transmission beams. If 2 bits of the new area included in the DCI are indicated as 10, the UE may use both UL transmission beams to transmit PUCCH by mapping the first UL transmission beam and second UL transmission beam to PUCCH repeated transmission in the order. Here, the mapping between PUCCH repetitive transmission and beams may follow a sequential scheme (e.g., mapping as 11221122... when the first beam is expressed as 1 and the second beam is expressed as 2) or cyclical scheme (e.g., mapping as 1212...). If 2 bits of the new area included in the DCI are indicated as 11, the UE may use both UL transmission beams and maps the second UL transmission beam and first UL transmission beam to PUCCH repeated transmission in the order to transmit PUCCH. Here, the mapping between the PUCCH repetitive transmission and the beam may follow a sequential scheme (e.g., mapping as 22112211...) or cyclical scheme (e.g., mapping as 2121...).

< Beam determination method for PUSCH transmission in case that multiple TCI states are indicated based on a unified TCI scheme >

As an embodiment of the disclosure, a method for determining a beam for PUSCH transmission when multiple TCI states (joint TCI state or UL TCI state) are indicated by the unified TCI scheme will be described.
The UL transmission beam for PUSCH transmission may also be determined similarly to the constitutions of the PUCCH-related embodiment (first to fourth embodiments), in which the method for determining the UL transmission beam for PUCCH transmission is described. As an example, similar to the first embodiment, the base station may configure to determine an UL beam for PUSCH transmission among multiple TCI states by adding a new higher layer parameter to a higher layer configuration for PUSCH transmission. For example, a new higher layer parameter may be configured in PUSCH-Config or may be included in higher layer configuration information for another PUSCH transmission.
Alternatively, similar to the second embodiment, it may be configured to determine an UL beam for PUSCH transmission among multiple TCI states indicated based on the scheduled repetition number of PUSCH, the size of resources, and the like. For example, if the number of repetitions of the scheduled PUSCH is greater than a certain number (which may be configured with a higher layer parameter or may be any number predefined by the base station and UE), PUSCH may be transmitted using all UL transmission beams according to multiple indicated TCI states. If the number of PUSCH repetitions is less than a certain number, the PUSCH may be transmitted using only one or some of multiple UL transmission beams (e.g., the first UL transmission beam).

Alternatively, using MAC CE as in the third embodiment, a new area within DCI as in the fourth embodiment, or SRS resource set indicator area, which is a new DCI area introduced in NR Release 17 to support dynamic switching between single TRP PUSCH transmission and multiple TRP PUSCH transmission (when supporting multiple TRP or two SRS resource sets with useage of codebook or nonCodebook, 2 bit is configured, otherwise 0 bit is configured), it may be configured to determine an UL beam for PUSCH transmission among multiple indicated TCI states.

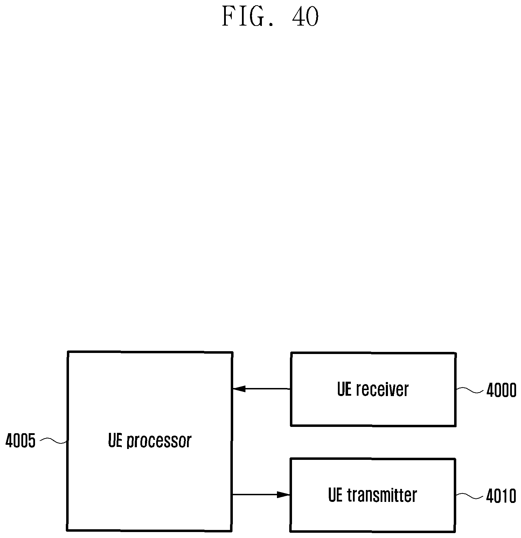

FIG. 40 is a diagram illustrating a structure of a UE in a wireless communication system according to an embodiment of the disclosure.

With reference to FIG. 40, the UE may include a transceiver which refers to a UE receiver 4000 and a UE transmitter 4010, a memory (not illustrated), and a UE processor 4005 (or a UE controller or processor). Based on the communication method of the UE described above, the UE transceiver 4000 or 4010, memory, and UE processor 4005 may operate. However, the elements of the UE are not limited to the aforementioned examples. For example, the UE may include more elements or fewer elements compared to the aforementioned elements. The transceiver, memory, and processor may be implemented in the form of a single chip.

The transceiver may transmit a signal to or receive a signal from a base station. Here, the signal may include control information and data. To this end, the transceiver may include an RF transmitter configured to perform up-conversion and amplification of a frequency of a transmitted signal, an RF receiver configured to perform low-noise amplification of a received signal and down-conversion of a frequency, and the like. However, this is only an embodiment of the transceiver, and the elements of the transceiver are not limited to the RF transmitter and RF receiver.

In addition, the transceiver may receive a signal via a radio channel and output the signal to the processor, and may transmit, via a radio channel, a signal output from the processor .

The memory may store a program and data necessary for operation of the UE. Also, the memory may store control information or data included in a signal transmitted or received by the UE. The memory may include a storage medium or a combination of storage media, such as a ROM, a RAM, a hard disk, a CD-ROM, and a DVD. There may be multiple memories.

Also, the UE processor 4005 may control a series of procedures so that the UE is able to operate according to the aforementioned embodiments. For example, the UE processor 4005 may receive DCI including two layers and control the elements of the UE to simultaneously receive multiple PDSCHs. There may be multiple UE processors 4005, and the UE processor 4005 may control operations of the elements of the UE by executing programs stored in the memory.

For example, the UE processor 4005 may receive a radio resource control (RRC) message including information for determining the transmission configuration indicator (TCI) state from the base station, receive downlink control information (DCI) including information indicating a unified TCI state from the base station, and determine the TCI state for physical uplink control channel (PUCCH) based on the information for determining the TCI state in case that multiple TCI states are indicated based on the above DCI, and control to transmit UL control information to the base station on the PUCCH based on the determined TCI state.

In this case, the information for determining the TCI state may be configured for each PUCCH resource or each PUCCH resource group in the RRC message. Additionally, the information for determining the TCI state may indicate one of application of the first TCI state among the multiple TCI states, application of the second TCI state among the multiple TCI states, and application of all TCI states among the multiple TCI states.

In addition, the UE processor 4005 may control to receive a DCI scheduling a physical uplink shared channel (PUSCH) from the base station, and the DCI scheduling the PUSCH may include information for determining the TCI state for PUSCH transmission among the multiple TCI states.

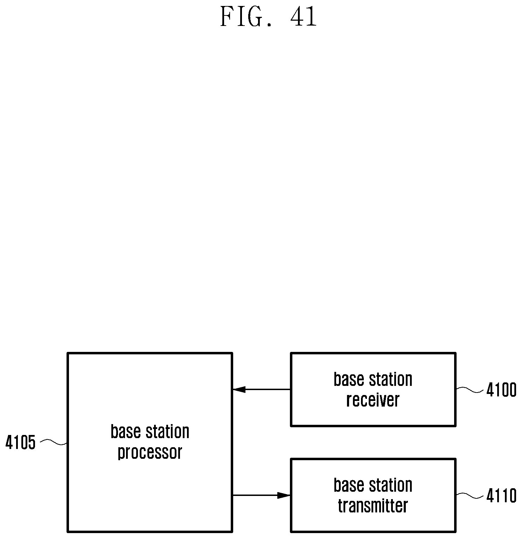

FIG. 41 is a diagram illustrating a structure of a base station in a wireless communication system according to an embodiment of the disclosure.

With reference to FIG. 41, the base station may include a transceiver, which refers to a base station receiver 4100 and a base station transmitter 4110, a memory (not illustrated), and a base station processor 4105 (or a base station controller or processor). According to the communication method of the base station described above, the transceiver 4100 or 4110, memory, and base station processor 4105 of the base station may operate. However, the elements of the base station are not limited to the above examples. For example, the base station may include more elements or fewer elements compared to the aforementioned elements. Further, the transceiver, memory, and processor may be implemented in the form of a single chip.

The transceiver may transmit a signal to or receive a signal from the UE. Here, the signal may include control information and data. To this end, the transceiver may include an RF transmitter configured to perform up-conversion and amplification of a frequency of a transmitted signal, an RF receiver configured to perform low-noise amplification of a received signal and down-conversion of a frequency, etc. However, this is merely an embodiment of the transceiver, and the elements of the transceiver are not limited to the RF transmitter and RF receiver.

Also, the transceiver may receive a signal via a radio channel, may output the signal to the processor, and may transmit the signal output from the processor via the radio channel.

The memory may store a program and data necessary for operation of the base station. Also, the memory may store control information or data included in a signal transmitted or received by the base station. The memory may include a storage medium or a combination of storage media, such as a ROM, a RAM, a hard disk, a CD-ROM, and a DVD. Also, there may be multiple memories.

The base station processor 4105 may control a series of procedures so that the base station operates according to the aforementioned embodiments of the disclosure. For example, the base station processor 4105 may constitute DCI of two layers including allocation information for multiple PDSCHs, and may control each element of the base station to transmit the DCI. There may be multiple base station processors 4105, and the base station processor 4105 may control the elements of the base station by executing programs stored in the memory.

For example, the base station processor 4105 may transmit, to the UE, a radio resource control (RRC) message including information for determining a transmission configuration indicator (TCI) state, transmit, to the UE, downlink control information (DCI) including information indicating a unified TCI state, and control to receive uplink control information from the UE on a physical uplink control channel (PUCCH) based on the TCI state determined based on the multiple TCI states. Additionally, in case that the multiple TCI states are indicated based on the DCI, the TCI state for the PUCCH may be determined based on information for determining the TCI state for UL transmission.

Additionally, information for determining the TCI state may be configured for each PUCCH resource or each PUCCH resource group in the RRC message. Additionally, the information for determining the TCI state may indicate one of application of the first TCI state among the multiple TCI states, application of the second TCI state among the multiple TCI states, and application of all TCI states among the multiple TCI states.

In addition, the base station processor 4105 may control to transmit the DCI scheduling a physical uplink shared channel (PUSCH) to the UE, and the DCI scheduling the PUSCH may include the information for determining the TCI state for PUSCH transmission among the multiple TCI states.

The methods according to the embodiments described in the claims or specification of the disclosure may be implemented by hardware, software, or a combination of hardware and software.

In case that the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to the embodiments of the disclosure as defined by the appended claims and/or disclosed herein.

The programs (software modules or software) may be stored in non-volatile memories including a random access memory (RAM) and a flash memory, a read only memory (ROM), an electrically erasable programmable read only memory (EEPROM), a magnetic disc storage device, a compact disc-ROM (CD-ROM), digital versatile discs (DVD), or other type optical storage devices, or a magnetic cassette. Alternatively, any combination of some or all of them may form a memory in which the program is stored. Further, a plurality of such memories may be included.

Also, the programs may be stored in an attachable storage device which may access the electronic device through communication networks constituted with the Internet, Intranet, local area network (LAN), wide LAN (WLAN), and storage area network (SAN) or a combination thereof. Such a storage device may access a device performing the embodiments of the disclosure via an external port. Further, a separate storage device on the communication network may access a device performing the embodiments of the disclosure.

In the specific embodiments of the disclosure described above, elements included in the disclosure are expressed in a singular or plural form according to the specific embodiments of the disclosure. However, the singular or plural expression is appropriately selected for convenience of explanation and the disclosure is not limited to the singular or plural elements. As such, an element expressed in a plural form may also be configured as a single element, and an element expressed in a singular form may also be configured as plural elements.

Meanwhile, the embodiments of the disclosure described with reference to the present specification and drawings are merely illustrative of specific examples to easily facilitate technical description and understanding of the disclosure, and are not intended to limit the scope of the disclosure. In other words, it will be apparent to one of ordinary skill in the art that other modifications based on the technical ideas of the disclosure are feasible. Also, the respective embodiments of the disclosure may be combined with each other as required. For example, a portion of one embodiment of the disclosure and a portion of another embodiment of the disclosure may be combined with each other to enable a base station and UE to operate. For example, a portion of a first embodiment of the disclosure and portion of a second embodiment of the disclosure may be combined with each other to enable a base station and UE to operate. Also, the embodiments are provided based on a FDD LTE system, but other modifications based on technical ideas of the embodiments may be implemented on other systems, such as a TDD LTE system, a 5G or NR system, and the like.

Meanwhile, in a drawing for describing a method of the disclosure, an order of the description does not necessarily correspond to an order of execution, and the order may be changed or executed in parallel.

Alternatively, in the drawing for describing the method of the disclosure, some components may be omitted and only some components may be included within a range that does not depart from the essence of the disclosure.

Further, the method of the disclosure may be performed in a combination of some or all of content included in each embodiment within a range that does not depart from the essence of the disclosure.

Various embodiments of the disclosure have been described above. The above description of the disclosure is for illustrative purposes, and the embodiments of the disclosure are not limited to the disclosed embodiments. A person skilled in the art to which this disclosure pertains will understand that the disclosure can be easily modified into another specific form without changing its technical idea or essential features. The scope of the disclosure is indicated by the claims described below rather than the detailed description above, and all changes or modified forms derived from the meaning and scope of the claims and their equivalent concepts should be construed as being included in the scope of the disclosure.

**Claims**

1. A method of a terminal in a wireless communication system, comprising:

   receiving, from a base station, a radio resource control (RRC) message including information for determination of a transmission configuration indicator (TCI) state;
   receiving, from the base station, downlink control information (DCI) including information indicating a unified TCI state;
   in case that multiple TCI states are indicated based on the DCI, determining a TCI state for a physical uplink control channel (PUCCH) based on the information for determination of the TCI state; and
   transmitting, to the base station, uplink control information on the PUCCH based on the determined TCI state.

2. The method of claim 1, wherein the information for determination of the TCI state is configured for each PUCCH resource or each PUCCH resource group in the RRC message.

3. The method of claim 1, wherein the information for determination of the TCI state indicates one of application of a first TCI state among the multiple TCI states, application of a second TCI state among the multiple TCI states, and application of all TCI states among the multiple TCI states.

4. The method of claim 1, further comprising receiving, from the base station, DCI scheduling a physical uplink shared channel (PUSCH),
   wherein the DCI scheduling the PUSCH includes information for determination of the TCI state for PUSCH transmission among the multiple TCI states.

5. A method of a base station in a wireless communication system, comprising:

   transmitting, to a terminal, a radio resource control (RRC) message including information for determination of a transmission configuration indicator (TCI) state;
   transmitting, to the terminal, downlink control information (DCI) including information indicating a unified TCI state; and
   receiving, from the terminal, uplink control information on a physical uplink control channel (PUCCH) based on the TCI state determined based on multiple TCI states,
   in case that the multiple TCI states are indicated based on the DCI, the TCI state for the PUCCH is determined based on the information for determination of the TCI state.

6. The method of claim 5, wherein the information for determination of the TCI state is configured for each PUCCH resource or each PUCCH resource group in the RRC message.

7. The method of claim 5, wherein the information for determination of the TCI state indicates one of application of a first TCI state among the multiple TCI states, application of a second TCI state among the multiple TCI states, and application of all TCI states among the multiple TCI states.

8. The method of claim 5, further comprising transmitting, to the terminal, DCI scheduling a physical uplink shared channel (PUSCH),

wherein the DCI scheduling the PUSCH includes information for determination of the TCI state for PUSCH transmission among the multiple TCI states.

9.  A terminal in a wireless communication system, comprising:

a transceiver; and
a controller,
wherein the controller controls to:

receive, from a base station, a radio resource control (RRC) message including information for determination of a transmission configuration indicator (TCI) state;
receive, from the base station, downlink control information (DCI) including information indicating a unified TCI state;
in case that multiple TCI states are indicated based on the DCI, determine a TCI state for a physical uplink control channel (PUCCH) based on the information for determination of the TCI state; and
transmit, to the base station, uplink control information on the PUCCH based on the determined TCI state.

10. The terminal of claim 9, wherein the information for determination of the TCI state is configured for each PUCCH resource or each PUCCH resource group in the RRC message.

11. The terminal of claim 9, wherein the information for determination of the TCI state indicates one of application of a first TCI state among the multiple TCI states, application of a second TCI state among the multiple TCI states, and application of all TCI states among the multiple TCI states.

12. The terminal of claim 9, wherein the controller controls to receive, from the base station, DCI scheduling a physical uplink shared channel (PUSCH),
wherein the DCI scheduling the PUSCH includes information for determination of the TCI state for PUSCH transmission among the multiple TCI states.

13. Abase station in a wireless communication system, comprising:

a transceiver; and
a controller,
wherein the controller controls to:

transmit, to a terminal, a radio resource control (RRC) message including information for determination of a transmission configuration indicator (TCI) state;
transmit, to the terminal, downlink control information (DCI) including information indicating a unified TCI state; and
receive, from the terminal, uplink control information on a physical uplink control channel (PUCCH) based on the TCI state determined based on multiple TCI states,
wherein in case that the multiple TCI states are indicated based on the DCI, the TCI state for the PUCCH is determined based on the information for determination of the TCI state.

14. The base station of claim 13, wherein the information for determination of the TCI state is configured for each PUCCH resource or each PUCCH resource group in the RRC message,
wherein the information for determination of the TCI state indicates one of application of a first TCI state among the multiple TCI states, application of a second TCI state among the multiple TCI states, and application of all TCI states among the multiple TCI states.

15. The base station of claim 13, wherein the controller controls to transmit, to the terminal, DCI scheduling a physical uplink shared channel (PUSCH),
wherein the DCI scheduling the PUSCH includes information for determination of the TCI state for PUSCH transmission among the multiple TCI states.

# FIG. 1

One subframe (110)

$N_{symb}^{subframe,\mu}$ OFDM symbols

1 OFDM symbols (102)

1 subcarrier (103)

$K = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

Frequency

$K=0$

$\bar{l}=0$

$\bar{l}=14 \cdot 2^{\mu} - 1$

Time

100

# FIG. 2

# FIG. 3

BWP#1
(301)

BWP#2
(302)

Frequency

UE bandwidth
(300)

FIG. 4

# FIG. 5A

1 symbol
(501)

DMRS
(505)

1 PRB
(502)

CCE
(504)

REG
(503)

FIG. 5B

EP 4 460 138 A1

FIG. 6

reception of PDCCH indicating new UL transmission or
DL transmission (630)

605    610    605    610    605    610    605    610    605

Drx-onDurationTimer
(615)

start or re-start of
drx-InactivityTimer (620)

615    615    615

drx-LongCycle (625)    625    625    625

Active time (605)

EP 4 460 138 A1

FIG. 7

TCI state #0
[700]

TCI state #1
[705]

TCI state #2
[710]

# FIG. 8

RRC configured TCI states (800)

| TCI #0 (805) | TCI #1 (810) | TCI #2 (815) | . . . | TCI #N (820) |

A list of TCI states for a CORESET (825)

| TCI #a (830) | TCI #b (835) | . . . | TCI #n (840) |

TCI indication via MAC CE (845)

FIG. 9

| Serving Cell ID (915) | | CORESET ID (920) | Oct 1 (900) |
|---|---|---|---|
| CORE SET ID | TCI state ID (925) | | Oct 2 (905) |

EP 4 460 138 A1

# FIG. 10

# FIG. 11

# FIG. 12

(1200) BWP#1 (Active) on Cell#1

CSS#1

CSS#2

USS#1

(1215) CORESET#1 (Ref: CSI-RS#1/Cell#1/BWP#1 with QCL-TypeD)

(1205) BWP#1 (Active) on Cell#2

CSS#1

USS#2

USS#2

(1220) CORESET#1 (Ref: CSI-RS#1/Cell#1/BWP#1 with QCL-TypeD)

(1225) CORESET#2 (Ref: CSI-RS#1/Cell#2/BWP#1 with QCL-TypeD)

PDCCH monitoring occasion

(1210)

(1230) Active BWP on Cell#1

USS#1

USS#2

USS#3

(1245) CORESET#1 (Ref: CSI-RS#1/Cell#1/BWP#1 with QCL-TypeD)

(1250) CORESET#2 (Ref: CSI-RS#1/Cell#1/BWP#1 with QCL-TypeD)

(1235) Active BWP on Cell#2

USS#1

USS#2

USS#3

(1255) CORESET#1 (Ref: CSI-RS#1/Cell#2/BWP#1 with QCL-TypeD)

(1260) CORESET#2 (Ref: CSI-RS#2/Cell#2/BWP#1 with QCL-TypeD)

PDCCH monitoring occasion

(1240)

FIG. 13

EP 4 460 138 A1

13-15

RA type 0
[13-00]

| Bitmap |
| --- |

13-20                13-25

RA type 1
[13-05]

| Starting VRB | Length |
| --- | --- |

13-30                13-35

Both RA
type 0 & 1
[13-10]

| 1 bit for RA type indication | Max {payload for RA type 0, payload for RA type 1} |
| --- | --- |

# FIG. 14

S
(14-00)

L (14-05)

| 0 | 1 | 2 | 3 | 4 | 5 | 6 | 7 | 8 | 9 | 10 | 11 | 12 | 13 |

OFDM symbol

$$\text{Slot} \left\lfloor n \cdot \frac{2^{\mu_{PDSCH}}}{2^{\mu_{PDCCH}}} \right\rfloor + K_0 \, (14\text{-}10)$$

# FIG. 15

RRC configured TCI states

15-00

| TCI #0 | TCI #1 | TCI #2 | TCI #3 | ⋯ | TCI #M-1 |

MAC-CE activated TCI states for PDSCH

15-20

| TCI #0' | TCI #1' | TCI #2' | ⋯ | TCI #K-1 |

MAC CE based beam indication

TCI state for PDSCH

15-40

| TCI #1 |

DCI based beam selection

MAC CE structure

15-55

15-50

| CORESET Pool ID | Serving Cell ID | | | | | BWP ID | | Oct 1 |
|---|---|---|---|---|---|---|---|---|
| $T_7$ | $T_6$ | $T_5$ | $T_4$ | $T_3$ | $T_2$ | $T_1$ | $T_0$ | Oct 2 |
| $T_{15}$ | $T_{14}$ | $T_{13}$ | $T_{12}$ | $T_{11}$ | $T_{10}$ | $T_9$ | $T_8$ | Oct 3 |

⋯

| $T_{(N-2)\times8+7}$ | $T_{(N-2)\times8+6}$ | $T_{(N-2)\times8+5}$ | $T_{(N-2)\times8+4}$ | $T_{(N-2)\times8+3}$ | $T_{(N-2)\times8+2}$ | $T_{(N-2)\times8+1}$ | $T_{(N-2)\times8}$ | Oct N |

# FIG. 16

| | | | | |
|---|---|---|---|---|
| R | Serving Cell ID (1610) | | BWP ID (1620) | Oct 1 (1600) |
| R | | PUCCH Resource ID (1631) | | Oct 2 (1630) |
| R | R | Spatial Relation Info ID (1636) | | Oct 3 (1635) |

1637

...

| | | | |
|---|---|---|---|
| R | | PUCCH Resource ID (1641) | Oct 2N-2 (1640) |
| R | R | Spatial Relation Info ID (1646) | Oct 2N-1 (1645) |

1647

# FIG. 17

Actual repetition (1703)

slot

| D | D | D | S | U | D | D | S | U | U | D | D | D | S | U | D | D | S | U | U |

| | | | | 14 | | | | 5 | 5 | 14 | | | | | 14 | | | 5 | 5 | 14 |

nominal repetition (1701) : | 1 | 2 | 3 | 4 | 5 | 6 | 7 | 8 | 9 | 10 | 11 | 12 | 13 | 14 | 15 | 16 |

Invalid symbol pattern (1702) : | 0 | 0 | 0 | 0 | 0 | 1 | 1 | 1 | 1 | 1 | 1 | 1 | 1 | 1 |

Frequency

Time

EP 4 460 138 A1

# FIG. 18

Single cell LTE/NR (S00)

**gNB**
- SDAP (S25)
- PDCP (S30)
- RLC (S35)
- MAC (S40)
- PHY (S45)

**UE**
- PHY (S50)
- MAC (S55)
- RLC (S60)
- PDCP (S65)
- SDAP (S70)

Carrier aggregation (S10)

**gNB**
- SDAP
- PDCP
- RLC
- MAC
- PHY ⋯ PHY

**UE**
- PHY ⋯ PHY
- MAC
- RLC
- PDCP
- SDAP

Dual connectivity (S20)

**MgNB**
- SDAP
- PDCP
- RLC
- MAC
- PHY

**SgNB**
- RLC
- MAC
- PHY

**UE**
- PHY
- MAC
- RLC
- PDCP
- SDAP

**SgNB (UE)**
- PHY
- MAC
- RLC

EP 4 460 138 A1

# FIG. 19

# FIG. 20

| Control information for TRP #0 | — | DCI #0 |
| Control information for TRP #1 | — | DCI #1 |
| ⋮ | | ⋮ |
| Control information for TRP #(N-1) | — | DCI #(N-1) |

Case #1 (N100)

| Control information for TRP #0 | — | DCI #0 |
| Control information for TRP #1 | — | sDCI #0 |
| ⋮ | | ⋮ |
| Control information for TRP #(N-1) | — | sDCI #(N-2) |

Case #2 (N105)

| Control information for TRP #0 | — | DCI |
| Control information for TRP #1 | — | sDCI |
| ⋮ | | |
| Control information for TRP #(N-1) | | |

Case #3 (N110)

| Control information for TRP #0 | | Long DCI |
| Control information for TRP #1 | — | |
| ⋮ | | ⋮ |
| Control information for TRP #(N-1) | | |

Case #4 (N115)

EP 4 460 138 A1

# FIG. 21

| R | Serving Cell ID | BWP ID | Oct 1 |
|---|---|---|---|
| $C_0$ | TCI state $ID_{0,1}$ | | Oct 2 |
| R | TCI state $ID_{0,2}$ | | Oct 3 (Optional) |

21-05

21-10

21-15

...

| $C_N$ | TCI state $ID_{N,1}$ | Oct M-1 |
|---|---|---|
| R | TCI state $ID_{N,2}$ | Oct M (Optional) |

# FIG. 22

22-01

Periodicity: sl1 — SS set#1

22-05 — CORESET#1

22-08          22-09

TCI state: {QCL-TypeA (SP CSI-RS#1), QCL-TypeD (SP CSI-RS#1)}

22-02

Periodicity: sl4 — SS set#2

22-06 — CORESET#2

22-10

TCI state: {QCL-TypeA (P CSI-RS#2)}

22-03

Periodicity: sl1 — SS set#3

22-07 — CORESET#3

22-11          22-12

TCI state: {QCL-TypeA (P CSI-RS#3), QCL-TypeD (P CSI-RS#4)}

22-04

Periodicity: sl10 — SS set#4

22-13

Selected RLM RS: P CSI-RS#2, P CSI-RS#4

FIG. 23

|  | | | | | | | | |
|---|---|---|---|---|---|---|---|---|

23-05    23-10

| R | Serving Cell ID | BWP ID | Oct 1 |
|---|---|---|---|
| R | TCI state ID$_0$ | | Oct 2 |
| R | TCI state ID$_1$ | | Oct 3 (Optional) |

...

| R | TCI state ID$_{N-1}$ | | Oct N (Optional) |
|---|---|---|---|

23-00

23-15

23-25

# FIG. 24

| | | | | | | | | |
|---|---|---|---|---|---|---|---|---|
| R | \multicolumn{5}{c}{Serving Cell ID} | | BWP ID | | Oct 1 |
| $T_7$ | $T_6$ | $T_5$ | $T_4$ | $T_3$ | $T_2$ | $T_1$ | $T_0$ | Oct 2 |
| $T_{15}$ | $T_{14}$ | $T_{13}$ | $T_{12}$ | $T_{11}$ | $T_{10}$ | $T_9$ | $T_8$ | Oct 3 |

. . .

| | | | | | | | | |
|---|---|---|---|---|---|---|---|---|
| $T_{(N-2)\times 8+7}$ | $T_{(N-2)\times 8+6}$ | $T_{(N-2)\times 8+5}$ | $T_{(N-2)\times 8+4}$ | $T_{(N-2)\times 8+3}$ | $T_{(N-2)\times 8+2}$ | $T_{(N-2)\times 8+1}$ | $T_{(N-2)\times 8}$ | Oct N |

Labels: 24-05, 24-10, 24-00, 24-15

# FIG. 25

| | | | | | | | |
|---|---|---|---|---|---|---|---|
| S | Serving Cell ID | | | | BWP ID | | |
| R | TCI state ID$_0$ | | | | | | |
| T$_7$ | T$_6$ | T$_5$ | T$_4$ | T$_3$ | T$_2$ | T$_1$ | T$_0$ |
| T$_{15}$ | T$_{14}$ | T$_{13}$ | T$_{12}$ | T$_{11}$ | T$_{10}$ | T$_9$ | T$_8$ |

25-00, 25-05, 25-10, 25-15, 25-20, 25-25

Oct 1, Oct 2 [Optional], Oct 3 [Optional], Oct 4 [Optional]

. . .

| | | | | | | | |
|---|---|---|---|---|---|---|---|
| T$_{(N-2)\times8+7}$ | T$_{(N-2)\times8+6}$ | T$_{(N-2)\times8+5}$ | T$_{(N-2)\times8+4}$ | T$_{(N-2)\times8+3}$ | T$_{(N-2)\times8+2}$ | T$_{(N-2)\times8+1}$ | T$_{(N-2)\times8}$ |

Oct N+1 [Optional]

# FIG. 26

| | | | | | | | | | |
|---|---|---|---|---|---|---|---|---|---|

26-05    26-10

| S | Serving Cell ID | BWP ID | Oct 1 |
|---|---|---|---|

26-00

| $C_0$ | TCI state ID$_{D,0}$ | Oct 2 |
|---|---|---|

26-15

| TCI state ID$_{D,0}$ | TCI state ID$_{U,0}$ | Oct 3 |
|---|---|---|

26-21

26-20

. . .

| $C_{N-1}$ | TCI state ID$_{D,N-1}$ | Oct M-1 [Optional] |
|---|---|---|

| TCI state ID$_{D,N-1}$ | TCI state ID$_{U,N-1}$ | Oct M [Optional] |
|---|---|---|

# FIG. 27

| S | Serving Cell ID | BWP ID | Oct 1 |
|---|---|---|---|
| $C_{D,0}$ | TCI state ID$_{D,0}$ | | Oct 2 |
| $C_{U,0}$ | TCI state ID$_{U,0}$ | | Oct 3 |

. . .

| $C_{D,N-1}$ | TCI state ID$_{D,N-1}$ | Oct M-1 [Optional] |
|---|---|---|
| $C_{U,N-1}$ | TCI state ID$_{U,N-1}$ | Oct M [Optional] |

27-05
27-10
27-00
27-15
27-20
27-25
27-30

# FIG. 28

| | | Oct 1 |
|---|---|---|
| S | Serving Cell ID | BWP ID |

28-00 → S
28-05 → Serving Cell ID
28-10 → BWP ID

| | | |
|---|---|---|
| $C_{0,0}$ | TCI state $ID_{0,0}$ | Oct 2 |
| $C_{1,0}$ | TCI state $ID_{1,0}$ | Oct 3 [Optional] |

28-15 → $C_{0,0}$
28-20 → $C_{1,0}$
28-25, 28-30

· · ·

| | | |
|---|---|---|
| $C_{0,N-1}$ | TCI state $ID_{0,N-1}$ | Oct M-1 [Optional] |
| $C_{1,N-1}$ | TCI state $ID_{1,N-1}$ | Oct M [Optional] |

# FIG. 29

| | | | | | | | | | | |
|---|---|---|---|---|---|---|---|---|---|---|

29-05          29-10

| S | Serving Cell ID | BWP ID | Oct 1 |
|---|---|---|---|

29-00

| $C_{0,0}$ | TCI state $ID_{U,0}$ | Oct 2 |
|---|---|---|

29-15

| R | TCI state $ID_{D,0}$ | Oct 3 (Optional) |
|---|---|---|

29-21

29-20          29-25          . . .

| $C_{N-1}$ | TCI state $ID_{U,N-1}$ | Oct M-1 (Optional) |
|---|---|---|

| R | TCI state $ID_{D,N-1}$ | Oct M (Optional) |
|---|---|---|

# FIG. 30

| 30-00 | J | Serving Cell ID | BWP ID | Oct 1 |
|---|---|---|---|---|
| 30-15 | $C_{0,0}$ | TCI state $ID_{0,0}$ | | Oct 2 |
| 30-20 | $C_{1,0}$ | TCI state $ID_{1,0}$ | | Oct 3 [Optional] |

30-05   30-10

30-25   30-30   . . .

| $C_{0,N-1}$ | TCI state $ID_{0,N-1}$ | Oct M-1 |
|---|---|---|
| $C_{1,N-1}$ | TCI state $ID_{1,N-1}$ | Oct M [Optional] |

# FIG. 31

| | | Oct 1 |
|---|---|---|
| J | Serving Cell ID 31-05 | BWP ID 31-10 |

31-00

| | |
|---|---|
| $C_0$ | TCI state $ID_{U,0}$ |

31-15

Oct 2

| | |
|---|---|
| $S_0$ | TCI state $ID_{D,0}$ |

31-21

Oct 3

31-20    31-25    . . .

| | |
|---|---|
| $C_{N-1}$ | TCI state $ID_{U,N-1}$ |

Oct M-1
[Optional]

| | |
|---|---|
| $S_{N-1}$ | TCI state $ID_{D,N-1}$ |

Oct M
[Optional]

FIG. 32

32-00

PDCCH
32-01

PDSCH
32-05

PUCCH
32-10

BAT
32-15

32-25    32-30

32-20

By using DCI format 1_1, 1_2 with DL assignment

32-50

PDCCH
32-55

PUCCH
32-60

BAT
32-65

32-75    32-80

32-70

By using DCI format 1_1, 1_2 without DL assignment

# FIG. 33

| | | | |
|---|---|---|---|
| S | Serving Cell ID | BWP ID | Oct 1 |
| $C_0$ | TCI state $ID_{0,0}$ | | Oct 2 |
| R | TCI state $ID_{1,0}$ | | Oct 3 (Optional) |

. . .

| | | |
|---|---|---|
| $C_N$ | TCI state $ID_{0,N}$ | Oct M-1 (Optional) |
| R | TCI state $ID_{1,N}$ | Oct M (Optional) |

33-00
33-05
33-10
33-15
33-20
33-25

# FIG. 34

| | | | | | | | | |
|---|---|---|---|---|---|---|---|---|

34-00 — | S | Serving Cell ID | BWP ID | Oct 1

34-15 — | $C_0$ | TCI state $ID_{D,0,0}$ — 34-20 | Oct 2

34-21 — | TCI state $ID_{D,0,0}$ | TCI state $ID_{U,0,0}$ — 34-25 | Oct 3

| R | TCI state $ID_{D,1,0}$ — 34-30 | Oct 4 [Optional]

| R | TCI state $ID_{U,1,0}$ — 34-35 | Oct 5 [Optional]

. . .

| $C_N$ | TCI state $ID_{D,0,N}$ | Oct M-3

| TCI state $ID_{D,0,N}$ | TCI state $ID_{U,0,N}$ | Oct M-2

| R | TCI state $ID_{D,1,N}$ | Oct M-1 [Optional]

| R | TCI state $ID_{U,1,N}$ | Oct M [Optional]

134

# FIG. 35

FIG. 36

EP 4 460 138 A1

By using DCI format 1_1, 1_2 with DL assignment    By using DCI format 1_1, 1_2 without DL assignment

# FIG. 37

| receive UE capability | ~37-01 |

↓

| configure higher layer parameter for PUCCH transmission of UE | ~37-02 |

↓

| transmit scheduling PDCCH | ~37-03 |

↓

| transmit scheduled PDSCH | ~37-04 |

↓

| receive PUCCH | ~37-05 |

↓

| end |

| transmit UE capability | ~37-11 |

↓

| receive higher layer parameter for PUCCH transmission | ~37-12 |

↓

| receive scheduling PDCCH | ~37-13 |

↓

| receive scheduled PDSCH | ~37-14 |

↓

| identify scheduled PUCCH resource | ~37-15 |

↓

| determine UL beam for PUCCH transmission (using all or some or one of indicated beams) | ~37-16 |

↓

| transmit PUCCH | ~37-17 |

↓

| end |

# FIG. 38

38-00

38-01

| 38-04 $I_1$ | Serving Cell ID | BWP ID | 38-02 Oct 1 |
| 38-05 $I_2$ | PUCCH Resource ID | | 38-03 Oct 2 |

38-10

38-11

| R | Serving Cell ID | BWP ID | | | | | 38-12 Oct 1 |
| R | PUCCH Resource ID | | | | | | 38-13 Oct 2 |
| R | R | R | R | R | R | I | 38-14 Oct 3 |

38-20

38-21

| R | Serving Cell ID | | | | BWP ID | | 38-22 Oct 1 |
| R | PUCCH Resource ID | | | | | | 38-23 Oct 2 |
| R | R | R | R | R | R | I | 38-24 Oct 3 |

. . .

| R | PUCCH Resource ID | | | | | | 38-25 Oct 2N-2 |
| R | R | R | R | R | R | I | 38-26 Oct 2N-1 |

EP 4 460 138 A1

FIG. 39

39-00

By using DCI format 1_1, 1_2 with DL assignment

| PDCCH | PDSCH (including MAC CE) | PUCCH | 3ms | PDCCH | | PUCCH |

39-01        39-05        39-10        39-20        39-50        39-30        39-55

BAT

39-15

39-35   39-40

FIG. 40

FIG. 41

4105 ~ base station processor

base station receiver ~ 4100

base station transmitter ~ 4110

<div align="center">

**INTERNATIONAL SEARCH REPORT**

</div>

| | International application No. |
|---|---|
| | **PCT/KR2023/001557** |

| A. | CLASSIFICATION OF SUBJECT MATTER |
|---|---|

**H04W 72/23**(2023.01)i; **H04W 72/21**(2023.01)i; **H04W 72/04**(2009.01)i; **H04B 7/06**(2006.01)i; **H04B 7/0408**(2017.01)i

According to International Patent Classification (IPC) or to both national classification and IPC

| B. | FIELDS SEARCHED |
|---|---|

Minimum documentation searched (classification system followed by classification symbols)

H04W 72/23(2023.01); H04B 7/06(2006.01); H04L 5/00(2006.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: TCI state, RRC, unified TCI, DCI, multiple TCI states, PUCCH, uplink control information

| C. | DOCUMENTS CONSIDERED TO BE RELEVANT |
|---|---|

| Category* | Citation of document, with indication, where appropriate, of the relevant passages | Relevant to claim No. |
|---|---|---|
| A | MEDIATEK INC. Unified TCI Framework Operation from RAN2 Perspectives. R2-2200316, 3GPP TSG-RAN WG2 Meeting #116b-e. 10 January 2022.<br>See sections 2-2.3; and figure 1. | 1-15 |
| A | SAMSUNG. Introduction of further enhancements on MIMO for NR. R1-2112986, 3GPP TSG RAN WG1 Meeting #107-e. 08 December 2021.<br>See sections 9-9.2.2. | 1-15 |
| A | ERICSSON. FeMIMO General and RRC impact. R2-2201581, 3GPP TSG-RAN WG2 Meeting #116b-e. 11 January 2022.<br>See section 1. | 1-15 |
| A | US 2021-0195624 A1 (QUALCOMM INCORPORATED) 24 June 2021 (2021-06-24)<br>See paragraphs [0061]-[0064]; and figure 4. | 1-15 |
| A | WO 2021-156826 A1 (TELEFONAKTIEBOLAGET LM ERICSSON (PUBL)) 12 August 2021 (2021-08-12)<br>See paragraphs [0107]-[0111]; and figures 9 and 11. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 April 2023** | **27 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/001557**

| Patent document cited in search report | | | Publication date (day/month/year) | Patent family member(s) | | | Publication date (day/month/year) |
|---|---|---|---|---|---|---|---|
| US | 2021-0195624 | A1 | 24 June 2021 | CN | 114830586 | A | 29 July 2022 |
| | | | | EP | 4082147 | A1 | 02 November 2022 |
| | | | | WO | 2021-133575 | A1 | 01 July 2021 |
| WO | 2021-156826 | A1 | 12 August 2021 | BR | 112022015390 | A2 | 27 September 2022 |
| | | | | EP | 4101080 | A1 | 14 December 2022 |

Form PCT/ISA/210 (patent family annex) (July 2022)